(19) Europäisches Patentamt
European Patent Office
Office européen des brevets

(11) EP 4 235 899 A2

(12) EUROPEAN PATENT APPLICATION

(43) Date of publication:
**30.08.2023 Bulletin 2023/35**

(21) Application number: **23168753.4**

(22) Date of filing: **12.03.2021**

(51) International Patent Classification (IPC):
***H01M 10/0566*** *(2010.01)*

(52) Cooperative Patent Classification (CPC):
**H01G 11/52; H01G 11/06; H01G 11/18; H01G 11/46; H01M 4/131; H01M 4/136; H01M 4/505; H01M 4/525; H01M 4/58; H01M 10/052; H01M 10/0566; H01M 10/0585; H01M 10/0587; H01M 50/403; H01M 50/414;**

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:
**13.04.2020 JP 2020071830**
**13.04.2020 JP 2020071768**
**13.04.2020 JP 2020071804**
**30.10.2020 JP 2020183237**

(62) Document number(s) of the earlier application(s) in accordance with Art. 76 EPC:
**21787943.6 / 4 009 437**

(71) Applicant: **Asahi Kasei Kabushiki Kaisha**
**Tokyo 1000006 (JP)**

(72) Inventors:
- **Zhang, Xun**
  **Tokyo, 100-0006 (JP)**
- **Akita, Yusuke**
  **Tokyo, 100-0006 (JP)**
- **Kobayashi, Hiromi**
  **Tokyo, 100-0006 (JP)**
- **Fukunaga, Yuki**
  **Tokyo, 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

Remarks:
This application was filed on 19.04.23 as a divisional application to the application mentioned under INID code 62.

# (54) COMPOSITE SINGLE-LAYER CHEMICALLY CROSS-LINKED SEPARATOR

(57) A separator for an electricity storage device, comprising a polyolefin microporous membrane as a substrate and a surface layer formed on at least one side of the microporous polyolefin membrane, wherein
a polyolefin contained in the polyolefin microporous membrane has one or more types of functional groups, and
after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

EP 4 235 899 A2

(52) Cooperative Patent Classification (CPC): (Cont.)
**H01M 50/417; H01M 50/42; H01M 50/423; H01M 50/426; H01M 50/431; H01M 50/434; H01M 50/443; H01M 50/446; H01M 50/457; H01M 50/461; H01M 50/489;** Y02E 60/10; Y02P 70/50

## Description

FIELD

The present disclosure relates to a polyolefin microporous membrane, and a separator for an electricity storage device and an electricity storage device using the same.

BACKGROUND

Polyolefin microporous membranes exhibit excellent electrical insulating properties and ion permeability and are therefore used as separators for an electricity storage device, for example, a separator for a battery and a separator for a capacitor. In particular, the polyolefin microporous membranes are used as separators for a lithium ion secondary battery, and the lithium ion secondary battery is mounted on various products, for example, not only small electronic devices such as mobile phones and laptops, but also electrically driven vehicles such as electric cars and electric motorcycles.

In recent years, there has been a demand for higher output, higher energy density and improved cycle characteristics of an electricity storage device, especially for small electronic devices and electric vehicles. Accordingly, standards have also become more rigorous for safety of the electricity storage device, and there is a demand for a safer electricity storage device which does not cause thermal runaway even if local short circuit occurs.

PTL 1 mentions a separator for a lithium ion secondary battery, comprising a porous membrane, an inorganic particle layer formed on at least one side of the porous membrane, inorganic particles of the inorganic particle layer accounting for 80% by volume of the entire layer, and a porous resin layer formed on the surface of the inorganic particle layer and integrated with the inorganic particle layer, for the purposes of suppressing separation between a separator and an electrode and improving the heat resistance of the separator.

PTL 2 mentions a separator comprising a porous crosslinked polyolefin substrate and an inorganic porous layer stacked on a part or all of the surface of the porous crosslinked polyolefin substrate, for the purpose of improving shutdown properties and meltdown characteristics.

PTL 3 mentions a crosslinked polyolefin separator comprising a porous polyolefin substrate having a siloxane crosslinking bond and a polymer binder layer located on at least one side of the porous polyolefin substrate, for the purpose of reducing the thickness, weight, and volume while maintaining mechanical and thermal stability.

PTL 4 mentions a separator for an electricity storage device, comprising a silane-modified polyolefin wherein a silane crosslinking reaction of the silane-modified polyolefin is started when the separator comes into contact with an electrolyte solution, for the purposes of achieving both shutdown function and high-temperature fracture resistance, and ensuring safety, output and/or cycle stability of the electricity storage device.

PTLs 5 and 6 mention a separator comprising a porous substrate containing a crosslinked silane-modified polyolefin and an inorganic coating layer located on the substrate, for the purpose of providing a separator having properties such as electrode adhesion, heat resistance, mechanical properties, high output of a battery and high lifetime properties.

Meanwhile, there have been made trials of achieving both activation of a shutdown function and an improvement in membrane breaking temperature by forming a crosslinked structure in the separator for ensuring battery safety (PTLs 7 to 14). For example, PTLs 7 to 12 mention a silane crosslinked structure formed by contact of a silane-modified polyolefin-containing separator with water. PTL 13 mentions a crosslinked structure formed from ring-opening of norbornene by irradiation with ultraviolet rays, electron beams, etc. PTL 14 mentions that an insulating layer of a separator contains a (meth)acrylic acid copolymer having a crosslinked structure, a styrene-butadiene rubber binder, etc.

The members used in a lithium ion battery are a positive electrode, a negative electrode material, an electrolyte solution and a separator. Of these members, the separator must be inactive to an electrochemical reaction and peripheral members, because of its role as an insulating material. Meanwhile, there has been established a technique in which decomposition of an electrolyte solution on the surface of a negative electrode is suppressed by forming a solid electrolyte interface (SEI) due to a chemical reaction during initial charge from the beginning of the development of a negative electrode material of the lithium ion battery (PTL 3). There have been reported some cases where, even when a polyolefin resin is used as the separator, oxidation reaction is induced on the surface of a positive electrode at high voltage, resulting in blackening or surface deterioration of the separator.

For this reason, the materials used for an electricity storage device separator are designed with chemical structures which are inactive in electrochemical reactions or other chemical reactions, and as a result, polyolefin microporous membranes have become widely developed and implemented.

There has also been proposed that, when a separator for an electricity storage device is fabricated, functional layers or functional membranes, such as a thermoplastic resin layer, a heat-resistant resin layer and a water-soluble resin layer are formed on the surface of a substrate by using a single microporous membrane or a laminated body of a

plurality of microporous membranes as the substrate (PTLs 16 to 19).

There has also been proposed that, when a separator for an electricity storage device is fabricated, active layers such as a polyvinylidene fluoride (PVDF)-based resin-containing layer, a PVDF-based resin and an inorganic filler are formed on the surface of a substrate by using a single microporous membrane or a laminated body of a plurality of microporous membranes as the substrate (PTLs 18 and 20).

There has also been proposed that, when a separator for an electricity storage device is fabricated, a heat-resistant resin layer such as a wholly aromatic polyamide (also referred to as aramid) is formed on the surface of a substrate by using a single microporous membrane or a laminated body of a plurality of microporous membranes as the substrate (PTL 16), or a porous membrane containing aramid and a porous membrane containing a water-soluble resin such as cellulose ether are stacked on both surfaces of the substrate (PTL 19).

However, as long as a polyolefin is employed as the resin, there is a limit in performance improvement even if the mechanical microporous structure of the separator is improved. For example, since the affinity or liquid retention with the electrolyte solution is insufficient depending on the heat stability of the separator at a temperature of the melting point or higher of the polyolefin, or the electronegativity of the olefin unit, it is impossible to satisfy the permeability of Li ion or solvated ion cluster in the separator.

[CITATION LIST]

[PATENT LITERATURE]

[PTL 1] JP 2020-64879 A
[PTL 2] Korean Patent No. 10-1943491
[PTL 3] Korean Patent Publication No. 2019-0108438
[PTL 4] WO 2020/075866 A
[PTL 5] Korean Patent Publication No. 10-2018-0147041
[PTL 6] Korean Patent Publication No. 10-2018-0147042
[PTL 7] JP 9-216964 A
[PTL 8] WO 97/44839 A
[PTL 9] JP 11-144700 A
[PTL 10] JP 11-172036 A
[PTL 11] JP 2001-176484 A
[PTL 12] JP 2000-319441 A
[PTL 13] JP 2011-071128 A
[PTL 14] JP 2014-056843 A
[PTL 15] JP 10-261435 A
[PTL 16] WO 2008/156033 A
[PTL 17] JP 6580234 B1
[PTL 18] JP 6367453 B2
[PTL 19] WO 2012/018132 A
[PTL 20] Korean Patent Publication No. 10-2020-0026172


[NON-PATENT LITERATURE]

[NPL 1] written by Pekka Pyykko and Michiko Atsumi, "Molecular Single-Bond Covalent Radii for Elements 1-118", Chem. Eur. J., 2009, 15, 186-197
[NPL 2] written by Robin Walsh, "Bond dissociation energy values in silicon-containing compounds and some of their implications", Acc. Chem. Res., 1981, 14, 246-252
[NPL 3] Lithium Ion Secondary Batteries (Second Edition), issued by Nikkan Kogyo Shimbun, Ltd.
[NPL 4] Kiso Kobunshi Kagaku, issued by Tokyo Kagaku Dojin
[NPL 5] ACS Appl. Mater. Interfaces 2014, 6, 22594-22601
[NPL 6] Energy Storage Materials 2018, 10, 246-267
[NPL 7] The Chemistry of Organic Silicon Compounds Vol. 2, Wiley (1998), Chap. 4

SUMMARY

[TECHNICAL PROBLEM]

It is an object of the present disclosure to provide a safer separator for an electricity storage device, and an electricity storage device using the same.

For example, the separators for an electricity storage device mentioned in PTLs 1 to 6 had room for further improvement in safety when local short circuit occurs. Thus, it is an object of the present disclosure to provide a safer separator for an electricity storage device and an electricity storage device in which the possibility of local short circuit leading to thermal runaway is reduced.

With the increasing high output and high energy density of lithium ion secondary batteries for mobile devices and vehicles in recent years, there is ongoing demand for smaller battery cell sizes and for stable cycle charge-discharge performance at long-term use. It is therefore considered necessary for the separators used to be thin-membranes (for example, 15 μm or less) with high quality (for example, homogeneous physical properties and free of resin aggregates). Standards have also become more rigorous for battery safety, and as also mentioned in PTLs 7 and 8, there is a need for a shutdown function and high-temperature membrane rupture properties, while expectations are also high for development of separator resin compositions which can be stably produced, and production methods for them. In this regard, the level for shutdown temperature is preferably as far below 150°C as possible, while the membrane rupture temperature is preferably as high a temperature as possible.

However, the crosslinking methods mentioned in PTLs 7 to 14 are all in-processes for separator membrane formation, or are carried out in a batch process immediately after separator membrane formation. After formation of a crosslinked structure as mentioned in PTLs 7 to 14, it is necessary to coat or to form slits in the separator, which increases the internal stress at the time of the subsequent stacking and winding steps with the electrodes and can lead to deformation of the fabricated battery. For example, when a crosslinked structure is formed by heating, internal stress in the separator with the crosslinked structure often increases at ordinary temperature or room temperature. When a crosslinked structure is formed by photoirradiation of ultraviolet rays or electron beams, the light irradiation may be non-uniform and the crosslinked structure may become nonhomogeneous. This is believed to occur because the peripheries of the crystals of the resin forming the separator tend to become crosslinked by electron beams.

PTL 15 mentions a technique for improving the cycle characteristics of a lithium ion secondary battery by addition of succinimides to the electrolyte solution. However, the technique mentioned in PTL 15 does not improve the cycle characteristics by specifying the structure of the separator.

Regarding the formation of a resin functional layer or a resin functional membrane on the separator substrates mentioned in PTLs 16 to 19, there is still room for improvement of the safety in a nail penetration test of the electricity storage device with the separator.

As shown in NPL 5, the achievement of a high nickel NMC type positive electrode has been attracting attention as one of the leading candidates for increasing the capacity of the LIB battery. However, as the ratio of NMC becomes (4:3:3), (6:2:2), (8:1:1), etc. from the conventional (1:1:1), the heat resistance of the positive electrode crystal structure deteriorates, and $O_2$ is easily released together with pyrolysis, and the organic substance in the battery is continuously ignited or exploded. In particular, the positive electrode of NMC(622) or NMC(811) shows the start of decomposition reaction from a significantly lower temperature region as compared with the conventional NMC(111) or NMC(433). In a similar trend, besides NMC, there is a problem of crystal instability (pyrolysis) in constituent positive electrodes such as an LAC type positive electrode. Therefore, there is a potential issue of the positive electrode in which thermal decomposition or $O_2$ release easily occurs in order to achieve high LIB battery capacity.

Meanwhile, from NPL 6, a series of temporal changes of chemical and physical change in internal heat generation inside the battery due to partial short circuit after nail penetration is clarified in a series of processes of a nail penetration test of the battery. In particular, in order to switch from the heat generation mode of the battery to a rapid runaway mode, $O_2$ release phenomenon at the time of decomposition of the positive electrode mentioned in NPL 5 tends to have a strong connection.

As mentioned above, a battery composed of a high nickel-containing NMC-based positive electrode expected to have a high battery capacity and energy density has a problem that ignition and explosion occur in a short time in a nail penetration test as compared with a conventional NMC-based battery, and it is necessary to significantly suppress a peripheral short circuit at the time of nail penetration. It is difficult for such a battery to be safely handled upon destruction at the time of accident or disaster in on-vehicle applications, and improvement in nail penetration safety simulating a destruction mode is a major issue.

In conventional PVDF-based resin coating to the separator substrate mentioned in PTLs 18 and 20, there is a problem in suppression of heat shrinkage, and there is room for improvement in heat shrinkability at high temperature (for example, 200°C or higher) and hot box testability.

As shown in NPL 5, the achievement of a high nickel NMC type positive electrode has been attracting attention

as one of the leading candidates for increasing the capacity of the LIB battery. However, as the ratio of NMC becomes (4:3:3), (6:2:2), (8:1:1), etc. from the conventional (1:1:1), the heat resistance of the positive electrode crystal structure deteriorates, and $O_2$ is easily released together with pyrolysis, and the organic substance in the battery is continuously ignited or exploded. In particular, the NMC(622) or NMC(811) positive electrode, which are expected to have high battery capacity and high energy density, start to decompose at about 150°C to 160°C. In order to safely handle LIB of such a positive electrode configuration even at the time of accident or fire in on-vehicle applications, it is an issue to improve the heat-resistant stability at 150°C.

In conventional heat-resistant resin and/or water-soluble resin coating to the separator substrate as mentioned in PTLs 16 and 19, there is room for improvement in bar impact fracture test at high temperature (for example, 150°C or higher) of an electricity storage device with a separator.

As shown in NPL 5, the achievement of a high nickel NMC type positive electrode has been attracting attention as one of the leading candidates for increasing the capacity of the LIB battery. However, as the ratio of NMC becomes (4:3:3), (6:2:2), (8:1:1), etc. from the conventional (1:1:1), the heat resistance of the positive electrode crystal structure deteriorates (for example, crystal decomposition and $O_2$ release at about 250°C), and $O_2$ is easily released together with pyrolysis, and the organic substance in the battery is continuously ignited or exploded. In particular, in the case of high nickel NMC(622) or NMC(811) positive electrode, the start of the decomposition is observed from about 150°C to 160°C. Currently, studies have been made to stabilize the crystal structure of high nickel-containing NMC by the research agencies or companies of each country, and although the improvement is observed in the surface treatment of NMC or the adjustment of trace impurities, the crystal decomposition at 150°C to 160°C and $O_2$ release cannot be fundamentally solved. In a similar trend, besides NMC, there is a problem of crystal instability (pyrolysis) in constituent positive electrodes such as an LAC type positive electrode. When a high energy density LIB using such a positive electrode material is developed towards on-vehicle applications, it is an issue to ensure safety in a vehicle collision accident in the case of an emergency. Namely, it is required that, when the battery structure is broken by an external force, the battery does not explode even in a high-temperature state such as fire. Therefore, studies have been required to improve battery safety in which crystal decomposition from 150°C is assumed under the most severe conditions of the NMC positive electrode.

Thus, in the second embodiment, it is an object of the present disclosure to provide a separator for an electricity storage device, capable of improving at least one of safety of the electricity storage device, for example, safety in a nail penetration test, heat shrinkability, hot box testability and high-temperature bar impact fracture resistance; an electricity storage device assembly kit and an electricity storage device using the same; and a method for producing the electricity storage device.

[SOLUTION TO PROBLEM]

Examples of embodiments of the present disclosure are listed in the following items.

[1] A separator for an electricity storage device, including at least each one of layer A containing a polyolefin, layer B containing inorganic particles, and layer C containing a thermoplastic polymer, wherein

the polyolefin contained in layer A has one or more types of functional groups, and
the functional groups comprise functional groups capable of undergoing a condensation reaction with each other in the electricity storage device to form a crosslinked structure by a siloxane bond.

[2] The separator for an electricity storage device according to item 1, wherein one or more island structures containing an alkali metal and/or an alkaline earth metal are detected when TOF-SIMS measurement is carried out on layer A over an area of 100 μm square, and the size of the island structure has a region of 9 $\mu m^2$ or more and 245 $\mu m^2$ or less.
[3] The separator for an electricity storage device according to item 2, wherein two or more island structures containing an alkali metal and/or an alkaline earth metal are present in the separator, and both a minimum value and a maximum value of a distance between weighted centers of gravity positions of each of the island structures are 6 μm or more and 135 μm or less.
[4] The separator for an electricity storage device according to item 2 or 3, wherein the island structure contains an alkaline earth metal, and the alkaline earth metal is calcium.
[5] The separator for an electricity storage device according to item 2 or 3, wherein the alkali metal and/or the alkaline earth metal is/are at least one selected from the group consisting of lithium, sodium, magnesium, potassium and strontium.
[6] The separator for an electricity storage device according to any one of items 1 to 4, wherein layer B is an inorganic porous layer containing inorganic particles and a resin binder.
[7] The separator for an electricity storage device according to item 6, wherein a glass transition temperature (Tg)

of the resin binder is -50°C to 90°C.

[8] The separator for an electricity storage device according to any one of items 1 to 7, wherein the content of inorganic particles in layer B is 5% by weight to 99% by weight based on the total weight of layer B.

[9] The separator for an electricity storage device according to any one of items 1 to 8, wherein the inorganic particles are at least one selected from the group consisting of alumina, silica, titania, zirconia, magnesia, ceria, yttria, zinc oxide, iron oxide, silicon nitride, titanium nitride, boron nitride, silicon carbide, aluminum hydroxide oxide, talc, kaolinite, dickite, nakhlite, halloysite, pyrophyllite, montmorillonite, sericite, mica, amesite, bentonite, asbestos, zeolite, diatomaceous earth, silica sand and glass fiber.

[10] The separator for an electricity storage device according to any one of items 1 to 9, wherein the thermoplastic polymer contained in layer C includes (meth)acrylic acid ester or (meth)acrylic acid as a polymerization unit.

[11] The separator for an electricity storage device according to any one of items 1 to 10, wherein a ratio of an area in which layer C covers layer B is 5% to 98%.

[12] The separator for an electricity storage device according to any one of items 1 to 11, wherein the thermoplastic polymer contained in layer C contains at least one fluorine atom-containing vinyl compound selected from the group consisting of polyvinylidene fluoride-hexafluoropropylene (PVDF-HFP) and polyvinylidene fluoride-chlorotrifluoroethylene (PVDF-CTFE).

[13] The separator for an electricity storage device according to any one of items 1 to 12, wherein a thermal response index obtained when the separator for an electricity storage device is heated to 150°C at 2°C/min after immersion in an electrolyte solution is fitted to formula (1) using the least squares approximation method, the range of a rate is 3.5 ≤ rate ≤ 150.

[Mathematical Formula 1]

$$\text{Formula (1)} \qquad \text{(Thermal Response Index)} = \frac{max}{1 + \exp\frac{T_0 - T}{rate}}$$

[14] The separator for an electricity storage device according to any one of items 1 to 13, wherein a thermal response index obtained when the separator for an electricity storage device is heated to 150°C at 2°C/min after immersion in an electrolyte solution is fitted to formula (1) using the least squares approximation method, the range of $T_0$ is $110 \leq T_0 \leq 150$ and the range of max is $0.1 \leq max \leq 30$.

[15] A separator for an electricity storage device, comprising a polyolefin microporous membrane as a substrate and a surface layer formed on at least one side of the microporous polyolefin membrane, wherein

a polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

[16] The separator for an electricity storage device according to item 15, including a polyolefin microporous membrane as a substrate and a thermoplastic polymer-containing layer formed on at least one side of the microporous polyolefin membrane, wherein

a polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

[17] The separator for an electricity storage device according to item 16, wherein a coverage area ratio of the thermoplastic polymer-containing layer to the substrate is 5% to 90%.

[18] The separator for an electricity storage device according to item 16 or 15, wherein the thermoplastic polymer contained in the thermoplastic polymer-containing layer includes a polymerization unit of (meth)acrylic acid ester or (meth)acrylic acid.

[19] The separator for an electricity storage device according to any one of items 16 to 18, wherein a glass transition temperature of the thermoplastic polymer contained in the thermoplastic polymer-containing layer is -40°C to 105°C.

[20] The separator for an electricity storage device according to item 15, comprising a polyolefin microporous membrane as a substrate and an active layer disposed on at least one side of the polyolefin microporous membrane, wherein

a polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

[21] The separator for an electricity storage device according to item 20, wherein the active layer contains at least one fluorine atom-containing vinyl compound selected from the group consisting of polyvinylidene fluoride-hexafluoropropylene (PVDF-HFP) and polyvinylidene fluoride-chlorotrifluoroethylene (PVDF-CTFE), and inorganic particles.
[22] The separator for an electricity storage device according to item 20 or 21, wherein a weight ratio of the fluorine atom-containing vinyl compound to the inorganic particles in the active layer (fluorine atom-containing vinyl compound/inorganic particles) is 5/95 to 80/20.
[23] The separator for an electricity storage device according to any one of items 20 to 22, wherein a weight-average molecular weight of the fluorine atom-containing vinyl compound is $0.6 \times 10^6$ to $2.5 \times 10^6$.
[24] The separator for an electricity storage device according to item 15, comprising a polyolefin microporous membrane as a substrate, and

a heat-resistant porous layer containing a heat-resistant resin, stacked on at least one side of the polyolefin microporous membrane, wherein
the polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

[25] The separator for an electricity storage device according to item 24, wherein the heat-resistant porous layer contains 30% by weight to 90% by weight of an inorganic filler having a mean particle size of 0.2 μm to 0.9 μm.
[26] The separator for an electricity storage device according to item 24 or 25, wherein the heat-resistant resin contains at least one selected from the group consisting of wholly aromatic polyamide, polyimide, polyamideimide, polysulfone, polyketone, polyether, polyether ketone, polyetherimide and cellulose.
[27] The separator for an electricity storage device according to any one of items 24 to 26, wherein the heat-resistant resin contains a para-aromatic polyamide and/or a meta-aromatic polyamide.
[28] The separator for an electricity storage device according to any one of items 16 to 27, wherein the chemical substance is any of an electrolyte, an electrolyte solution, an electrode active material, an additive, or decomposition products thereof, which are contained in the polyolefin microporous membrane.
[29] The separator for an electricity storage device according to any one of items 16 to 28, wherein the crosslinked structure is an amorphous crosslinked structure in which the amorphous portion of the polyolefin is crosslinked.
[30] The separator for an electricity storage device according to item 28, wherein the amorphous portion is selectively crosslinked.
[31] The separator for an electricity storage device according to any one of items 16 to 30, wherein the polyolefin is a functional group-modified polyolefin, or a polyolefin copolymerized with a monomer having a functional group.
[32] The separator for an electricity storage device according to any one of items 16 to 31, wherein the crosslinked structure is formed by a reaction via any of covalent bonding, hydrogen bonding or coordinate bonding.
[33] The separator for an electricity storage device according to item 32, wherein the reaction via covalent bonding is at least one selected from the group consisting of the following reactions (I) to (IV):

(I) condensation reaction of a plurality of identical functional groups;
(II) reaction between a plurality of dissimilar functional groups;
(III) chain condensation reaction between a functional group and an electrolyte solution; and
(IV) reaction of a functional group with an additive.

[34] The separator for an electricity storage device according to item 33, wherein the reaction via coordinate bonding comprises the following reaction (V):
(V) reaction in which a plurality of the same functional groups crosslink via coordinate bonding with metal ions.
[35] The separator for an electricity storage device according to item 33, wherein the reactions (I) and/or (II) are catalytically accelerated by a chemical substance inside the electricity storage device.
[36] The separator for an electricity storage device according to item 33, wherein the reaction (I) is a condensation reaction of a plurality of silanol groups.
[37] The separator for an electricity storage device according to item 33, wherein the reaction (IV) is a nucleophilic substitution reaction, a nucleophilic addition reaction or a ring-opening reaction between a compound Rx constituting

the separator for an electricity storage device and a compound Ry constituting the additive, the compound Rx has a functional group x, and the compound Ry includes a linking reaction unit $y_1$.

[38] The separator for an electricity storage device according to item 37, wherein

the reaction (IV) is a nucleophilic substitution reaction,
the functional group x of the compound Rx is at least one selected from the group consisting of -OH, $-NH_2$, -NH-, -COOH and -SH, and
the linking reaction unit $y_1$ of the compound Ry is at least two selected from the group consisting of $CH_3SO_2$-, $CF_3SO_2$-, $ArSO_2$-, $CH_3SO_3$-, $CF_3SO_3$-, $ArSO_3$-, and a monovalent group represented by the following formulas ($y_1$-1) to ($y_1$-6):

[Chemical Formula 1]

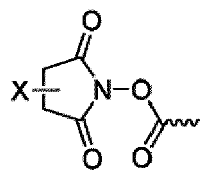

($y_1$-1)

wherein X is a hydrogen atom or a monovalent substituent;

[Chemical Formula 2]

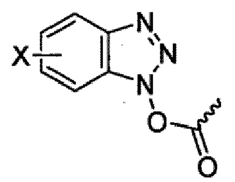

($y_1$-2)

wherein X is a hydrogen atom or a monovalent substituent;

[Chemical Formula 3]

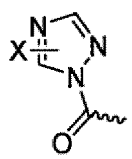

($y_1$-3)

wherein X is a hydrogen atom or a monovalent substituent;

[Chemical Formula 4]

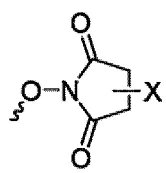

($y_1$-4)

wherein X is a hydrogen atom or a monovalent substituent;

[Chemical Formula 5]

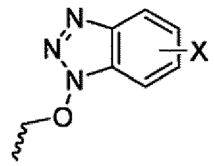

(y1-5)

wherein X is a hydrogen atom or a monovalent substituent; and

[Chemical Formula 6]

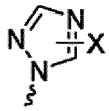

(y1-6)

wherein X is a hydrogen atom or a monovalent substituent.

[39] The separator for an electricity storage device according to item 37 or 38, wherein the reaction (IV) is a nucleophilic substitution reaction,

the compound Ry includes a straight-chain unit $y_2$ in addition to the linking reaction unit $y_1$, and
the straight-chain unit $y_2$ is at least one selected from the group consisting of divalent groups represented by the following formulas ($y_2$ -1) to ($y_2$ -6):

[Chemical Formula 7]

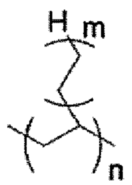

(y2-1)

wherein m is an integer of 0 to 20, and n is an integer of 1 to 20;

[Chemical Formula 8]

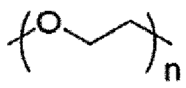

(y2-2)

wherein n is an integer of 1 to 20;

[Chemical Formula 9]

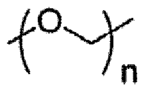

($y_2$-3)

wherein n is an integer of 1 to 20;

[Chemical Formula 10]

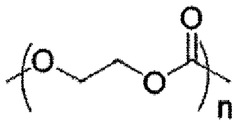

($y_2$-4)

wherein n is an integer of 1 to 20;

[Chemical Formula 11]

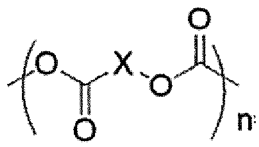

($y_2$-5)

wherein X is an alkylene group having 1 to 20 carbon atoms or an arylene group, and n is an integer of 1 to 20; and

[Chemical Formula 12]

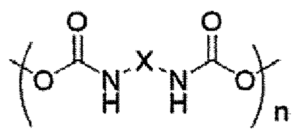

($y_2$-6)

wherein X is an alkylene group having 1 to 20 carbon atoms or an arylene group, and n is an integer of 1 to 20.

[40] The separator for an electricity storage device according to item 37, wherein

the reaction (IV) is a nucleophilic addition reaction,
the functional group x of the compound Rx is at least one selected from the group consisting of -OH, $-NH_2$, -NH-, -COOH and -SH, and
the linking reaction unit $y_1$ of the compound Ry is at least one selected from the group consisting of groups represented by the following formulas ($Ay_1$ -1) to ($Ay_1$ -6):

[Chemical Formula 13]

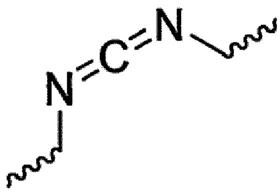

(Ay1-1)

[Chemical Formula 14]

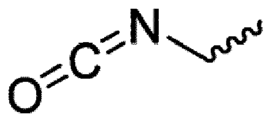

(Ay1-2)

[Chemical Formula 15]

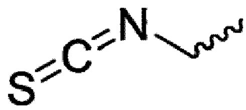

(Ay1-3)

[Chemical Formula 16]

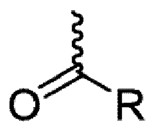

(Ay1-4)

wherein R is a hydrogen atom or a monovalent organic group;

[Chemical Formula 17]

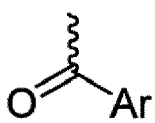

(Ay1-5)

[Chemical Formula 18]

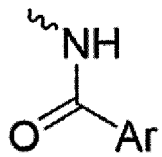

(Ay$_1$-6)

[41] The separator for an electricity storage device according to item 37, wherein

the reaction (IV) is a ring-opening reaction,
the functional group x of the compound Rx is at least one selected from the group consisting of -OH, $-NH_2$, -NH-, -COOH and -SH, and
the linking reaction unit $y_1$ of the compound Ry is at least two groups represented by the following formula (ROy$_1$-1):

[Chemical Formula 19]

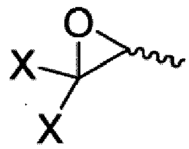

(ROy$_1$-1)

wherein a plurality of X are each independently a hydrogen atom or a monovalent substituent.

[42] The separator for an electricity storage device according to item 34, wherein, in the reaction (V), the metal ion is at least one selected from the group consisting of $Zn^{2+}$, $Mn^{2+}$, $Co^{3+}$, $Ni^{2+}$ and $Li^{+}$.
[43] The separator for an electricity storage device according to any one of items 1 to 42, wherein the polyolefin having the functional groups is not a master batch resin containing a dehydrating condensation catalyst which forms a crosslinked structure of the functional groups.
[44] An electricity storage device assembly kit, including:

(A) an exterior body housing a laminated body or a wound body of electrodes and the separator for an electricity storage device according to any one of items 1 to 43; and
(B) a container housing a nonaqueous electrolyte solution.

[45] An electricity storage device, including a positive electrode, a negative electrode, the separator for an electricity storage device according to any one of items 1 to 43, and a nonaqueous electrolyte solution.
[46] An electricity storage device, including a positive electrode, a negative electrode, the separator for an electricity storage device according to any one of items 1 to 43, and a nonaqueous electrolyte solution, wherein the positive electrode is at least one elected from the group consisting of a nickel-manganese-cobalt (NMC)-based lithium-containing positive electrode, an olivine-type lithium iron phosphate (LFP)-based positive electrode, a lithium cobaltate (LCO) positive electrode, a nickel-cobalt-aluminum (NCA)-based lithium-containing positive electrode and a lithium manganate (LMO)-based positive electrode.

[ADVANTAGEOUS EFFECTS OF INVENTION]

According to the present disclosure, it is possible to provide a safer separator for an electricity storage device, and an electricity storage device using the same.
In the first embodiment, according to the present disclosure, it is possible to provide a safer separator for an electricity storage device in which the possibility of local short circuit leading to thermal runaway is reduced, and an electricity storage device using the same.
In the second embodiment, the present disclosure can provide a separator for an electricity storage device,

capable of improving at least one of the safety of an electricity storage device, for example, safety in a nail penetration test, heat shrinkability, hot box testability and high-temperature bar impact fracture testability; and an electricity storage device using the same.

BRIEF DESCRIPTION OF DRAWINGS

FIG. 1(A) is a schematic diagram illustrating behavior when both ends of a separator for an electricity storage device including a non-crosslinked polyolefin substrate layer and an inorganic particle layer are heat-shrunk in an open state. FIG. 1(B) is a schematic diagram illustrating behavior when both ends of a separator for an electricity storage device including a non-crosslinked polyolefin substrate layer and an inorganic particle layer are heat-shrunk in a fixed state.

FIG. 2 is a schematic diagram illustrating behavior when both ends of a separator for an electricity storage device including a non-crosslinked polyolefin substrate layer and an inorganic particle layer are heat-shrunk in an open state.

FIG. 3(A) is a schematic diagram illustrating behavior when both ends of a separator for an electricity storage device including a crosslinked polyolefin substrate layer and an inorganic particle layer are heat-shrunk in an open state. FIG. 3(B) is a schematic diagram illustrating behavior when both ends of a separator for an electricity storage device including a crosslinked polyolefin substrate layer and an inorganic particle layer are heat-shrunk in a fixed state.

FIG. 4 is a schematic diagram illustrating behavior when local short circuit occurs in an electricity storage device including a separator for an electricity storage device, the separator including a crosslinked polyolefin substrate layer, an inorganic particle layer and a thermoplastic polymer layer.

FIG. 5 is a schematic diagram illustrating behavior when local short circuit occurs in an electricity storage device including a separator for an electricity storage device, the separator including a non-crosslinked polyolefin substrate layer, an inorganic particle layer and a thermoplastic polymer layer.

FIG. 6 is a schematic diagram illustrating behavior when local short circuit occurs in an electricity storage device including a separator for an electricity storage device, the separator having a non-crosslinked polyolefin substrate layer and a thermoplastic polymer layer.

FIG. 7 is a schematic diagram illustrating behavior when local short circuit occurs in an electricity storage device including a separator for an electricity storage device, the separator including a crosslinked polyolefin substrate layer and an inorganic particle layer.

FIG. 8 is a schematic diagram illustrating behavior when local short circuit occurs in an electricity storage device including a separator for an electricity storage device, the separator including a non-crosslinked polyolefin substrate layer and an inorganic particle layer.

FIG. 9 is a schematic diagram of an island structure containing an alkali metal and/or an alkaline earth metal in TOF-SIMS measurement.

FIG. 10 is a schematic diagram for explaining a crystalline polymer having a higher-order structure divided into a lamellar (crystal portion), an amorphous portion and an intermediate layer portion therebetween.

FIG. 11 is a schematic diagram for explaining the crystal growth of a polyolefin molecule.

FIG. 12 is a schematic diagram of a high-temperature bar impact fracture test (impact test).

DESCRIPTION OF EMBODIMENTS

<<Separator for Electricity Storage Device>>

The separator for an electricity storage device (hereinafter simply referred to as "separator") is commonly formed of a paper which is an insulating material having a porous structure, a nonwoven fabric made of a polyolefin or a microporous membrane made of a resin since insulation properties and lithium ion permeability are required. In particular, a polyolefin microporous membrane capable of resisting redox degradation and constructing a small and homogeneous porous body structure is excellent as a separator substrate in a lithium ion battery.

In the first embodiment, the separator for an electricity storage device includes at least each one of layer A containing a polyolefin, layer B containing inorganic particles and layer C containing a thermoplastic polymer. The polyolefin contained in layer A has one or more types of functional groups. The functional groups comprise functional groups capable of undergoing a condensation reaction with each other in the electricity storage device to form a crosslinked structure by a siloxane bond.

In the second embodiment, the separator for an electricity storage device includes a polyolefin microporous membrane as a substrate and a surface layer formed on at least one side thereof. A polyolefin contained in the polyolefin microporous membrane has one or more types of functional groups, and after housing in the electricity storage device,

(1) the functional groups undergo a condensation reaction with each other, (2) the functional groups react with a chemical substance inside the electricity storage device, or (3) the functional groups react with other types of functional groups, to form a crosslinked structure.

In the second embodiment, the separator for an electricity storage device preferably includes a polyolefin microporous membrane as a substrate and a thermoplastic polymer-containing layer formed on at least one side thereof. A polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

In the second embodiment, the separator for an electricity storage device preferably includes a polyolefin microporous membrane as a substrate and an active layer formed on at least one side thereof. A polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure. A chemically crosslinkable separator substrate capable of forming a crosslinked structure by any of the above-mentioned reactions (1) to (3) after being housed in an electricity storage device is combined with an active layer such as a PVDF-based resin-containing layer or a layer containing a PVDF-based resin and inorganic particles, and thus it is possible to synergically improve the heat shrinkability and the hot-box testability at high temperature (for example, 200°C or higher) by adhesion of the electrode material and the active layer in the electricity storage device, in addition to the crosslinking gelation of the substrate.

In the second embodiment, the separator for an electricity storage device preferably includes a polyolefin microporous membrane as a substrate and a heat-resistant porous layer containing a heat-resistant resin stacked on at least one side thereof. A polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure. Thus, it has been found that, in an impact test which simulates the destruction of the battery structure due to an external force-many studies have been made on the mechanical strength of the separator membrane in a bar impact test, a separator having high tensile strength is capable of suppressing short circuit without being broken even if the separator is subjected to an external force. However, in a high temperature state such as 150°C, a polyethylene (PE) microporous membrane is melted, thus failing to suppress short circuit. Meanwhile, even if a heat-resistant resin such as an aramid resin is combined with a microporous membrane, only the aramid resin remains in the form of a thin membrane, so the thin membrane structure of the aramid resin may be broken by the electrode decomposition or other chemical reactions inside the battery, leading to short circuit between the electrodes. A chemical crosslinkable separator substrate capable of forming a crosslinked structure by any of the above-mentioned reactions (1) to (3) after being housed in an electricity storage device and a heat-resistant porous layer containing a heat-resistant resin are combined, and thus it is possible to synergically improve the bar impact fracture testability at high temperature (for example, 150°C or higher) by the heat resistance of the porous layer stacked on the substrate, in addition to the crosslinking gelation of the substrate. By providing a crosslinking structure in the crystal-melted crystalline PE microporous membrane, the fluidity is low, and the substrate cannot be compatible with or mixed with the melted or softened state of the aramid resin, so contact between the electrodes can be suppressed. In such a case, the low-fluidity resin layer at high temperature can suppress short circuit, ignition and explosion even in a state where the decomposition $O_2$ is generated from the positive electrode. A heat-resistant resin such as an aramid resin has a large amount of polar functional groups, and exhibits high affinity with an electrolyte solution. It was experimentally clarified that application of the heat-resistant resin on a substrate having a crosslinked structure in an electricity storage device makes it possible to uniformly supply the electrolyte solution from the heat-resistant resin layer to the substrate, after incorporation and injection into the electricity storage device, and thus the substrate can construct a uniform crosslinked structure.

The entire thickness (total thickness) of the separator for an electricity storage device is preferably 2 μm or more, and more preferably 4 μm or more, from the viewpoint of ensuring insulation properties. The total thickness of the separator for an electricity storage device is preferably 40 μm or less, and more preferably 20 μm or less, from the viewpoint of increasing the ion permeability and the energy density of the electricity storage device.

I. Separator for Electricity Storage Device in First Embodiment

<Polyolefin Substrate Layer>

As used herein, layer A containing a polyolefin is also simply referred to as "polyolefin substrate layer". The polyolefin substrate layer is preferably a single layer structure. The single structure is a layer made of a single material,

and may include a coarse structure layer having a large pore diameter and a compact structure layer having a small pore diameter as long as it is composed of a single material.

The polyolefin substrate layer is typically a microporous membrane containing a polyolefin as a main component, and is preferably a polyolefin microporous membrane. The term "containing as a main component" means that the target component is contained in an amount of 50% by weight or more based on the total weight. The polyolefin contained in the polyolefin substrate layer may be, for example, 50% by weight or more, 60% by weight or more, 70% by weight or more, 80% by weight or more, 90% by weight or more, 99% by weight or more, or 100% by weight, based on the total weight of the resin components constituting the microporous membrane.

The polyolefin is not particularly limited, and may be preferably a polyolefin including 3 to 10 carbon atoms as a monomer unit. Examples of such polyolefin include a homopolymer of ethylene or propylene, and a copolymer formed from at least two olefin monomers selected from the group consisting of ethylene, propylene, 1-butene, 4-methyl-1-pentene, 1-hexene, 1-octene and norbornene, and are preferably polyethylene, polypropylene, and combinations thereof.

Of polyethylene, low-density polyethylene (LDPE), medium-density polyethylene (MDPE), high-density polyethylene (HDPE) and ultra-high molecular weight polyethylene (UHMWPE) are exemplified, and high-density polyethylene (HDPE) and ultra-high molecular weight polyethylene (UHMWPE) are preferable from the viewpoint of carrying out heat setting (may be abbreviated as "HS") at higher temperature without obstructing micropores. In general, the low-density polyethylene (LDPE) is polyethylene having a density of less than 0.925 $g/cm^3$ , the medium-density polyethylene (MDPE) is polyethylene having a density of 0.925 $g/cm^3$ or more and less than 0.942 $g/cm^3$ , high-density polyethylene (HDPE) is polyethylene having a density of 0.942 $g/cm^3$ or more and less than 0.970 $g/cm^3$ , and ultra-high molecular weight polyethylene (UHMWPE) is polyethylene having a density of 0.970 $g/cm^3$ or more and having a weight-average molecular weight (Mw) of 1,000,000 or more. The density of the polyethylene can be measured in accordance with "D) density gradient tube method" mentioned in JIS K7112 (1999).

Examples of the polypropylene include isotactic polypropylene, syndiotactic polypropylene and atactic polypropylene. Examples of the copolymer of ethylene and propylene include an ethylene-propylene random copolymer and an ethylene-propylene rubber.

The polyolefin contained in the polyolefin substrate layer includes a polyolefin having one or more types of functional groups capable of undergoing a condensation reaction with each other in the electricity storage device to form a crosslinked structure by a siloxane bond (hereinafter also referred to as "crosslinkable functional group" as used herein).

The crosslinkable functional group is preferably grafted to the main chain of the polyolefin. The crosslinkable functional group is a crosslinkable silane group, for example, a trialkoxysilyl group ($-Si(OR)_3$ ) and/or a dialkoxysilyl group ($-Si(OR)_2$), wherein R is, for example, methyl, ethyl, n-propyl, isopropyl, n-butyl, sec-butyl, isobutyl, tert-butyl, or a combination thereof, and is preferably methyl, ethyl, n-propyl, or a combination thereof. The crosslinkable silane group is more preferably a methoxysilyl group and an ethoxysilyl group, and more preferably a trimethoxysilyl group ($-Si(OMe)_3$ ). The alkoxysilyl group is converted into a silanol group through a hydrolysis reaction with water, thereby causing a condensation reaction to form a siloxane bond in the battery. An example of a crosslinking reaction in the case where R is methyl is shown below. The ratio of changing from T0 structure to T1 structure, T2 structure or T3 structure is arbitrary.

[Chemical Formula 20]

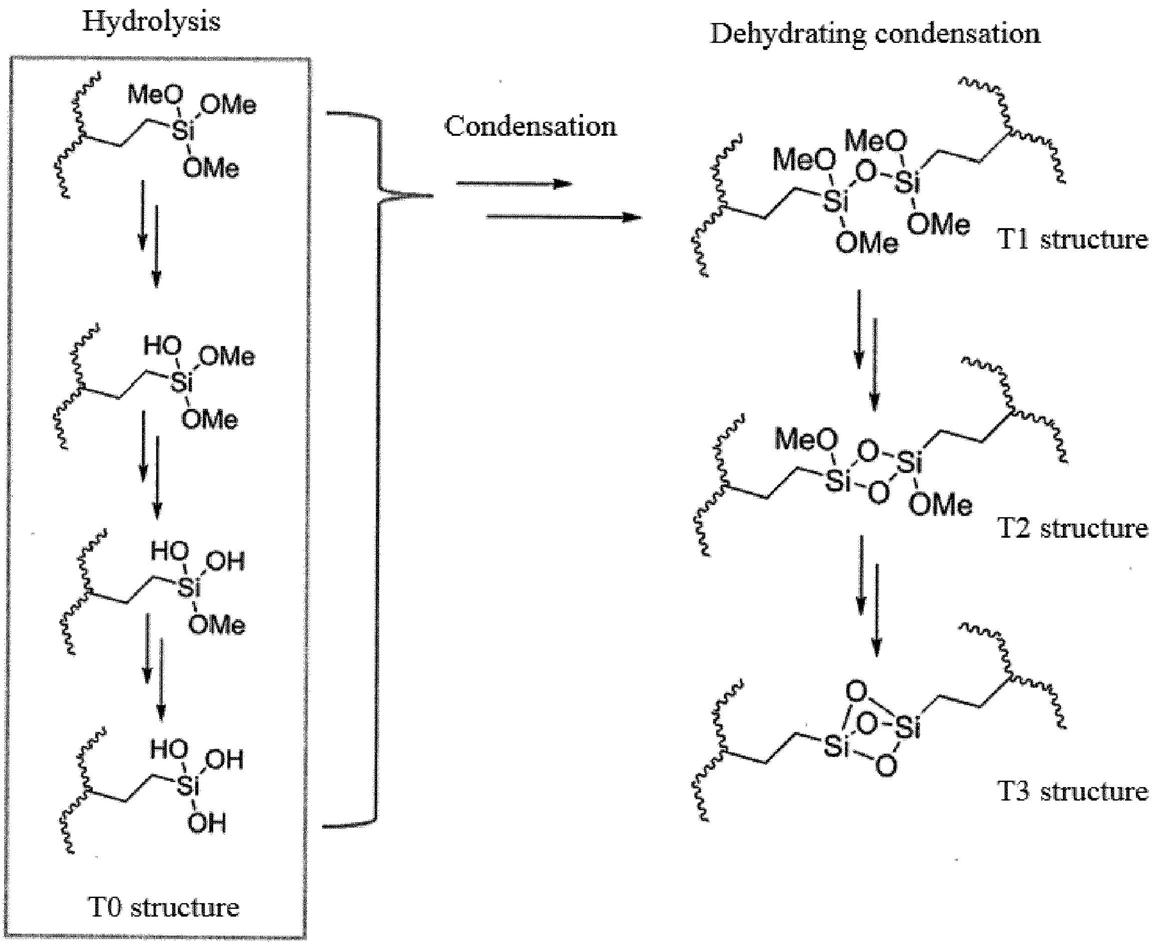


In the silane-modified polyolefin (hereinafter also referred to as "resin a"), the main chain and the graft are connected by a covalent bond. Examples of the structure for forming a covalent bond include, but are not particularly limited to, alkyl, ether, glycol, and ester.

From the viewpoint of the arrangement of the uniform Si-containing molecular structure and the lifetime of the equilibrium state of the Li ion coordination intermediate, in the stage before the crosslinking reaction of the resin a is carried out, the resin a is preferably contained in an amount of 0.03 to 1.0 mol%, namely, the silanol unit modification rate is preferably 0.03 to 1.0 mol%. The silanol unit modification rate is preferably 0.05 to 0.35 mol%, more preferably 0.07 to 0.32 mol%, particularly preferably 0.08 to 0.30 mol%, and most preferably 0.12 to 0.28 mol%. The inventors of the present application have found that the silane-modified unit is mainly present in the amorphous portions of the separator, and more preferably only the amorphous portions, and by focusing on the distance between the silane-modified units, and the thermal vibration motion at -10°C to 80°C, the resin a tends to have a molecular structure which facilitates the construction of the crosslinking reaction. All of T0, T1, T2 and T3 structures can form a coordination intermediate with Li ions, but it is considered that Li ions are coordinated between Si atoms in the amorphous portions, and the coordination desorption and the rearrangement are considered to proceed at random, so that a more remarkable effect can be obtained by adjusting the amount of the silanol unit modification of the resin a within the above range.

From the viewpoint of the arrangement of a uniform Si-containing molecular structure and the lifetime of the equilibrium state of the Li ion coordination intermediate, the resin a is preferably modified by 0.01 to 2.0 mol% of a propylene ($C_3$ ) unit, 0.01 to 2.0 mol% of a butene ($C_4$ ) unit, or 0.01 to 2.0 mol% in total of a C3 unit and a C4 unit. In this case, the number of carbon atoms takes into consideration both of the R group and the linking group in the above formula.

From the same viewpoint, the C3 unit modification rate of the resin a is more preferably 0.01 to 1.2 mol%, still more preferably 0.01 to 0.75 mol%, particularly preferably 0.02 to 0.60 mol%, and most preferably 0.05 to 0.30 mol%.

From the viewpoint of the arrangement of the uniform Si-containing molecular structure and the lifetime of the equilibrium state of the Li ion coordination intermediate, the $C_4$ unit modification rate of the resin a is preferably 0.01 to

1.0 mol%, more preferably 0.30 to 0.70 mol%, and particularly preferably 0.48 to 0.65 mol% in the stage before the crosslinking reaction is carried out. Meanwhile, in the heat setting (HS) step at the time of formation of the separator membrane, the $C_4$ unit modification rate of the resin a is preferably 0.43 mol% or less, more preferably 0.40 mol% or less, and still more preferably 0.1 mol% or less.

From the viewpoint of the arrangement of the uniform Si-containing molecular structure and the lifetime of the equilibrium state of the Li ion coordination intermediate, the total modification rate of the $C_3$ unit and the $C_4$ unit of the resin a is more preferably 1.5 mol% or less, still more preferably 1.0 mol% or less, particularly preferably 0.6 mol% or less, and most preferably 0.3 mol% or less.

From the viewpoint of the cycle characteristics and safety of the electricity storage device, the number-average molecular weight (Mn) of the resin a is preferably 10,000 to 20,000, more preferably 16,000 or less, and still more preferably 15,000 or less. From the same viewpoint, the weight-average molecular weight (Mw) of the resin a is preferably 45,000 to 200,000, more preferably 140,000 or less, still more preferably 129,000 or less, yet more preferably 100,000 or less, and most preferably 7,000 or less. From the same viewpoint, Mw/Mn of the resin a is preferably 3.0 to 12, more preferably 4.0 to 9.0, and still more preferably 4.1 to 8.0.

The resin a is not limited, but the viscosity-average molecular weight (Mv) may be, for example, 20,000 to 150,000, and the density thereof may be, for example, 0.90 to 0.97 g/$cm^3$ , and the melt mass flow rate (MFR) at 190°C may be, for example, 0.1 to 15 g/min.

The polyethylene constituting the silane-grafted modified polyethylene may be composed of one type of ethylene, or may be composed of two or more types of ethylenes. Two or more types of silane graft-modified polyethylenes composed of different ethylene may be used in combination.

The crosslinking reaction may spontaneously occur in an environment in the electricity storage device, or may be caused by external stimulation. Examples of the external stimulus include heat and light, for example, ultraviolet rays. Preferably, the crosslinking reaction is accelerated as a catalyst reaction under conditions in which an acidic condition, an alkaline condition, and a base with low nucleophilicity are present. Siloxane bonds formed by condensation have high thermodynamic stability. While C-C bond energy is 86 kcal·$mol^{-1}$ and C-Si bond energy is 74 kcal·$mol^{-1}$ , the Si-O bond energy of is 128 kcal·$mol^{-1}$. As a result, the thermodynamic stability of the siloxane bond is suggested (NPLs 1 and 2). Therefore, for example, by the presence of hydrogen fluoride (HF) or $H_2SO_4$ having a constant concentration in the reaction system, the crosslinking reaction of the silane-modified polyolefin in the polymer structure of the separator to the siloxane bond is accelerated in a high yield, and thus a highly heat-resistant structure can be constructed in the separator.

Since the Si compound has a high reactivity with F anion, the crosslinking point formed by the siloxane bond may be decomposed by the F anion having a high concentration. The bond energy of Si-F is very high as 160 kcal·$mol^{-1}$ and the Si-F bond has high thermodynamic stability, so it is considered that the F anion continues to be consumed until the concentration in the system becomes equal to or less than a certain level in the equilibrium reaction (NPLs 1 and 2). The decomposition reaction of the crosslinking point by the F anion is estimated to be the cleavage reaction of the C-Si bond or Si-OSi bond of the siloxane bond. In the experiment in which the bond dissociation energy of Si-X is estimated using the compound Me3Si-X, it has been reported that the bond dissociation energy D of Si-X is D = 394 $\pm$ 8 kJ/mol when X = Me, D = 513 $\pm$ 11 kJ/mol when X = OMe, and D = 638 $\pm$ 5 kJ/mol when X = F (NPL 7). Under the acidic condition, considering the stability of the product after the C-Si bond or Si-OSi bond cleavage of the siloxane bond, it is estimated that the Si-OSi bond is easily cleaved to convert into Si-F and HO-Si. Therefore, when the F anion concentration in the reaction system becomes equal to or higher than a certain level, it is considered that the siloxane bond at the crosslinking point is decomposed, leading to deterioration of the heat resistance of the separator.

In the present disclosure, it has been found that the concentration of HF can promote the crosslinking reaction to the siloxane bond and control the in-battery crosslinking reaction of the separator having high heat resistance utilizing the fact that $PF_6$ is present in the form of $PF_5$ and HF in equilibrium by the Jahn-Teller effect. Since $PF_5$ and HF are present in equilibrium, the crosslinking reaction of the siloxane bond can be continuously raised for a long period of time, and the probability of the crosslinking reaction can be greatly improved. The non-crystalline structure of the polyethylene has a high entanglement structure, and the entropy elasticity of the polyethylene is remarkably increased only by forming a partial crosslinked structure. Therefore, the molecular mobility of the amorphous portion is lowered, and it is difficult to form a siloxane bond for all the silanol units. In the present disclosure, the addition under a plurality of conditions are considered, and thus the problem could be fundamentally solved.

By containing a polyolefin having a crosslinkable functional group as mentioned above in the polyolefin substrate layer together with layer B containing inorganic particles and the layer C containing a thermoplastic polymer mentioned later, it is possible to provide a safer separator for an electricity storage device, in which the possibility of a local short circuit leading to thermal runaway mentioned below is reduced. The reason for this is not limited to the theory and the aspect of the drawings, and will be described below with reference to the drawings.

FIG. 1(A) is a schematic diagram illustrating behavior when both ends of a separator (10) for an electricity storage device including a non-crosslinked polyolefin substrate layer (1a) and an inorganic particle layer (2) are heat-shrunk in an open state. In a state in which both ends are opened, the substrate layer contracted by the stress (4) due to the thermal contraction lifts the inorganic particle layer to cause buckling fracture (5) of the inorganic particle layer, and the substrate layer pulled by the protruding inorganic particle layer generates tensile fracture (6). FIG. 2 is a diagram illustrating this behavior in a stepwise manner. When both ends of the separator for an electricity storage device having the non-crosslinked polyolefin substrate layer (1a) and the inorganic particle layer (2) are heat-shrunk in an open state, a portion where the vector of stress (4) due to heat shrinkage concentrates on the substrate layer and a sparse portion are generated, thereby deforming the separator for an electricity storage device into a waveform. At this time, buckling fracture (crack) is generated at the apex of the inorganic particle layer formed into a waveform (5), and the substrate layer is pulled to the inorganic particle layer (6). When the deformation progresses, a plurality of cracks occur and the substrate layer is subjected to tensile fracture (6) to generate voids. Returning to FIG. 1 again, FIG. 1(B) is a schematic diagram illustrating behavior when both ends of a separator (10) for an electricity storage device including a non-crosslinked polyolefin substrate layer (1a) and an inorganic particle layer (2) are heat-shrunk in a fixed state. The state in which both ends are fixed simulates a state in which the electricity storage device separator is stored in the electricity storage device. In a state in which both ends are fixed, the polyolefin substrate layer is broken between the fixing jigs (20) by the stress (4) due to heat shrinkage, and the gap increases as the heat shrinkage progresses. Accordingly, the inorganic particle layer is deformed so as to fall into the gap of the polyolefin substrate layer.

FIG. 3(A) is a schematic diagram illustrating behavior when both ends of a separator (10) for an electricity storage device including a crosslinked polyolefin substrate layer (1b) and an inorganic particle layer (2) are heat-shrunk in an open state. In the case of the crosslinked polyolefin substrate layer, as in FIG. 1(A) and FIG. 2, the buckling fracture (5) of the inorganic particle layer and the tensile fracture (6) of the substrate layer are generated by the stress (4) due to the heat shrinkage. However, in a state where both ends are fixed as shown in FIG. 3(B), the crosslinked polyolefin substrate layer (1b) tends to be extended between the fixing jigs (20) without breaking. High safety of the separator for an electricity storage device is realized by a combination of an inorganic particle layer and a thermoplastic polymer layer, which will be described later, on the premise of a difference in behavior in heat shrinkage in a state where both ends of the non-crosslinked polyolefin substrate layer and the crosslinked polyolefin substrate layer are fixed.

More specifically, FIG. 4 is a schematic diagram illustrating behavior when local short circuit (7) occurs in an electricity storage device (100) including a separator (10) for an electricity storage device, the separator including a crosslinked polyolefin substrate layer (1b), an inorganic particle layer (2) and a thermoplastic polymer layer (3). The local short circuit may be caused by lithium dendrite grown from the negative electrode active material layer by repeating charge and discharge cycles at low temperature in the case of a lithium ion secondary battery. As shown in FIG. 4, after a low-temperature charge-discharge cycle is carried out on the electricity storage device, the local short circuit (7) is likely to occur when the pressure (8) is applied. When local short circuit occurs, the short circuit portion generates heat, and the surrounding crosslinked polyolefin substrate layer tends to shrink. However, as described in FIG. 3, breakage of the crosslinked polyolefin substrate layer is unlikely to occur, and since the inorganic particle layer is fixed to the positive electrode by the thermoplastic polymer layer, deformation of the inorganic particle layer is unlikely to occur. Therefore, the stress (4) due to the heat shrinkage concentrates on the interface between the polyolefin substrate layer and the inorganic particle layer, the local short circuit is cut, and as a result, thermal runaway is prevented.

FIG. 5 is a schematic diagram illustrating the behavior when the local short circuit (7) is generated by applying a low temperature charge-discharge cycle and a pressure to the electricity storage device (100) in the same manner as in FIG. 4, except that the non-crosslinked polyolefin substrate layer (1a) is used. Since the polyolefin substrate layer is non-crosslinked, as mentioned in FIGS. 1 and 2, the non-crosslinked polyolefin substrate layer is broken and a gap is formed around the local short circuit. Therefore, the stress (4) due to the thermal contraction does not concentrate on the interface between the polyolefin substrate layer and the inorganic particle layer, and the local short circuit is unlikely to be cut.

FIG. 6 is a schematic diagram illustrating the behavior when the local short circuit (7) is generated by applying a low-temperature charge-discharge cycle and a pressure to the electricity storage device (100) in the same manner as in FIG. 5, except that the inorganic particle layer is not provided. Similarly to FIG. 5, the non-crosslinked polyolefin substrate layer is broken, and a gap is formed around the local short circuit. With the deformation of the non-crosslinked polyolefin substrate layer, the thermoplastic polymer layer (3) is pulled around to increase the gap. Therefore, stress (4) due to heat shrinkage is not concentrated, and local short circuit is unlikely to be cut.

FIG. 7 is a schematic diagram illustrating the behavior when the local short circuit (7) is generated by applying a low temperature charge-discharge cycle and a pressure to the electricity storage device (100) in the same manner as in FIG. 4, except that the thermoplastic polymer layer is not provided. Since the thermoplastic polymer layer is not present, the inorganic particle layer is easily deformed, and a part of the stress due to the heat shrinkage is absorbed by the deformation of the inorganic particle layer as compared with the case of FIG. 4. Therefore, stress due to heat shrinkage is less likely to concentrate on the interface between the polyolefin substrate layer and the inorganic particle layer, and the local short circuit is unlikely to be cut.

FIG. 8 is a schematic diagram illustrating the behavior when the local short circuit (7) is generated by applying

a low temperature charge-discharge cycle and a pressure to the electricity storage device (100) in the same manner as in FIG. 7, except that the non-crosslinked polyolefin substrate layer (1a) is used. Since the thermoplastic polymer layer is not present, the inorganic particle layer is easily deformed, and a part of the stress (4) due to heat shrinkage is absorbed by the deformation of the inorganic particle layer, and the non-crosslinked polyolefin substrate layer is broken, and a gap is formed around the local short circuit. Therefore, the stress (4) due to the thermal contraction does not concentrate on the interface between the polyolefin substrate layer and the inorganic particle layer, and the local short circuit is unlikely to be cut.

The polyolefin substrate layer preferably contains both of a silane-modified polyolefin and a polyolefin other than the silane-modified polyolefin (hereinafter also referred to as "silane-unmodified polyolefin") in order to obtain redox degradation resistance and a small and homogeneous porous body structure. The silane-unmodified polyethylene to be combined with the silane-modified polyolefin (hereinafter abbreviated as "resin a") is preferably a polyolefin having a viscosity-average molecular weight (Mv) of 2,000,000 or more (hereinafter abbreviated as "resin b"), a polyolefin having Mv of less than 2,000,000 (hereinafter abbreviated as "resin c"), or combinations thereof. By combining two types of silane-unmodified polyolefin having a molecular weight in a specific range with the resin a, it is possible to obtain an electricity storage device in which local short circuit due to stress concentration is easily cut and which is excellent in safety. The resin b is more preferably a polyethylene having a viscosity-average molecular weight (Mv) of 2,000,000 or more, and the resin c is more preferably a polyethylene having Mv of less than 2,000,000.

From the viewpoint of the cycle characteristics and safety of the electricity storage device, the number-average molecular weight (Mn) of the resin b is preferably 200,000 to 1,400,000, more preferably 210,000 to 1,200,000, and still more preferably 250,000 to 1,000,000. From the same viewpoint, the weight-average molecular weight (Mw) of the resin b is preferably 1,760,000 to 8,800,000, more preferably 1,900,000 to 7,100,000, and still more preferably 2,000,000 to 6,200,000. From the same viewpoint, Mw/Mn is preferably 3.0 to 12, more preferably 4.0 to 9.0, and still more preferably 6.0 to 8.8. From the same viewpoint, Mv of the resin b is preferably 2,000,000 to 10,000,000, more preferably 2,100,000 to 8,500,000, still more preferably 3,000,000 to 7,800,000, and yet more preferably 3,300,000 to 6,500,000.

From the viewpoint of the cycle characteristics and safety of the electricity storage device, the number-average molecular weight (Mn) of the resin c is preferably 20,000 to 250,000, more preferably 30,000 to 200,000, still more preferably 32,000 to 150,000, and yet more preferably 40,000 to 110,000. From the same viewpoint, the weight-average molecular weight (Mw) of the resin c is preferably 230,000 to 2,000,000, more preferably 280,000 to 1,600,000, still more preferably 320,000 to 1,200,000, and yet more preferably 400,000 to 1,000,000. From the same viewpoint, Mw/Mn of the resin c is preferably 3.0 to 12, more preferably 4.0 to 9.0, and still more preferably 6.0 to 8.8. From the same viewpoint, Mv of the resin c is preferably 250,000 to 2,500,000, more preferably 300,000 to 1,600,000, still more preferably 320,000 to 1,100,000, and yet more preferably 450,000 to 800,000.

From the viewpoint of the safety of the electricity storage device, the content of the resin a in the polyolefin substrate layer is preferably from 3% by weight to 70% by weight, more preferably 5% by weight to 60% by weight, and still more preferably 10% by weight to 50% by weight, based on the total weight of the solid component of the polyolefin starting material. From the viewpoint of high ion permeability and high safety, the total content of the silane-unmodified polyolefin in the polyolefin substrate layer is preferably from 40% by weight to 95% by weight, more preferably 50% by weight to 90% by weight, and still more preferably 60% by weight to 80% by weight, based on the total weight of the solid component of the polyolefin starting material.

From the same viewpoint, the content of the resin b in the polyolefin starting material is preferably from 3% by weight to 70% by weight, more preferably 5% by weight to 60% by weight, and still more preferably 5% by weight to 40% by weight, based on the total weight of the solid component of the polyolefin starting material.

From the same viewpoint, the content of the resin c in the polyolefin starting material is preferably 1% by weight to 90% by weight, more preferably 5% by weight to 60% by weight, and still more preferably 5% by weight to 50% by weight, based on the total weight of the solid component of the polyolefin starting material.

From the same viewpoint, the weight ratio of the resin a to the resin b in the polyolefin starting material (weight of resin alweight of resin b) is preferably 0.07 to 12.00, more preferably 0.10 to 11.00, and still more preferably 0.50 to 10.00.

From the same viewpoint, the weight ratio of the resin a to the resin c in the polyolefin starting material (weight of resin alweight of resin b) is preferably 0.07 to 12.00, more preferably 0.10 to 11.00, and still more preferably 0.20 to 10.00.

From the same viewpoint, the weight ratio of the resin b to the resin c in the polyolefin starting material (weight of resin alweight of resin b) is preferably 0.06 to 7.00, more preferably 0.10 to 7.00, and still more preferably 0.12 to 6.90.

The thickness of the polyolefin substrate layer is preferably 1.0 μm or more, more preferably 2.0 μm or more, and still more preferably 3.0 μm or more. When the thickness of the polyolefin substrate layer is 1.0 μm or more, the membrane strength tends to be further improved. The thickness of the polyolefin substrate layer is preferably 100 μm or less, more preferably 50 μm or less, and still more preferably 30 μm or less. When the thickness of the polyolefin substrate layer is 100 μm or less, the ion permeability tends to be further improved.

The heat shrinkage factor at 150°C of the polyolefin substrate layer is preferably 10% or more, more preferably 15% or more, and still more preferably 20% or more. When the heat shrinkage factor at 150°C is 10% or more, the stress

applied at the time of heat shrinkage increases, so that the local short circuit can be easily cut and the thermal runaway can be more effectively prevented.

<Inorganic Particle Layer>

The separator for an electricity storage device further includes layer B containing inorganic particles (hereinafter also referred to as "inorganic particle layer" as used herein).

The inorganic particle is preferably at least one selected from the group consisting of alumina, silica, titania, zirconia, magnesia, ceria, yttria, zinc oxide, iron oxide, silicon nitride, titanium nitride, boron nitride, silicon carbide, aluminum hydroxide oxide, talc, kaolinite, dickite, nacrite, halloysite, pyrophyllite, montmorillonite, sericite, mica, amesite, bentonite, asbestos, zeolite, diatomaceous earth, silica sand and glass fiber. Examples of alumina include alumina such as $\alpha$-alumina, $\beta$-alumina or $\gamma$-alumina; and alumina hydrate such as boehmite. In view of high stability to an electrolyte to be used in a lithium ion battery, $\alpha$-alumina or boehmite is preferable.

The content of the inorganic particles contained in the inorganic particle layer is preferably from 5% by weight to 99% by weight, more preferably 10% by weight to 99% by weight, and still more preferably 50% by weight to 98% by weight, and yet more preferably 90% by weight to 97% by weight, based on the total weight of the inorganic particle layer. When the content of the inorganic particles is 5% by weight or more, the elastic modulus of the separator can be increased, and a separator having higher heat resistance can be obtained. When the content of the inorganic particles is 99% by weight or less, dust fall-off from the separator can be prevented.

The inorganic particle layer is preferably an inorganic porous layer containing a resin binder in addition to the inorganic particles. It is possible to use, as the resin binder, a resin material such as a styrene-butadiene resin, an acrylic acid ester resin, a methacrylic acid ester resin, and a fluororesin such as polyvinylidene fluoride. The content of the resin binder in the inorganic particle layer is preferably 1% by weight to 50% by weight, and more preferably 3% by weight to 10% by weight, based on the total weight of the inorganic particle layer. When the content of the resin binder is 1% by weight or more, dust fall-off from the separator can be prevented. When the content of the inorganic particles is 50% by weight or less, the elastic modulus of the separator can be increased, and a separator having higher heat resistance can be obtained.

The glass transition temperature (Tg) of the resin binder is preferably -50°C to 90°C, and more preferably -30°C to -10°C. When the glass transition temperature (Tg) of the resin binder is -50°C or higher, the adhesion is excellent, and when the glass transition temperature (Tg) of the resin binder is 90°C or lower, the ion permeability tends to be excellent.

The thickness of the inorganic particle layer is preferably 0.5 $\mu$m or more, more preferably 1.0 $\mu$m or more, and still more preferably 2.0 $\mu$m or more. Since the inorganic particle layer has a thickness of 0.5 $\mu$m or more, a separator having higher heat resistance can be obtained. The thickness of the inorganic particle layer is preferably 20 $\mu$m or less, more preferably 10 $\mu$m or less, and still more preferably 6 $\mu$m or less. When the thickness of the inorganic particle layer is 20 $\mu$m or less, the ion permeability tends to be further improved.

The elastic modulus of the inorganic particle layer is preferably 0.05 GPa or more, and more preferably 0.1 GPa or more. When the elastic modulus of the inorganic particle layer is 0.05 GPa or more, stress concentration is likely to occur at the interface between the inorganic particle layer and the polyolefin substrate layer at the time of local short circuit formation, and thermal runaway can be more effectively prevented. The elastic modulus of the inorganic particle layer is preferably 10 GPa or less, more preferably 5 GPa or less, and still more preferably 2 GPa or less. When the elastic modulus of the inorganic particle layer is 10 GPa or less, the handleability of the separator is improved.

<Thermoplastic Polymer Layer>

The separator for an electricity storage device further includes a layer C containing a thermoplastic polymer (hereinafter also referred to as "thermoplastic polymer layer" as used herein). The thermoplastic polymer layer is preferably stacked on a surface of the inorganic particle layer which is not in contact with the polyolefin substrate layer.

Examples of the thermoplastic polymer include polyolefin resins such as polyethylene, polypropylene and $\alpha$-polyolefin; fluorine-based polymers such as polyvinylidene fluoride and polytetrafluoroethylene, or copolymers containing the same; diene-based polymers including conjugated dienes such as butadiene and isoprene as a monomer unit, or copolymers containing the same, or hydrides thereof; acrylic polymers including (meth)acrylate or (meth)acrylic acid as a monomer unit, including acrylic polymer or (meth)acrylate, (meth)acrylic acid including no polyalkylene glycol unit as a monomer unit, and including one or more polyalkylene glycol units, or copolymers containing the same, or hydrides thereof; rubbers such as ethylene-propylene rubber, polyvinyl alcohol and vinyl polyacetate; polyalkylene glycols having no polymerizable functional group, such as polyethylene glycol and polypropylene glycol; resins such as polyphenylene ether, polyphenylene sulfide and polyester; copolymers including an ethylenically unsaturated monomer including three or more alkylene glycol units as a copolymerization unit; and combinations thereof. From the viewpoint of improving the

safety of the electricity storage device, the thermoplastic polymer is preferably an acrylic polymer, and more preferably a polymer including a polymerization unit of (meth)acrylic acid ester or (meth)acrylic acid as a polymerization unit.

From the viewpoint of improving the safety of the electricity storage device, it is also preferable that the thermoplastic polymer also contains at least one fluorine atom-containing vinyl compound selected from the group consisting of polyvinylidene fluoride-hexafluoropropylene (PVDF-HFP) and polyvinylidene fluoride-chlorotrifluoroethylene (PVDF-CTFE).

The glass transition temperature (Tg) of the thermoplastic polymer is preferably -50°C to 150°C. When the glass transition temperature (Tg) of the thermoplastic polymer is -50°C or higher, the adhesion is excellent, and when the glass transition temperature (Tg) of the thermoplastic polymer is 150°C or lower, the ion permeability tends to be excellent.

The area ratio of the thermoplastic polymer layer covering the surface of the inorganic particle layer is preferably 5% or more, more preferably 20% or more, and still more preferably 50% or more. When the area ratio of the thermoplastic polymer layer is 5% or more, the adhesion to the electrode can be improved. The area ratio of the thermoplastic polymer layer covering the surface of the inorganic particle layer is preferably 98% or less. As a result, closed holes of the polyolefin substrate layer can be suppressed, and high air permeability can be maintained.

The peel strength (180° peel strength) when the thermoplastic polymer layer is peeled from the inorganic particle layer so as to form an angle of 180° is preferably 0.01 N/m or more, and more preferably 0.5 N/m or more. When the 180° peel strength of the thermoplastic polymer layer is 0.01 N/m or more, it is possible to obtain a separator for an electricity storage device, which is excellent in adhesive force and therefore suppresses the deformation of the inorganic particle layer, and is excellent in safety. From the viewpoint of the handleability, the 180° peel strength of the thermoplastic polymer layer is preferably 30 N/m or less, and more preferably 10 N/m or less.

The thickness of the thermoplastic polymer layer is preferably 0.1 μm or more, and more preferably 0.5 μm or more. When the thickness of the thermoplastic polymer layer is 0.1 μm or more, it is possible to obtain a separator for an electricity storage device, which is excellent in adhesive force and therefore suppresses the deformation of the inorganic particle layer, and is excellent in safety. The thickness of the thermoplastic polymer layer is preferably 3 μm or less, and more preferably 1 μm or less, from the viewpoint of enhancing the ion permeability.

<Island Structure>

It is preferable that at least one island structure containing an alkali metal and/or an alkaline earth metal is detected in layer A when TOF-SIMS measurement is carried out in a 100 μm square area. The size of the island structure is preferably from 9 $\mu m^2$ to 245 $\mu m^2$, more preferably 10 $\mu m^2$ to 230 $\mu m^2$, and still more preferably 11 $\mu m^2$ to 214 $\mu m^2$. It is preferable that two or more island structures containing calcium are detected in the electricity storage device when TOF-SIMS measurement is carried out in a 100 μm square area. At this time, a distance between centers of gravity of the island structure is preferably 6 μm to 135 μm, more preferably 8 μm to 130 μm, and still more preferably 10 μm to 125 μm. FIG. 9 is a schematic diagram of an island structure containing an alkali metal and/or an alkaline earth metal in TOF-SIMS measurement. As schematically illustrated in FIG. 10, the distance (d) between the island structures (9) can be measured in a 100 μm square area. Examples of the method for controlling the size of the island structure and the distance between centers of gravity include adjusting by the number of rotations of the extruder, the molecular weight of the polyolefin resin starting material, etc.

When an electricity storage device using an electrolytic solution containing LiFSOs is fabricated, it is possible to trap HF as a salt of an alkali metal and/or an alkaline earth metal by homogeneously distributing an alkali metal and/or an alkaline earth metal in an island structure in which the alkali metal and/or the alkaline earth metal is/are aggregated in the polyolefin substrate layer due to a variation in the amount of moisture carried by each member. Since the alkali metal and/or the alkaline earth metal is/are consumed stepwise from the surface of the island structure, the trap effect can be maintained for a long period of time. As a result, deterioration of the battery can be suppressed for a long period of time, which is preferable. The siloxane-crosslinked separator may catalyze a cleavage reaction, which is a reverse reaction of the crosslinking reaction, when excess HF is present after crosslinking. Therefore, it is presumed that the cleavage reaction is suppressed by continuously trapping HF with the heterogeneously distributed alkali metal and/or alkaline earth metal, thus making it possible to improve the long-term stability of the crosslinked structure of the silane crosslinked separator.

Examples of the alkali metal include lithium, sodium and potassium, and examples of the alkaline earth metal include magnesium, calcium and strontium. The island structure preferably contains an alkaline earth metal, and the alkaline earth metal is preferably calcium. By heterogeneously distributing calcium in the form of an island structure in the polyolefin substrate layer, calcium consumes HF in the system consumed as $CaF_2$, thus making it possible to more efficiently control the HF concentration. Since calcium is gradually consumed from the surface of the island structure, it is presumed that the trap effect can be maintained for a long period of time without being consumed completely in a short period of time. Thus, deterioration of the battery can be suppressed for a long period of time, which is preferable.

The siloxane-crosslinked separator may catalyze the cleavage reaction, which is a reverse reaction of the crosslinking reaction, when excess HF is present after crosslinking. Therefore, it is presumed that the cleavage reaction is suppressed by continuously trapping HF with the heterogeneously distributed alkali metal and/or alkaline earth metal, thus making it possible to improve the long-term stability of the crosslinked structure of the silane crosslinked separator. In the case where $LiPF_6$ is contained in the electrolyte, the generation of an excessive amount of F anion due to variation in moisture content is considered, similarly. It has been experimentally found that the F anion can be trapped by providing an island structure containing calcium in the polyolefin substrate layer, and thus the stability of the siloxane bond can be secured, similarly, and the crosslinked structure of the separator can be maintained over a long period of time.

<Various Properties of Separator for Electricity Storage Device>

The porosity of the separator for an electricity storage device is preferably 20% or more, more preferably 30% or more, and still more preferably 40% or more. When the porosity of the separator is 20% or more, the followability to rapid movement of ions tends to be further improved. Meanwhile, the porosity of the separator is preferably 80% or less, more preferably 70% or less, and still more preferably 60% or less. When the porosity of the separator is 80% or less, the membrane strength is further improved, and self-discharge tends to be further suppressed.

The air permeability of the separator for an electricity storage device is preferably 50 seconds or more, more preferably 60 seconds or more, and still more preferably 70 seconds or more, per 100 $cm^3$ of the volume of the membrane. When the air permeability of the separator is 50 seconds or more, the balance between the thickness, the porosity and the mean pore size tends to be further improved. The air permeability of the separator is preferably 400 seconds or less, more preferably 300 seconds or less, still more preferably 250 seconds or less, and yet more preferably 200 seconds or less, per 100 $cm^3$ of the volume of the membrane. When the air permeability of the separator is 400 seconds or less, the ion permeability tends to be further improved.

The membrane thickness separator for an electricity storage device is preferably 1.0 μm or more, more preferably 2.0 μm or more, and still more preferably 3.0 μm or more. When the membrane thickness separator is 1.0 μm or more, the membrane strength tends to be further improved. The membrane thickness of the separator is preferably 100 μm or less, more preferably 60 μm or less, and still more preferably 50 μm or less. When the membrane thickness separator is 100 μm or less, the ion permeability tends to be further improved.

The heat shrinkage factor at 150°C of the separator for an electricity storage device and the heat shrinkage factor at 150°C in the electrolyte are preferably 50% or less, more preferably 30% or less, and still more preferably 10% or less. When the heat shrinkage factor at 150°C of the separator for an electricity storage device and the heat shrinkage factor at 150°C in the electrolyte are 50% or less, the battery safety at the time of local short circuit generation can be further improved. The heat shrinkage factor at 150°C of the separator for an electricity storage device and the heat shrinkage factor at 150°C in the electrolyte are preferably 0.1% or more, more preferably 0.2% or more, and still more preferably 0.3% or less. When the heat shrinkage of the separator at 150°C and the heat shrinkage of 150°C in the electrolyte are 0.1% or more, the balance between the porosity and the puncture strength tends to be further improved.

When the battery causes abnormal heat generation due to internal short circuit, there is a possibility that the separator at high temperature may deform. As used herein, this phenomenon is referred to as "thermal response", and the area change rate of the separator due to the thermal response is referred to as "thermal response index". It is reported that the deformation of the crystalline polymer by heat occurs due to the non-orientation of the amorphous portions and the lamellar structure of the fiber structure of the crystal portions. It can be considered that the thermal response index of the separator is related to the number of molecular chains exceeding activation energy for causing the change by the crystal and amorphous portions among the molecular chain in the polymer resin constituting the polyolefin substrate layer. By the way, the molecular motion of the polymer is determined by the bending property of the main chain (in-molecule interaction) and intermolecular interaction. In particular, in the case of a polymer solid, the latter plays an important role, and when the temperature of the polymer is raised, intermolecular interaction is weakened, and micro-Brownian motion and macro-Brownian motion are activated, leading to the change of the crystal portions and amorphous portions. Therefore, it is considered that the activation energy for the transition to the lamellar structure of the polymer chain of the crystal portions and the non-orientation of the polymer chain of the amorphous portions depend on intermolecular interaction. The intermolecular interaction also depends on the molecular weight of the polymer. The molecular weight distribution of the polymer varies depending on the production method, but is often approximated by a distribution function such as a Zimm type distribution and a Wesslau type distribution (logarithmic normal distribution). Therefore, it is possible to consider that the distribution of the activation energy for each molecular chain in the polymer follows these distribution functions. Considering the thermal response index of the separator as the cumulative number of molecular chains exceeding the active energy, it is expected that the thermal response can be approximated by a cumulative distribution function, for example, a sigmoid function. In practice, the inventors carried out fitting of the relationship between the thermal response index and the temperature when the separator for an electricity storage device is heated to 150°C at 2°C/min to the following formula (1):

[Mathematical Formula 2]

$$\text{Formula (1)} \quad \text{(Thermal Response Index)} = \frac{max}{1 + \exp\frac{T_0 - T}{rate}}$$

using the least squares method, and as a result, it has been found that there are max, $T_0$ and rate such that the determination coefficient R2 becomes 0.95 or more. In the formula, max corresponds to the convergence value of the thermal response index, and $T_0$ corresponds to the inflection point of the thermal response index. In the formula, the rate is a gradient of the thermal response index, namely, a parameter related to the severity of deformation. In the polyolefin microporous membrane, regarding the amount of deformation due to heating, when the relationship between the thermal response index and the temperature upon heating the electricity storage device separator after immersion in the internal void ratio electrolyte solution to 150°C/min is fitted to the formula (1) using the least squares method so that the determination coefficient R2 becomes 0.95 or more, the value of the rate is preferably 3.5 or more, more preferably 4.0 or more, and still more preferably 4.5 or more. The larger the rate, the more slowly the thermal response progresses, and the surrounding electrodes can be prevented from being involved in the thermal response of the separator. From the viewpoint of preventing destruction of the battery due to thermal response, the value of the rate is preferably 3.5 or more. The value of the rate is preferably 150 or less, more preferably 100 or less, and still more preferably 50 μm or less. The smaller the rate, the more rapidly the thermal response progresses, and the stress applied to the lithium dendrite increases when the local short circuit occurs. From the viewpoint of improving the battery safety when the local short circuit occurs, the value of the rate is preferably 150 or less.

In the above formula (1), the value of $T_0$ is preferably $110 \leq T_0 \leq 150$, more preferably $115 \leq T_0 \leq 140$, and still more preferably $120 \leq T_0 \leq 135$. The value of $T_0$ is related to the temperature at which the thermal response occurs. When the range of $T_0$ is within the above range, it is possible to prevent thermal response of the separator in the normal use temperature range of the battery, and to accurately fold the lithium dendrite when the local short circuit occurs, and stop the local short-circuit. In the above formula (1), the range of max is preferably $0.1 \leq max \leq 30$, more preferably $0.2 \leq max \leq 20$, and still more preferably $0.5 \leq max \leq 10$. The value of max is related to the convergence value of the thermal response index. When the range of max is within the above range, it is possible to prevent the occurrence of internal short circuit due to the thermal response of the separator at the time of local short circuit.

In light of the above, examples of the method for controlling the values of the rate, $T_0$ and max in the above formula (1) include a method for adjusting the molecular weight distribution of the polyolefin substrate and a method for controlling the mechanical strength of the inorganic coating layer having the effect of suppressing thermal deformation. For example, it is preferable to use a polyolefin (starting material b) having Mv = 2,000,000 to 9,000,000 and a polyolefin (starting material c) having Mv = 500,000 to 2,000,000 as a polyolefin starting material, and a silane-modified polyolefin (starting material a) having Mv = 20,000 to 150,000 as a silane-modified polyolefin starting material, namely, the total of three types. More preferably, the ratio of the content is adjusted in accordance with each molecular weight. More preferably, by adjusting the common logarithm of the ratio of the puncture strength divided by weight per unit area calculated by the following formula (2) and the weight per unit area of the inorganic coating layer, it is easy to keep the value of the rate, $T_0$ and max within the above range. In the starting material composition mentioned above, the ratio of the starting material a in the total weight of the polyolefin substrate layer is 3% by weight to 70% by weight, and the ratio of the starting material b to the starting material c (weight of resin b/weight of resin c) is preferably 0.06 to 7.00. The common logarithm is preferably 0.1 to 3.

[Mathematical Formula 3]

$$\text{Formula (2)} \quad \log_{10}\left\{\frac{\text{Puncture strength divided by weight per unit area of polyolefin substrate layer}}{\text{Weight per unit area of inorganic coating layer}}\right\}$$

II. Separator for Electricity Storage Device in Second Embodiment

<Polyolefin Substrate Layer>

Since the functional group included in the polyolefin constituting the separator substrate is not incorporated into the crystal portions of the polyolefin and is considered to be crosslinked in the amorphous portions, the separator according to the second embodiment is stored in the electricity storage device, and then a crosslinked structure is formed

by using a surrounding environment or a chemical substance in the electricity storage device, thereby suppressing an increase in internal stress or deformation of the fabricated electricity storage device, thus enabling an improvement in at least one of safety at the time of a nail penetration test, heat shrinkability, hot box testability and high-temperature bar impact fracture testability.

(1) The condensation reaction between the functional groups of the polyolefin can be, for example, a reaction via a covalent bond of two or more functional groups A included in the polyolefin. (3) The reaction between the functional group of the polyolefin and other types of functional groups can be, for example, a reaction via a covalent bond between the functional group A and the functional group B included in the polyolefin.

(2) In the reaction between the functional group of the polyolefin and the chemical substance in the electricity storage device, for example, the functional group A included in the polyolefin can form a covalent bond or a coordinate bond with any of an electrolyte, an electrolyte solution, an electrode active material or an additive, or decomposition products thereof, which are included in the electricity storage device, or any of an electrolyte, an electrolyte solution, an electrode active material or an additive, or decomposition products thereof, which are included in the polyolefin microporous membrane as the substrate, Timing of including any of an electrolyte, an electrolyte, an electrode active material, an additive in the polyolefin microporous membrane, or a decomposition product thereof is not restricted, and may be before, during or after the housing of the separator into the electricity storage device. According to the reaction (2), a crosslinked structure is formed not only the inside of the separator, but also between the separator and the electrode or between the separator and the solid electrolyte interface (SEI), thus enabling an improvement in strength between the plurality of members of the electricity storage device.

The crosslinked structure formed by any of the reactions (1) to (3) is preferably an amorphous crosslinked structure in which the amorphous portion of the polyolefin is crosslinked. Since it is believed that the functional groups in the polyolefin constituting the separator are not incorporated into the crystal portion of the polyolefin but are instead crosslinked in the amorphous portions, it is possible to suppress an increase in internal stress or the deformation of the fabricated electricity storage device while achieving both a shutdown function and high-temperature membrane rupture resistance, as compared to a conventional crosslinked separator in which the crystal portion and its periphery are easily crosslinked, and can therefore ensure at least one of safety at the time of a nail penetration test, heat shrinkability, hot box testability and high-temperature bar impact fracture testability of the electricity storage device. From the same viewpoint, the amorphous portion of the polyolefin in the separator of the second embodiment is preferably selectively crosslinked, and more preferably it is significantly more crosslinked than the crystal portion. The gelation degree of the polyolefin microporous membrane having an amorphous crosslinked structure such as a silane crosslinked structure is preferably 30% or more, and more preferably 70% or more.

The crosslinking reaction mechanism and crosslinked structure are not fully understood, but are considered by the present inventors to be as follows.

(1) Crystal Structure of High-Density Polyethylene Microporous Membrane

A polyolefin resin, which is typically high-density polyethylene, is generally a crystalline polymer, and as shown in FIG. 10, it has a higher-order structure divided into the lamella of the crystal structure (crystal portion), an amorphous portion and an interlayer portion between them. The polymer chain mobility is low in the crystal portion and in the interlayer portion between the crystal portion and amorphous portion, making it difficult to separate, but in solid viscoelasticity measurement it is possible to observe a relaxation phenomenon within a range of 0 to 120°C. The amorphous portion, on the other hand, has very high polymer chain mobility, with the phenomenon being observed within a range of -150 to -100°C in solid viscoelasticity measurement. This is closely related to the radical relaxation or radical transfer reaction or crosslinking reaction mentioned below.

Moreover, the polyolefin molecules constituting the crystals are not simple but rather, as shown in FIG. 11, a plurality of polymer chains form small lamella which then aggregate, forming crystals. It is difficult to observe this phenomenon directly. It has become evident, however, as recent simulations have advanced academic research in the field. For the purpose mentioned herein, a "crystal" is the minimum crystal unit measured by X-ray structural analysis, being a unit that can be calculated as crystallite size. Thus, even the crystal portion (lamella interior) is partially unconstrained at the time of crystallization, so that portions with somewhat high mobility are predicted to be present.

(2) Crosslinking Reaction Mechanism by Electron Beam

The reaction mechanism of electron beam crosslinking (hereinafter abbreviated as EB crosslinking) of polymers is as follows. (i) Irradiation of an electron beam of several tens of kGy to several hundred kGy, (ii) permeation of the electron beam into the reaction target (polymer) and secondary electron generation, (iii) hydrogen withdrawal reaction

and radical generation in the polymer chains by the secondary electrons, (iv) withdrawal of adjacent hydrogens by radicals and migration of the active sites, and (v) crosslinking reaction or polyene formation by recombination between radicals. Because radicals generated in the crystal portion have poor mobility they are present for long periods, while impurities, etc. are unable to infiltrate into the crystals, and therefore the probability of reaction or quenching is low. Such radical species are known as stable radicals, and they remain for long periods of several months, lifetime thereof having been elucidated by ESR measurement. This is thought to result in poor crosslinking reaction within the crystals. However, in the unconstrained molecular chains or the peripheral crystal-amorphous interlayer portions which are present in small amounts inside the crystals, the generated radicals have somewhat longer lifetimes. These radical species are known as Persistent Radicals, and in mobile environments they are thought to promote crosslinking reaction between molecular chains with high probability. The amorphous portions have very high mobility, and therefore generated radical species have a short lifetime and are thought to promote not only crosslinking reaction between molecular chains but also polyene reaction within individual molecular chains, with high probability.

In a micro visual field on the level of crystals, therefore, crosslinking reaction by EB crosslinking can be assumed to be localized within the crystals or at peripheries thereof.

(3) Crosslinking Reaction Mechanism by Chemical Reaction

The functional groups in the polyolefin resin and the chemical substances in the electricity storage device or the polyolefin microporous membrane are preferably reacted, or the chemical substances in the electricity storage device or the polyolefin microporous membrane are preferably used as catalysts.

As mentioned above, crystal portions and amorphous portions are present in a polyolefin resin. Due to steric hindrance, however, the functional groups are not present in the crystals and are localized in the amorphous portions. This is generally known, and even though units such as methyl groups that are present in small amounts in polyethylene chains are incorporated into the crystals, grafts that are bulkier than ethyl groups are not incorporated (NPL 2). Therefore, crosslinking points due to different reactions than the electron beam crosslinking are only localized at the amorphous portions.

(4) Relationship between Differences in Crosslinked Structure and Effects thereof

The reaction products in the crosslinking reactions by chemical reactions within the battery have different morphologies. In the research leading to the present disclosure, the following experimentation was carried out in order to elucidate crosslinked structures and to characterize the changes in physical properties of microporous membranes that result from structural changes.

First, the mechanical properties of a membrane were examined by a tensile rupture test. Simultaneously with the tensile rupture test, *in situ* X-ray structural analysis was carried out using emitted light to analyze changes in crystal structure. When compared to a membrane without EB crosslinking or chemical crosslinking (before), the EB crosslinked membrane had reduced fragmentation of the crystal portion as the strain increased. This is because the crystal interiors or peripheries had been selectively crosslinked. The Young's modulus and breaking strength markedly increased during this time, allowing high mechanical strength to be exhibited. Meanwhile, the chemical crosslinked membrane showed no difference in fragmentation of the crystals before and after crosslinking reaction, thus suggesting that the amorphous portion has been selectively crosslinked. There was also no change in mechanical strength before and after crosslinking reaction.

The crystal melt behavior of both was then examined in a fuse/meltdown characteristics test. As a result, the EB crosslinked membrane had a notably higher fuse temperature, and the meltdown temperature increased to 200°C or higher. The chemical crosslinked membrane, on the other hand, showed no change in fuse temperature before and after crosslinking treatment, and the meltdown temperature was confirmed to have increased to 200°C or higher. This suggests that the fuse properties resulting from crystal melting had resulted from a higher melting temperature and lower melting speed due to crosslinking of the EB crosslinked membrane at the peripheries of the crystal portions. It was also concluded that no change was caused in the fuse properties because the chemical crosslinked membrane had no crosslinked structure at the crystal portions. In the high temperature range of around 200°C, both had a crosslinked structure after crystal melting, and therefore the resin as a whole was stabilized in a gel state and satisfactory meltdown characteristics are obtained.

The above findings are summarized in the following table.

[Table 1]

| | Electron beam crosslinking | Chemical reactive crosslinking |
|---|---|---|
| Crosslinking site | Within crystals and at crystal-amorphous interlayer portions | Amorphous portions |

(continued)

| | Electron beam crosslinking | Chemical reactive crosslinking |
|---|---|---|
| Membrane strength | Increased | No change |
| Fuse function | Function impaired or lost | No change |
| Meltdown resistance | Gradual increase with dose | Definitely improved |

The constituent elements of the separator according to the second embodiment will be described below.

The polyolefin microporous membrane as the substrate described above can be a multilayer membrane composed of a single-layer membrane composed of a single polyolefin-containing microporous layer, a multilayer membrane composed of a plurality of polyolefin-containing microporous layers, or a multilayer membrane of a polyolefin-based resin layer and a layer containing a resin other than the polyolefin-based resin layer as a main component.

In the case of a two-layer membrane formed from two polyolefin-containing microporous layers, the polyolefin compositions of both layers can be different. In the case of a multilayer membrane formed from three or more polyolefin-containing microporous layers, the outermost and innermost polyolefin compositions can be different from each other, and may be, for example, a three-layer membrane.

The multilayer membrane as the substrate preferably has a multilayer structure of two or more layers including at least each one of layer A containing a polyolefin and layer B containing a polyolefin. More preferably, the multilayer membrane has a multilayer structure of three or more layers including at least each one of layer B on both sides (both surfaces) of layer A. The laminated structure is not limited to the two-layer structure of "layer A-layer B" or the three-layer structure of "layer B-layer A-layer B" as long as the structure has at least each one of layer A and layer B. For example, the polyolefin microporous membrane may have one or more additional layers on one or both layers B or between layer A and layer B.

Layer A and layer B contain a polyolefin, and preferably composed of a polyolefin. The polyolefin of layer A and layer B may be in the form of a polyolefin microporous body, for example, a polyolefin-based fiber fabric (woven fabric) or a polyolefin-based fiber nonwoven fabric.

<Polyolefin>

Examples of the polyolefin include, but are not limited to, homopolymers of ethylene or propylene, or copolymers formed from at least two monomers selected from the group consisting of ethylene, propylene, 1-butene, 4-methyl-1-pentene, 1-hexene, 1-octene and norbornene. Of these, high-density polyethylene, low-density polyethylene or ultra-high molecular weight polyethylene (UHMWPE) is preferable, and high-density polyethylene or UHMWPE is more preferable, from the viewpoint of carrying out heat setting (sometimes abbreviated as "HS") at higher temperature while avoiding obstruction of the pores. In general, it is known that the weight-average molecular weight of UHMWPE is 1,000,000 or more. A polyolefin may be used alone, or two or more thereof may be used in combination.

The polyolefin microporous membrane preferably includes a polyolefin with a weight-average molecular weight (Mw) of less than 2,000,000, and a polyolefin with Mw of less than 2,000,000 is included in a proportion of more preferably 40% by weight or more, and still more preferably 80% by weight or more, based on the entire polyolefin. By using a polyolefin with Mw of less than 2,000,000, relaxation of shrinkage of the polymer occurs early in a heating test of the electricity storage device, and in particular, the safety tends to be more easily maintained in a heating safety test. When a polyolefin with Mw of less than 2,000,000 is used, the elastic modulus in the thickness direction of the obtained microporous membrane tends to be lower as compared to when a polyolefin with Mw of 1,000,000 or more is used, and therefore a microporous membrane is obtained with relatively easier transfer of core irregularities. The weight-average molecular weight of the entire polyolefin microporous membrane constituting the separator is 100,000 or more and 2,000,000 or less, and more preferably 150,000 or more and 1,500,000 or less.

(Polyolefin having One or More Functional Groups)

From the viewpoint of formation of a crosslinked structure, redox degradation resistance and obtaining a small and homogeneous porous body structure, the polyolefin microporous membrane preferably includes a functional group-modified polyolefin or a polyolefin in which monomers having functional groups are copolymerized, as the polyolefin with one or more types of functional groups. As used herein, a functional group-modified polyolefin is a compound in which the functional groups are bonded after production of the polyolefin. The functional groups may be bonded to the polyolefin backbone or they may be ones that can be introduced into a comonomer, and preferably they contribute to selective crosslinking of the amorphous portion of the polyolefin, with examples including at least one selected from the

group consisting of carboxyl, hydroxyl, carbonyl, polymerizable unsaturated hydrocarbon, isocyanate, epoxy, silanol, hydrazide, carbodiimide, oxazoline, acetoacetyl, aziridine, ester, active ester, carbonate, azide, straight-chain or cyclic heteroatom-containing hydrocarbon, amino, sulfhydryl, metal chelating and halogen-containing groups.

From the viewpoint of the separator strength, ion permeability, redox degradation resistance and a small and homogeneous porous body structure, the separator preferably includes both a polyolefin with one or more types of functional groups and UHMWPE. When a polyolefin with one or more types of functional groups and UHMWPE are combined, preferably the weight ratio of the polyolefin with one or more types of functional groups and UHMWPE in the separator (weight of polyolefin with one or more types of functional groups/weight of ultra-high molecular weight polyethylene) is 0.05/0.95 to 0.80/0.20.

<Crosslinked Structure>

The crosslinked structure of the separator contributes to at least one of safety in a nail penetration test, heat shrinkability, hot box testability and high-temperature bar impact fracture testability, and is preferably formed in the amorphous portion of the polyolefin. The crosslinked structure can be formed, for example, by reaction via covalent bonding, hydrogen bonding or coordinate bonding. The reaction by covalent bonding is preferably at least one selected from the group consisting of the following reactions (I) to (IV):

(I) condensation reaction of a plurality of the same functional groups,
(II) reaction between a plurality of different functional groups,
(III) chain condensation reaction between a functional group and the electrolyte solution, and
(IV) chain condensation reaction between a functional group and an additive.

The reaction by coordinate bonding is preferably the following reaction (V):
(V) reaction in which a plurality of the same functional groups crosslink via coordinate bonding with eluting metal ions.

Reaction (I)

A schematic scheme and specific example of reaction (I) are shown below, with the first functional group of the separator represented as A.

[Chemical Formula 21]

Schematic scheme for reaction (I)

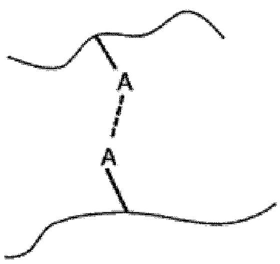

Example of functional group A:

Silanol group, etc.

Specific example of reaction (I)

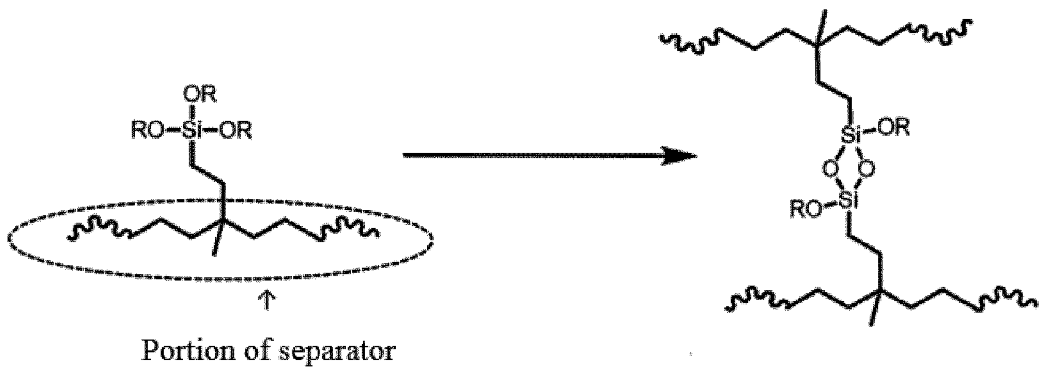


wherein R is an optionally substituted alkyl group having 1 to 20 carbon atoms, or a heteroalkyl group.

When functional group A for reaction (I) is a silanol group, the polyolefin is preferably silane graft-modified. A silane graft-modified polyolefin is composed with a structure having a polyolefin as the main chain and alkoxysilyl groups grafted on the main chain. Examples of the alkoxide substituted on the alkoxysilyl group include methoxide, ethoxide or butoxide. For example, R in the formula may be methyl, ethyl, n-propyl, isopropyl, n-butyl, sec-butyl, isobutyl or tert-butyl. The main chain and grafts may be linked by covalent bonding, for an alkyl, ether, glycol or ester structure. In consideration of the production process for the separator, the silane graft-modified polyolefin has a silicon-to-carbon ratio (Si/C) of preferably 0.2 to 1.8%, and more preferably 0.5 to 1.7%, at the stage before the crosslinking treatment step.

A preferable silane graft-modified polyolefin is one with a density of 0.90 to 0.96 g/cm$^3$ and a melt flow rate (MFR) of 0.2 to 5 g/min at 190°C. From the viewpoint of suppressing generation of resin aggregates during the production process for the separator, and maintaining silane crosslinkability until contact with the electrolyte solution, the silane graft-modified polyolefin is preferably not a master batch resin containing a dehydrating condensation catalyst. Dehydrating condensation catalysts are also known to function as catalysts for siloxane bond-forming reactions with alkoxysilyl group-containing resins. As used herein, a master batch resin refers to a compounded product obtained by preliminarily adding a dehydrating condensation catalyst (for example, an organometallic catalyst) to an alkoxysilyl group-containing resin or other kneading resins in a continuous process of kneading a resin using an extruder.

Reaction (II)

A schematic scheme and specific example of reaction (II) are shown below, with the first functional group of the separator represented as A and the second functional group represented as B.

[Chemical Formula 22]

Schematic scheme for reaction (II)

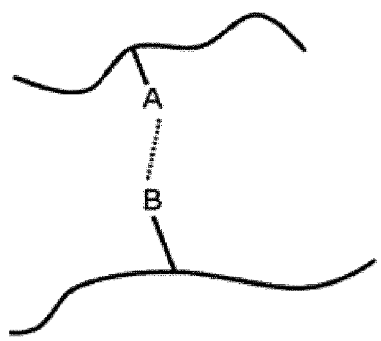

[Chemical Formula 23]

Examples for combination of functional groups A and B:

Hydroxyl group and carboxyl group (esterification);

Carbonyl group and alkyl group (aldol condensation);

Halogen and carboxyl group (intramolecular condensation);

Alkoxy group and alkyl group (Claisen reaction);

Carbonyl group and acid anhydride group (Perkin reaction);

Amino group and halogen;

Isocyanate group and hydroxyl group (formation of urethane bonds); and

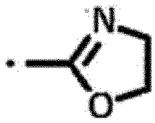

(oxazoline) and hydroxy group, etc.

[Chemical Formula 24]

Specific example 1 of reaction (II):

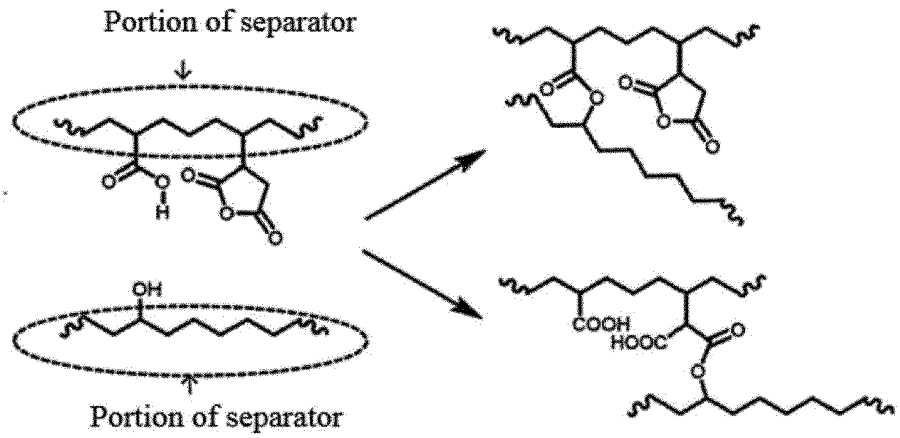


[Chemical Formula 25]

Specific example 2 of reaction (II):

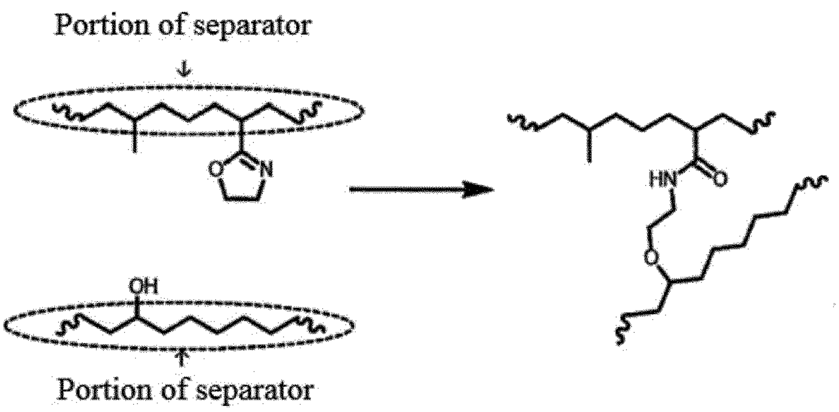

The reactions (I) and (II) can be subjected to catalytic action, and for example, they can be catalytically accelerated by a chemical substance inside the electricity storage device in which the separator is incorporated. The chemical substance may be, for example, any of an electrolyte, an electrolyte solution, an electrode active material or an additive, or decomposition products thereof, which are included in the electricity storage device.

Reaction (III)

A schematic scheme and specific example of reaction (III) are shown below, with the first functional group of the separator represented as A, and the electrolyte solution represented as Sol.

[Chemical Formula 26]

Schematic scheme for reaction (III)

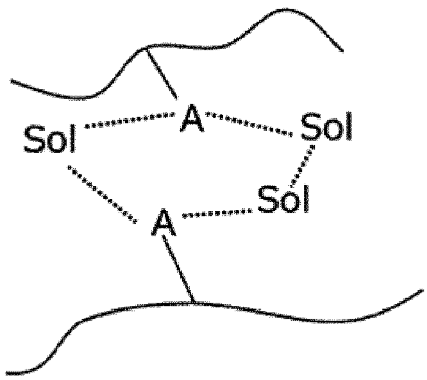

[Chemical Formula 27]

Examples for functional group A:

Hydroxyl, carboxyl, amino, carbonyl, ether and isocyanate groups, etc.

Examples for electrolyte solution:

Electrolytes: $LiPF_6$, $LiBF_4$, $LiN(SO_2CF_3)_2$, $LiSO_3CF_3$, $LiBC_4O_8$ (LiBOB), etc.

Nonaqueous solvents: ethylene carbonate, ethylmethyl carbonate and their mixtures, etc.

[Chemical Formula 28]

Specific example 1 of reaction (III):

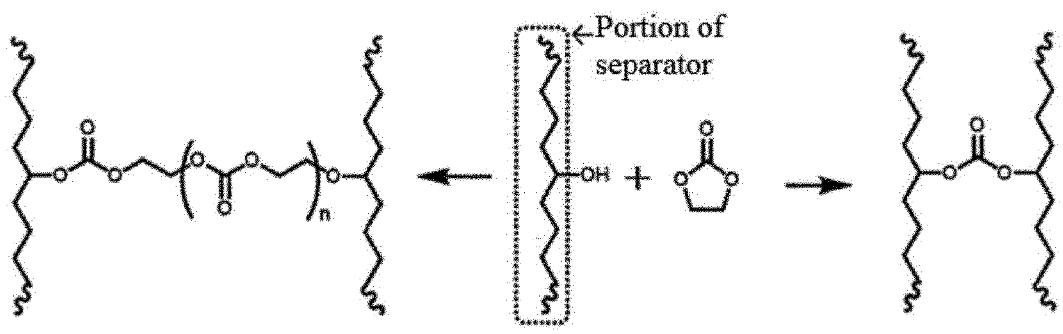

[Chemical Formula 29]

Specific example 2 of reaction (III):

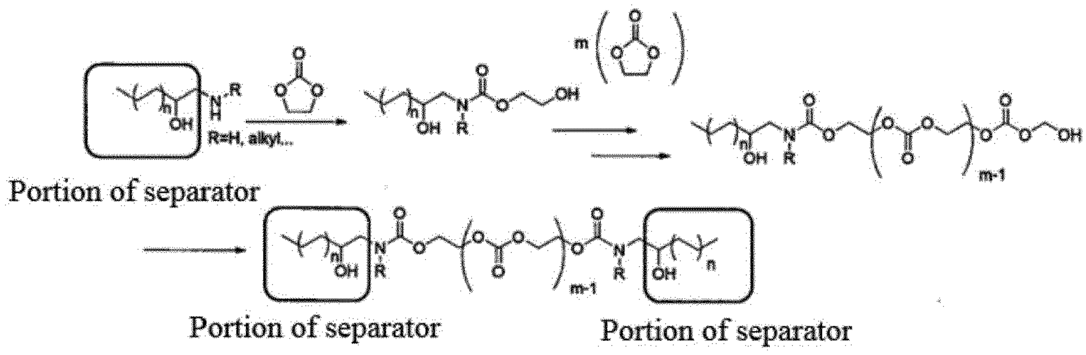


Reaction (IV)

A schematic scheme for reaction (IV) is shown below, with the first functional group of the separator represented as A, the optionally incorporated second functional group as B and an additive as Add.

[Chemical Formula 30]

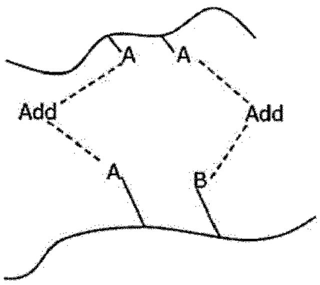

From the viewpoint of forming the covalent bonds represented by the dotted lines in the scheme, the reaction (IV) is preferably nucleophilic substitution reaction, nucleophilic addition reaction or ring-opening reaction between the compound Rx constituting the separator and the compound Ry constituting the additive (Add). The compound Rx may be the polyolefin in the separator, such as polyethylene or polypropylene, and preferably the polyolefin is modified with a functional group x, for example, modified with at least one selected from the group consisting of -OH, $-NH_2$, -NH-, -COOH and -SH.

Since a plurality of compounds Rx are crosslinked by compound Ry as the additive, the compound Ry preferably has two or more linking reaction units $y_1$. The plurality of linking reaction units $y_1$ may be any groups with any structure so long as they are able to participate in nucleophilic substitution reaction, nucleophilic addition reaction or ring-opening reaction with the functional group x of the compound Rx, and they may be substituted or unsubstituted, may contain heteroatoms or inorganic materials, and may be the same or different from each other. When the compound Ry has a straight-chain structure, the plurality of linking reaction units $y_1$ may each independently be end groups or groups incorporated into the main chain, or side chain or pendant groups.

When the reaction (IV) is a nucleophilic substitution reaction, it may be as follows, considering the functional group x of the compound Rx to be the nucleophilic group and the linking reaction unit $y_1$ of the compound Ry to be the leaving group, but this is only an example, and for the purpose of this embodiment the functional group x and linking reaction unit $y_1$ may both be leaving groups, depending on nucleophilicity thereof.

From the viewpoint of the nucleophilic reagent, the functional group x of the compound Rx is preferably an oxygen-based nucleophilic group, nitrogen-based nucleophilic group or sulfur-based nucleophilic group. Examples of oxygen-based nucleophilic groups include hydroxyl, alkoxy, ether and carboxyl groups, of which -OH and -COOH are

preferable. Examples of nitrogen-based nucleophilic groups include ammonium groups, primary amino groups and secondary amino groups, of which $-NH_2$ and -NH- are preferable. Sulfur-based nucleophilic groups include -SH and thioether groups, for example, with -SH being preferable.

When the reaction (IV) is a nucleophilic substitution reaction, from the viewpoint of the leaving group, the linking reaction unit $y_1$ of the compound Ry is preferably an alkylsulfonyl group such as $CH_3SO_2$-, $CH_3CH_2SO_2$-; an arylsulfonyl group ($-ArSO_2-$); a haloalkylsulfonyl group such as $CF_3SO_2$- or $CCl_3SO_3$-; an alkyl sulfonate group such as $CH_3SO_3^-$- or $CH_3CH_2SO_3^-$-; an aryl sulfonate group ($ArSO_3^-$); a haloalkyl sulfonate group such as $CF_3SO_3^-$- or $CCl_3SO_3^-$-; or a heterocyclic group, any of which may be used alone or in combinations of two or more thereof. Heteroatoms in a heterocyclic ring include nitrogen atoms, oxygen atoms and sulfur atoms, with nitrogen atoms being preferable from the viewpoint of dissociability. The leaving group containing a nitrogen atom in the heterocyclic ring is preferably a monovalent group represented by one of the following formulas ($y_1$ -1) to ($y_1$ -6):

[Chemical Formula 31]

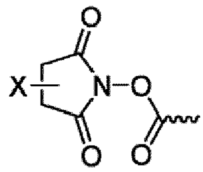

($y_1$－1)

wherein X is a hydrogen atom or a monovalent substituent;

[Chemical Formula 32]

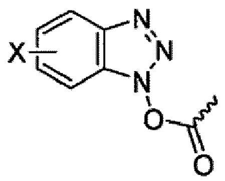

($y_1$－2)

wherein X is a hydrogen atom or a monovalent substituent;

[Chemical Formula 33]

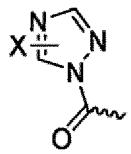

($y_1$－3)

wherein X is a hydrogen atom or a monovalent substituent;

[Chemical Formula 34]

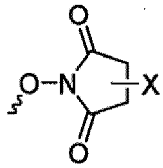

($y_1$－4)

wherein X is a hydrogen atom or a monovalent substituent;

[Chemical Formula 35]

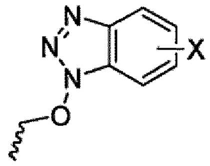

(y1-5)

wherein X is a hydrogen atom or a monovalent substituent; and

[Chemical Formula 36]

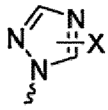

(y1-6)

wherein X is a hydrogen atom or a monovalent substituent.

In formulas ($y_1$ -1) to ($y_1$ -6), X is hydrogen or a monovalent substituent. Examples of monovalent substituents include alkyl groups, haloalkyl groups, alkoxyl groups and halogen atoms.

When the reaction (IV) is a nucleophilic substitution reaction and the compound Ry has a straight-chain structure, the compound Ry preferably has, as a straight-chain unit $y_2$ in addition to the linking reaction unit $y_1$ , at least one selected from the group consisting of divalent groups represented by the following formulas ($y_2$ -1) to ($y_2$ -6):

[Chemical Formula 37]

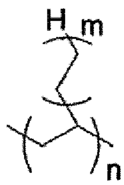

(y2-1)

wherein m is an integer of 0 to 20, and n is an integer of 1 to 20;

[Chemical Formula 38]

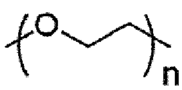

(y2-2)

wherein n is an integer of 1 to 20;

[Chemical Formula 39]

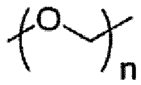

(y2-3)

wherein n is an integer of 1 to 20;

[Chemical Formula 40]

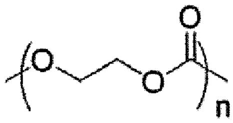

(y2-4)

wherein n is an integer of 1 to 20;

[Chemical Formula 41]

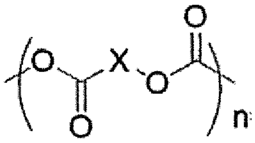

(y2-5)

wherein X is an alkylene group having 1 to 20 carbon atoms or an arylene group, and n is an integer of 1 to 20;

[Chemical Formula 42]

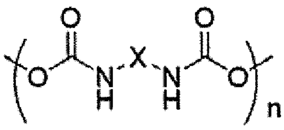

(y2-6)

wherein X is an alkylene group having 1 to 20 carbon atoms or an arylene group, and n is an integer of 1 to 20. When the compound Ry includes a plurality of straight-chain unit $y_2$, they may be the same or different, and sequences thereof may be either block or random.

In formula ($y_2$ -1), m is an integer of 0 to 20, and from the viewpoint of the crosslinked network it is preferably 1 to 18. In formulas ($y_2$ -1) to ($y_2$ -6), n is an integer of 1 to 20, and from the viewpoint of the crosslinked network it is preferably 2 to 19 or 3 to 16. In formula ($y_2$ - 5) to ($y_2$ -6), X is an alkylene or arylene group of 1 to 20 carbon atoms, and from the viewpoint of stability of the straight-chain structure it is preferably a methylene, ethylene, n-propylene, n-butylene, n-hexylene, n-heptylene, n-octylene, n-dodecylene, o-phenylene, m-phenylene or p-phenylene group.

Tables 2 to 4 below show preferable combinations for the functional group x of the compound Rx and the linking reaction unit $y_1$ and straight-chain unit $y_2$ of the compound Ry, when reaction (IV) is a nucleophilic substitution reaction.

[Table 2]

| Nucleophilic substitution reaction (preferable combination I) | | |
|---|---|---|
| Separator functional group (functional group x of compound Rx) | Additive (compound Ry) | |
| | Straight-chain unit ($y_2$) | Two or more linking reaction units ($y_1$) |
| | | Both terminals |
| -OH<br>$-NH_2$<br>-NH-<br>-COOH<br>-SH | 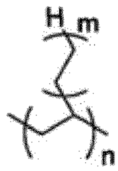 n=1 to 20<br>m=0 to 20 | 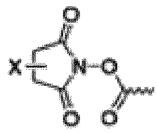<br>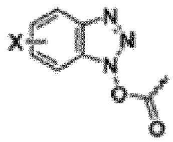<br>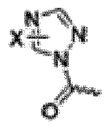<br>X = H or monovalent substituent |

[Table 3]

| Nucleophilic substitution reaction (preferable combination II) | | |
|---|---|---|
| Separator functional group (functional group x of compound Rx) | Additive (compound Ry) | |
| | Straight-chain unit (y2) | Two or more linking reaction units (y1) |
| | | Both terminals |
| -OH<br>$-NH_2$<br>-NH-<br>-COOH<br>-SH | 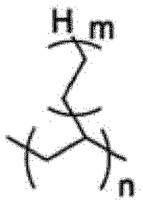 n=1 to 20<br>m=0 to 24 | $CF_3SO_2$-<br>$CH_3SO_2$-<br>$ArSO_2$-<br>$CF_3SO_3^-$-<br>$CH_3SO_3^-$-<br>$ArSO_3^-$- |

[Table 4]

| Nucleophilic substitution reaction (preferable combination III) | | | |
|---|---|---|---|
| Separator functional group (functional group x of compound Rx) | Additive (compound Ry) | | |
| | Straight-chain unit (y2) | Two or more linking reaction units (y1) | |
| | | Terminal 1 | Terminal 2 |
| -OH | 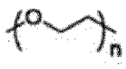<br>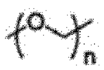 | 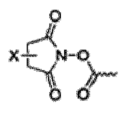 | 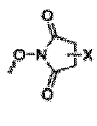 |

(continued)

<table>
<tr><td colspan="4">Nucleophilic substitution reaction (preferable combination III)</td></tr>
<tr><td rowspan="3">Separator functional group (functional group x of compound Rx)</td><td colspan="3">Additive (compound Ry)</td></tr>
<tr><td rowspan="2">Straight-chain unit (y2)</td><td colspan="2">Two or more linking reaction units (y1)</td></tr>
<tr><td>Terminal 1</td><td>Terminal 2</td></tr>
<tr><td>-$NH_2$<br>-NH-<br>-COOH<br>-SH</td><td>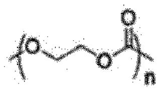<br>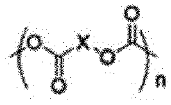<br>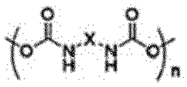<br>n = 1-20,<br>X = $C_{1-20}$ alkylene or arylene group</td><td>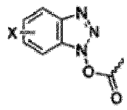<br>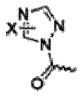 X = H of monovalent substituent</td><td>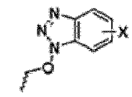<br>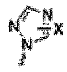 X = H of monovalent substituent</td></tr>
</table>

The following is a reaction scheme as Specific Example 1 of the nucleophilic substitution reaction, where the functional group x of the polyolefin is -$NH_2$, the linking reaction unit $y_1$ of the additive (compound Ry) is the backbone of a succinimide, and the straight-chain unit $y_2$ is - (O-$C_2H_5$ )n -.

[Chemical Formula 43]

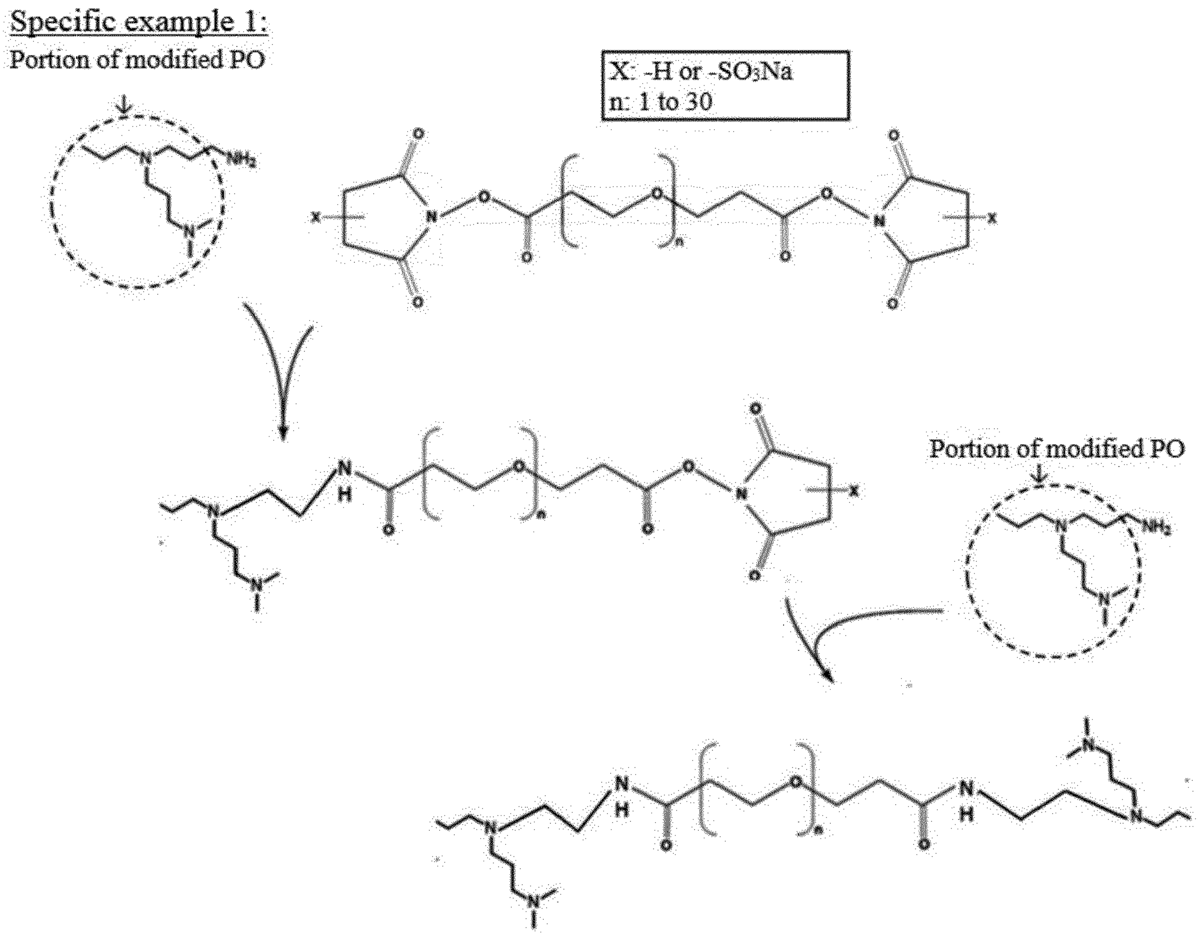


The following is a reaction scheme as Specific Example 2 of the nucleophilic substitution reaction, where the functional groups x of the polyolefin are -SH and $-NH_2$, the linking reaction unit $y_1$ of the additive (compound Ry) is a nitrogen-containing cyclic backbone, and the straight-chain unit $y_2$ is o-phenylene.

[Chemical Formula 44]

Specific example 2:

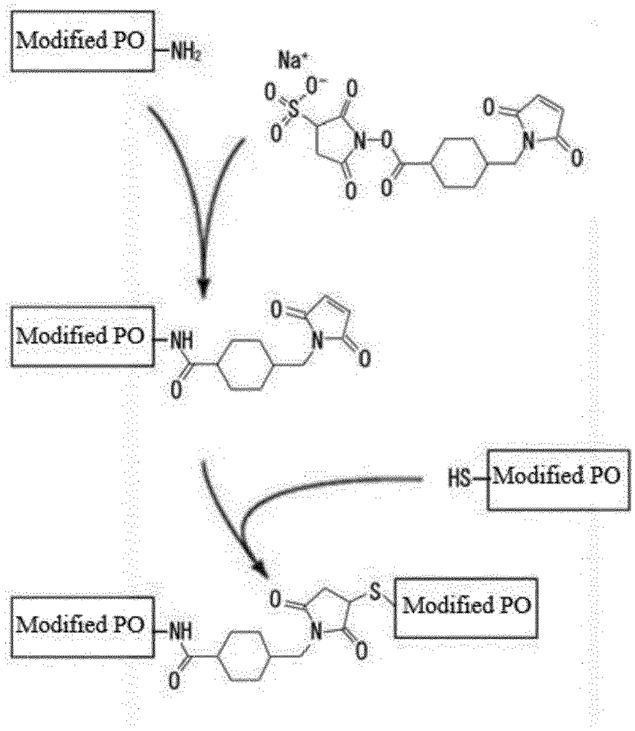

When the reaction (IV) is a nucleophilic addition reaction, the functional group x of the compound Rx and the linking reaction unit $y_1$ of the compound Ry may participate in addition reaction. For nucleophilic addition reaction, the functional group x of the compound Rx is preferably an oxygen-based nucleophilic group, nitrogen-based nucleophilic group or sulfur-based nucleophilic group. Examples of oxygen-based nucleophilic groups include hydroxyl, alkoxy, ether and carboxyl groups, of which -OH and -COOH are preferable. Examples of nitrogen-based nucleophilic groups include ammonium groups, primary amino groups and secondary amino groups, of which $-NH_2$ and -NH- are preferable. Sulfur-based nucleophilic groups include -SH and thioether groups, for example, with -SH being preferable.

In nucleophilic addition reaction, from the viewpoint of the addition reactivity and ready availability of starting materials, the linking reaction unit $y_1$ of the compound Ry is preferably at least one selected from the group consisting of groups represented by the following formulas ($Ay_1$ -1) to ($Ay_1$ -6):

[Chemical Formula 45]

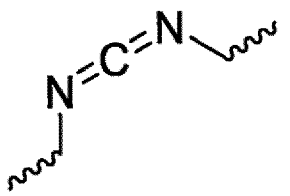

($Ay_1$−1)

[Chemical Formula 46]

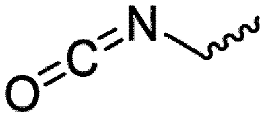

($Ay_1$−2)

[Chemical Formula 47]

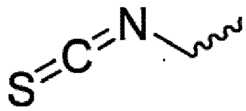

(Ay₁-3)

[Chemical Formula 48]

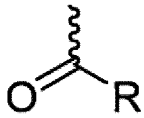

(Ay₁-4)

wherein R is a hydrogen atom or a monovalent organic group;

[Chemical Formula 49]

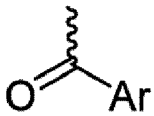

(Ay₁-5)

[Chemical Formula 50]

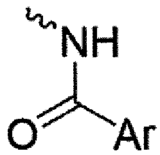

(Ay₁-6)

In formula ($Ay_1$ -4), R is a hydrogen atom or a monovalent organic group, preferably a hydrogen atom or a $C_{1-20}$ alkyl, alicyclic or aromatic group, and more preferably a hydrogen atom or a methyl, ethyl, cyclohexyl or phenyl group.

Tables 5 and 6 below show preferable combinations for the functional group x of the compound Rx and the linking reaction unit $y_1$ of the compound Ry, when the reaction (IV) is a nucleophilic addition reaction.

[Table 5]

| Nucleophilic addition reaction (preferable combination I) | |
|---|---|
| Separator functional group (functional group x of the compound Rx) | Additive (compound Ry) Two or more linking reaction units (y1) |
| -OH<br>-NH$_2$<br>-NH- | 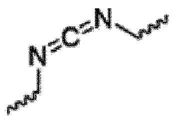<br>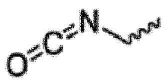 |

(continued)

| Nucleophilic addition reaction (preferable combination I) | |
|---|---|
| Separator functional group (functional group x of the compound Rx) | Additive (compound Ry) Two or more linking reaction units (y1) |
| -COOH<br>-SH | 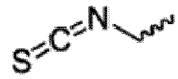 |

[Table 6]

| Nucleophilic addition reaction (preferable combination II) | |
|---|---|
| Separator functional group (functional group x of the compound Rx) | Additive (compound Ry) Two or more linking reaction units (y1) |
| -OH<br>$-NH_2$<br>-NH-<br>-COOH<br>-SH | 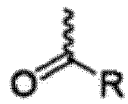 R = H or monovalent organic group<br>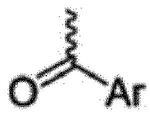<br>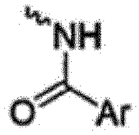 |

The following is a reaction scheme as a specific example of the nucleophilic addition reaction, where the functional group x of the separator is -OH and the linking reaction unit $y_1$ of the additive (compound Ry) is -NCO.

[Chemical Formula 51]

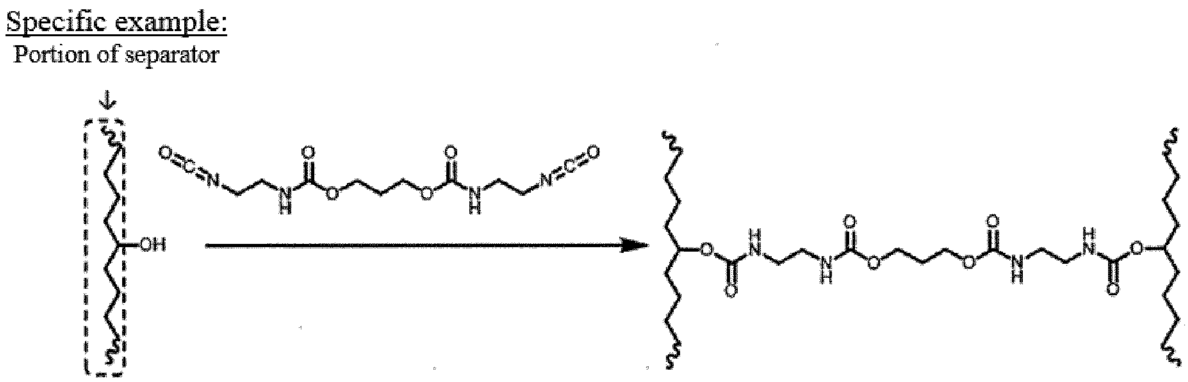


When the reaction (IV) is a ring-opening reaction, the functional group x of the compound Rx and the linking reaction unit $y_1$ of the compound Ry may participate in ring-opening reaction, and from the viewpoint of ready availability of starting materials, it is preferable to open the cyclic structure on the linking reaction unit $y_1$. From the same viewpoint, the linking reaction unit $y_1$ is more preferably an epoxy group, still more preferably compound Ry has two or more epoxy groups, and yet more preferably is a diepoxy compound.

When the reaction (IV) is a ring-opening reaction, the functional group x of the compound Rx is preferably at least one selected from the group consisting of -OH, $-NH_2$, -NH-, -COOH and -SH, and/or the linking reaction unit $y_1$ of the compound Ry is preferably at least two groups represented by the following formulas ($ROy_1$ -1):

[Chemical Formula 52]

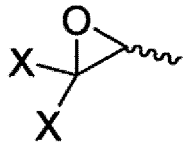

$(ROy_1-1)$

wherein a plurality of X are each independently a hydrogen atom or a monovalent substituent. In formula ($ROy_1$-1), the plurality of X groups are each independently a hydrogen atom or a monovalent substituent, preferably a hydrogen atom or a $C_{1-20}$ alkyl, alicyclic or aromatic group, and more preferably a hydrogen atom or a methyl, ethyl, cyclohexyl or phenyl group. Table 7 below shows preferable combinations for the functional group x of the compound Rx and the linking reaction unit $y_1$ of the compound Ry for an epoxy ring-opening reaction.

[Table 7]

| Epoxy ring-opening reaction (preferable combination) | |
|---|---|
| | Additive (compound Ry) Two or more linking reaction units (y1) |
| -OH<br>$-NH_2$<br>-NH-<br>-COOH<br>-SH | 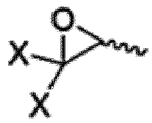 X=H or monovalent substituent |

Reaction (V)

A schematic scheme for reaction (V) and an example of functional group A are shown below, with the first functional group of the separator represented as A and the metal ion represented as $M^{n+}$.

[Chemical Formula 53]

Schematic scheme for reaction (V)

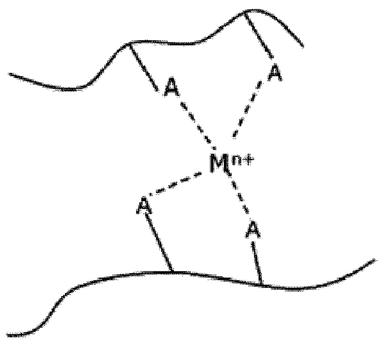

**Examples** for functional group A: -CHO, -COOH, acid anhydride, -COO-, etc.

In this scheme, the metal ion $M^{n+}$ is preferably one eluted from the electricity storage device (hereinafter also referred to as "eluting metal ion"), and it may be, for example, at least one selected from the group consisting of $Zn^{2+}$, $Mn^{2+}$, $Co^{3+}$, $Ni^{2+}$ and $Li^+$. The following is an example of coordinate bonding when functional group A is $-COO^-$.

[Chemical Formula 54]

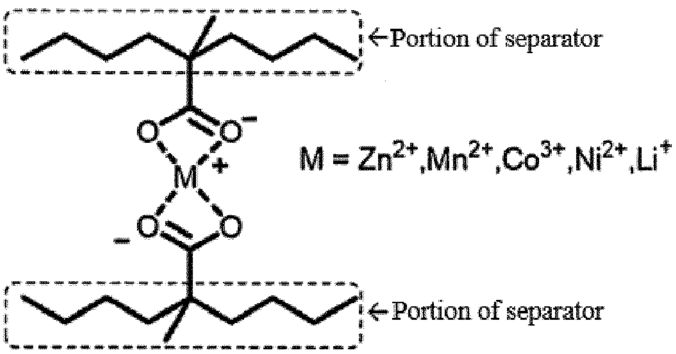


A specific scheme for reaction (V) is shown below, where the functional group A is - COOH and the eluting metal ion is $Zn^{2+}$.

[Chemical Formula 55]

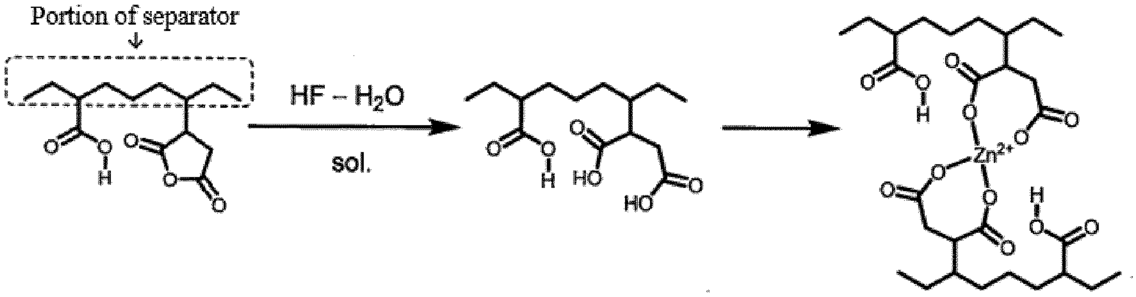


In this scheme, hydrofluoric acid (HF) may be derived from an electrolyte, an electrolyte solution, an electrode active materials or an additive, or decomposition products or water-absorbed products thereof, which are included in the electricity storage device, depending on the charge-discharge cycle of the electricity storage device.

<Other Components>

The polyolefin microporous membrane may optionally contain known additives such as dehydrating condensation catalysts, metal soaps such as calcium stearate or zinc stearate, ultraviolet absorbers, light stabilizers, antistatic agents, anti-fogging agents, dyes, inorganic fillers and inorganic particles, in addition to the polyolefin.

<Properties of Microporous Membrane>

The properties of the following microporous membrane are in the case of a flat membrane or a single-layer membrane. When the microporous membrane is in the form of a laminated membrane, the following properties can be measured after removing a layer other than the polyolefin microporous membrane from the laminated membrane.

The porosity of the microporous polyolefin membrane is preferably 20% or more, more preferably 30% or more, and still more preferably 32% or more or 35% or more. When the porosity of the microporous membrane is 20% or more, the followability to rapid movement of lithium ions tends to be further improved. Meanwhile, the porosity of the microporous membrane is preferably 90% or less, more preferably 80% or less, and still more preferably 50% or less. When the porosity of the microporous membrane is 90% or less, the membrane strength is further improved, and self-discharge tends to be further suppressed. The porosity of the microporous membrane can be measured by the method mentioned in the Examples.

The air permeability of the microporous polyolefin membrane is preferably 1 second or more, more preferably 50 seconds or more, still more preferably 55 seconds or more, yet more preferably 70 seconds or more, 90 seconds or more or 110 seconds or more, per 100 $cm^3$ of the volume of the membrane. When the air permeability of the microporous membrane is 1 second or more, the balance between the membrane thickness, the porosity and the mean pore size tends to be further improved. The air permeability of the microporous membrane is preferably 400 seconds or less, more preferably 300 seconds or less, and still more preferably 270 seconds or less. When the air permeability of the microporous

membrane is 400 seconds or less, the ion permeability tends to be further improved. The air permeability of the microporous membrane can be measured by the method mentioned in the Examples.

The tensile strength of the microporous polyolefin membrane is preferably 1,000 $kgf/cm^2$ or more, more preferably 1,050 $kgf/cm^2$ or more, and still more preferably 1,100 $kgf/cm^2$ or more, in both directions of MD and TD (direction perpendicular to MD, membrane transverse direction). When the tensile strength is 1,000 $kgf/cm^2$ or more, the breakage at the time of winding of the slit or electricity storage device tends to be further suppressed, or the short circuit due to foreign material in the electricity storage device tends to be further suppressed. Meanwhile, the tensile strength of the microporous membrane is preferably 5,000 $kgf/cm^2$ or less, more preferably 4,500 $kgf/cm^2$ or less, and still more preferably 4,000 $kgf/cm^2$ or less. When the microporous membrane has a tensile strength of 5,000 $kgf/cm^2$ or less, the microporous membrane tends to be relaxed at an early stage during a heating test, so that the contractive force is reduced, and as a result, the safety tends to increase.

The tensile elastic modulus of the microporous polyolefin membrane is preferably 120 N/cm or less, more preferably 100 N/cm or less, and still more preferably 90 N/cm or less, in both the MD and TD directions. The tensile elastic modulus of 120 N/cm or less indicates that the separator for a lithium ion secondary battery is not extremely oriented, and in a heating test, when an obstructive agent such as polyethylene melts and contracts, the polyethylene causes stress relaxation at an early stage, thereby suppressing contraction of the separator in the battery, and thus there is a tendency that short circuit between the electrodes tends to be prevented. Namely, the safety of the separator during heating can be further improved. Such a microporous membrane having low tensile elastic modulus can be easily achieved by containing a polyethylene having a weight-average molecular weight of 500,000 or less in the polyolefin which forms a microporous membrane. Meanwhile, the lower limit value of the tensile elastic modulus of the microporous membrane is not particularly limited, and is preferably 10 N/cm or more, more preferably 30 N/cm or more, and still more preferably 50 N/cm or more. The ratio of the tensile elastic modulus in the MD and TD directions of the polyolefin microporous membrane made (tensile elastic modulus in the MD direction/tensile elastic modulus in the TD direction) is preferably 0.2 to 3.0, more preferably 0.5 to 2.0, and still more preferably 0.8 to 1.2. When the ratio of the tensile elastic modulus in the MD and TD directions of the microporous polyolefin membrane is within such a range, the contractive force in the MD and TD directions becomes homogeneous when the obstructive agent such as polyethylene melts and contracts. As a result, when the separator is heat-shrunk in the battery, the shear stress applied to the electrode adjacent to the separator is also homogeneous in the MD and TD directions, and the fracture of the laminated body of the electrode and the separator tends to be prevented. Namely, the safety of the separator during heating can be further improved. The tensile elastic modulus of the microporous membrane can be appropriately adjusted by adjusting the degree of stretching, or relaxing after stretching as needed.

The membrane thickness of the microporous polyolefin membrane is preferably 1.0 μm or more, more preferably 2.0 μm or more, and still more preferably 3.0 μm or more, 4.0 μm or more or 5.5 μm or more. When the membrane thickness of the microporous membrane is 1.0 μm or more, the membrane strength tends to be further improved. The membrane thickness of the microporous membrane is preferably 500 μm or less, more preferably 100 μm or less, and still more preferably 80 μm or less, 22 μm or less or 19 μm or less. When the membrane thickness of the microporous membrane is 500 μm or less, the ion permeability tends to be further improved. The membrane thickness of the microporous membrane can be measured by the method mentioned in the Examples.

In the case of a separator used in a lithium ion secondary battery having a relatively high capacity in recent years, the thickness of the microporous polyolefin membrane is preferably 25 μm or less, more preferably 22 μm or less or 20 μm or less, still more preferably 18 μm or less, and particularly preferably 16 μm or less. In this case, since the membrane thickness of the microporous membrane is 25 μm or less, the permeability tends to be further improved. In this case, the lower limit value of the membrane thickness of the microporous membrane may be 1.0 μm or more, 3.0 μm or more, 4.0 μm or more, or 5.5 μm or more.

<Surface Layer>

The surface layer is formed on at least one side of the microporous polyolefin membrane as the substrate. The surface layer may be disposed on one or both sides of the substrate, and may be disposed such that at least a portion of the substrate is exposed. The surface layer is preferably at least one layer selected from the group consisting of a thermoplastic polymer-containing layer, an active layer and a heat-resistant porous layer

(Thermoplastic Polymer-Containing Layer)

The thermoplastic polymer-containing layer is formed on at least one side of the microporous polyolefin membrane as the substrate. The thermoplastic polymer-containing layer may be disposed on one or both sides of the substrate, and is preferably disposed such that at least a part of the substrate is exposed.

It is preferable that the area ratio (coverage area ratio) of the thermoplastic polymer-containing layer to the

total area of the surface where the thermoplastic polymer-containing layer can be disposed is 5 to 90% of the substrate surface. When the covering area ratio is set at 90% or less, it is preferable from the viewpoint of further improving the permeability of the separator by further suppressing the obstruction of holes of the substrate due to the thermoplastic polymer. Meanwhile, it is preferable that the ratio of the coating area is set at 5% or more from the viewpoint of further improving the adhesion to the electrode. From such a viewpoint, the upper limit value of the coverage area ratio is more preferably 80% or less, 75% or less or 70% or less, and the lower limit value of the area ratio is preferably 10% or more or 15% or more. This coating area ratio is measured by observing the formation surface of the thermoplastic polymer-containing layer of the obtained separator using SEM. When the thermoplastic polymer-containing layer is a layer in which the inorganic particles are mixed, the presence area of the thermoplastic polymer is calculated assuming that the total area of the thermoplastic polymer and the inorganic particles is 100%.

When the thermoplastic polymer-containing layer is disposed only on a part of the surface of the separator substrate, examples of the arrangement pattern of the thermoplastic polymer layer include a dot shape, a stripe shape, a lattice shape, a banded shape, a hexagonal shape, a random shape, and combinations thereof. The thickness of the thermoplastic polymer-containing layer disposed on the substrate is preferably 0.01 μm to 5 μm, more preferably 0.1 μm to 3 μm, and still more preferably 0.1 to 1 μm, per one side of the substrate.

The thermoplastic polymer-containing layer contains a thermoplastic polymer. The thermoplastic polymer-containing layer may contain the thermoplastic polymer in a proportion of preferably 60% by weight or more, more preferably 90% by weight or more, still more preferably 95% by weight or more, and particularly preferably 98% by weight or more, based on the total amount of the thermoplastic polymer-containing layer. The thermoplastic polymer layer may contain other components, in addition to the thermoplastic polymer.

Examples of the thermoplastic polymer include the followings:

polyolefin resins such as polyethylene, polypropylene and α-polyolefin;
fluorine-based polymers such as polyvinylidene fluoride and polytetrafluoroethylene, or copolymers containing the same;
diene-based polymers including conjugated dienes such as butadiene and isoprene as a monomer unit, or copolymers containing the same, or hydrides thereof;
acrylic polymers which include (meth)acrylate or (meth)acrylic acid as a monomer unit and include acrylic polymer, (meth)acrylate, or (meth)acrylic acid, each including no polyalkylene glycol unit, as a monomer unit, and include one or more polyalkylene glycol units, or copolymers containing the same, or hydrides thereof;
rubbers such as ethylene-propylene rubber, polyvinyl alcohol and vinyl polyacetate;
cellulose derivatives such as ethyl cellulose, methyl cellulose, hydroxyethyl cellulose and carboxymethyl cellulose;
polyalkylene glycols having no polymerizable functional group, such as polyethylene glycol and polypropylene glycol;
resins such as polyphenylene ether, polysulfone, polyether sulfone, polyphenylene sulfide, polyetherimide, polyamideimide, polyamide and polyester;
copolymers including, as a copolymerization unit, an ethylenically unsaturated monomer in which the number of repetitions of an alkylene glycol unit is 3 or more; and
combinations thereof.

Of these, from the viewpoint of improving the safety in a puncture test of the electricity storage device with the separator, the thermoplastic polymer preferably includes a polymerization unit of (meth)acrylic acid ester or (meth)acrylic acid.

In the nail penetration test, it is experimentally suggested that the occurrence of heat generation can be suppressed by reducing the short circuit area as much as possible in the periphery of the device through which the nail penetrates. Meanwhile, the portion closest to the nail has very high temperature, and the polyethylene microporous membrane is in a molten state. It is experimentally observed that the melted resin expands in a concentric circular shape from the nail and contracts to the unmelted portion by a force to minimize the specific surface area. It is considered that hole formed at this time becomes short circuit area, which controls the speed of internal heat generation and whether or not final battery ignition and explosion occur.

Meanwhile, when the electricity storage device such as a battery is produced, the winding kit may be inevitably bent (R), and the clearance of the positive and negative electrodes of the total area (region) may not be homogeneous. Although the uncoated chemically crosslinked substrate of a thermoplastic polymer such as an acrylic resin has improved heat resistance, it is presumed that, in the inhomogeneous clearance of the positive and negative electrodes, a wide short circuit area can be formed due to a large amount of contraction at the time of a nail penetration test in a thinner portion. In addition, for the expansion and contraction deformation of the electrode during the cycle of the electricity storage device, a deviation in the entire surface is generated in the thermoplastic polymer uncoated separator and the clearance between the positive and negative electrodes may be inhomogeneous. It is presumed that portions close to each other between such electrodes shrink as much as possible during a nail penetration test, and thus a wide short

circuit area is formed.

Meanwhile, regarding the chemically crosslinked substrate membrane coated with a thermoplastic polymer such as an acrylic resin, the thermoplastic polymer layer exhibits adhesion between the separator and the electrode, and thus a homogeneous clearance can be maintained in the entire area between the positive and negative electrodes. It is also possible to follow the electrode expansion and contraction deformation during the cycle of the electricity storage device, and to secure a homogeneous clearance even after long-term use. In addition to ensuring the homogeneous clearance in this way, the thermoplastic polymer layer with adjusted application area can be swollen with the electrolyte solution, and when the electrolytic solution can be supplied (exudated) from the thermoplastic polymer layer to the chemical crosslinking substrate, the chemical crosslinking substrate can be homogeneously crosslinked with respect to the whole area in the electricity storage device, thereby obtaining satisfactory nail penetration test results.

The glass transition temperature (Tg) of the thermoplastic polymer is preferably within a range of -40°C to 105°C, and more preferably -38°C to 100°C, from the viewpoint of improving the safety in the puncture test of the electricity storage device with the separator.

From the viewpoint of the wettability to the polyolefin multilayer microporous membrane, binding properties between the polyolefin multilayer microporous membrane and the thermoplastic polymer layer, and adhesion to the electrode, it is preferable that the thermoplastic polymer layer is blended with a polymer having a glass transition temperature of lower than 20°C, and from the viewpoint of the obstruction resistance and ion permeability, it is preferable that a polymer having a glass transition temperature of 20°C or higher is also blended.

The fact that the thermoplastic polymer has at least two glass transition temperatures is not limited, and can be achieved by a method of mixing two or more types of thermoplastic polymers, a method of using a thermoplastic polymer having a core-shell structure, etc.

The core-shell structure is a polymer having a double structure in which a polymer belonging to a central portion and a polymer belonging to an outer shell portion are different in composition.

In particular, in a polymer blend and a core-shell structure, the glass transition temperature of the entire thermoplastic polymer can be controlled by combining a polymer having a high glass transition temperature and a polymer having a low glass transition temperature. A plurality of functions can be imparted to the entire thermoplastic polymer.

From the viewpoint of obstruction suppression and ion permeability of the separator, the thermoplastic copolymer is preferably particulate when the glass transition temperature is, for example, 20°C or higher, 25°C or higher, or 30°C or higher.

By mixing a particulate thermoplastic copolymer in the thermoplastic polymer layer, it is possible to ensure the porosity of the thermoplastic polymer layer disposed on the substrate and the obstruction resistance of the separator.

The mean particle size of the particulate thermoplastic copolymer is preferably 10 nm to 2,000 nm, more preferably 50 nm to 1,500 nm, still more preferably 100 nm to 1,000 nm, particularly preferably 130 nm to 800 nm, particularly more preferably 150 to 800 nm, and most preferably 200 to 750 nm. Setting the mean particle size at 10 nm or more means that the size of the particulate thermoplastic polymer, which does not enter into the hole of the substrate, is ensured when the particulate thermoplastic polymer is applied on the substrate including at least the porous membrane. Therefore, in this case, it is preferable that the adhesion between the electrode and the separator and the cycle characteristics of the electricity storage device are improved. It is preferable to set the mean particle size at 2,000 nm or less from the viewpoint of coating the substrate with a particulate thermoplastic polymer required in order to achieve both the adhesion between the electrode and the separator, and the cycle characteristics of the electricity storage device.

The particulate thermoplastic polymer described above can be produced by a known polymerization method using a corresponding monomer or comonomer. It is possible to employ, as the polymerization method, for example, appropriate method such as solution polymerization, emulsion polymerization or bulk polymerization.

Since the thermoplastic polymer layer can be easily formed by coating, it is preferable that a particulate thermoplastic polymer is formed by emulsion polymerization, and the obtained thermoplastic polymer emulsion is used as an aqueous latex.

The thermoplastic polymer-containing layer may contain only a thermoplastic polymer, or may contain any other optional component, in addition to the thermoplastic polymer. Examples of the optional component include, for example, a well-known additive described above for the polyolefin microporous membrane.

(Active Layer)

The active layer is disposed on at least one side of a microporous polyolefin membrane as the substrate. By disposing the active layer on the polyolefin microporous membrane which is the chemically crosslinkable substrate described above, the heat shrinkability and/or hot box testability tend to be excellent as compared with conventional resin coating to the substrate having such chemical crosslinkability. The separator obtained by binding the active layer to the substrate through the step of coating the active layer on the substrate tends to provide an electricity storage device which is less likely to cause deterioration of the ion permeability and has high output characteristics. Even in the case

of high temperature rise at the time of abnormal heat generation, the separator tends to exhibit smooth shutdown characteristics and high safety. From such a viewpoint, the active layer may be disposed on one or both sides of the substrate, and is preferably disposed such that at least a portion of the substrate is exposed.

From the viewpoint of the heat shrinkability and/or the hot box testability, the active layer preferably contains a fluorine atom-containing vinyl compound, and more preferably a fluorine atom-containing vinyl compound and inorganic particles

It is possible to use, as the fluorine atom-containing vinyl compound, for example, a compound known as a fluorine-based resin or a binder.

The weight-average molecular weight (Mw) of the fluorine atom-containing vinyl compound is preferably within a range of $0.6 \times 10^6$ to $2.5 \times 10^6$. When Mw of the fluorine atom-containing vinyl compound is within this range, the heat shrinkability and hot box testability tend to be satisfactory, which is preferable. From the same viewpoint, the molecular weight of the fluorine atom-containing vinyl compound is preferably within a range of 270 kDa to 600 kDa, and it is also preferable to use a fluorine atom-containing vinyl compound having a molecular weight of 270 kDa to 310 kDa in combination of a fluorine atom-containing vinyl compound having a molecular weight of 570 kDa to 600 kDa.

From the viewpoint of the heat shrinkability and hot box testability, the melting point of the fluorine atom-containing vinyl compound is preferably within a range of 130°C to 171°C. From the same viewpoint, it is possible to use at least one selected from the group consisting of a fluorine atom-containing vinyl compound having a melting point of 130 to 136°C, a fluorine atom-containing vinyl compound having a melting point of 167 to 171°C and a fluorine atom-containing vinyl compound having a melting point of 150°C $\pm$ 1°C.

Of compounds known as the fluorine-based resins or binder, preferred is at least one selected from the group consisting of polyvinylidene fluoride-hexafluoropropylene (polymer PVDF-HFP), polyvinylidene fluoride-chlorotrifluoroethylene (polymer PVDF-CTFE), a PVDF homopolymer, a mixture of PVDF and tetrafluoroethylene-ethylene copolymer (ETFE), or a vinylidene fluoride-tetrafluoroethylene-ethylene terpolymer, and at least one selected from the group consisting of polymer PVDF-HFP and polymer PVDF-CTFE is more preferred. Since the crystallinity of the fluorine-based resin can be controlled within an appropriate range by copolymerizing HFP or CTFE with vinylidene fluoride, flow of the active layer can be suppressed during the adhesion treatment with the electrode. Furthermore, in the case of the adhesion treatment with the electrode, since the adhesive force is improved, the interface deviation does not occur when used as the separator for a secondary battery, leading to an improvement in heat shrinkability and/or hot box testability. The fluorine-based resin is usually obtained by emulsion polymerization or suspension polymerization.

Specific examples of PVDF include Kynar Flex (registered trademark) series of Arkema Inc., for example, LBG and LBG 8200; and Solef (registered trademark) series of SOLVAY Co., for example, Grade 1015 and 6020.

Specific example of the polymer PVDF-HFP include Solef (registered trademark) series of SOLVAY Co., for example, Grade 21216 and 21510 (both of which are dissolved in acetone). Specific example of the polymer PVDF-CTFE include Solef (registered trademark) series of SOLVAY Co., for example, Grade 31508 (which is dissolved in acetone).

Of the above fluorine-based resins, it is preferable that the ratio of a constituent unit derived from HFP or CTFE of the polymer PVDF-HFP and the polymer PVDF-CTFE is 2.0% by weight to 20.0% by weight. When the content of HFP or CTFE is 2.0% by weight or more, advanced progress of crystallization of the fluorine-based resin is suppressed, and when the content of HFP or CTFE is 20.0% by weight or less, crystallization of the fluorine-based resin is appropriately exhibited. From the same viewpoint, the ratio of the structural unit derived from HFP or CTFE in the polymer PVDF-HFP and the polymer PVDF-CTFE is more preferably 2.25% by weight or more, still more preferably 2.5% by weight or more, yet more preferably 18% by weight or less, and further preferably 15% by weight or less.

In a hot box (HotBox) test, it is important for a separator made of a polyolefin such as polyethylene to provide an isolation layer between the positive and negative electrodes at 150°C after crystal melting. When the electricity storage device such as a battery is produced, the winding kit may be inevitably bent (R), and the clearance of the positive and negative electrodes of the total area (region) may not be homogeneous. Although the uncoated chemically crosslinked substrate of a fluorine-based resin such as PVDF has improved heat resistance, it is presumed that, in the inhomogeneous clearance of the positive and negative electrodes, short circuit suppression in a thinner portion is estimated to be insufficient. In addition, for the expansion and contraction deformation of the electrode during the cycle of the electricity storage device, a deviation in the entire surface is generated in the thermoplastic polymer uncoated separator and the clearance between the positive and negative electrodes may be inhomogeneous, thereby making it easy to cause short circuit at the portions close to each other between the electrodes. Further, when partial thermal decomposition of the positive electrode such as an NMC positive electrode occurs, the occurrence of compression strain is expected in the vicinity of the local expansion due to the release of $O_2$. Namely, as the nickel content ratio increases in the NMC positive electrode, when using the positive electrode in which the release of $O_2$ is observed from the lower temperature region, it becomes more difficult to ensure isolation between the negative electrodes. In a similar trend, besides NMC, there is a problem of crystal instability (pyrolysis) in a constituent positive electrode such as an LAC positive electrode. Under the most severe conditions of the NMC positive electrode, the crystal decomposition from 150°C is assumed to solve

this problem, and thus, the heat shrinkage and the hot box testability can be improved.

Meanwhile, regarding the chemically crosslinked substrate membrane coated with a fluorine-based resin such as PVDF, the fluorine-based resin layer exhibits adhesion between the separator and the electrode, and thus a homogeneous clearance can be maintained in the entire area between the positive and negative electrodes. In case the separator including the active layer is impregnated in the electrolyte solution, even when electrode expansion/contraction deformation occurs during cycle of the electricity storage device such as a battery, or even when $O_2$ is generated during thermal decomposition of the positive electrode, it is possible to follow the deformation and to secure a homogeneous clearance even after long-term use. In addition to ensuring the homogeneous clearance in this way, the adjusted PVDF-based resin can be swollen with the electrolyte solution, and when the electrolytic solution can be supplied (exudated) homogeneously to the chemical crosslinking substrate, the chemical crosslinking substrate can be homogeneously crosslinked in the battery of the chemical crosslinking substrate. Therefore, it is preferable to select the above fluorine-based resin in order to ensure satisfactory heat resistance over the entire area of the separator and to obtain satisfactory hot box test results.

When the active layer contains a polymer having one or more polar groups selected from the group consisting of a hydroxyl group (-OH), a carboxyl group (-COOH), a maleic anhydride group (-COOCC-), a sulfonic acid group ($-SO_3H$) and a pyrrolidone group (-NCO-), or two or more polar groups thereof, cycle characteristics of the separator at low temperature (for example, lower than 90°C, lower than 50°C, lower than 25°C, lower than 10°C, lower than 5°C, and 0°C or lower) are improved, which is more preferable. Examples of such polymer include at least one polymer selected from cyanoethylpullulan, cyanoethyl polyvinyl alcohol, cyanoethyl cellulose and cyanoethyl sucrose. The reason why cycle characteristics at low temperature of the separator is improved by having the above polar groups in the active layer is estimated that the resistance of the separator decreases even at low temperature due to high relative dielectric constant of these polymers. The relative dielectric constant of the polymer having a polar group is preferably 1 to 100 (measured frequency = 1 kHz), and particularly preferably 10 or more.

The active layer may contain a resin other than the above resins (other resins). It is possible to use, as other resins, polyvinylidene fluoride-trichloroethylene, polymethyl methacrylate, polyacrylonitrile, polyvinyl acetate, ethylene vinyl acetate copolymer, polyimide, or polyethylene oxide alone, or mixtures of two or more thereof, but are not limited thereto.

The inorganic particles to be used in the active layer are not particularly limited, and are preferably inorganic particles which have a melting point of 200°C or higher and high electrical insulating properties, and are electrochemically stable in the use range of the lithium ion secondary battery.

Examples for the inorganic particles include, but are not particularly limited to, oxide-based ceramics such as alumina, silica, titania, zirconia, magnesia, ceria, yttria, zinc oxide and iron oxide; nitride-based ceramics such as silicon nitride, titanium nitride and boron nitride; ceramics such as silicon carbide, calcium carbonate, magnesium sulfate, aluminum sulfate, aluminum hydroxide, aluminum hydroxide oxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and quartz sand; and glass fibers. These may be used alone, or a plurality thereof may be used in combination.

Of these, aluminum oxide compounds such as alumina and aluminum hydroxide oxide; and aluminum silicate compounds having no ion exchange capacity, such as kaolinite, dickite, nacrite, halloysite and pyrophyllite are preferable, from the viewpoint of improving the electrochemical stability and the heat resistance of the separator.

There are many crystalline forms of alumina, such as $\alpha$-alumina, $\beta$-alumina, $\gamma$-alumina and $\theta$-alumina, and all of them can be preferably used. Of these, $\alpha$-alumina is preferable since it is thermally and chemically stable.

The aluminum oxide compound is particularly preferably aluminum hydroxide oxide (AlO(OH)). The aluminum hydroxide oxide is more preferably boehmite from the viewpoint of preventing internal short circuit caused by the generation of lithium dendrite. By employing particles mainly composed of boehmite as the inorganic particles constituting the active layer, it is possible to realize a very light-weight porous layer while maintaining high permeability, and to suppress heat shrinkage at high temperature of the porous membrane even in a thinner porous layer, and to exhibit excellent heat resistance. Synthetic boehmite, which can reduce ionic impurities that adversely affect the properties of the electrochemical device, is still more preferable.

The aluminum silicate compound having no ion exchange ability is more preferably kaolin mainly composed of kaolin mineral because it is inexpensive and easily available. Wet kaolin and calcined kaolin obtained by firing wet kaolin are known as kaolin. The calcined kaolin is particularly preferable. The calcined kaolin is particularly preferable from the viewpoint of electrochemical stability since the crystal water is released during the firing treatment and impurities are also removed.

The mean particle size ($D_{50}$) of the inorganic particles is preferably 0.2 $\mu$m or more and 2.0 $\mu$m or less, and more preferably more than 0.2 $\mu$m and 2.0 $\mu$m or less. Adjusting $D_{50}$ of the inorganic particles within the above range is preferable from the viewpoint of suppressing heat shrinkage at high temperature (for example, 200°C, or 200°C or higher) even when the active layer has a small thickness (for example, 5 $\mu$m or less). Examples of the method of adjusting

the particle size and particle size distribution of the inorganic particles include a method of reducing the particle size by pulverizing the inorganic particles using appropriate pulverizing apparatus such as a ball mill, a bead mill, and a jet mill.

Examples of the shape of the inorganic particles include a plate shape, a scaly shape, a needle shape, a columnar shape, a spherical shape, a polyhedral shape, and a lump shape. A plurality of types of inorganic fillers having these shapes may be used in combination.

The weight ratio of the fluorine atom-containing vinyl compound to the inorganic particles in the active layer (fluorine atom-containing vinyl compound/inorganic particles) is preferably 5/95 to 80/20, more preferably 7/93 to 65/35, still more preferably 9/91 to 50/50, and yet more preferably 10/90 to 40/60. When the weight ratio of the fluorine atom-containing vinyl compound to the inorganic particles is within such range, not only the heat shrinkage and/or the hot box testability but also the battery windability tend to be satisfactory, which is preferable. For example, when PVDF-HFP is used as the fluorine atom-containing vinyl compound, the resin melts on the surface of the membrane due to the tribo-material effect peculiar to the resin, and thus the battery windability tends to be improved.

The thickness of the active layer is preferably 5 μm or less, and more preferably 2 μm or less, from the viewpoint of improving the heat shrinkability and/or the hot box testability. The thickness of the active layer is preferably 0.5 μm or more from the viewpoint of improving the heat resistance and insulation properties.

The layer density of the active layer is preferably 0.5 $g/cm^3$ to 3.0 $g/cm^3$ , and more preferably 0.7 $g/cm^3$ to 2.0 $g/cm^3$. When the layer density of the active layer is 0.5 $g/cm^3$ or more, the heat shrinkage rate at high temperature tends to be satisfactory, and when the layer density is 3.0 $g/cm^3$ or less, the air permeability tends to be satisfactory.

The active layer may contain a fluorine atom-containing vinyl compound and an optional component other than the inorganic particles. Examples of the optional component include a known additive (excluding inorganic particles) described above for the polyolefin microporous membrane. It is possible to adjust type, quality and grade of the fluorine atom-containing vinyl compound, inorganic particles and optional component to be used according to the properties to be imparted to the active layer, and the predetermined thickness of the active layer.

(Heat-Resistant Porous Layer)

The heat-resistant porous layer contains a heat-resistant resin and has a large number of micropores therein. In the heat-resistant porous layer, these micropores may have a structure connected to each other, and gas or liquid can pass from one side to the other surface.

The heat-resistant porous layer is stacked on at least one side of a microporous polyolefin membrane as the substrate. By disposing the heat-resistant porous layer on the microporous polyolefin membrane which is the chemically cross-linkable substrate described above, the high-temperature bar impact fracture testability tends to be excellent as compared with the conventional heat-resistant resin coating to the substrate having no chemical crosslinkability. The separator obtained by bonding the heat-resistant porous layer to the substrate through the step of stacking the heat-resistant porous layer on the substrate tends to provide an electricity storage device in which ion permeability is less likely to deteriorate and output characteristics are excellent. Further, even when the temperature rise at the time of abnormal heat generation is high, the separator exhibits a smooth shutdown characteristic and high safety tends to be easily obtained. From such viewpoint, the heat-resistant porous layer may be disposed on one or both sides of the substrate, and is preferably disposed such that at least a portion of the substrate is exposed.

The heat-resistant porous layer preferably contains a heat-resistant resin and an inorganic filler from the viewpoint of improving high-temperature bar impact fracture testability.

A resin having a melting point of higher than 150°C or a resin having a melting point of 250°C or higher is preferably used as the heat-resistant resin, or a resin having a melting point of 250°C or higher is preferably used as a resin in which no melting point is substantially present. Examples of such heat-resistant resin include wholly aromatic polyamide, polyimide, polyamideimide, polysulfone, polyketone, polyether, polyether ketone, polyetherimide, and cellulose. Of these, wholly aromatic polyamide is preferable from the viewpoint of the durability, and para-aromatic polyamide and/or meta-aromatic polyamide is/are more preferably. From the viewpoint of the formability of the porous layer and redox resistance, meta-aromatic polyamide is preferable.

It is preferable that molecular weight distribution Mw/Mn of the heat-resistant resin is $5 \leq Mw/Mn \leq 100$ and/or the weight-average molecular weight Mw is $8.0 \times 10^3$ or more and $1.0 \times 10^6$ or less. When using the heat-resistant resin characterized by these molecular weights, more satisfactory heat-resistant porous layer can be formed when a heat-resistant porous layer is formed on the polyolefin microporous membrane by a wet coating method. This is because a large amount of low-molecular-weight bodies are contained in the heat-resistant resin having a wide molecular weight distribution as mentioned above, leading to an improvement in processability of the coating solution in which the resin is dissolved. Therefore, a heat-resistant porous layer having few defects and a homogeneous thickness can be easily formed. Since the coating can be satisfactorily carried out without applying strong coating pressure, the occurrence of clogging of pores on the surface of the microporous polyolefin membrane can be suppressed, and deterioration of air permeability at the interface between the heat-resistant porous layer and the microporous polyolefin membrane can be

prevented. When the coating solution is applied on the polyolefin microporous membrane and the coating solution, followed by immersion in a coagulation solution, the resin in the coating membrane becomes easy to move, so that pores can be satisfactorily formed. The low molecular weight body and the inorganic filler contained in the resin may also be compatible with each other, and the inorganic filler contributing to the hole formation can also be prevented from falling off. As a result, a heat-resistant porous layer having homogeneous micropores can be easily formed. Therefore, a separator having excellent ion permeability and satisfactory contact with an electrode can be obtained.

The heat-resistant resin preferably contains a low molecular weight polymer having a molecular weight of 8,000 or less in a proportion of preferably 1% by weight or more and 15% by weight or less, and more preferably 3% by weight or more and 10% by weight or less. In this case, a satisfactory heat-resistant porous layer can be formed in the same manner as above.

When an aromatic polyamide is used as the heat-resistant resin, the end group concentration ratio of the aromatic polyamide is preferably [COOX {wherein X represents hydrogen, alkali metal or alkaline earth metal}]/[$NH_2$] ≥ 1. For example, a terminal carboxyl group such as COONA has the effect of removing an undesirable membrane generated on the negative electrode side of the battery. Therefore, when using an aromatic polyamide having a terminal carboxyl group in a larger amount than a terminal amine group, a nonaqueous electrolyte secondary battery having a stable discharge capacity over a long period of time tends to be obtained. For example, even after repeating charge-discharge for 100 cycles or 1,000 cycles, a battery having satisfactory discharge capacity can be obtained.

The inorganic filler to be used in the heat-resistant porous layer is not particularly limited, and is preferably an inorganic filler which has a melting point of 200°C or higher and high electrical insulation, and is electrochemically stable in the use range of the lithium ion secondary battery.

Examples of the shape of the inorganic particles include a granular shape, a plate shape, a scaly shape, a needle shape, a columnar shape, a spherical shape, a polyhedral shape, and a lump shape. A plurality of types of inorganic fillers having these shapes may be used in combination.

The mean particle size ($D_{50}$) of the inorganic particles is preferably 0.2 μm or more and 0.9 μm or less, and more preferably more than 0.2 μm and 0.9 μm or less. Adjusting $D_{50}$ of the inorganic particles within the above range is preferable from the viewpoint of suppressing heat shrinkage at high temperature (for example, 150°C or higher, 200°C or higher or 200°C or higher) or improving the bar impact fracture resistance at high temperature even when the active layer has a small thickness (for example, 5 μm or less or 4 μm or less). Examples of the method of adjusting the particle size and particle size distribution of the inorganic particles include a method of reducing the particle size by pulverizing the inorganic particles using appropriate pulverizing apparatus such as a ball mill, a bead mill, and a jet mill.

The heat-resistant porous layer preferably contains, in addition to the heat-resistant resin, an inorganic filler in a proportion of 25% by weight to 95% by weight of based on the weight of the heat-resistant porous layer. 25% by weight or more of the inorganic filler of is preferable for the dimensional stability and heat resistance at high temperatures, while 95% by weight or less of the inorganic filler is preferable for the strength, handleability or moldability.

From the viewpoint of improving the bar impact fracture testability at high temperature, the heat-resistant porous layer preferably contains an inorganic filler having a mean particle size within a range of 0.2 μm to 0.9 μm in a proportion of preferably 30% by weight to 90% by weight, and more preferably 32% by weight to 85% by weight, based on the weight of the heat-resistant porous layer.

Examples of the inorganic filler include, but are not particularly limited to, oxide-based ceramics such as alumina, silica, titania, zirconia, magnesia, ceria, yttria, zinc oxide and iron oxide; nitride-based ceramics such as silicon nitride, titanium nitride and boron nitride; ceramics such as silicon carbide, calcium carbonate , sulfuric acid magnesium, aluminum sulfate, aluminum hydroxide, aluminum hydroxide oxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and silica sand; and glass fibers. These may be used alone, or a plurality thereof may be used in combination.

Of these, aluminum oxide compounds such as alumina and aluminum hydroxide oxide; and aluminum silicate compounds having no ion exchange ability, such as kaolinite, dickite, nacrite, halloysite and pyrophyllite are preferred from the viewpoint of improving the electrochemical stability and heat resistance of the separator.

There are many crystalline forms of alumina, such as α-alumina, β-alumina, γ-alumina and θ-alumina, and all of them can be preferably used. Of these, α-alumina is preferable since it is thermally and chemically stable.

The aluminum oxide compound is particularly preferably aluminum hydroxide oxide (AlO(OH)). The aluminum hydroxide oxide is more preferably boehmite from the viewpoint of preventing internal short circuit caused by the generation of lithium dendrite. By employing particles mainly composed of boehmite as the inorganic particles constituting the active layer, it is possible to realize a very light-weight porous layer while maintaining high permeability, and to suppress heat shrinkage at high temperature of the porous membrane even in a thinner porous layer, and to exhibit excellent heat resistance. Synthetic boehmite, which can reduce ionic impurities that adversely affect the properties of the electrochemical device, is still more preferable.

The aluminum silicate compound having no ion exchange ability is more preferably kaolin mainly composed

of kaolin mineral because it is inexpensive and easily available. Wet kaolin and calcined kaolin obtained by firing wet kaolin are known as kaolin. The calcined kaolin is particularly preferable. The calcined kaolin is particularly preferable from the viewpoint of electrochemical stability since the crystal water is released during the firing treatment and impurities are also removed.

The porosity of the heat-resistant porous layer is preferably within a range of 60% or more and 90% or less. When the porosity of the heat-resistant porous layer is 90% or less, it is preferable from the viewpoint of the heat resistance. When the porosity of the heat-resistant porous layer is 60% or more, it is preferable from the viewpoint of cycle characteristics or storage characteristics and dischargeability of the battery. From the same viewpoint, the coating amount (weight per unit area) of the heat-resistant porous layer is preferably 2 $g/m^2$ to 10 $g/m^2$.

The thickness of the heat-resistant resin layer is preferably 8 μm or less, more preferably 4 μm or less or 3.5 μm or less, per one side of the polyolefin microporous membrane as the substrate, from the viewpoint of high-temperature bar impact fracture testability. The thickness of the heat-resistant resin layer can be 0.5 μm or more from the viewpoint of improving the heat resistance and insulation properties.

The heat-resistant resin layer may contain an optional component other than the heat-resistant resin and the inorganic particles. Examples thereof include a known additive (excluding inorganic particles) described above for the polyolefin microporous membrane, and a resin other than the heat-resistant resin.

<<Method for Producing Separator for Electricity Storage Device>>

The method for producing a separator for an electricity storage device according to the present disclosure can be produced by producing a substrate layer containing a polyolefin and then forming or disposing a desired layer on the substrate layer. The desired layer is a layer containing inorganic particles (layer B) and a layer containing a thermoplastic polymer (layer C) in the first embodiment, and is a surface layer (i.e., at least one of a thermoplastic polymer-containing layer, an active layer and a heat-resistant porous layer) in the second embodiment.

I. Method for Producing Separator for Electricity Storage Device in First Embodiment

<Method for Producing Polyolefin Substrate Layer>

The method for producing a polyolefin substrate layer can include, for example, the following steps:

(1) a sheet-forming step;
(2) a stretching step;
(3) a porous body-forming step; and
(4) a heat treatment step. The method for producing a polyolefin substrate may further include a kneading before the sheet-forming step (1), and/or a winding and slitting step after the heat treatment step (3), as necessary.

The kneading step is a step in which a starting material resin of a polyolefin substrate layer and, as necessary, a plasticizers and/or an inorganic filler are kneaded to obtain a kneaded mixture. It is possible to use, as the starting material resin of the polyolefin substrate layer, the polyolefin resin mentioned above. A kneading machine may be used for kneading. From the viewpoint of suppressing the generation of resin aggregates during the subsequent production process, a master batch resin containing a dehydrating condensation catalyst is preferably not added to the kneaded mixture. It is possible to use, as the plasticizer, organic compounds that can form homogeneous solutions with polyolefins at a temperature below the boiling point thereof. More specifically, these include decalin, xylene, dioctyl phthalate, dibutyl phthalate, stearyl alcohol, oleyl alcohol, decyl alcohol, nonyl alcohol, diphenyl ether, n-decane, n-dodecane and paraffin oil. Of these, paraffin oil and dioctyl phthalate are preferable. A plasticizer may be used alone, or two or more thereof may be used in combination. The proportion of the plasticizer with respect to the total weight of the polyolefin resin to be used is not particularly limited, but from the viewpoint of the porosity of the obtained microporous membrane, it is preferably 20% by weight or more, and from the viewpoint of the viscosity during melt kneading, it is preferably 90% by weight or less.

The sheet-forming step is a step in which the obtained kneaded mixture or a mixture of polyolefin resin starting materials and arbitrary plasticizers and/or inorganic fillers is extruded, cooled to solidification, and cast into a sheet form to obtain a sheet. The sheet forming method is not particularly limited, and may be, for example, a method of compressed-cooling solidification of a molten mixture obtained by melt kneading and extrusion. The cooling method may be a method of direct contact with a cooling medium such as cold air or cooling water; or a method of contact with a refrigerant-cooled roll and/or pressing machine, with a method of contact with a refrigerant-cooled roll and/or pressing machine being preferable for superior membrane thickness control.

From the viewpoint of suppressing the generation of resin aggregates in the polyolefin substrate layer, the

weight ratio of a silane-modified polyolefin to a silane-unmodified polyethylene in the sheet-forming step (weight of silane-modified polyolefin/weight of polyethylene) is preferably 0.05/0.95 to 0.4/0.6, and more preferably 0.06/0.94 to 0.38/0.62. The silane-unmodified polyethylene is preferably an ultra-high molecular weight polyethylene (UHMWPE).

The stretching step is a step in which the obtained sheet is stretched in at least one direction to obtain a stretched sheet. The plasticizer and/or inorganic filler may be extracted from the obtained sheet as necessary before stretching. Examples of the method of stretching the sheet include MD uniaxial stretching with a roll stretcher, TD uniaxial stretching with a tenter, sequential biaxial stretching with a combination of a roll stretcher and tenter, or a tenter and tenter, and simultaneous biaxial stretching with a biaxial tenter or inflation molding. Simultaneous biaxial stretching is preferable from the viewpoint of obtaining a more homogeneous membrane. The total area increase is preferably 8 times or more, more preferably 15 times or more and still more preferably 20 times or more or 30 times or more, from the viewpoint of membrane thickness homogeneity, and balance between tensile elongation, porosity and mean pore size. If the total area increase is 8 times or more, it tends to be easier to obtain high strength and a satisfactory thickness distribution. The area increase is also 250 times or less from the viewpoint of preventing rupture.

The porous body-forming step is a step in which the plasticizer and/or the inorganic filler is/are extracted from the stretched sheet after the stretching step to form pores, thus obtaining a microporous membrane. Examples of the method of extracting the plasticizer include a method of immersing the stretched sheet in an extraction solvent or a method of showering the stretched sheet with an extraction solvent, for example. The extraction solvent used is not particularly limited, but it is preferably a solvent which is a poor solvent for the polyolefin and a satisfactory solvent for the plasticizer and/or inorganic filler, and a solvent having a boiling point which is lower than the melting point of the polyolefin. Examples of such extraction solvents include hydrocarbons such as n-hexane and cyclohexane; halogenated hydrocarbons such as methylene chloride, 1,1,1-trichloroethane and fluorocarbon-based compounds; alcohols such as ethanol and isopropanol; ketones such as acetone and 2-butanone; and alkali water. An extraction solvent may be used alone, or two or more thereof may be used in combination.

The heat treatment step is a step in which, after the stretching step, the microporous membrane is subjected to a heat treatment. The plasticizer may be further extracted from the microporous membrane as necessary before the heat treatment. Examples of the method of heat treatment include, but are not particularly limited, to a heat setting method in which a tenter and/or roll stretcher is utilized for stretching and relaxation procedures. A relaxation procedure is a procedure of shrinking carried out at a prescribed temperature and relaxation factor, in the machine direction (MD) and/or transverse direction (TD) of the membrane. The relaxation factor is the value of the MD dimension of the membrane after the relaxation procedure divided by the MD dimension of the membrane before the procedure, or the value of the TD dimension after the relaxation procedure divided by the TD dimension of the membrane before the procedure, or the product of the relaxation factor in the MD and the relaxation factor in the TD, when both the MD and TD have been relaxed.

The winding and slitting step is a step in which the obtained microporous membrane is slit as necessary and wound around a predetermined core for handleability in the subsequent step.

From the viewpoint of maintaining the crosslinkability until the polyolefin substrate layer is in contact with the electrolyte solution, the production process of the polyolefin substrate layer preferably does not include the crosslinking treatment step. In other words, the crosslinking treatment step is preferably carried out in the electricity storage device after the separator provided with the polyolefin substrate layer is incorporated in the electricity storage device. The crosslinking treatment step is generally a step in which the object to be treated which contains a silane-modified polyolefin is contacted with a mixture of an organometallic catalyst and water, or is immersed in a base solution or an acid solution, for silane dehydration condensation reaction to form oligosiloxane bonds. Examples of the organometallic catalyst include di-butyltin-di-laurate, di-butyltin-di-acetate, and di-butyltin-di-octoate. The base solution means an alkali solution which has a pH of higher than 7 and contains alkali hydroxide metals, alkaline earth metal hydroxides, alkali metal carbonates, alkali metal phosphates, ammonia or amine compounds. The acid solution means an acid solution which has a pH of below 7 and contains inorganic acids or organic acids.

<Method for Forming Island Structure>

In the production process of the polyolefin substrate layer, when starting materials are charged in an extruder in the sheet-forming step, an alkali metal and/or an alkaline earth metal compound having a constant concentration is/are mixed in the starting materials, whereby an island structure of the alkali metal and/or the alkaline earth metal can be formed in the separator. However, when using starting materials having a large molecular weight, it is difficult to homogeneously disperse the alkali metal and/or the alkaline earth metal compound into the resin starting materials since there is a difference in dissolution viscosity between the starting materials. Furthermore, in the case of melt mixing containing a silane-modified polyolefin, since there is a unit having a hetero-functional group, it is more difficult to disperse. In such a complicated mixed resin, the homogeneity of the dispersion of the alkali metal and/or the alkaline earth metal compound is improved by carrying out shear stirring by the extruder at high rotational speed, while the island structure

is finely dispersed adjacent to each other, so that the F anion in the electrolyte solution is consumed more than necessary. Since shear stirring by the extruder at high rotational speed causes molecular weight deterioration of the polyolefin, the mechanical strength and the opening property of the separator are significantly impaired.

In order to control the construction of the island structure without impairing the mechanical strength and opening property, it is preferable to use those in which Mv = 2,000,000 to 9,000,000 (starting material b) and Mv = 500,000 to 2,000,000 (starting material c) as a polyolefin starting material, and those in which Mv = 20,000 to 150,000 (starting material a) as a silane-modified polyolefin starting material, namely, three types in total. More preferably, the ratio of the content is adjusted in accordance with each molecular weight. Thus, it is possible to control the construction of an island structure containing an alkali metal and/or an alkaline earth metal compound having a limited size and a degree of dispersion.

In the starting material composition mentioned above, the ratio of the starting material a in the whole is 3% by weight to 70% by weight, and the ratio of the starting material b to the starting material c contained in addition thereto (weight of resin b/weight of resin c) is preferably 0.06% by weight to 7.00% by weight.

<Surface Treatment of Polyolefin Substrate Layer>

The microporous membrane obtained by the method including various steps described above can be used as the polyolefin substrate layer of the separator for an electricity storage device. When the surface of the polyolefin substrate layer is subjected to surface treatment, it is preferable that the coating solution is easily applied and the adhesion between the substrate layer and the coating layer is improved. Examples of the surface treatment include a corona discharge treatment method, a plasma treatment method, a mechanical roughening method, a solvent treatment method, an acid treatment method, and an ultraviolet oxidation method.

<Method for Forming Inorganic Particle Layer>

The inorganic particle layer can be formed by coating a polyolefin substrate layer with a coating solution containing inorganic particles and an arbitrary resin binder in a solvent, and removing the solvent. The solvent is preferably water, or a poor solvent such as a mixed solvent of water and a water-soluble organic medium (for example, methanol or ethanol).

The coating method may be any method capable of realizing desired coating pattern, coating thickness and coating area. Examples thereof include die coating, curtain coating, impregnation coating, blade coating, rod coating and gravure coating.

The method of removing the solvent from the coating membrane after coating may be any method which does not adversely affect the polyolefin substrate layer and the inorganic particle layer. Examples thereof include a method of heating and drying the substrate at a temperature equal to or lower than the melting point of the substrate while fixing the substrate, and a method of vacuum drying at low temperature.

<Method for Forming Thermoplastic Polymer Layer>

The thermoplastic polymer layer can be formed by coating the inorganic particle layer with a coating solution containing a thermoplastic polymer in a solvent. In the case of producing the separator for an electricity storage device including no inorganic particle layer, the coating solution for the thermoplastic polymer layer may be directly applied on the polyolefin substrate layer. The coating solution may be synthesized by emulsion polymerization of a thermoplastic polymer, and the obtained emulsion may be used as a coating solution as it is. The coating solution preferably contains water, or a poor solvent such as a mixed solvent of water and a water-soluble organic medium (for example, methanol or ethanol).

The coating method may be any method capable of realizing desired coating pattern, coating thickness and coating area. Examples thereof include die coating, curtain coating, impregnation coating, blade coating, rod coating and gravure coating.

The method of removing the solvent from the coating membrane after coating may be any method that does not adversely affect the polyolefin substrate layer, the inorganic particle layer and the thermoplastic polymer layer. Examples thereof include a method of heating and drying the substrate at a temperature equal to or lower than the melting point of the substrate while fixing the substrate, and a method of vacuum drying at low temperature.

II. Method for Producing Separator for Electricity Storage in Second Embodiment

<Method for Producing Polyolefin Microporous Membrane as Substrate>

As a method for producing a separator according to the second embodiment, the case where the polyolefin microporous membrane is single-layer membrane (flat membrane) as the substrate will be described, but it is not intended to exclude forms other than flat membrane. The method for producing a microporous membrane can include the following steps:

(1) a sheet-forming step;
(2) a stretching step;
(3) a porous body-forming step; and
(4) a heat treatment step. The method for producing a microporous membrane may optionally include a resin-modifying step or a kneading step before the sheet-forming step (1) and/or a winding and slitting step after the heat treatment step (3), but preferably it does not include a crosslinked structure-forming step or a step of contacting with a crosslinking promoting catalyst from the viewpoint of maintaining the crosslinkability of the microporous membrane until housing in the electricity storage device

The crosslinked structure-forming step includes (1) a secondary step in which a plurality of functional groups included in the microporous membrane are subjected to a condensation reaction, (2) a secondary step in which the functional groups included in the microporous membrane are reacted with a chemical substance in the electricity storage device, or (3) a secondary step in which the functional groups included in the microporous membrane are reacted with other functional groups. The crosslinking promoting catalyst is an optional catalyst capable of promoting a crosslinking reaction, for example, (I) a condensation reaction of a plurality of the same functional groups, (II) a reaction between a plurality of different functional groups, (III) a chain condensation reaction between the functional groups and an electrolyte solution, and (IV) a chain condensation reaction between the functional groups and an additive, described above.

In the kneading step, a kneading machine can be used for kneading of, for example, a polyolefin, and optionally a plasticizer or inorganic material and other polyolefins. From the viewpoint of suppressing the generation of resin aggregates during the production process and maintaining crosslinkability of the microporous membrane until housing in the electricity storage device, a master batch resin containing a crosslinking promoting catalyst is preferably not added to the kneaded mixture.

The polyolefin used in the kneading step or the sheet-forming step is not limited to an olefin homopolymer, and may be a polyolefin obtained by copolymerizing a monomer having a functional group, or a functional group-modified polyolefin. The functional group is a functional group that can be involved in the formation of a crosslinked structure, and may be, for example, functional groups A and/or B in the above-described reactions (I) to (V). The resin-modifying step can be eliminated by preparing a polyolefin starting material including a monomer unit having functional groups A and/or B in advance.

Meanwhile, when the polyolefin starting material has no functional group capable of being involved in the formation of the crosslinked structure or the molar fraction of such a functional group is less than a predetermined ratio, the polyolefin starting material is subjected to the resin-modifying step, and the functional group is incorporated in the resin backbone or the molar fraction of the functional group is increased to obtain the functional group-modified polyolefin. The resin-modifying step may be carried out by a known method. For example, the polyolefin starting material can be brought into contact with the reaction reagent by liquid spraying, gas spraying, dry mixing, immersion, or coating so that the functional groups A and/or B can be introduced into the polyolefin backbone.

The plasticizer is not particularly limited, and examples thereof include organic compounds that can form homogeneous solutions with polyolefins at temperatures below their boiling points. More specifically, these include decalin, xylene, dioctyl phthalate, dibutyl phthalate, stearyl alcohol, oleyl alcohol, decyl alcohol, nonyl alcohol, diphenyl ether, n-decane, n-dodecane and paraffin oil. Of these, paraffin oil and dioctyl phthalate are preferable. A plasticizer may be used alone, or two or more thereof may be used in combination. The proportion of the plasticizer is not particularly limited, but from the viewpoint of the porosity of the obtained microporous membrane, it is preferably 20% by weight or more, and from the viewpoint of the viscosity during melt kneading, it is preferably 90% by weight or less, as necessary, with respect to the total weight of the polyolefin and silane graft-modified polyolefin.

The sheet-forming step is a step of extruding a mixture of the obtained kneaded mixture or a mixture of a polyolefin and a plasticizer, cooling and solidifying the mixture, and molding the mixture into a sheet shape to obtain a sheet. The sheet molding method is not particularly limited, and examples thereof include a method of solidifying a melt kneaded and extruded by compression cooling. Examples of the cooling method include a method of directly contacting a cooling medium such as cold air and cooling water and a method of bringing into contact with a roll or a press cooled by a refrigerant, with a method of bringing into contact with a roll or a press cooled by a refrigerant being preferable for

superior membrane thickness control.

When the polyolefin or functional group-modified polyolefin copolymerized with a monomer having a functional group and other polyolefins are used in combination, from the viewpoint of the resin aggregates or the internal maximum heat generation rate in the separator, the weight ratio (polyolefin or functional group-modified polyolefin obtained by copolymerizing a monomer having functional group/other polyolefins) in the sheet-forming step is more preferably 0.05 to 0.4/0.6 to 0.95, and still more preferably 0.06 to 0.38/0.62 to 0.94.

From the viewpoint of improving the safety by suppressing thermal runaway at the time of destruction of an electricity storage device while having low-temperature shutdown property of 150°C or lower and membrane rupture resistance at high temperature of 180 to 220°C, in the sheet-forming step, it is preferable that the polyolefin or functional group-modified polyolefin copolymerized with a monomer having a functional group is preferably not a master batch resin containing a catalyst that promotes the crosslinking reaction of the functional group from before the sheet-forming step.

The stretching step is a step of extracting a plasticizer or an inorganic material from the obtained sheet if necessary, and further stretching the sheet in one or more directions. Examples of the method for stretching the sheet include an MD uniaxial stretching by a roll stretching machine, a TD uniaxial stretching by a tenter, a sequential biaxial stretching by a combination of a roll stretching machine and a tenter, or a tenter and a tenter, and a simultaneous biaxial stretching by simultaneous biaxial tenter or inflation molding. From the viewpoint of obtaining a more homogeneous membrane, it is preferable to carry out simultaneous biaxial stretching. From the viewpoint of the homogeneity of the thickness, the tensile elongation, the porosity and the mean pore size, the total area increase is preferably 8 times or more, more preferably 15 times or more, and still more preferably 20 times or more or 30 times or more. When the total area increase is 8 times or more, it tends to be easy to obtain high strength and satisfactory thickness distribution. The area increase may be 250 times or less from the viewpoint of preventing rupture.

The porous body-forming step is a step in which the plasticizer is extracted from the stretched sheet after the stretching step to form pores in the stretched sheet. Examples of the method of extracting the plasticizer include, but are not particularly limited to, a method of immersing the stretched sheet in an extraction solvent or a method of showering the stretched sheet with an extraction solvent. The extraction solvent used is not particularly limited, but it is preferably one that is a poor solvent for the polyolefin and a good solvent for the plasticizer or inorganic material, and that has a boiling point that is lower than the melting point of the polyolefin. Examples of such extraction solvent include, but are not particularly limited to, hydrocarbons such as n-hexane and cyclohexane; halogenated hydrocarbons such as methylene chloride, 1,1,1-trichloroethane and fluorocarbon-based compounds; alcohols such as ethanol and isopropanol; ketones such as acetone and 2-butanone; and alkali water. An extraction solvent may be used alone, or two or more thereof may be used in combination.

The heat treatment step is a step in which, after the stretching step, the plasticizer is also extracted from the sheet as necessary and heat treatment is further carried out to obtain a microporous membrane. Examples of method of heat treatment include, but are not particularly limited to, a heat setting method in which a tenter and/or roll stretcher is utilized for stretching and relaxation procedures. A relaxation procedure is a procedure of shrinking carried out at a prescribed temperature and relaxation factor, in the machine direction (MD) and/or transverse direction (TD) of the membrane. The relaxation factor is the value of the MD dimension of the membrane after the relaxation procedure divided by the MD dimension of the membrane before the procedure, or the value of the TD dimension after the relaxation procedure divided by the TD dimension of the membrane before the procedure, or the product of the relaxation factor in the MD and the relaxation factor in the TD, when both the MD and TD have been relaxed.

<Winding/Slitting Step/Post-Treatment Step>

The winding step is a step in which the obtained microporous membrane is slit as necessary and wound on a prescribed core.

When the obtained polyolefin microporous membrane is subjected to surface treatment, the coating solution is easily coated and the adhesion between the polyolefin and the surface layer is improved, which is preferable. Examples of the method for surface treatment include a corona discharge treatment method, a plasma treatment method, a mechanical roughening method, a solvent treatment method, an acid treatment method, and an ultraviolet oxidation method.

<Multilayering of Substrate>

As an example of a method for producing a polyolefin multilayer microporous membrane, a multilayer membrane having a first microporous layer, a second microporous layer and a first microporous layer in this order will be described below. Examples of the method for stacking these porous layers include the following three-layer batch stacking method: a polyolefin resin composition as a constituent component of the first and second microporous layers and a plasticizer are melted and kneaded separately using a twin-screw extruder to obtain a polyolefin solution, and then each polyolefin

solution is supplied from each twin-screw extruder to a three-layer T-die. While adjusting the layer thickness ratio of each layer (first polyolefin solution layer/second polyolefin solution layer/first polyolefin solution layer) formed from each solution to a desired range, cooling is carried out while taking-up at a predetermined take-up speed to form as a gel-like three-layer sheet.

In the above, three layers are formed simultaneously using the three-layer T-die, but each layer may be formed separately before forming into a three-layer sheet.

<Method for Forming Surface Layer>

The surface layer can be formed, for example, by coating a polyolefin microporous membrane as the substrate with a coating solution containing a material of a surface layer, followed by drying. Alternatively, a polyolefin microporous membrane as the substrate and a membrane of the surface layer may be separately produced, and then both of them may be laminated.

(Method for Forming Thermoplastic Polymer-Containing Layer)

The thermoplastic polymer can be disposed on the substrate, for example, by coating a substrate with a coating solution containing a thermoplastic polymer. The thermoplastic polymer may be synthesized by emulsion polymerization, and the obtained emulsion may be used as a coating solution as it is. The coating solution preferably contains water, or a poor solvent such as a mixed solvent of water and a water-soluble organic medium (for example, methanol or ethanol).

The method of coating a substrate of a polyolefin microporous membrane with a coating solution containing a thermoplastic polymer is not particularly limited as long as it is a method capable of realizing desired coating pattern, coating thickness and coating area. For example, the coating method described above may be used to coat the inorganic particle-containing coating solution. From the viewpoint of being capable of increasing the degree of freedom of the coating shape of the thermoplastic polymer and easily adjusting the preferable coating area ratio as described above, a gravure coater method or a spray coating method is preferable.

The method of removing the solvent from the coating membrane after coating is not particularly limited as long as the method does not adversely affect the substrate and the thermoplastic polymer-containing layer. Examples thereof include a method in which the substrate is dried at a temperature equal to or lower than the melting point while fixing the substrate, a method of decompressing and drying at a low temperature, and a method in which the thermoplastic polymer is immersed in a poor solvent for a thermoplastic polymer to coagulate the thermoplastic polymer in a particle shape, and at the same time, the solvent is extracted.

(Method for Forming Active Layer)

Examples of the method of disposing or forming the active layer on the substrate include a method in which at least one side of the substrate is coated with a coating solution containing a fluorine-containing vinyl compound and inorganic particles. In this case, the coating solution may contain a solvent, a dispersant, etc. in order to improve the dispersion stability and coatability. The coating solution may contain an organic solvent such as cyanoethyl polyvinyl alcohol or acetone, or may contain water, or a mixed solvent of water and a water-soluble organic medium (for example, methanol or ethanol).

The method of coating the substrate with the coating solution is not particularly limited as long as the required layer thickness and coating area can be realized. For example, a particle starting material containing a resin binder and a polymer substrate starting material may be stacked and extruded by a co-extrusion method, or both of them may be bonded after the substrate and the membrane of the active layer are separately fabricated.

The method of removing the solvent from the coating membrane after coating is not particularly limited as long as the method does not adversely affect the polyolefin resin, the fluorine-containing vinyl compound or the inorganic particles. Examples thereof include a method of drying the coating membrane at a temperature equal to or lower than the melting point of the polyolefin resin or the fluorine-containing vinyl compound while fixing the substrate, and a method of reducing the pressure at low temperature.

(Method for Forming Heat-Resistant Resin Layer on Substrate)

Examples of the method of forming a heat-resistant resin layer on a substrate include a method of coating at least one side of a substrate with a coating solution containing a heat-resistant resin and an inorganic filler. In this case, the coating solution may contain a solvent, a dispersant, etc. in order to improve the dispersion stability and coatability. The coating solution may contain an organic solvent such as NMP, IPA, cyanoethyl polyvinyl alcohol or acetone, or may contain water, or a mixed solvent of water and a water-soluble organic medium (for example, methanol or ethanol).

The method of coating the substrate with the coating solution is not particularly limited as long as the required layer thickness and coating area can be realized. For example, a particle starting material containing a resin binder and a polymer substrate starting material may be stacked and extruded by a co-extrusion method, or both of them may be bonded after the substrate and the heat-resistant resin layer are separately fabricated.
The method of removing the solvent from the coating membrane after coating is not particularly limited as long as the method does not adversely affect the polyolefin resin, the heat-resistant resin or the inorganic filler. Examples thereof include a method of drying the coating membrane at a temperature equal to or lower than the melting point of the polyolefin resin or the heat-resistant resin while fixing the substrate, and a method of reducing the pressure at low temperature.
The separator obtained by the method including various steps described above can be used in an electricity storage device, in particular, a lithium battery or a lithium ion secondary battery.

<<Electricity Storage Device>>

The electricity storage device of the present disclosure includes a positive electrode, a negative electrode, a separator for an electricity storage device according to the present disclosure, a nonaqueous electrolyte, and as necessary, an additive. The electricity storage device includes at least one electricity storage element in which a positive electrode, a negative electrode, and a separator for an electricity storage device are disposed therebetween. Typically, a plurality of positive electrodes and a plurality of negative electrodes are alternately stacked through a separator for an electricity storage device of the present disclosure therebetween to form a plurality of electricity storage elements. The electricity storage element is typically housed in the exterior body in a state of being impregnated with the nonaqueous electrolyte solution.
When the separator for an electricity storage device of the present disclosure is housed in the device exterior body, the functional group-modified polyethylene or the functional group graft copolymer polyethylene reacts with the chemical substance contained in the electrolyte solution or additive to form a crosslinked structure, so that the fabricated electricity storage device has a crosslinked structure. The functional group-modified polyethylene or the functional group graft copolymer polyethylene is not limited, but can be derived from a polyolefin starting material of a microporous membrane or derived from a polyolefin modified during a production process of a microporous membrane.
Specifically, examples of the electricity storage device of the present disclosure include a lithium battery, lithium secondary battery, lithium ion secondary battery, sodium secondary battery, sodium ion secondary battery, magnesium secondary battery, magnesium ion secondary battery, calcium secondary battery, calcium ion secondary battery, aluminum secondary battery, aluminum ion secondary battery, nickel hydrogen battery, nickel cadmium battery, electrical double layer capacitor, lithium ion capacitor, redox flow battery, lithium sulfur battery, lithium air battery, and zinc air battery. Of these, from the viewpoint of the practicality, a lithium battery, lithium secondary battery, lithium ion secondary battery, nickel hydrogen battery or lithium ion capacitor is preferable, and a lithium battery or lithium ion secondary battery is more preferable.
The lithium ion secondary battery (LIB) is a storage battery using a lithium-containing positive electrode, a negative electrode, and an electrolyte solution which contains an organic solvent containing a lithium salt such as $LiPF_6$. A known positive electrode for LiB can be used as the positive electrode. At the time of charge-discharge of the lithium ion secondary battery, ionized lithium reciprocates between the electrodes. Since the ionized lithium needs to move between the electrodes at relatively high speed while suppressing the contact between the electrodes, the separator is disposed between the electrodes.
Hereinafter, the case of a lithium ion secondary battery will be described as an example, but the electricity storage device of the present disclosure is not limited thereto.

<Positive Electrode>

The positive electrode typically includes a positive electrode current collector and a positive electrode active material layer disposed on one or both sides of the positive electrode current collector. The positive electrode active material layer contains a positive electrode active material, and further contains a conductive aid and/or a binder as necessary.
The positive electrode current collector is composed of, for example, a metal foil such as an aluminum foil, a nickel foil or a stainless steel foil. The positive electrode current collector may be carbon-coated, and may be processed into a mesh shape.
The positive electrode active material preferably contains a material capable of occluding and releasing lithium ions. More specifically, examples of the positive electrode active material include a positive electrode active material containing at least one transition metal element selected from the group consisting of Ni, Mn and Co. For example, it is possible to use a positive electrode capable of easily undergoing pyrolysis or releasing $O_2$, and the positive electrode

is preferably, for example, at least one selected from the group consisting of a nickel-manganese-cobalt (NMC)-based lithium-containing positive electrode, an olivine-type lithium iron phosphate (LFP)-based positive electrode, a lithium cobaltate (LCO)-based positive electrode, a nickel-cobalt-aluminum (NCA)-based lithium-containing positive electrode and a lithium manganate (LMO)-based positive electrode. Since it is possible to reversibly and stably occlude and release lithium ions, and to achieve high energy density, a nickel-manganese-cobalt (NMC)-based lithium composite oxide is preferable. In the case of the NMC-based lithium composite oxide, the molar ratio of the amount of nickel (Ni) to the total amount of nickel, manganese and cobalt is preferably 4 to 9, 5 to 9, 6 to 9, 5 to 8, or 6 to 8.

The positive electrode active material may be an olivine-type lithium iron phosphate (LFP)-based positive electrode. Since the olivine-type lithium iron phosphate has an olivine-type structure and is excellent in thermal stability, it is often used at relatively high temperature such as 60°C. However, a normal separator having no crosslinked structure causes creep deformation (deformation of the microporous structure) at 60°C, resulting in a problem in cycle characteristics. Since the separator having the crosslinked structure according to the present disclosure can suppress creep deformation, the separator can be used in a temperature range having a problem in cycle characteristics by using in combination with an olivine-type lithium iron phosphate (LFP)-based positive electrode. The positive electrode active material may be a lithium cobaltate (LCO)-based positive electrode. Although the lithium cobaltate (LCO)-based positive electrode has high oxidation potential, it is possible to increase the operating voltage of the battery, however, lithium cobaltate has high hardness, and there is a tendency that foreign substance contamination due to metal wear tends to occur in the molding step. When the metal foreign substance is mixed during battery assembly, internal short circuit may occur. Since the separator having a crosslinked structure according to the present disclosure is excellent in fuse/meltdown characteristics, the electrochemical reaction can be safely stopped even when the internal short circuit occurs. By using the lithium cobaltate (LCO)-based positive electrode in combination with the separator of the present disclosure, it is possible to achieve both operating voltage of the battery and safety at the time of internal short circuit. The positive electrode active material may be a nickel-cobalt-aluminum (NCA)-based lithium-containing positive electrode. The use of the nickel-cobalt-aluminum (NCA)-based lithium-containing positive electrode makes it possible to produce a battery having excellent charge-discharge capacity at low cost. However, there is a tendency that a trace amount of moisture contained in the battery reacts with Li ions eluted from the positive electrode to produce a lithium compound, and the lithium compound reacts with the electrolyte solution to easily cause the generation of gas. The generation of gas may cause battery swelling. When lithium ions eluted from the positive electrode are consumed, the charge-discharge capacity may be reduced. A separator having a crosslinked structure according to the present disclosure has an island structure of alkali metal/alkali metal, the alkaline earth metal/alkaline earth metal react with HF, thus enabling control of the HF concentration. One of reactions occurring in the battery is a reaction of reacting moisture with an electrolyte salt such as $LiPF_6$ to produce HF, and it is possible to promote the reaction between moisture and the electrolyte salt and to efficiently consume moisture by controlling the HF concentration in the battery. By using the nickel-cobalt-aluminum (NCA)-based lithium-containing positive electrode in combination with the separator of the present disclosure, a decrease in charge-discharge capacity can be suppressed. The positive electrode active material may be a lithium manganate (LMO) positive electrode. lithium manganate has a strong crystal structure because of having a spinel structure (cubic crystal) and is excellent in safety, so that it is used at relatively high temperature such as 60°C. However, a normal separator having no crosslinked structure has a problem in cycle characteristics since creep deformation (heat shrinkage) occurs at 60°C. The separator having a crosslinked structure according to the present disclosure is capable of suppressing creep deformation, so that the separator can be used in a temperature range having a problem in cycle characteristics by using in combination with a lithium manganate (LMO)-based positive electrode.

The positive electrode active material may be an olivine-type lithium iron phosphate (LFP)-based positive electrode because of its low cost, long lifetime and excellent safety. Since the positive electrode active material has high operating voltage and can achieve excellent cycle lifetime, a lithium cobaltate (LCO)-based positive electrode may be used as the positive electrode active material. The positive electrode active material may be a nickel-cobalt-aluminum (NCA)-based lithium-containing positive electrode because of the layered structure and excellent balance of capacity density, cost and thermal stability thereof. The positive electrode active material may also be a lithium manganate (LMO)-based positive electrode because of the spinel structure (cubic crystal) and strong crystal structure thereof, and thus it is thermally stable and excellent in safety.

Examples of the conductive aid of the positive electrode active material layer include carbon black typified by graphite, acetylene black and Ketjen black, and carbon fibers. The content of the conductive aid is preferably set at 10 parts by weight or less, and more preferably 1 to 5 parts by weight, based on 100 parts by weight of the positive electrode active material.

Examples of the binder of the positive electrode active material layer include polyvinylidene fluoride (PVDF), polytetrafluoroethylene (PTFE), polyacrylic acid, styrene-butadiene rubber and fluororubber. The content of the binder is preferably set at 6 parts by weight or less, and more preferably 0.5 to 4 parts by weight, based on 100 parts by weight of the positive electrode active material.

<Negative Electrode>

The negative electrode typically includes a negative electrode current collector and a negative electrode active material layer disposed on one or both sides of the negative electrode current collector. The negative electrode active material layer contains a negative electrode active material, and further contains a conductive aid and/or a binder as necessary.

The negative electrode current collector is composed of, for example, a metal foil such as a copper foil, a nickel foil or a stainless steel foil. The negative electrode current collector may be carbon-coated on the surface or may be processed into a mesh shape. The thickness of the negative electrode collector is preferably 5 to 40 μm, more preferably 6 to 35 μm, and still more preferably 7 to 30 μm.

The negative electrode active material preferably contains a material capable of occluding lithium ions at a potential lower than 0.4 V (vs. $Li/Li^+$). More specifically, examples of the negative electrode active material include, in addition to carbon materials typified by amorphous carbon (hard carbon), graphite (artificial graphite, natural graphite), pyrolytic carbon, coke, glassy carbon, calcined body of organic polymer compound, mesocarbon microbead, carbon fiber, activated carbon, carbon colloid and carbon black, metal lithium, metal oxide, metal nitride, lithium alloy, tin alloy, Si material, intermetallic compound, organic compound, an inorganic compound, metal complex an organic polymer compounds. A negative electrode active material is used alone, or in combination of two or more thereof. Examples of the Si material include silicon, Si alloy, and Si oxide.

Examples of the conductive aid of the negative electrode active material layer include carbon black typified by graphite, acetylene black and Ketjen black, and carbon fibers. The content of the conductive aid is preferably set at 20 parts by weight or less, and more preferably 0.1 to 10 parts by weight, based on 100 parts by weight of the negative electrode active material.

Examples of the binder of the negative electrode active material layer include carboxymethyl cellulose, polyvinylidene fluoride (PVDF), polytetrafluoroethylene (PTFE), polyacrylic acid and fluororubber. The binder also includes diene-based rubber, for example, styrene-butadiene rubber. The content of the binder is preferably set at 10 parts by weight or less, and more preferably 0.5 to 6 parts by weight, based on 100 parts by weight of the negative electrode active material.

<Separator for Electricity Storage Device>

It is possible to use, as the separator for an electricity storage device, a separator for an electricity storage device according to the present disclosure.

<Electrolyte Solution>

The electrolyte in the battery may contain moisture, and the moisture contained in the system after the fabrication of the battery may be moisture contained in the electrolyte solution or brought-in moisture contained in a member such as an electrode or a separator. The electrolyte solution may contain a nonaqueous solvent. Examples of the solvent contained in the nonaqueous solvent include alcohols such as methanol and ethanol; and aprotic solvents. Of these, an aprotic solvent is preferable as the nonaqueous solvent.

Examples of the aprotic solvent include cyclic carbonate, fluoroethylene carbonate, lactone, organic compound having a sulfur atom, chain fluorinated carbonate, cyclic ether, mononitrile, alkoxy group-substituted nitrile, dinitrile, cyclic nitrile, short-chain fatty acid ester, chain ether, fluorinated ether, ketone, and compounds in which a part or all of H atoms in the aprotic solvent is substituted with a halogen atom.

Examples of the cyclic carbonate include ethylene carbonate, propylene carbonate, 1,2-butylene carbonate, trans-2,3-butylene carbonate, cis-2,3-butylene carbonate, 1,2-pentylene carbonate, trans-2,3-pentylene carbonate, cis-2,3-pentylene carbonate, vinylene carbonate, 4,5-dimethylvinylene carbonate and vinyl ethylene carbonate.

Examples of the fluoroethylene carbonate include 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolane-2-one, 4,4,5,5-tetrafluoro-1,3-dioxolan-2-one, and 4,4,5-trifluoro-5-methyl-1,3-dioxolan-2-one.

Examples of the lactone include γ-butyrolactone, α-methyl-γ-butyrolactone, γ-valerolactone, γ-caprolactone, δ-valerolactone, δ-caprolactone and ε-caprolactone.

Examples of the organic compound having sulfur atom include ethylene sulfite, propylene sulfite, butylene sulfite, pentene sulfite, sulfolane, 3-sulfylene, 3-methylsulfolane, 1,3-propanesultone, 1,4-butanesultone, 1-propene 1,3-sultone, dimethyl sulfoxide, tetramethylene sulfoxide and ethylene glycol sulfite.

Examples of the chain carbonate include ethyl methyl carbonate, dimethyl carbonate, diethyl carbonate, methyl propyl carbonate, methyl isopropyl carbonate, dipropyl carbonate, methyl butyl carbonate, dibutyl carbonate and ethyl propyl carbonate.

Examples of the cyclic ether include tetrahydrofuran, 2-methyltetrahydrofuran, 1,4-dioxane and 1,3-dioxane.

Examples of the mononitrile include acetonitrile, propionitrile, butyronitrile, valeronitrile, benzonitrile and acrylonitrile.

Examples of the alkoxy group-substituted nitrile include methoxyacetonitrile and 3-methoxypropionitrile.

Examples of the dinitrile include malononitrile, succinonitrile, methylsuccinonitrile, glutaronitrile, 2-methylglutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane, 2,4-dimethylglutaronitrile, and ethylene glycol bis(propionitrile)ether.

Examples of the cyclic nitrile include benzonitrile.

Examples of the short-chain fatty acid ester include methyl acetate, methyl propionate, methyl isobutyrate, methyl butyrate, methyl isovalerate, methyl valerate, methyl pivalate, methyl hydroangelate, methyl caproate, ethyl acetate, ethyl propionate, ethyl isobutyrate, ethyl butyrate, ethyl isovalerate, ethyl valerate, ethyl pivalate, ethyl hydroangelate, ethyl caproate, propyl acetate, propyl propionate, propyl isobutyrate, propyl butyrate, propyl isovalerate, propyl valerate, propyl pivalate, propyl hydroangelate, propyl caproate, isopropyl acetate, isopropyl propionate, isopropyl isobutyrate, isopropyl butyrate, isopropyl isovalerate, isopropyl valerate, isopropyl pivalate, isopropyl hydroangelate, isopropyl caproate, butyl acetate, butyl propionate, butyl isobutyrate, butyl butyrate, butyl isovalerate, butyl valerate, butyl pivalate, butyl hydroangelate, butyl caproate, isobutyl acetate, isobutyl propionate, isobutyl isobutyrate, isobutyl butyrate, isobutyl isovalerate, isobutyl valerate, isobutyl pivalate, isobutyl hydroangelate, isobutyl caproate, tert-butyl acetate, tert-butyl propionate, tert-butyl isobutyrate, tert-butyl butyrate, tert-butyl isovalerate, tert-butyl valerate, tert-butyl pivalate, tert-butyl hydroangelate and tert-butyl caproate.

Examples of the chain ether include dimethoxyethane, diethyl ether, 1,3-dioxolane, diglyme, triglyme and tetraglyme. Examples of the fluorinated ether include compounds represented by the general formula $Rf_{a\,a}$-$OR_{b\,b}$ (wherein $Rf_{a\,a}$ is an alkyl group having a fluorine atom and $R_{b\,b}$ is an organic group which optionally has a fluorine atom). Examples of the ketone include acetone, methyl ethyl ketone and methyl isobutyl ketone.

Examples of the compound in which a part or all of the H atoms in the aprotic solvent are substituted with a halogen atom include a compound in which a halogen atom is fluorine.

Examples of the fluoride of the chain carbonate include methyl trifluoroethyl carbonate, trifluorodimethyl carbonate, trifluorodiethyl carbonate, trifluoroethyl methyl carbonate, methyl 2,2-difluoroethyl carbonate, methyl 2,2,2-trifluoroethyl carbonate and methyl 2,2,2,3-tetrafluoropropyl carbonate. The fluorinated chain carbonate can be represented by the following general formula:

$$R_{c\,c}\text{-O-C(O)O-}R_{d\,d}$$

wherein $R_{cc}$ and $R_{d\,d}$ are at least one selected from the group consisting of $CH_3$ , $CH_2$ $CH_3$, $CH_2CH_2$ $CH_3$ , $CH(CH_3)_2$, and formula $CH_2Rf_{cc}$ (wherein $Rf_{cc}$ is an alkyl group having 1 to 3 carbon atoms in which hydrogen atoms are substituted with at least one fluorine atom), and $R_{cc}$ and/or $R_{d\,d}$ has/have at least one fluorine atom.

Examples of the fluoride of the short-chain fatty acid ester include fluorinated short-chain fatty acid esters typified by, for example, 2,2-difluoroethyl acetate, 2,2,2-trifluoroethyl acetate and 2,2,3,3-tetrafluoropropyl acetate. The fluorinated short chain fatty acid ester is represented by the following general formula:

$$R_{f\,f}\text{-O-C(O)O-}R_{g\,g}$$

wherein $R_{f\,f}$ is at least one selected from the group consisting of $CH_3$ , $CH_2CH_3$, $CH_2CH_2CH_3$ , $CH(CH_3)_2$, $CF_3CF_2H$, $CFH_2$ , $CF_2H$, $CF_2Rf_{h\,h}$, $CFHRf_{h\,h}$ and $CH_2$ $Rf_{i\,i}$, $R_{g\,g}$ is at least one selected from the group consisting of $CH_3$ , $CH_2CH_3$ , $CH_2CH_2CH_3$, $CH(CH_3)_2$ and $CH_2Rf_{i\,i}$ , $Rf_{h\,h}$ is an alkyl group having 1 to 3 carbon atoms in which a hydrogen atom is substituted with at least one fluorine atom, $Rf_{i\,i}$ is an alkyl group having 1 to 3 carbon atoms in which a hydrogen atom is substituted with at least one fluorine atom, and $R_{f\,f}$ and/or $R_{g\,g}$ has/have at least one fluorine atom, and when $R_{f\,f}$ is $CF_2$ H, $R_{g\,g}$ is not $CH_3$.

As used herein, the nonaqueous electrolyte solution refers to an electrolyte solution containing an electrolyte in a nonaqueous solvent in which the amount of water is 1% by weight or less based on the total weight. The nonaqueous electrolyte preferably does not contain water as much as possible, but may contain a very small amount of moisture. The content of such moisture is preferably 300 ppm by weight or less, and more preferably 200 ppm by weight or less, based on the total amount of the nonaqueous electrolyte solution.

Examples of the nonaqueous solvent include alcohols such as methanol and ethanol, and aprotic solvents, and an aprotic solvent is preferable. Examples of the aprotic solvent include acetonitrile, mononitrile other than acetonitrile, alkoxy group-substituted nitrile, dinitrile, cyclic nitrile, chain carbonate, cyclic carbonate, fluorinated carbonate, fluoroethylene carbonate, short-chain fatty acid ester, lactone, ketone, organic compound having a sulfur atom, chain ether, cyclic ether, fluorinated ether, and compounds in which portion or all of these H atoms are substituted with a halogen atom.

The electrolyte is preferably a lithium salt, and more preferably a fluorine-containing lithium salt that generates HF from the viewpoint of promoting the silane crosslinking reaction. Examples of the fluorine-containing lithium salt include lithium hexafluorophosphate ($LiPF_6$), lithium fluorosulfonate ($LiFSO_3$ ), lithium bis(trifluoromethanesulfonyl)imide ($LiN(SO_2CF_3)_2$), lithium bis(fluorosulfonyl)imide ($LiN(SO_2F)_2$), lithium borofluoride ($LiBF_4$) and lithium bis(oxalate)borate ($LiBC_4 O_8$ ). While not wishing to be bound by any theory, when the electrolyte contains $LiPF_6$, for example, the $LiPF_6$ reacts with a slight amount of moisture (moisture contained in a member such as an electrode, a separator, or an electrolyte) to produce hydrogen fluoride (HF) or a fluorine-containing organic substance derived from HF. HF or the fluorine-containing organic substance derived from HF is dissolved in the electrolyte solution, and swollen and diffused to the amorphous portions in the polyolefin having a crosslinkable silane group, thus catalyzing the silane crosslinking reaction.

The nonaqueous electrolyte may include, in addition to the above, for example, an acid source such as an inorganic acid or an organic acid and an alkali source as a substance exerting a catalytic action on the silane crosslinking reaction. Examples of the alkali source include alkali metal hydroxides, alkaline earth metal hydroxides, alkali metal carbonates, alkali metal phosphates, ammonia, and amine compounds. Of these, alkali metal hydroxides or alkaline earth metal hydroxides are preferable, alkali metal hydroxides are more preferable, and sodium hydroxide is still more preferable, from the viewpoint of the safety and silane crosslinkability of the electricity storage device.

<Exterior Body>

A known exterior body can be used as the exterior body and, for example, a battery can or a laminate film exterior body may be used. It is possible to use, as the battery can, for example, a metal can made of steel, stainless steel, aluminum or a clad material. The laminate film exterior body can be used as the exterior body in a state where two sheets are stacked in a state where the hot melt resin side is directed inward, or two sheets are folded in a state where the hot melt resin side is directed inward, and then the end is sealed by heat sealing. When using the laminate film exterior body, a positive electrode lead body (or a lead tab connected to the positive electrode terminal and the positive electrode terminal) may be connected to the positive electrode current collector, and a negative electrode lead body (or a lead tab connected to the negative electrode terminal and the negative electrode terminal) may be connected to the negative electrode current collector. In this case, the laminate film exterior body may be sealed in a state where the end portions of the positive electrode lead body and the negative electrode lead body (or the lead tab connected to the positive electrode terminal and the negative electrode terminal) are drawn out to the outside of the exterior body. More specifically, it is possible to use, as the laminate film exterior body, for example, a laminate film having three-layer structure of hot melt resin/metal film/resin. The metal film is preferably an aluminum foil or a double-sided resin material, and preferably a polyolefin-based resin.

<Additive>

The additive may be at least one selected from the group consisting of dehydrating condensation catalysts, metal soaps such as calcium stearate or zinc stearate, ultraviolet absorbers, light stabilizers, antistatic agents, anti-fogging agents and dyes.

<<Electricity Storage Device Assembly Kit>>

The electricity storage device assembly kit of the present disclosure includes: (A) an exterior body housing electrodes and a laminated body or wound body of the separator for an electricity storage device according to the present disclosure; and (B) a container housing a nonaqueous electrolyte solution. The laminate body or a wound body includes at least one electricity storage element in which a positive electrode, a negative electrode and a separator for an electricity storage device are disposed therebetween. Typically, a plurality of positive electrodes and a plurality of negative electrodes are alternately stacked via the separator for an electricity storage device of the present disclosure to form a plurality of electricity storage elements. Details of the constituent members are desired to be referred to as aforementioned "Electricity Storage Device".

The separator for an electricity storage device can be assembled by taking out the nonaqueous electrolyte from the container housing the nonaqueous electrolyte and injecting the nonaqueous electrolyte into the exterior body. The aspect of the container for storing the nonaqueous electrolyte solution is not limited as long as the nonaqueous electrolyte solution can be stored until the separator for an electricity storage device is assembled. After assembly the separator for an electricity storage device, the container housing the nonaqueous electrolyte solution may be discarded or reused for the production of another kit.

When using the electricity storage device assembly kit, the separator in the element (A) and the nonaqueous electrolyte solution in the element (B) are brought into contact with each other, thereby bringing the electrolyte solution into contact with the laminate or the wound body in the exterior body and/or by continuing the charge-discharge cycle of the assembled electricity storage device, it is possible to form a crosslinked structure in the separator, thus forming an electricity storage device that achieves both safety and output.

While not wishing to be bound by any theory, it is possible that when the electrolyte or electrolyte solution contacts with the electrodes and/or charge-discharge of the electricity storage device is carried out, the substance responsible for catalytic action during the crosslinking reaction or substances having functional groups that form part of the crosslinked structure, being present in the electrolyte solution, on the exterior body inner walls or on the electrode surfaces, dissolve into the electrolyte solution and evenly swell and diffuse into the amorphous portions of the polyolefin, thereby homogeneously promoting crosslinking reaction of the separator-containing laminated body or wound body. The substance responsible for catalytic action during the crosslinking reaction may be in the form of an acid solution or membrane, and when the electrolyte includes lithium hexafluorophosphate ($LiPF_6$), it may be hydrofluoric acid (HF) or a fluorine-containing organic substance derived from hydrofluoric acid (HF). Substances having functional groups that form part of the crosslinked structure may include the compound with functional group A and/or B mentioned above, or the electrolyte solution itself, or various additives.

From the viewpoint of promoting the crosslinking reaction of the separator, the nonaqueous electrolyte solution housed in the element (2) may contain, as the electrolyte, a fluorine (F)-containing lithium salt such as $LiPF_6$ that generates HF, an electrolyte having an unshared electron pair, such as $LiN(SO_2CF_3)_2$ or $LiSO_3CF_3$, or $LiBF_4$ or $LiBC_4O_8$ (LiBOB).

From the viewpoint of promoting the crosslinking reaction of the separator, the electricity storage device assembly kit may include, as an accessory (or an element (C)), another container housing a catalyst for promoting the crosslinking reaction, for example, a mixture of an organometallic catalyst and water, an acid solution, or a base solution.

< <Method for Producing Electricity Storage Device>>

In the first embodiment, the method for producing an electricity storage device according to the present disclosure includes, for example, the following steps:

(i) a preparation step of preparing an exterior body housing a laminate body or a wound body of an electrode and the separator for an electricity storage device according to the present disclosure, and a nonaqueous electrolyte solution;
(ii) a liquid injection step of injecting the nonaqueous electrolyte solution into the exterior body;
(iii) a terminal connection step of optionally connecting a lead terminal to an electrode in the exterior body or an electrode exposed from the exterior body; and
(iv) a charge-discharge step of carrying out at least one cycle charge-discharge. The steps (i) to (iv) can be carried out by a known method in this technical field, except that the separator for an electricity storage device of the present disclosure is used. In the steps (i) to (iv), the electrode and the nonaqueous electrolyte described in the item of "Electricity Storage Device" can be used, and it is also possible to use the positive electrode, the negative electrode, the electrolyte solution, the exterior body and the charge-discharge device known in this technical field.

It is preferable that the separator and the nonaqueous electrolyte are brought into contact with each other by the step (ii) to start the silane crosslinking reaction of the silane-modified polyolefin. From the viewpoint of reliably advancing the silane crosslinking reaction of the separator, the steps (iii) and (iv) are preferably carried out. While not wishing to be bound by any theory, it is considered that a substance exerting a catalytic action on the silane crosslinking reaction is produced in the electrolyte solution or on the surface of the electrode by the charge-discharge cycle, and thus the silane crosslinking reaction proceeds more efficiently.

In the second embodiment, the method for producing an electricity storage device is a method using a separator containing a polyolefin having one or more types of functional groups, the method being capable of including the following step: a crosslinking step in which (1) the functional groups are allowed to undergo a condensation reaction with each other, (2) the functional groups are reacted with a chemical substance inside the electricity storage device, or (3) the functional groups are reacted with other types of functional groups to form a crosslinked structure. The crosslinking step can be carried out in the same manner as the reaction for formation of the crosslinked structure in the separator, described above. Since the crosslinking step can also be carried out utilizing compounds in the electricity storage device or the surrounding environment of the device, it is possible to employ mild conditions such as a temperature of 5°C to 90°C and/or ambient atmosphere, without requiring excessive conditions such as electron beams or high temperature of 100°C or higher.

By carrying out the crosslinking step during the production process for the electricity storage device, it is possible to eliminate the formation of a crosslinked structure either during or immediately after the process of forming the separator

membrane, which can alleviate or eliminate stress strain after the fabrication of the electricity storage device, and/or the separator can be imparted with a crosslinked structure without using relatively high energy such as photoirradiation or heating, thus allowing crosslinking unevenness, non-molten resin aggregate generation and environmental load to be reduced.

By carrying out (2) a reaction of functional groups with a chemical substance inside the electricity storage device or (3) a reaction of the functional groups of the polyolefin with other types of functional groups in the crosslinking step, a crosslinked structure is formed not only inside the separator but also between the separator and the electrodes or between the separator and the solid electrolyte interface (SEI), thus enabling an improvement in strength between a plurality of members of the electricity storage device.

In the method for producing an electricity storage device of the present disclosure, it is possible to use the electricity storage device assembly kit described above. In that case, the method for producing an electricity storage device of the present disclosure includes the following steps:

(i) a step of preparing the electricity storage device assembly kit described above;
(ii) a step of combining an element (A) and an element (B) of an electricity storage device assembly kit, and carrying out (1) a condensation reaction of functional groups of a polyolefin contained in a separator, (2) a reaction of the functional groups with a chemical substance inside the electricity storage device, or (3) a reaction of the functional groups with other types of functional groups;
(iii) a step of optionally connecting a lead terminal to an electrode of the element (A); and
(iv) a step of optionally carrying out at least one cycle of charge-discharge. The steps (i) to (iv) can be carried out by a method known in this technical field, except for using the separator for an electricity storage device according to this embodiment, and in the steps (i) to (iv), it is possible to use a positive electrode, a negative electrode, an electrolyte solution, an exterior body and a charge-discharge device known in this technical field.

From the viewpoint of reliably carrying out the crosslinking reaction of the separator during or after the step (ii), the steps (iii) and (iv) are preferably carried out. By the charge-discharge cycle, a substance having a functional group as a part of a substance or a crosslinked structure exerting a catalytic action on the crosslinking reaction may be produced on the inner surface of the exterior body or the surface of the electrode in the electrolyte solution, thus achieving a crosslinking reaction.

When the electricity storage device separator according to the present disclosure is housed in the electricity storage device, since the crosslinked structure is formed, it is possible to improve the safety of the electricity storage device by causing a crosslinking reaction after producing the device while conforming to the conventional producing process of the electricity storage device. Examples of the safety include reduction of the possibility of leading to thermal runaway due to local short circuit, improvement in safety in a nail penetration test, improvement in heat shrinkability and hot box testability, and improvement in high-temperature bar impact fracture testability.

The electricity storage device produced as mentioned above, in particular, LIB includes the separator according to the present embodiment, thus enabling an improvement in safety. Examples of the safety include reduction of the possibility of leading to thermal runaway due to local short circuit, improvement in safety in a nail penetration test, improvement in heat shrinkability and hot box testability, and improvement in high-temperature bar impact fracture testability.

[EXAMPLES]

<<Measurements and Evaluation Methods>>

Regarding the methods for evaluation of the separator described below, for the measurements of TOF-SIMS analysis and image processing, detection of a silane-modified polyolefin contained in the separator, weight-average molecular weight, viscosity-average molecular weight, melt mass flow rate, weight per unit area of a polyolefin substrate layer, thickness of a polyolefin substrate layer, puncture strength, puncture strength divided by weight per unit area, and porosity, a coating membrane (inorganic particle layer and thermoplastic polymer layer) was removed from each separator, and the separator was immersed in a nonaqueous electrolyte solution for one week, and then the separator was evaluated after washing with methylene chloride. For heat shrinkage factor at 150°C, heat shrinkage factor in an electrolyte solution at 150°C, thermal response index, membrane thickness, air permeability, dust fall-off properties, FUSE temperature and SHORT temperature, each separator was immersed in a nonaqueous electrolyte solution for one week, and then the separator was evaluated after cleaning with methylene chloride. For the electrode residual rate, the cycle test capacity retention of the battery, and the collapse test of the battery, the evaluation was carried out after fabrication of a single-layer laminate nonaqueous secondary battery using each separator.

(Method for Detecting Silane-Modified Polyolefin contained in Separator)

When the silane-modified polyolefin contained in the separator is in a crosslinked state, it is insoluble or has insufficient solubility in an organic solvent, and it is therefore difficult to directly measure the content of the silane-modified polyolefin from the separator. In that case, as a pretreatment for the sample, the siloxane bonds are decomposed into methoxysilanol using methyl orthoformate which does not undergo a secondary reaction, and then solution NMR measurement is carried out, thus enabling detection of the silane-modified polyolefin contained in the separator and preforming GPC measurement thereof. The pretreatment test can be carried out with reference to JP 3529854 B2 and JP 3529858 B2. Specifically, $^{1}H$ or $^{13}C$ NMR identification of the silane-modified polyolefin as a starting material to be used for the production of a separator may be utilized in the method for detecting a silane-modified polyolefin contained in the separator. The following is an example of $^{1}H$ and $^{13}C$ NMR measurement methods.

($^{1}H$-NMR Measurement)

The sample is dissolved in o-dichlorobenzene-d4 at 140°C to obtain a $^{1}H$-NMR spectrum at a proton resonance frequency of 600 MHz. The $^{1}H$ NMR measuring conditions are as follows.

Apparatus: AVANCE NEO 600 manufactured by Bruker Corporation
Sample tube diameter: 5 mmφ
Solvent: o-dichlorobenzene-d4
Measuring temperature: 130°C
Pulse angle: 30°
Pulse delay time: 1 sec
Number of scans: 1,000 times or more
Sample concentration: 1 wt/vol%

($^{13}C$ NMR Measurement)

The sample is dissolved in o-dichlorobenzene-d4 at 140°C and a $^{13}C$-NMR spectrum is obtained. The $^{13}C$-NMR measuring conditions are as follows.

Apparatus: AVANCE NEO 600 manufactured by Bruker Corporation
Sample tube diameter: 5 mmφ
Solvent: o-dichlorobenzene-d4
Measuring temperature: 130°C
Pulse angle: 30°
Pulse delay time: 5 sec
Number of scans: 10,000 times or more
Sample concentration: 10 wt/vol%

The $^{1}H$ and/or $^{13}C$-NMR measurement(s) allow(s) the amount of silane unit modification and the amount of polyolefin alkyl group modification in the silane-modified polyolefin to be confirmed for a polyolefin starting material, and allow(s) the content of the silane-modified polyolefin contained in the separator to be determined ($-CH_2$ -Si: $^{1}H$, 0.69 ppm, t; $^{13}C$, 6.11 ppm, s).

<Weight-Average Molecular Weight (Mw)>

Standard polystyrene was measured using Model ALC/GPC 150C (trademark) by Waters Co. under the following conditions, and a calibration curve was drawn. The chromatogram for each polymer was also measured under the same conditions, and the weight-average molecular weight of each polymer was calculated by the following method, based on the calibration curve.

Column: $GMH_6$ -HT (trademark) (2)+ $GMH_6$ -HTL (trademark) (2) manufactured by Tosoh Corporation
Mobile phase: o-dichlorobenzene
Detector: differential refractometer
Flow rate: 1.0 ml/min
Column temperature: 140°C
Sample concentration: 0.1 wt%

(Weight-Average Molecular Weight of Polyethylene (Mw))

Each molecular weight component in the obtained calibration curve was multiplied by 0.43 (polyethylene Q factor/polystyrene Q factor = 17.7/41.3) to obtain a polyethylene-equivalent molecular-weight distribution curve, and the weight-average molecular weight was calculated.

(Weight-Average Molecular Weight of Resin Composition (Mw))

The weight-average molecular weight was calculated in the same manner as for polyethylene, except that the Q factor value for the polyolefin with the largest mass fraction was used.

<Viscosity-Average Molecular Weight (Mv)>

The limiting viscosity [η] at 135°C in a decalin solvent was determined based on ASTM-D4020. Mv of a polyethylene was calculated by the following formula.

$$[\eta] = 6.77 \times 10^{-4} Mv^{0.67}$$

<Melt Mass Flow Rate (MFR) (g/10 min)>

Using a melt mass-flow rate measuring device manufactured by Toyo Seiki Seisaku-sho, Ltd. (Melt Indexer F-F01), the weight of the resin extruded for 10 minutes under conditions of 190°C and 2.16 kg pressure was determined as the MFR value.

<TOF-SIMS Analysis and Image Processing>

The separator for an electricity storage device was subjected to TOF-SIMS analysis. A nano-TOF (TRIFLTV) manufactured by ULVAC-PHI, INCORPORATED was used as a TOF-SIMS mass spectrometer. The analysis conditions are as follows, and calcium ions (equivalent to positive ions of m/z = 40) was detected.

[Image measurement conditions]

Primary ion: bismuth ($Bi_1^+$)
Acceleration voltage: 30 kV
Ion current: about 0.5 nA (as DC)

With bunching

Analysis area: 100 μm × 100 μm
Analysis time: 90 minutes
Detection ion: positive ion (m/z = 40)
Neutralization: electron gun + Ar monomer ion
Vacuum degree: about $5.0 \times 10^{-5}$ Pa

[Measurement conditions in depth direction]

Analysis conditions

Primary ion: bismuth ($Bi_1^+$)
Acceleration voltage: 30 kV
Ion current: about 1.2 nA (as DC)

With bunching

Analysis area: 100 μm × 100 μm
Analysis time: 5 frames/cycle
Detection ion: Positive ion (m/z = 40)
Neutralization: electron gun + Ar monomer ion
Vacuum degree: about 5.0 × $10^{-5}$ Pa

Sputtering conditions

Sputter ion: GCIB ($Ar_{2500}^{+}$)
Acceleration voltage: 20 kV
Ion current: about 5 nA
Sputtering area: 400 μm × 400 μm
Sputtering time: 30 seconds/cycle
Neutralization: electron gun + Ar monomer ion

The image data of the TOF-SIMS spectrum obtained as mentioned above were subjected to image processing in accordance with the following procedure.

(1) A filter having a beam shape (diameter of 2 μm and a pixel resolution of 0.39 μm) is fabricated. The filter value is calculated using the function fspecial of the Image Processing Toolbox of numerical calculation software MATLAB manufactured by Mathworks.
fspecial('gaussian', [13 13], 1.69865)
(2) The fabricated filter is applied to two-dimensional data.
(3) The average value and the standard deviation of the two-dimensional data after the application of the filter are calculated.
(4) Average value + standard deviation × 3 is binarized as a threshold value. In the case of the normal distribution, since 99.74% of the value falls within a range of the average value + the standard deviation × 3, it is intended to numerically extract a specific portion.
(5) Expansion contraction for 7 pixels is carried out to connect an extraction region in the vicinity.
(6) A region having a small area (50 pixels or less) is removed.
(7) A parameter of each of the remaining regions is calculated.

extraction area (pixel), simple center of gravity position ($x_0$, $y_0$)
maximum value in region, average value of region, and distance between the weighted centers of gravity positions ($x_m$, $y_m$)

(8) A distance between the weighted centers of gravity positions is calculated.

Using WeightedCentroid option of the function registrationprops of the Image Processing Toolbox of the numerical arithmetic software MATLAB manufactured by Mathworks, calculation was carried out.

regionprops(cc, I, 'WeightedCentroid')

Here, cc is a variable indicating the extracted region, and I is a variable storing the two-dimensional data after the application of the filter.

By the above processing, the island structure of the calcium ion was specified, and the number, the size and the distance between the weighted centers of gravity positions were calculated.

<Heat Shrinkage Factor at 150°C (%)>

A sample strip sampled at 100 mm in the TD and 100 mm in the MD from the separator for an electricity storage device was left to stand for one hour in an oven at 150°C. During this time, the sample strip was sandwiched between

two sheets so that the warm air did not directly contact with the sample strip. After removing the sample strip from the oven and cooling it, the area of the sample strip was measured, and the heat shrinkage factor at 150°C was calculated by the following formula.

$$\text{Heat shrinkage factor at 150°C (\%)} = (10{,}000\ (\text{mm}^2) - \text{area of sample strip after heating}\ (\text{mm}^2))/10{,}000\ (\text{mm}^2)\} \times 100$$

<Preparation of Nonaqueous Electrolyte Solution>

To a mixed solution of 5% by volume of acetonitrile, 62.5% by volume of ethyl methyl carbonate, 30% by volume of ethylene carbonate and 2.5% by volume of vinylene carbonate, 0.3 mol/L of lithium hexafluorophosphate ($LiPF_6$), 1 mol/L of lithium bis(fluorosulfonyl)imide ($LiN(SO_2F)_2$) and 20 ppm by weight of lithium fluorosulfonate ($LiFSO_3$) as electrolytes were added to prepare a nonaqueous electrolyte solution.

<Heat Shrinkage Factor at 150°C in Electrolyte Solution (%)>

A sample strip sampled at 100 mm in the TD and 100 mm in the MD from the separator for an electricity storage device was placed in an aluminum pack, and the nonaqueous electrolyte solution was injected until the sample strip was completely immersed, and then the sample strip was left to stand for one week. Further, the sample strip was left to stand for one hour in an oven at 150°C. After removing the sample strip from the oven and cooling it, the area of the sample strip was measured, and the heat shrinkage factor at 150°C was calculated by the following formula.

$$\text{Heat shrinkage factor at 150°C (\%)} = (10{,}000\ (\text{mm}^2) - \text{area of sample strip after heating}\ (\text{mm}^2))/10{,}000\ (\text{mm}^2)\} \times 100$$

<Thickness (μm)>

The membrane thickness of the separator for an electricity storage device was measured at room temperature of 23 ± 2°C and relative humidity of 60% by using a micro thickness gage KBM (trademark) manufactured by Toyo Seiki Seisaku-sho, Ltd. Specifically, the membrane thicknesses of five points were measured at substantially equal intervals over the entire width in the TD direction to obtain their average values. The thickness of the polyolefin substrate layer ("membrane thickness of substrate layer" in the table) was determined by measuring after removing the coating membrane (inorganic particle layer and thermoplastic polymer layer) from the separator for an electricity storage device. The thickness of the inorganic particle layer was calculated by removing the thermoplastic polymer layer from the separator for an electricity storage device, measuring the thickness (thickness of the polyolefin substrate layer and the inorganic coating layer), and further subtracting the thickness of the polyolefin substrate layer from the thickness of the polyolefin substrate layer and the inorganic coating layer. The thickness of the thermoplastic polymer layer was calculated by subtracting the thickness of the polyolefin substrate layer and the inorganic coating layer from the thickness of the separator for an electricity storage device.

<Air Permeability (sec/100 $cm^3$)>

In accordance with JIS P-8117 (2009), the air permeability per 100 $cm^3$ of the volume of a separator for an electricity storage device was measured by a Gurley type air permeability meter G-B2 (trademark) manufactured by Toyo Seiki Seisaku-sho, Ltd.

<Porosity (%)>

A 10 cm × 10 cm square sample was cut out from a separator for an electricity storage device, and the volume ($cm^3$) and weight (g) of the sample were determined and used together with the density (g/$cm^3$) by the following formula to obtain a porosity. The density value used for the mixed composition was the value determined by calculation from the densities of the starting materials used and their mixing ratio.

$$\text{Porosity (\%)} = (\text{volume - weight /density of the mixed composition})/\text{volume} \times 100$$

<Puncture Strength (gf) and Puncture Strength divided by Weight per Unit Area (gf/(g/$m^2$ ))>

A separator for an electricity storage device, in which a coating film was removed by a sample holder having a diameter of 11.3 mm of the opening, was fixed by using a handy compression tester "KES-G5 (trademark)" manufactured by KATO TECH CO., LTD. Next, a puncture test under an atmosphere at a temperature of 23°C and a humidity of 40% was carried out at a radius of curvature of the tip of the needle of 0.5 mm and a punching speed of 2 mm/sec with respect to the center of the fixed separator for an electricity storage device, thus obtaining a green puncture strength (gf) as a maximum punching load. The value determined by converting the obtained puncture strength (gf) into a weight per unit area (gf/(g/$m^2$)) (puncture strength divided by weight per unit area in the table) was also calculated.

<Weight per Unit Area (g/$m^2$ )>

A 10 cm × 10 cm square sample was cut off from a separator for an electricity storage device from which a thermoplastic polymer layer was removed, and the weight of a polyolefin substrate layer and an inorganic coating layer was measured using an electronic balance AEL-200 manufactured by Shimadzu Corporation. By multiplying the obtained weight by 100 times, the weight per unit area per 1 $m^2$ (g/$m^2$) of the polyolefin substrate layer and the inorganic coating layer was calculated. Next, a 10 cm × 10 cm square sample was cut off from a separator for an electricity storage device from which a coating layer (inorganic coating layer and thermoplastic polymer layer) was removed, and the weight was measured by using an electronic balance AEL-200 manufactured by Shimadzu Corporation. By multiplying the obtained weight by 100 times, the weight per unit area per 1 $m^2$ (g/$m^2$ ) of the polyolefin substrate layer (weight per unit area of substrate layer in the table) was calculated. The weight per unit area per 1 $m^2$ (g/$m^2$ ) of the inorganic coating layer (amount of the inorganic coating layer supported on the polyolefin substrate layer, g/$m^2$ ) was calculated by subtracting the weight per unit area per 1 $m^2$ (g/$m^2$ ) of the polyolefin substrate layer from the weight per unit area per 1 $m^2$ (g/$m^2$ ) of the polyolefin substrate layer and the inorganic coating layer.

<Dust Fall-Off Properties (%)>

A 10 cm × 10 cm square sample was cut off from a separator for an electricity storage device, and the weight (g) was weighed. After one side was affixed to a thick paper, a 900 g weight having a diameter of 5 cm covered with a cotton cloth was placed on the inorganic particle layer side, and these were rubbed at 50 rpm for 10 minutes. Thereafter, the weight (g) was accurately measured again, and the dust fall-off properties were measured by the following equation.

$$\text{Dust fall-off properties (\% by weight)} = \{(\text{weight (g) before rubbing - weight (g) after rubbing})/\text{ weight before rubbing}\} \times 100$$

<Cycle Test Capacity Retention of Battery in First Embodiment (%)>

(1) Fabrication of Positive Electrode

After mixing 90.4% by weight of a nickel, manganese and cobalt composite oxide ($LiNiMnCoO_2$) (NMC) (Ni:Mn:Co = 6:2:2 (element ratio), density: 3.50 g/$cm^3$) as the positive electrode active material, 1.6% by weight of a graphite powder (density: 2.26 g/$cm^3$, number-average particle size: 6.5 μm) and 3.8% by weight of an acetylene black powder (density: 1.95 g/$cm^3$, number-average particle size: 48 μm) as a conductive aid, and 4.2% by weight of PVDF (density: 1.75 g/$cm^3$) as a resin binder, the mixture was dispersed in NMP to prepare a slurry. This slurry was coated on one side of a 20 μm-thick aluminum foil sheet as the positive electrode collector using a die coater, and dried at 130°C for 3 minutes, followed by compression molding using a roll press to fabricate a positive electrode. The coating amount of the positive electrode active material was 109 g/$m^2$.

(2) Fabrication of Negative Electrode

87.6% by weight of a graphite powder A (density: 2.23 g/$cm^3$, number-average particle size: 12.7 μm) and 9.7% by weight of a graphite powder B (density: 2.27 g/$cm^3$, number-average particle size: 6.5 μm) as negative electrode active materials, and 1.4% by weight (in terms of solid content) of a carboxymethyl cellulose ammonium salt (aqueous

solution having 1.83% by weight in solid component concentration) and 1.7% by weight (in terms of solid content) of a diene rubber-based latex (aqueous solution having 40% by weight in solid component concentration) as resin binders were dispersed in purified water to prepare a slurry. This slurry was coated on one side of a 12 μm-thick copper foil sheet as the negative electrode collector using a die coater, and dried at 120°C for 3 minutes, followed by compression molding using a roll press to fabricate a negative electrode. The coating amount of the negative electrode active material was 52 g/$m^2$.

(3) Preparation of Nonaqueous Electrolyte Solution

To a mixed solution of 5% by volume of acetonitrile, 62.5% by volume of ethyl methyl carbonate, 30% by volume of ethylene carbonate and 2.5% by volume of vinylene carbonate, 0.3 mol/L of lithium hexafluorophosphate ($LiPF_6$), 1 mol/L of lithium bis(fluorosulfonyl)imide ($LiN(SO_2F)_2$), and 20 ppm by weight of lithium fluorosulfonate (LiFSOs) as electrolytes were added to prepare a nonaqueous electrolyte solution.

(4) Fabrication of Single-Layer Laminate Nonaqueous Secondary Battery

As mentioned above, the positive electrode and the negative electrode were stacked via a separator (a separator of the Examples or a separator of the Comparative Examples) so that the mixture containing surfaces of each electrode face each other to obtain a laminated electrode body. This laminated electrode body was housed in an aluminum laminate sheet exterior body of 100 mm × 60 mm, and vacuum drying was carried out at 80°C for 5 hours to remove moisture. The nonaqueous electrolyte solution was injected into the exterior body and the exterior body was sealed to fabricate a single-layer laminate (pouch) nonaqueous secondary battery. This single-layer laminate nonaqueous secondary battery had a design capacity value of 3 Ah and a rated voltage value of 4.2 V.

(5) Measurement of Cycle Test Capacity Retention

The single-layer laminate nonaqueous secondary battery obtained as mentioned above was subjected to initial charging and cycle characteristic evaluation according to the following procedure. The charge-discharge was carried out using a charge-discharge device ACD-M01A (trade name) manufactured by ASKA ELECTRONIC CO., LTD. and a program thermostatic bath IN804 (trade name) manufactured by Yamato Scientific Co., Ltd. The term 1C means a current value which is expected to discharge the battery in a fully charged state at a constant current and to end the discharge within one hour. Specifically, in the following procedure, 1C means a current value which is expected to be discharged from a full charge state of 4.2 V to 3.0 V at a constant current to end discharge within one hour.

Initial Charging

The ambient temperature of the battery was set at 25°C and charging was carried out at a constant current of 0.075 A corresponding to 0.025 C to reach 3.1 V, and then charging was carried out at a constant voltage of 3.1 V for 1.5 hours. Subsequently, after resting for 3 hours, the battery was charged at a constant current of 0.15 A corresponding to 0.05 C to reach 4.2 V, and then charging was carried out at a constant voltage of 4.2 V for 1.5 hours. Thereafter, the battery was discharged to 3.0 V at a constant current of 0.45 A corresponding to 0.15 C.

Cycle Test of Single-Layer Laminate Nonaqueous Secondary Battery

A cycle test was carried out for the battery subjected to initial charging-discharging. The cycle test was started 3 hours after setting the ambient temperature of the battery at 25°C. First, charging was carried out at a constant current of 3 A corresponding to 1 C to reach 4.2 V and then charging was carried out at a constant voltage of 4.2 V, namely, charging was carried out for 3 hours in total. Thereafter, the battery was discharged to 3.0 V at a constant current of 3 A. The process of charging and discharging one time each was defined as one cycle, and 100 cycles of charging and discharging were carried out. The discharge capacity of the 100th cycle, when the discharge capacity of the 1st cycle was defined as 100%, was determined as the capacity retention (%) after 100 cycles.

<FUSE Temperature, SHORT Temperature in First Embodiment (°C)>

A circular positive electrode, separator and negative electrode having diameters of 200 mm were cut out and stacked, and a nonaqueous electrolyte solution was added to the obtained laminated body and allowed to thoroughly permeate it. The laminated body was inserted between the center sections of a circular aluminum heater having a diameter of 600 mm, and the aluminum heater is pressed vertically with a hydraulic jack to 0.5 MPa. The laminated body

was heated with the aluminum heater at a temperature-elevating rate of 2°C/min while measuring the resistance (Ω) between the electrodes. Resistance between the electrodes increases with fusing of the separator, and the temperature when the resistance first exceeds 1,000 Ω was recorded as the FUSE temperature. Heating was continued, and the temperature when the resistance falls below 1,000 Ω was recorded as the SHORT temperature.

<Collapse Test of Battery>

The laminate cell after the low-temperature cycle test was set in a state where a 1 mm step is provided between the laminate cell and the sample stand, and both ends of the cell were gripped. Using a round bar made of SUS having a diameter of 15.8 mm, the cell was collapsed at a collapse speed of 0.2 mm/s and a force of 1.95 ton and the collapse test was carried out until the voltage reaches 4.1 V to 4.0 V, and then the time until the voltage reaches 4.1 V to 4.0 V was measured. This test was carried out for 100 cells, and the number of cells in which the time until the voltage reaches 4.1 V to 4.0 V was 5 seconds or more was compared.

<Electrode Residual Rate (%)>

After disassembling the fabricated single-layer laminate nonaqueous secondary battery, the separator and the electrode were peeled off and the negative electrode was photographed by a digital camera, and then the ratio (%) of the negative electrode mixture remaining on the copper foil was calculated.

<Thermal Response Index>

A sample strip sampled at 100 mm in the TD and 100 mm in the MD from the separator for an electricity storage device was left to stand for a predetermined time in an oven at 150°C. During this time, the sample strip was sandwiched between a plurality of sheets so that the warm air did not directly contact with the sample strip. A heat label "10R-104" manufactured by I.P.LABORATORIES, INC. was also sandwiched between a plurality of sheets so that the arrival temperature of the separator can be known. By adjusting the number of sheets to be sandwiched, the heating speed of the separator can be adjusted. The number of sheets to be sandwiched was adjusted so that the heating rate of the separator became 2°C/min. After removing the sample strip from the oven and cooling it, the area of the sample strip was measured, and the thermal response index at the indicated temperature of the heat label was calculated by the following formula.

$$\text{Thermal Response Index (\%)} = \{(10{,}000\ (\text{mm}^2) - \text{area of sample strip after heating } (\text{mm}^2))/10{,}000\ (\text{mm}^2)\} \times 100$$

The test was repeated while changing the predetermined time from 5 seconds to 3 minutes in increments of 5 seconds, and the thermal response index at each temperature was calculated.

<Quantification of Resin Aggregates in Separator>

The resin aggregates in the separator were defined in a region with an area of 100 μm × 100 μm and with no light permeation, when separators obtained by the membrane formation steps in the Examples and Comparative Examples mentioned below were observed using a transmitted light microscope. The number of resin aggregates per 1,000 $m^2$ area of the separator were counted during observation using a transmitted light microscope.

<Cycle Test, Nail Penetration Test, Hot Box Test and High-Temperature Bar Impact Fracture Test in Second Embodiment>

(Fabrication of Battery used in Safety Test)

a. Fabrication of Positive Electrode

A slurry was prepared by dispersing 92.2% by weight of a lithium nickel manganese cobalt composite oxide $LiNi_{0.8}Mn_{0.1}Co_{0.1}O_2$ as a positive electrode active material, 2.3% by weight each of flaky graphite and acetylene black as conductive materials, and 3.2% by weight of polyvinylidene fluoride (PVDF) as a binder in N-methylpyrrolidone (NMP). The slurry was coated on one side of a 20 μm-thick aluminum foil as the positive electrode collector using a die coater,

and then dried at 130°C for 3 minutes, followed by compression molding using a roll press. During this time, the coating amount of the active material on the positive electrode was adjusted to 250 $g/m^2$ and the active material bulk density was adjusted to 3.00 $g/cm^3$ .

b. Fabrication of Negative Electrode

A slurry was prepared by dispersing 96.9% by weight of artificial graphite as a negative electrode active material, 1.4% by weight of a carboxymethyl cellulose ammonium salt as a binder and 1.7% by weight of a styrene-butadiene copolymer latex in purified water. The slurry was coated on one side of a 12 μm-thick copper foil as the negative electrode collector using a die coater, and dried at 120°C for 3 minutes, followed by compression molding using a roll press. During this time, the coating amount of the active material on the negative electrode was adjusted to 106 $g/m^2$ and the active material bulk density was adjusted to 1.35 $g/cm^3$ .

c. Preparation of Nonaqueous Electrolyte Solution

$LiPF_6$ as a solute was dissolved in a mixed solvent of ethylene carbonate:ethylmethyl carbonate = 1:2 (volume ratio) so as to adjust the concentration to 1.0 mol/L, thus preparing a nonaqueous electrolyte solution.

d. Battery Assembly

The separator was cut out to a circle having a diameter of 18 mm, and the positive electrode and negative electrode was cut out to circles having diameters of 16 mm, and the positive electrode, separator and negative electrode were stacked in this order so that the active material sides of the positive electrode and negative electrode face each other, followed by housing in a covered stainless steel metal container. The container and cover were insulated, with the container in contact with the negative electrode copper foil and the cover in contact with the positive electrode aluminum foil. The nonaqueous electrolyte solution obtained in the above c. was injected into this container, followed by sealing. After being left to stand at room temperature for one day, initial charge of the fabricated battery was carried out for 6 hours in total by a method of charging to a cell voltage of 4.2 V at a current value of 3 mA (0.5 C) in an atmosphere of 25°C and, after reaching that voltage, beginning to draw out a current of 3 mA while maintaining 4.2 V. The battery was then discharged to a cell voltage of 3.0 V at a current value of 3 mA (0.5 C).

(Evaluation of Cycle Characteristics)

Charge-discharge of the obtained battery was carried out for 1,000 cycles in an atmosphere at 60°C. Charging was carried out for 3 hours in a total by a method of charging to a cell voltage of 4.2 V at a current value of 6.0 mA (1.0 C) and, after reaching that voltage, beginning to draw out a current of 6.0 mA while maintaining 4.2 V. The battery was then discharged to a cell voltage of 3.0 V at a current value of 6.0 mA (1.0 C). The capacity retention was calculated from the discharge capacity of the 1,000th cycle and the discharge capacity of the 1st cycle. When the capacity retention is high, it was evaluated to have satisfactory cycle characteristics.

(Nail Penetration Test)

After 1,000 cycles, a test in which a battery charged to 4.2 V is hit with an iron nail at a speed of 20 mm/sec and punctured to cause internal short circuiting was carried out. This test is capable of measuring time-dependent change behavior of voltage reduction of the battery due to internal short circuiting and battery surface temperature increase behavior due to internal short circuiting to elucidate these phenomena during internal short circuiting. Inadequate shutdown function of the separator during internal short circuiting or membrane rupture at low temperature can also result in abrupt heat release of the battery, which may lead to ignition of the electrolyte solution and fuming and/or explosion of the battery.

As mentioned above, pass/fail of the battery subjected to the nail penetration test was determined. This nail penetration test was carried out on 100 batteries for the same separator, and the number of batteries, which did not cause ignition, fuming and explosion, was calculated as pass rate (%).

(Hot Box Test)

The battery obtained by aforementioned "d. Battery Assembly" was stored in a hot box set at high temperature of 150°C for one hour, and the state of the battery was observed during storage and after storage.

When the heat shrinkage of the polyolefin-based separator progresses due to high-temperature storage, internal

short circuit occurs in the positive electrode and the negative electrode, which are both electrodes of the battery, and ignition or explosion may be observed. Batteries in which such ignition or explosion was observed were rated as the failed products. Batteries in which ignition or explosion was not observed were rated as the accepted products.

The hot box test was carried out on 100 batteries for the same separator, and the pass rate (%) was calculated.

(High-Temperature Bar Impact Fracture Test)

FIG. 12 is a schematic diagram of a high-temperature bar impact fracture test (impact test).

In the impact test, a round bar was placed on a sample disposed on a test table such that the sample and the round bar (φ = 15.8 mm) are substantially orthogonal to each other, and an 18.2 kg weight was dropped onto the upper surface of the round bar from the position of the height of 61 cm from the round bar, thereby observing an influence of the impact on the sample.

Referring to FIG. 12, the procedure of the impact test in the Examples and Comparative Examples will be described below.

The cylindrical battery selected for evaluation, assembled as in aforementioned "d. Battery Assembly" was subjected to constant current and constant voltage (CCCV) charged for 3 hours under the conditions of a current value of 3,000 mA (1.0 C) and a termination battery voltage of 4.2 V.

Next, in an environment of 150°C, the cylindrical battery was placed horizontally on a flat surface and a stainless steel round bar having a diameter of 15.8 mm was placed so as to cross the center of the battery. The round bar was disposed such that its major axis is parallel to the MD of the separator. The 18.2 kg weight was dropped from the height of 61 cm so that impact is applied at a right angle to the longitudinal axis direction of the battery from the round bar disposed at the center of the battery. After collision, the state of the battery was observed, and as necessary, the surface temperature of the battery was measured. Batteries in which ignition or explosion was observed were rated as "Fail", while batteries in which ignition or explosion was not observed were rated as "Pass".

This high-temperature bar impact fracture test was carried out on 100 batteries for the same separator, and the pass rate (%) was calculated.

<Fuse/Meltdown (F/MD) Characteristics in Second Embodiment>

A circular positive electrode, separator and negative electrode each having a diameter of 200 mm were cut out and stacked, and a nonaqueous electrolyte solution was added to the obtained laminated body and allowed to thoroughly permeate it. The laminated body was inserted between the center sections of a circular aluminum heater having a diameter of 600 mm, and the aluminum heater is pressed vertically with a hydraulic jack to 0.5 MPa. The laminated body was heated with the aluminum heater at a temperature-elevating rate of 2°C/min while measuring the resistance (Ω) between the electrodes. Resistance between the electrodes increases with fusing of the separator, and the temperature when the resistance first exceeds 1,000 Ω was recorded as the fuse temperature (shutdown temperature). Heating was continued, and the temperature when the resistance falls below 1,000 Ω was recorded as the meltdown temperature (membrane rupture temperature). An electric wire for resistance measurement was bonded to the back of the aluminum foil as the positive electrode fabricated by the item "a. Fabrication of Positive Electrode" of aforementioned "Cycle Test in Second Embodiment" using a conductive silver paste. The electric wire for resistance measurement was also bonded to the back of the copper foil as the negative electrode fabricated by the item "b. Fabrication of Negative Electrode" of aforementioned "Cycle Test in Second Embodiment" using a conductive silver paste. The electrolyte-containing electrolyte solution prepared by the item "c. Fabrication of Electrolyte Solution" of aforementioned "Cycle Test in Second Embodiment" was also used in an F/MD characteristic test.

I. Examples and Comparative Examples in First Embodiment

<<Production of Separator for Electricity Storage Device>>

Production of silane graft-modified polyolefin

A polyethylene having a viscosity-average molecular weight (Mv) of 120,000 was used as a polyethylene starting material of a silane-modified polyethylene (resin a). While melt kneading the polyethylene starting material with an extruder, an organic peroxide (di-t-butyl peroxide) was added to generate radicals in the polymer chain of α-olefin. Thereafter, trimethoxyalkoxide-substituted vinylsilane was injected into the melt kneaded mixture to cause an addition reaction. By the addition reaction, alkoxysilyl groups were introduced into the α-olefin polymer to form a silane-graft structure. A suitable amount of an antioxidant (pentaerythritoltetrakis[3-(3,5-di-t-butyl-4-hydroxyphenyl)propionate]) was simultaneously added to adjust the radical concentration in the system, thus suppressing a chain-style chain reaction

(gelation) in the α-olefin. The obtained silane-grafted polyolefin molten resin was cooled in water and pelletized, and after heat-drying at 80°C for 2 days, the moisture and unreacted trimethoxyalkoxide-substituted vinylsilane were removed. The residual concentration of the unreacted trimethoxyalkoxide-substituted vinylsilane in the pellets was about 3,000 ppm or less.

<Fabrication of Substrate Layer (Layer A)>

As the resin material of layer A, 30% by weight of the previously obtained silane-modified polyethylene (resin a), 30% by weight of an ultra-high molecular weight polyethylene (resin b) as a homopolymer having a viscosity-average molecular weight of 4,500,000, and 40% by weight of an ultra-high molecular weight polyethylene (resin c) as a homopolymer having a viscosity-average molecular weight of 700,000 were used. Further, 1,000 ppm by weight of pentaerythrityl-tetrakis-[3-(3,5-di-t-butyl-4-hydroxyphenyl)propionate] based on the total weight of the resin material and 3,000 ppm by weight of calcium stearate based on the weight of the ultra-high molecular weight polyethylene (resin b) were added as antioxidants, followed by dry blending with a tumbler blender to obtain a starting material mixture of layer A.

The obtained starting material mixture of layer A was supplied to each different twin-screw extruder through a feeder in a nitrogen atmosphere, and liquid paraffin (kinematic viscosity at 37.78°C: $7.59 \times 10^{-5}$ $m^2/s$) was injected into each extruder cylinder by a plunger pump. The starting material mixture melt-kneaded with liquid paraffin in an extruder and adjusted with a feeder and pump so that the quantity ratio of liquid paraffin in the extruded polyolefin composition was 70% by weight based on the total weight of the melt kneaded mixture to be extruded. The melt kneading conditions were as follows: a preset temperature of 230°C, a screw rotational speed of 240 rpm and a discharge throughput of 18 kg/h. The melt kneaded mixture was then extrusion cast through a T-die on a cooling roll controlled to a surface temperature of 25°C to obtain a gel sheet (sheet-shaped molded body) having a raw membrane thickness of 1,370 μm.

The gel sheet was then simultaneously fed into a biaxial tenter stretching machine for biaxial stretching to obtain a stretched sheet. The stretching conditions were as follows: an MD factor of 7.0, a TD factor of 6.4 (i.e., a factor of 7 × 6.3), and a biaxial stretching temperature of 122°C. The stretched gel sheet was subsequently fed into a dichloromethane tank and thoroughly immersed in dichloromethane for extraction removal of the liquid paraffin, and then dichloromethane was dried off to obtain a porous sheet. The porous sheet was fed to a TD tenter and heat setting (HS) was carried out at a heat setting temperature of 133°C and a stretch ratio of 1.9, and then relaxation was carried out to a factor of 1.75 in the TD direction to obtain a microporous membrane substrate. The edges of the microporous membrane substrate were cut and rolled into a mother roll having a width of 1,100 mm and a length of 5,000 m. The obtained microporous membrane substrate had a membrane thickness of 10 μm.

<Formation of Inorganic Particle Layer (Layer B)>

The acrylic latex to be used as the resin binder of the inorganic particle layer was produced by the following method. In a reactor equipped with a stirrer, a reflux condenser, a drip tank and a thermometer, 70.4 parts by weight of ion-exchanged water, 0.5 part by weight of "AQUALON KH1025" (registered trademark, aqueous 25% solution manufactured by Dai-ichi Kogyo Seiyaku Co., Ltd.) as an emulsifier, and 0.5 part by weight of "ADEKA REASOAP SR1025" (registered trademark, aqueous 25% solution manufactured by Adeka Corporation) were charged. The temperature inside the reactor was then raised to 80°C, and 7.5 parts by weight of an aqueous 2% solution of ammonium persulfate was added while keeping the temperature at 80°C, to obtain an initial mixture. Five minutes after completion of the addition of the aqueous ammonium persulfate solution, the emulsified liquid was added dropwise from the drip tank into the reactor over a period of 150 minutes. The emulsified liquid was prepared by forming a mixture of 70 parts by weight of butyl acrylate, 29 parts by weight of methyl methacrylate, 1 part by weight of methacrylic acid, 3 parts by weight of "AQUALON KH1025" (registered trademark, aqueous 25% solution manufactured by Dai-ichi Kogyo Seiyaku Co., Ltd.) and 3 parts by weight of "ADEKA REASOAP SR1025" (registered trademark, aqueous 25% solution manufactured by Adeka Corporation) as emulsifiers, 7.5 parts by weight of an aqueous 2% solution of ammonium persulfate, and 52 parts by weight of ion-exchanged water, and mixing the mixture with a homomixer for 5 minutes. After completion of the dropwise addition of the emulsified liquid, the temperature inside the reactor was kept at 80°C for 90 minutes, followed by cooling to room temperature. The obtained emulsion was adjusted to a pH of 8.0 with an aqueous 25% ammonium hydroxide solution, and then a small amount of water was added to obtain an acrylic latex with a solid content of 40%. The obtained acrylic latex had a number-average particle size of 145 nm and a glass transition temperature of -23°C

A dispersion was prepared by uniformly dispersing 95 parts by weight of aluminum hydroxide oxide (boehmite, mean particle size: 1.4 μm) as inorganic particles and 0.4 part by weight (in terms of solid content) of an aqueous ammonium polycarboxylate solution (SN dispersant 5468 manufactured by SAN NOPCO LIMITED, solid component concentration: 40%) as an ionic dispersing agent, in 100 parts by weight of water. The obtained dispersion was shredded with a bead mill (cell volume: 200 cc, zirconia bead diameter: 0.1 mm, filling volume: 80%) and the particle size distribution of the inorganic particles was adjusted to D50 = 1.0 μm, to prepare an inorganic particle-containing slurry. To the

dispersion with adjusted particle size distribution, 2.0 parts by weight (in terms of solid content) of the acrylic latex produced above as a resin binder was added to obtain an inorganic particle-containing slurry. The substrate was then continuously wound out from a mother roll of the microporous substrate and both surfaces of the substrate was coated with the inorganic particle-containing slurry using a gravure reverse coater, followed by drying with a dryer at 60°C to remove water, thus obtaining a substrate having an inorganic particle layer on both surfaces. The substrate was wound up to obtain a separator mother roll of the substrate having an inorganic particle layer. The amount of aluminum hydroxide oxide contained in the inorganic particle layer was 95% by weight, and the thickness of the inorganic particle layer was 5 μm in total of both surfaces (one side: about 2.5 μm).

<Formation of Thermoplastic Polymer Layer (Layer C)>

The coating solution of the acrylic resin was prepared by the following method. In a reactor equipped with a stirrer, a reflux condenser, a drip tank and a thermometer, 70.4 parts by weight of ion-exchanged water and 0.5 part by weight of "AQUALON KH1025" (registered trademark, aqueous 25% solution manufactured by Dai-ichi Kogyo Seiyaku Co., Ltd.) and 0.5 part by weight of "ADEKA REASOAP SR1025" (registered trademark, aqueous 25% solution manufactured by Adeka Corporation) were charged. The temperature inside the reactor was then raised to 80°C, and 7.5 parts by weight of ammonium persulfate (aqueous 2% solution) was added while keeping the temperature at 80°C. Five minutes after addition of the aqueous ammonium persulfate solution, the emulsified liquid was prepared by forming a mixture of 15.9 parts by weight of methyl methacrylate, 74.5 parts by weight of n-butyl acrylate, 2 parts by weight of 2-ethylhexyl acrylate, 0.1 part by weight of methacrylic acid, 0.1 part by weight of acrylic acid, 2 parts by weight of 2-hydroxyethyl methacrylate, 5 parts by weight of acrylamide, 0.4 parts by weight of glycidyl methacrylate, 0.4 part by weight of trimethylolpropane triacrylate (A-TMPT, manufactured by SHIN-NAKAMURA CHEMICAL CO., LTD.), 3 parts by weight of "AQUALON KH1025" (registered trademark, aqueous 25% solution manufactured by Dai-ichi Kogyo Seiyaku Co., Ltd.), 3 parts by weight of "ADEKA REASOAP SR1025" (registered trademark, aqueous 25% solution manufactured by Adeka Corporation), 0.05 part by weight of sodium p-styrenesulfonate, 7.5 parts by weight of ammonium persulfate (aqueous 2% solution), 0.3 part by weight of γ-methacryloxypropyltrimethoxysilane, and 52 parts by weight of ion-exchanged water, and mixing the mixture with a homomixer for 5 minutes to prepare an emulsified liquid. The obtained emulsified liquid was added dropwise from the drip tank into the reactor over a period of 150 minutes. After completion of the dropwise addition of the emulsified liquid, the temperature inside the reactor was kept at 80°C for 90 minutes, followed by cooling to room temperature. The obtained emulsion was adjusted to a pH of 9.0 with an ammonium hydroxide solution (aqueous 25% solution) to obtain an acrylic resin (acrylic copolymer latex) with the concentration of 40%. This acrylic resin was diluted with ion-exchanged water so as to adjust to the solid content of 5% by weight, to prepare a coating solution.

A coating solution of polyvinylidene fluoride-hexafluoropropylene (PVDF-HFP) was prepared as follows. A coating solution was prepared by diluting a PVDF-HFP copolymer emulsion manufactured by Arkema Inc. (Kynar Flex 2501-20, Tg: -40°C) with ion-exchanged water so as to adjust to the solid content of 5% by weight.

A coating solution of the acrylic resin or PVDF-HFP prepared above was coated on both surfaces of a mother roll of a substrate having an inorganic particle layer using a gravure coater to form a thermoplastic polymer layer having the thickness and the coverage area ratio shown in Tables 8 to 14, which was slit as necessary to obtain a separator for an electricity storage device.

<<Examples 1 to 68>>

Separators for an electricity storage device were produced by the above method, except that the stacking system, material, membrane thickness, etc. of layers A to C were changed as shown in Tables 8 to 14. The evaluation results are shown in Tables 8 to 14.

In Example 66, a positive electrode containing a $LiCoO_2$ layer as a positive electrode material (LCO positive electrode) was used in place of the positive electrode fabricated in aforementioned "a. Fabrication of Positive Electrode". In Example 67, when the inorganic particle layer is formed in aforementioned "Formation of Inorganic Particle Layer (Layer B)", "EPOCROS K-2010E" (registered trademark, NIPPON SHOKUBAI CO., LTD., glass transition temperature: -50°C) was used as the resin binder in place of the acrylic latex. In Example 68, when the inorganic particle layer is formed in aforementioned "Formation of Inorganic Particle Layer (Layer B)", "JE-1056" (registered trademark, Seiko PMC Corporation, glass transition temperature: 82°C) was used as the resin binder in place of the acrylic latex.

<<Comparative Examples 1 to 6>>

Separators for an electricity storage device were produced by the above method, except that the stacking system, material, membrane thickness, etc. of layers A to C were changed as shown in Table 15. The evaluation results

are shown in Table 15.

In Comparative Example 4, the obtained polyolefin microporous membrane was irradiated with 120 kGy of electron beams using an EB irradiation apparatus, EYE Compact EB (trademark) manufactured by IWASAKI ELECTRIC CO., LTD. The obtained electron beam crosslinked microporous membranes and batteries were subjected to various evaluations according to the above evaluation methods.

In Comparative Examples 5 and 6, in the fabrication of polyolefin microporous membranes, a catalyst for forming the tin-based siloxane bond was added to the material to be extruded during the extrusion step, and moisture crosslinking after separator molding and crosslinking in the liquid paraffin extraction step were carried out.

[Table 8]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Layer A | Resin a: Silane-modified PE | % | 30 | 69.9 | 69.9 | 69.9 | 69.9 | 69.9 | 69.9 | 69.9 | 69.9 | 59.9 |
| | Resin b: 2,000,000 or more | % | 30 | 24.2 | 23.6 | 23.0 | 12.9 | 7.1 | 6.5 | 5.9 | 1.8 | 17.2 |
| | Resin c: less than 2,000,000 | % | 40 | 5.9 | 6.5 | 7.1 | 17.2 | 23.0 | 23.6 | 24.2 | 28.3 | 22.9 |
| | Weight per unit area of substrate layer | $g/m^2$ | 5.22 | 5.22 | 5.17 | 5.27 | 5.17 | 5.22 | 5.22 | 5.27 | 5.17 | 5.17 |
| | Membrane thickness of substrate layer | μm | 10.0 | 10.0 | 9.9 | 10.1 | 9.9 | 10.0 | 10.0 | 10.1 | 9.9 | 9.9 |
| | Porosity | % | 45 | 45 | 45 | 45 | 45 | 45 | 45 | 45 | 45 | 45 |
| | Puncture strength | gf | 444 | 313 | 315 | 327 | 336 | 324 | 313 | 321 | 269 | 470 |
| | Puncture strength divided by weight per unit area | $gf \cdot m^2/g$ | 85 | 60 | 61 | 62 | 65 | 62 | 60 | 61 | 52 | 91 |
| Layer B | Coating surface of inorganic layer | | Both sides | Both sides | Both sides | Both sides | Both sides | Both sides | Both sides | Both sides | Both sides | Both sides |
| | Type of inorganic particles | - | Boehmite | Boehmite | Boehmite | Boehmite | Boehmite | Boehmite | Boehmite | Boehmite | Boehmite | Boehmite |
| | Content of inorganic particles | % | 95 | 95 | 95 | 95 | 95 | 95 | 95 | 95 | 95 | 95 |
| | Glass transition temperature of binder | °C | -23 | -23 | -23 | -23 | -23 | -23 | -23 | -23 | -23 | -23 |
| | Weight per unit area of inorganic coating layer | $g/m^2$ | 6.70 | 6.70 | 6.70 | 6.70 | 6.71 | 6.72 | 6.70 | 6.68 | 6.70 | 6.71 |
| | Membrane thickness of inorganic coating layer | μm | 5 | 5 | 5 | 5 | 5 | 5 | 5 | 5 | 5 | 5 |
| Layer C | Type of thermoplastic polymer | | Acrylic resin | Acrylic resin | Acrylic resin | Acrylic resin | Acrylic resin | Acrylic resin | Acrylic resin | Acrylic resin | Acrylic resin | Acrylic resin |
| | Surface coverage ratio | % | 30 | 30 | 30 | 30 | 30 | 30 | 30 | 30 | 30 | 30 |
| | Membrane thickness of thermoplastic polymer layer | μm | 0.5 | 0.5 | 0.5 | 0.5 | 0.5 | 0.5 | 0.5 | 0.5 | 0.5 | 0.5 |

(continued)

| | | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|---|
| Evaluation of physical properties | TOF-SIMS island structure | Number | | Number | 7 | 63 | 37 | 26 | 11 | 5 | 5 | 4 | 4 | 11 |
| | | Size | Min. | $\mu m^2$ | 16 | 50 | 54 | 60 | 45 | 45 | 50 | 30 | 20 | 25 |
| | | | Max. | $\mu m^2$ | 93 | 244 | 243 | 243 | 242 | 241 | 243 | 244 | 243 | 234 |
| | | Weighted centers of gravity positions | Min. | $\mu m$ | 9 | 12 | 14 | 15 | 15 | 35 | 20 | 35 | 45 | 15 |
| | | | Max. | $\mu m$ | 108 | 27 | 37 | 46 | 80 | 105 | 112 | 120 | 134 | 80 |
| | Thermal response index | Rate | | - | 10 | 49.5 | 48 | 48.7 | 49 | 45.7 | 47.8 | 47 | 47.6 | 4.4 |
| | | To | | - | 130 | 128 | 128 | 128 | 128 | 128 | 128 | 128 | 128 | 130 |
| | | Max | | - | 1.9 | 0.6 | 0.4 | 0.5 | 0.5 | 0.5 | 0.4 | 0.4 | 0.1 | 3.9 |
| | Heat shrinkage factor at 150°C in electrolyte solution | | | % | 2.5 | 1.0 | 1.0 | 0.9 | 1.1 | 1.3 | 1.1 | 1.0 | 9.8 | 4.5 |
| | Heat shrinkage factor at 150°C | | | % | 2.0 | 0.3 | 0.3 | 0.4 | 0.4 | 0.4 | 0.3 | 0.3 | 0.2 | 4.0 |
| | Membrane thickness | | | $\mu m$ | 15.5 | 15.5 | 15.4 | 15.6 | 15.4 | 15.5 | 15.5 | 15.6 | 15.4 | 15.4 |
| | Air permeability | | | sec./100 cc | 95 | 299 | 251 | 249 | 199 | 249 | 255 | 289 | 397 | 93 |
| | Formula (2) common logarithm | | | log(gf. $m^4/g^2$) | 1.10 | 0.95 | 0.96 | 0.97 | 0.99 | 0.97 | 0.95 | 0.96 | 0.89 | 1.13 |
| | Dust fall-off properties | | | % | 0.5 | 0.6 | 0.7 | 0.7 | 0.8 | 0.8 | 0.5 | 0.8 | 0.7 | 0.7 |
| | FUSE temperature | | | °C | 143 | 141 | 141 | 141 | 141 | 141 | 141 | 141 | 141 | 143 |
| | SHORT temperature | | | °C | ≥200 | ≥200 | ≥200 | ≥200 | ≥200 | ≥200 | ≥200 | ≥200 | ≥200 | ≥200 |
| | Electrode residual rate | % | <5 | <5 | <5 | <5 | <5 | <5 | <5 | <5 | <5 | <5 | | |

(continued)

| | | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|---|
| Battery evaluation | Cycle test capacity retention | % | 87 | 50 | 55 | 65 | 67 | 65 | 56 | 50 | 45 | 45 | | |
| | Evaluation of collapse test | % | 60 | 45 | 48 | 51 | 51 | 51 | 48 | 45 | 30 | 54 | | |

[Table 9]

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Layer A | Resin a: Silane-modified PE | % | 49.9 | 3.1 | 5.9 | 8.1 | 3.1 | 3.1 | 3.4 | 3.1 | 3.1 | 6.7 |
| | Resin b: 2,000,000 or more | % | 21.5 | 84.7 | 82.3 | 80.4 | 84.7 | 84.5 | 6.7 | 9.5 | 10.4 | 5.3 |
| | Resin c: less than 2,000,000 | % | 28.6 | 12.2 | 11.8 | 11.5 | 12.2 | 12.4 | 89.9 | 87.4 | 86.5 | 88 |
| | Weight per unit area of substrate layer | $g/m^2$ | 5.22 | 5.22 | 5.17 | 5.22 | 5.27 | 5.27 | 5.22 | 5.22 | 5.17 | 5.22 |
| | Membrane thickness of substrate layer | μm | 10.0 | 10.0 | 9.9 | 10.0 | 10.1 | 10.1 | 10.0 | 10.0 | 9.9 | 10.0 |
| | Porosity | % | 45 | 45 | 45 | 45 | 45 | 45 | 45 | 45 | 45 | 45 |
| | Puncture strength | gf | 465 | 522 | 491 | 485 | 501 | 495 | 397 | 397 | 388 | 407 |
| | Puncture strength divided by weight per unit area | $gf{\cdot}m^2/g$ | 89 | 100 | 95 | 93 | 95 | 94 | 76 | 76 | 75 | 78 |
| Layer B | Coating surface of inorganic layer | - | Both sides | Both sides | Both sides | Both sides | Both sides | Both sides | Both sides | Both sides | Both sides | Both sides |
| | Type of inorganic particles | < | Boehmite | Boehmite | Boehmite | Boehmite | Boehmite | Boehmite | Boehmite | Boehmite | Boehmite | Boehmite |
| | Content of inorganic particles | % | 95 | 95 | 95 | 95 | 95 | 95 | 95 | 95 | 95 | 95 |
| | Glass transition temperature of binder | °C | -23 | -23 | -23 | -23 | -23 | -23 | -23 | -23 | -23 | -23 |
| | Weight per unit area of inorganic coating layer | $g/m^2$ | 6.72 | 6.72 | 6.69 | 6.72 | 6.71 | 6.69 | 6.71 | 6.68 | 6.69 | 6.72 |
| | Membrane thickness of inorganic coating layer | μm | 5 | 5 | 5 | 5 | 5 | 5 | 5 | 5 | 5 | 5 |
| Layer C | Type of thermoplastic polymer | - | Acrylic resin | Acrylic resin | Acrylic resin | Acrylic resin | Acrylic resin | Acrylic resin | Acrylic resin | Acrylic resin | Acrylic resin | Acrylic resin |
| | Surface coverage ratio | % | 30 | 30 | 30 | 30 | 30 | 30 | 30 | 30 | 30 | 30 |
| | Membrane thickness of thermoplastic polymer laver | μm | 0.5 | 0.5 | 0.5 | 0.5 | 0.5 | 0.5 | 0.5 | 0.5 | 0.5 | 0.5 |

(continued)

| | | | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|---|
| Evaluation of physical properties | TOF-SIMS island structure | Number | | Number | 12 | 6 | 8 | 9 | 9 | 7 | 4 | 4 | 4 | 4 |
| | | Size | Min. | $\mu m^2$ | 40 | 9.5 | 10.5 | 10.5 | 9.5 | 9.5 | 9.5 | 9.2 | 9 | 10.5 |
| | | | Max. | $\mu m^2$ | 213 | 75 | 110 | 101 | 115 | 150 | 10 | 9.5 | 10 | 11 |
| | | Weighted centers of gravity positions | Min. | $\mu m$ | 15 | 6 | 6 | 6 | 9 | 11 | 131 | 125 | 111 | 132 |
| | | | Max. | $\mu m$ | 75 | 120 | 107 | 100 | 95 | 110 | 135 | 128 | 124 | 134 |
| | Thermal response index | Rate | | - | 20 | 3.6 | 3.9 | 4.1 | 3.6 | 4.1 | 3.6 | 3.9 | 4.1 | 3.9 |
| | | To | | - | 131 | 134 | 131 | 131 | 131 | 131 | 130 | 130 | 130 | 130 |
| | | Max | | - | 2.0 | 29.6 | 18.8 | 17.5 | 28.2 | 27.0 | 25.4 | 25.9 | 27.1 | 22.9 |
| | Heat shrinkage factor at 150°C in electrolyte solution | | | % | 2.7 | 29.8 | 19.1 | 17.9 | 28.7 | 27.6 | 25.6 | 26.2 | 27.3 | 23.1 |
| | Heat shrinkage factor at 150°C | | | % | 2.0 | 29.4 | 18.6 | 17.4 | 28.2 | 27.0 | 25.2 | 25.8 | 27.0 | 22.8 |
| | Membrane thickness | | | $\mu m$ | 15.5 | 15.5 | 15.4 | 15.5 | 15.6 | 15.6 | 15.5 | 15.5 | 15.4 | 15.5 |
| | Air permeability | | | sec./ 100 cc | 95 | 102 | 103 | 107 | 108 | 109 | 90 | 96 | 95 | 99 |
| | Formula (2) common logarithm | | | $\log(gf \cdot m^4/g^2)$ | 1.12 | 1.17 | 1.15 | 1.14 | 1.15 | 1.15 | 1.05 | 1.06 | 1.05 | 1.06 |
| | Dust fall-off properties | | | % | 0.5 | 0.7 | 0.7 | 0.8 | 0.5 | 0.7 | 0.8 | 0.5 | 0.6 | 0.6 |
| | FUSE temperature | | | °C | 144 | 144 | 144 | 144 | 144 | 144 | 143 | 143 | 143 | 143 |
| | SHORT temperature | | | °C | ≥200 | ≥200 | ≥200 | ≥200 | ≥200 | ≥200 | ≥200 | ≥200 | ≥200 | ≥200 |
| | Electrode residual rate | | | % | <5 | <5 | <5 | <5 | <5 | <5 | <5 | <5 | <5 | <5 |

(continued)

| | | | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|---|
| Battery evaluation | Cycle test capacity retention | % | 55 | 41 | 49 | 45 | 45 | 53 | 88 | 89 | 83 | 80 | | |
| | Evaluation of collapse test | % | 57 | 30 | 36 | 39 | 30 | 33 | 30 | 30 | 33 | 36 | | |

[Table 10]

| | | | Example 21 | Example 22 | Example 23 | Example 24 | Example 25 | Example 26 | Example 27 | Example 28 | Example 29 | Example 30 |
|---|---|---|---|---|---|---|---|---|---|---|---|---|
| Layer A | Resin a: Silane-modified PE | % | 9.9 | 15.9 | 10.1 | 25.8 | 17.2 | 12.9 | 25.1 | 20.1 | 30.4 | 30 |
| | Resin b: 2,000,000 or more | % | 5.1 | 5.1 | 78.6 | 39.9 | 59.9 | 69.9 | 25 | 20 | 60.8 | 30 |
| | Resin c: less than 2,000,000 | % | 85 | 79 | 11.3 | 34.3 | 22.9 | 17.2 | 49.9 | 59.9 | 8.8 | 40 |
| | Weight per unit area of substrate layer | $g/m^2$ | 5.22 | 5.22 | 5.17 | 5.27 | 5.22 | 5.27 | 5.17 | 5.17 | 5.22 | 1.1 |
| | Membrane thickness of substrate layer | μm | 10.0 | 10.0 | 9.9 | 10.1 | 10.0 | 10.1 | 9.9 | 9.9 | 10.0 | 2.1 |
| | Porosity | % | 45 | 45 | 45 | 45 | 45 | 45 | 45 | 45 | 45 | 44.8 |
| | Puncture strength | gf | 402 | 402 | 465 | 458 | 459 | 458 | 414 | 398 | 392 | 99 |
| | Puncture strength divided by weight per unit area | $gf \cdot m^2/g$ | 77 | 77 | 90 | 87 | 88 | 87 | 80 | 77 | 75 | 90 |
| Layer B | Coating surface of inorganic layer | | Both sides | Both sides | Both sides | Both sides | Both sides | Both sides | Both sides | Both sides | Both sides | Both sides |
| | Type of inorganic particles | < | Boehmite | Boehmite | Boehmite | Boehmite | Boehmite | Boehmite | Boehmite | Boehmite | Boehmite | Boehmite |
| | Content of inorganic particles | % | 95 | 95 | 95 | 95 | 95 | 95 | 95 | 95 | 95 | 95 |
| | Glass transition temperature of binder | °C | -23 | -23 | -23 | -23 | -23 | -23 | -23 | -23 | -23 | -23 |
| | Weight per unit area of inorganic coating layer | $g/m^2$ | 6.68 | 6.72 | 6.69 | 6.71 | 6.70 | 6.70 | 6.68 | 6.71 | 6.69 | 6.69 |
| | Membrane thickness of inorganic coating layer | μm | 5 | 5 | 5 | 5 | 5 | 5 | 5 | 5 | 5 | 5 |
| Layer C | Type of thermoplastic polymer | | Acrylic resin | Acrylic resin | Acrylic resin | Acrylic resin | Acrylic resin | Acrylic resin | Acrylic resin | Acrylic resin | Acrylic resin | Acrylic resin |
| | Surface coverage ratio | % | 30 | 30 | 30 | 30 | 30 | 30 | 30 | 30 | 30 | 30 |
| | Membrane thickness of thermoplastic polymer layer | μm | 0.5 | 0.5 | 0.5 | 0.5 | 0.5 | 0.5 | 0.5 | 0.5 | 0.5 | 0.5 |

(continued)

| | | | | | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|---|
| Evaluation of physical properties | TOF-SIMS island structure | Number | | Number | 4 | 4 | 89 | 5 | 6 | 5 | 5 | 7 | 7 | 4 |
| | | Size | Min. | $\mu m^2$ | 10 | 10.2 | 11 | 21 | 19 | 22 | 25 | 16 | 21 | 26 |
| | | | Max. | $\mu m^2$ | 10.5 | 10.8 | 25 | 97 | 93 | 95 | 82 | 101 | 104 | 104 |
| | | Weighted centers of gravity positions | Min. | $\mu m$ | 131 | 130.5 | 6 | 29 | 29 | 23 | 29 | 17 | 21 | 28 |
| | | | Max. | $\mu m$ | 133 | 134 | 8 | 111 | 100 | 119 | 104 | 101 | 100 | 119 |
| | Thermal response index | Rate | | - | 4.1 | 4.4 | 4.4 | 20 | 4.4 | 4.6 | 20 | 4.4 | 4.6 | 30 |
| | | To | | - | 130 | 130 | 131 | 130 | 130 | 130 | 130 | 130 | 130 | 130 |
| | | Max | | - | 10.2 | 10.2 | 21.1 | 4.3 | 6.9 | 9.3 | 5.2 | 8.2 | 10.2 | 0.5 |
| | Heat shrinkage factor at 150°C in electrolyte solution | | | % | 10.9 | 10.9 | 21.5 | 4.6 | 7.6 | 9.6 | 5.6 | 9.0 | 10.5 | 1.0 |
| | Heat shrinkage factor at 150°C | | | % | 10.1 | 10.1 | 21.0 | 4.0 | 7.0 | 9.0 | 5.0 | 8.0 | 10.1 | 0.2 |
| | Membrane thickness | | | $\mu m$ | 15.5 | 15.5 | 15.4 | 15.6 | 15.5 | 15.6 | 15.4 | 15.4 | 15.5 | 7.6 |
| | Air permeability | | | sec./100 cc | 94 | 91 | 81 | 73 | 83 | 71 | 72 | 70 | 87 | 61 |
| | Formula (2) common logarithm | | | log(gf. $m^4/g^2$) | 1.06 | 1.06 | 1.13 | 1.11 | 1.12 | 1.11 | 1.08 | 1.06 | 1.05 | 1.13 |
| | Dust fall-off properties | | | % | 0.5 | 0.7 | 0.8 | 0.8 | 0.6 | 0.8 | 0.6 | 0.6 | 0.8 | 0.8 |
| | FUSE temperature | | | °C | 143 | 143 | 144 | 143 | 143 | 143 | 143 | 143 | 143 | 143 |
| | SHORT temperature | | | °C | ≥200 | ≥200 | ≥200 | ≥200 | ≥200 | ≥200 | ≥200 | ≥200 | ≥200 | ≥200 |
| | Electrode residual rate | % | <5 | <5 | <5 | <5 | <5 | <5 | <5 | <5 | <5 | <5 | | |

(continued)

| | | | | | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|---|
| Battery evaluation | Cycle test capacity retention | % | 88 | 87 | 43 | 86 | 86 | 80 | 86 | 85 | 82 | 85 | | |
| | Evaluation of collapse test | % | 39 | 45 | 42 | 57 | 51 | 48 | 57 | 54 | 48 | 40 | | |

[Table 11]

| | | | Example 31 | Example 32 | Example 33 | Example 34 | Example 35 | Example 36 | Example 37 | Example 38 | Example 39 | Example 40 |
|---|---|---|---|---|---|---|---|---|---|---|---|---|
| Layer A | Resin a: Silane-modified PE | % | 30 | 30 | 30 | 30 | 30 | 30 | 30 | 30 | 30 | 30 |
| | Resin b: 2,000,000 or more | % | 30 | 30 | 30 | 30 | 30 | 30 | 30 | 30 | 30 | 30 |
| | Resin c: less than 2,000,000 | % | 40 | 40 | 40 | 40 | 40 | 40 | 40 | 40 | 40 | 40 |
| | Weight per unit area of substrate layer | $g/m^2$ | 1.62 | 15.14 | 5.22 | 5.27 | 5.27 | 5.22 | 5.17 | 5.22 | 5.17 | 5.27 |
| | Membrane thickness of substrate layer | μm | 3.1 | 29.0 | 10.0 | 10.1 | 10.1 | 10.0 | 9.9 | 10.0 | 9.9 | 10.1 |
| | Porosity | % | 44.9 | 45 | 45 | 45 | 45 | 45 | 45 | 45 | 45 | 45 |
| | Puncture strength | gf | 133 | 1241 | 433 | 422 | 427 | 423 | 429 | 418 | 429 | 443 |
| | Puncture strength divided by weight per unit area | $gf{\cdot}m^2/g$ | 82 | 82 | 83 | 80 | 81 | 81 | 83 | 80 | 83 | 84 |
| Layer B | Coating surface of inorganic layer | | Both sides | Both sides | One surface | Both sides | Both sides | Both sides | Both sides | Both sides | Both sides | Both sides |
| | Type of inorganic particles | - | Boehmite | Boehmite | Boehmite | Alumina | Silica | Titania | Boehmite | Boehmite | Boehmite | Boehmite |
| | Content of inorganic particles | % | 95 | 95 | 95 | 95 | 95 | 95 | 4 | 6 | 9 | 11 |
| | Glass transition temperature of binder | °C | -23 | -23 | -23 | -23 | -23 | -23 | -23 | -23 | -23 | -23 |
| | Weight per unit area of inorganic coating layer | $g/m^2$ | 6.69 | 6.69 | 6.69 | 6.69 | 6.69 | 6.69 | 6.10 | 6.37 | 6.39 | 6.43 |
| | Membrane thickness of inorganic coating layer | μm | 5 | 5 | 5 | 5 | 5 | 5 | 5 | 5 | 5 | 5 |
| Layer C | Type of thermoplastic polymer | | Acrylic resin | Acrylic resin | Acrylic resin | Acrylic resin | Acrylic resin | Acrylic resin | Acrylic resin | Acrylic resin | Acrylic resin | Acrylic resin |
| | Surface coverage ratio | % | 30 | 30 | 30 | 30 | 30 | 30 | 30 | 30 | 30 | 30 |
| | Membrane thickness of thermoplastic polymer layer | μm | 0.5 | 0.5 | 0.5 | 0.5 | 0.5 | 0.5 | 0.5 | 0.5 | 0.5 | 0.5 |

(continued)

| | | | | | Example 31 | Example 32 | Example 33 | Example 34 | Example 35 | Example 36 | Example 37 | Example 38 | Example 39 | Example 40 |
|---|---|---|---|---|---|---|---|---|---|---|---|---|---|---|
| Evaluation of physical properties | TOF-SIMS island structure | Number | | Number | 5 | 6 | 6 | 6 | 5 | 5 | 5 | 5 | 6 | 6 |
| | | Size | Min. | $\mu m^2$ | 22 | 30 | 23 | 21 | 21 | 25 | 18 | 24 | 25 | 18 |
| | | | Max. | $\mu m^2$ | 86 | 109 | 102 | 106 | 80 | 80 | 109 | 107 | 84 | 80 |
| | | Weighted centers of gravity positions | Min. | $\mu m$ | 29 | 27 | 20 | 26 | 28 | 16 | 21 | 24 | 29 | 16 |
| | | | Max. | $\mu m$ | 104 | 102 | 108 | 103 | 105 | 119 | 120 | 119 | 102 | 113 |
| | Thermal response index | Rate | | - | 25 | 4.6 | 4.8 | 12.6 | 4.4 | 5 | 3.9 | 4.1 | 4.2 | 4.3 |
| | | To | | - | 130 | 130 | 130 | 130 | 130 | 130 | 130 | 130 | 130 | 130 |
| | | Max | | - | 0.3 | 17.5 | 3.9 | 3.0 | 8.3 | 9.0 | 27.0 | 16.9 | 12.1 | 12.2 |
| | Heat shrinkage factor at 150°C in electrolyte solution | | | % | 1.0 | 17.9 | 4.6 | 3.7 | 9.0 | 9.7 | 27.5 | 17.4 | 12.5 | 12.5 |
| | Heat shrinkage factor at 150°C | | | % | 0.3 | 17.4 | 4.0 | 3.0 | 8.0 | 9.0 | 27.0 | 16.8 | 12.0 | 12.0 |
| | Membrane thickness | | | $\mu m$ | 8.6 | 34.5 | 15.5 | 15.6 | 15.6 | 15.5 | 15.4 | 15.5 | 15.4 | 15.6 |
| | Air permeability | | | sec./100 cc | 71 | 299 | 91 | 80 | 83 | 81 | 396 | 296 | 243 | 90 |
| | Formula (2) common logarithm | | | log(gf. $m^4/g^2$) | 1.09 | 1.09 | 1.09 | 1.08 | 1.08 | 1.08 | 1.13 | 1.10 | 1.12 | 1.12 |
| | Dust fall-off properties | | | % | 0.5 | 0.5 | 0.8 | 0.5 | 0.6 | 0.6 | 0.6 | 0.8 | 0.5 | 0.6 |
| | FUSE temperature | | | °C | 143 | 143 | 143 | 143 | 143 | 143 | 143 | 143 | 143 | 143 |
| | SHORT temperature | | | °C | ≥200 | ≥200 | ≥200 | ≥200 | ≥200 | ≥200 | ≥200 | ≥200 | ≥200 | ≥200 |
| | Electrode residual rate | % | <5 | <5 | <5 | <5 | <5 | <5 | <5 | <5 | <5 | <5 | | |

(continued)

| | | | | | Example 31 | Example 32 | Example 33 | Example 34 | Example 35 | Example 36 | Example 37 | Example 38 | Example 39 | Example 40 |
|---|---|---|---|---|---|---|---|---|---|---|---|---|---|---|
| Battery evaluation | Cycle test capacity retention | % | 80 | 66 | 80 | 82 | 85 | 82 | 54 | 56 | 58 | 65 | | |
| | Evaluation of collapse test | % | 45 | 50 | 50 | 58 | 43 | 42 | 34 | 43 | 52 | 57 | | |

[Table 12]

| | | | Example 41 | Example 42 | Example 43 | Example 44 | Example 45 | Example 46 | Example 47 | Example 48 | Example 49 | Example 50 |
|---|---|---|---|---|---|---|---|---|---|---|---|---|
| Layer A | Resin a: Silane-modified PE | % | 30 | 30 | 30 | 30 | 30 | 30 | 30 | 30 | 30 | 30 |
| | Resin b: 2,000,000 or more | % | 30 | 30 | 30 | 30 | 30 | 30 | 30 | 30 | 30 | 30 |
| | Resin c: less than 2,000,000 | % | 40 | 40 | 40 | 40 | 40 | 40 | 40 | 40 | 40 | 40 |
| | Weight per unit area of substrate layer | g/m2 | 5.27 | 5.22 | 5.27 | 5.27 | 5.27 | 5.27 | 5.17 | 5.17 | 5.22 | 5.27 |
| | Membrane thickness of substrate layer | μm | 10.1 | 10.0 | 10.1 | 10.1 | 10.1 | 10.1 | 9.9 | 9.9 | 10.0 | 10.1 |
| | Porosity | % | 45 | 45 | 45 | 45 | 45 | 45 | 45 | 45 | 45 | 45 |
| | Puncture strength | gf | 422 | 423 | 422 | 443 | 422 | 422 | 419 | 434 | 423 | 427 |
| | Puncture strength divided by weight per unit area | $gf \cdot m^2/g$ | 80 | 81 | 80 | 84 | 80 | 80 | 81 | 84 | 81 | 81 |
| Layer B | Coating surface of inorganic layer | | Both sides | Both sides | Both sides | Both sides | Both sides | Both sides | Both sides | Both sides | Both sides | Both sides |
| | Type of inorganic particles | - | Boehmite | Boehmite | Boehmite | Boehmite | Boehmite | Boehmite | Boehmite | Boehmite | Boehmite | Boehmite |
| | Content of inorganic particles | % | 97 | 99 | 95 | 95 | 95 | 95 | 95 | 95 | 95 | 95 |
| | Glass transition temperature of binder | °C | -23 | -23 | -23 | -23 | -23 | -23 | -23 | -23 | -23 | -23 |
| | Weight per unit area of inorganic coating layer | g/m2 | 6.73 | 6.76 | 1.47 | 2.81 | 7.89 | 6.69 | 6.70 | 6.70 | 6.69 | 6.69 |
| | Membrane thickness of inorganic coating layer | μm | 5 | 5 | 1.1 | 2.1 | 5.9 | 5 | 5 | 5 | 5 | 5 |
| Layer C | Type of thermoplastic polymer | - | Acrylic resin | Acrylic resin | Acrylic resin | Acrylic resin | Acrylic resin | PVDF-HFP | Acrylic resin | Acrylic resin | Acrylic resin | Acrylic resin |
| | Surface coverage ratio | % | 30 | 30 | 30 | 30 | 30 | 30 | 21 | 51 | 30 | 30 |
| | Membrane thickness of thermoplastic polymer layer | μm | 0.5 | 0.5 | 0.5 | 0.5 | 0.5 | 0.5 | 0.5 | 0.5 | 0.4 | 0.6 |

(continued)

| | | | | | Example 41 | Example 42 | Example 43 | Example 44 | Example 45 | Example 46 | Example 47 | Example 48 | Example 49 | Example 50 |
|---|---|---|---|---|---|---|---|---|---|---|---|---|---|---|
| Evaluation of physical properties | TOF-SIMS island structure | Number | | Number | 6 | 6 | 5 | 5 | 5 | 6 | 7 | 6 | 6 | 6 |
| | | Size | Min. | $\mu m^2$ | 28 | 18 | 30 | 25 | 16 | 16 | 24 | 28 | 16 | 26 |
| | | | Max. | $\mu m^2$ | 110 | 93 | 105 | 104 | 87 | 89 | 98 | 98 | 107 | 109 |
| | | Weighted centers of gravity positions | Min. | $\mu$m | 16 | 15 | 23 | 26 | 18 | 19 | 18 | 26 | 17 | 18 |
| | | | Max. | $\mu$m | 111 | 116 | 113 | 110 | 116 | 104 | 100 | 102 | 106 | 104 |
| | Thermal response index | Rate | | - | 8.8 | 9.3 | 4.1 | 4.7 | 20 | 11 | 13.6 | 14.5 | 12.3 | 11.3 |
| | | $T_0$ | | - | 130 | 130 | 130 | 130 | 130 | 130 | 130 | 130 | 130 | 130 |
| | | Max | | - | 7.9 | 6.0 | 17.6 | 9.3 | 0.7 | 6.2 | 6.3 | 6.1 | 6.2 | 4.9 |
| | Heat shrinkage factor at 150°C in electrolyte solution | | | % | 9.0 | 6.7 | 17.7 | 9.5 | 1.3 | 7.0 | 6.7 | 6.5 | 6.7 | 5.9 |
| | Heat shrinkage factor at 150°C | | | % | 8.0 | 6.0 | 17.4 | 9.0 | 0.4 | 6.0 | 6.0 | 6.0 | 6.0 | 5.0 |
| | Membrane thickness | | | $\mu$m | 15.6 | 15.5 | 11.7 | 12.7 | 16.5 | 15.6 | 15.4 | 15.4 | 15.4 | 15.7 |
| | Air permeability | | | sec./100 cc | 95 | 90 | 88 | 89 | 94 | 94 | 75 | 90 | 81 | 82 |
| | Formula (2) common logarithm | | | log (gf·$m^4$/g2) | 1.10 | 1.11 | 1.10 | 1.12 | 1.10 | 1.10 | 1.11 | 1.12 | 1.11 | 1.11 |
| | Dust fall-off properties | | | % | 0.8 | 0.6 | 0.7 | 0.6 | 0.5 | 0.7 | 0.6 | 0.8 | 0.7 | 0.5 |
| | FUSE temperature | | | °C | 143 | 143 | 143 | 143 | 143 | 143 | 143 | 143 | 143 | 143 |
| | SHORT temperature | °C | ≥200 | ≥200 | ≥200 | ≥200 | ≥200 | ≥200 | ≥200 | ≥200 | ≥200 | ≥200 | | |
| | Electrode residual rate | % | <5 | <5 | <5 | <5 | <5 | <5 | 10 | <5 | 10 | <5 | | |

(continued)

| | | | | | Example 41 | Example 42 | Example 43 | Example 44 | Example 45 | Example 46 | Example 47 | Example 48 | Example 49 | Example 50 |
|---|---|---|---|---|---|---|---|---|---|---|---|---|---|---|
| Battery evaluation | Cycle test capacity retention | % | 85 | 84 | 85 | 83 | 84 | 82 | 82 | 84 | 81 | 81 | | |
| | Evaluation of collapse test | % | 56 | 55 | 44 | 54 | 53 | 55 | 42 | 53 | 44 | 54 | | |

[Table 13]

| | | | Example 51 | Example 52 | Example 53 | Example 54 | Example 55 | Example 56 | Example 57 | Example 58 | Example 59 | Example 60 |
|---|---|---|---|---|---|---|---|---|---|---|---|---|
| Layer A | Resin a: Silane-modified PE | % | 30 | 30 | 30 | 30 | 30 | 3.1 | 70.1 | 70.1 | 2.9 | 2.9 |
| | Resin b: 2,000,000 or more | % | 30 | 30 | 30 | 30 | 30 | 84.7 | 12.8 | 1.6 | 85.1 | 2.9 |
| | Resin c: less than 2,000,000 | % | 40 | 40 | 40 | 40 | 40 | 12.2 | 17.1 | 28.3 | 12 | 94.2 |
| | Weight per unit area of substrate layer | $g/m^2$ | 5.27 | 5.27 | 6.55 | 5.6 | 3.85 | 5.24 | 5.22 | 5.22 | 5.24 | 5.2 |
| | Membrane thickness of substrate layer | μm | 10.1 | 10.1 | 10.0 | 10.0 | 9.9 | 10.1 | 10.1 | 10.1 | 10.1 | 10.1 |
| | Porosity | % | 45 | 45 | 31 | 41 | 59 | 47.8 | 45.5 | 45.5 | 45.3 | 45.8 |
| | Puncture strength | gf | 427 | 443 | 544 | 454 | 316 | 576 | 235 | 235 | 576 | 385 |
| | Puncture strength divided by weight per unit area | $gf \cdot m^2/g$ | 81 | 84 | 83 | 81 | 82 | 110 | 45 | 45 | 110 | 74 |
| Layer B | Coating surface of inorganic layer | | Both sides | Both sides | Both sides | Both sides | Both sides | Both sides | Both sides | Both sides | Both sides | Both sides |
| | Type of inorganic particles | - | Boehmite | Boehmite | Boehmite | Boehmite | Boehmite | Boehmite | Boehmite | Boehmite | Boehmite | Boehmite |
| | Content of inorganic particles | % | 95 | 95 | 95 | 95 | 95 | 95 | 95 | 95 | 95 | 95 |
| | Glass transition temperature of binder | °C | -23 | -23 | -23 | -23 | -23 | -23 | -23 | -23 | -23 | -23 |
| | Weight per unit area of inorganic coating layer | g/m2 | 6.71 | 6.70 | 6.70 | 6.71 | 6.70 | 6.69 | 6.71 | 6.71 | 6.69 | 6.71 |
| | Membrane thickness of inorganic coating layer | μm | 5 | 5 | 5 | 5 | 5 | 5 | 5 | 5 | 5 | 5 |
| Layer C | Type of thermoplastic polymer | | Acrylic resin | Acrylic resin | Acrylic resin | Acrylic resin | Acrylic resin | Acrylic resin | Acrylic resin | Acrylic resin | Acrylic resin | Acrylic resin |
| | Surface coverage ratio | % | 30 | 30 | 30 | 30 | 30 | 30 | 30 | 30 | 30 | 30 |
| | Membrane thickness of thermoplastic polymer layer | μm | 0.9 | 1.1 | 0.5 | 0.5 | 0.5 | 0.5 | 0.5 | 0.5 | 0.5 | 0.5 |

(continued)

| | | | | | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|---|
| Evaluation of physical properties | TOF-SIMS island structure | Number | | Number | 5 | 6 | 5 | 6 | 5 | 6 | 9 | 4 | 15 | 4 |
| | | Size | Min. | μ$m^2$ | 24 | 21 | 26 | 18 | 18 | 9.5 | 30 | 40 | 5 | 5 |
| | | | Max. | μ$m^2$ | 85 | 94 | 105 | 81 | 107 | 75 | 251 | 253 | 45 | 50 |
| | | Weighted centers of gravity positions | Min. | μm | 30 | 22 | 27 | 22 | 27 | 6 | 25 | 55 | 5 | 100 |
| | | | Max. | μm | 102 | 107 | 115 | 100 | 118 | 120 | 81 | 142 | 75 | 145 |
| | Thermal response index | Rate | | - | 10 | 8.3 | 20 | 11.6 | 12.7 | 20 | 3.6 | 50.2 | 3.2 | 3.2 |
| | | To | | - | 130 | 130 | 130 | 130 | 130 | 112 | 148 | 127 | 131 | 130 |
| | | Max | | - | 5.2 | 5.1 | 6.1 | 6.2 | 7.2 | 4.0 | 0.4 | 0.4 | 29.8 | 24.8 |
| | Heat shrinkage factor at 150°C in electrolyte solution | | | % | 5.6 | 5.7 | 6.7 | 6.7 | 8.0 | 4.5 | 1.3 | 1.3 | 29.9 | 24.9 |
| | Heat shrinkage factor at 150°C | | | % | 5.0 | 5.0 | 6.0 | 6.0 | 7.0 | 4.0 | 0.5 | 0.5 | 29.8 | 24.6 |
| | Membrane thickness | | | μm | 16.0 | 16.2 | 15.5 | 15.5 | 15.4 | 15.6 | 15.5 | 15.6 | 15.6 | 15.6 |
| | Air permeability | | | sec./ 100 cc | 150 | 211 | 150 | 95 | 90 | 420 | 401 | 401 | 105 | 90 |
| | Formula (2) common logarithm | | | log(gf·$m^4/g^2$) | 1.11 | 1.12 | 1.12 | 1.11 | 1.11 | 1.21 | 0.83 | 0.83 | 1.21 | 1.04 |
| | Dust fall-off properties | | | % | 0.6 | 0.8 | 0.8 | 0.8 | 0.7 | 0.5 | 0.7 | 0.8 | 0.6 | 0.5 |
| | FUSE temperature | | | °C | 143 | 143 | 143 | 143 | 143 | 143 | 144 | 140 | 144 | 143 |
| | SHORT temperature | °C | ≥200 | ≥200 | ≥200 | ≥200 | ≥200 | ≥200 | ≥200 | ≥200 | 180 | 180 | | |
| | Electrode residual rate | % | <5 | <5 | <5 | <5 | <5 | <5 | <5 | <5 | <5 | <5 | | |

(continued)

| | | | | | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|---|
| Battery evaluation | Cycle test capacity retention | % | 80 | 80 | 71 | 84 | 84 | 82 | 41 | 27 | 22 | 80 | | |
| | Evaluation of collapse test | % | 55 | 52 | 55 | 55 | 57 | 30 | 15 | 13 | 22 | 16 | | |

[Table 14]

| | | | Example 61 | Example 62 | Example 63 | Example 64 | Example 65 | Example 66 | Example 67 | Example 68 |
|---|---|---|---|---|---|---|---|---|---|---|
| Layer A | Resin a: Silane-modified PE | % | 45 | 70.1 | 45 | 2 | 30 | 30 | 30 | 30 |
| | Resin b: 2,000,000 or more | % | 2 | 12.8 | 52 | 50 | 30 | 30 | 30 | 30 |
| | Resin c: less than 2,000,000 | % | 53 | 17.1 | 3 | 48 | 40 | 40 | 40 | 40 |
| | Weight per unit area of substrate layer | $g/m^2$ | 5.2 | 5.2 | 5.2 | 5.2 | 8.352 | 5.22 | 5.22 | 5.22 |
| | Membrane thickness of substrate layer | μm | 10.1 | 10.1 | 10.1 | 10.1 | 16 | 10.0 | 10.0 | 10.0 |
| | Porosity | % | 46.8 | 47.8 | 48.8 | 49.8 | 53 | 45 | 45 | 45 |
| | Puncture strength | gf | 333 | 328 | 572 | 442 | 685 | 444 | 444 | 444 |
| | Puncture strength divided by weight per unit area | $gf \cdot m^2/g$ | 64 | 63 | 110 | 85 | 82 | 85 | 85 | 85 |
| Layer B | Coating surface of inorganic layer | - | Both sides | Both sides | Both sides | Both sides | Both sides | Both sides | Both sides | Both sides |
| | Type of inorganic particles | - | Boehmite | Boehmite | Boehmite | Boehmite | Boehmite | Boehmite | Boehmite | Boehmite |
| | Content of inorganic particles | % | 95 | 95 | 95 | 95 | 95 | 95 | 95 | 95 |
| | Glass transition temperature of binder | °C | -23 | -23 | -23 | -23 | -23 | -23 | -50 | 82 |
| | Weight per unit area of inorganic coating layer | g/m2 | 6.70 | 6.69 | 6.69 | 6.70 | 6.71 | 6.70 | 6.70 | 6.70 |
| | Membrane thickness of inorganic coating layer | μm | 5 | 5 | 5 | 5 | 5 | 5 | 5 | 5 |
| Layer C | Type of thermoplastic polymer | | Acrylic resin | Acrylic resin | Acrylic resin | Acrylic resin | Acrylic resin | Acrylic resin | Acrylic resin | Acrylic resin |
| | Surface coverage ratio | % | 30 | 30 | 30 | 30 | 30 | 30 | 30 | 30 |
| | Membrane thickness of thermoplastic polymer layer | μm | 0.5 | 0.5 | 0.5 | 0.5 | 0.05 | 0.5 | 0.5 | 0.5 |

(continued)

| | | | | | Example 61 | Example 62 | Example 63 | Example 64 | Example 65 | Example 66 | Example 67 | Example 68 |
|---|---|---|---|---|---|---|---|---|---|---|---|---|
| Evaluation of physical properties | TOF-SIMS island structure | Number | | Number | 4 | 9 | 27 | 4 | 5 | 7 | 7 | 7 |
| | | Size | Min. | μm² | 25 | 30 | 15 | 4 | 21 | 16 | 16 | 16 |
| | | | Max. | μm² | 120 | 251 | 70 | 85 | 102 | 93 | 93 | 93 |
| | | Weighted centers of gravity positions | Min. | μm | 35 | 25 | 5 | 50 | 27 | 9 | 9 | 9 |
| | | | Max. | μm | 140 | 81 | 55 | 110 | 112 | 108 | 108 | 108 |
| | Thermal response index | Rate | | - | 30 | 20 | 1.1 | 2.1 | 4.2 | 10 | 10 | 10 |
| | | To | | - | 130 | 121 | 130 | 130 | 130 | 130 | 130 | 130 |
| | | Max | | - | 2.3 | 4.0 | 33.8 | 26.9 | 7.1 | 1.9 | 1.9 | 1.9 |
| | Heat shrinkage factor at 150°C in electrolyte solution | | | % | 12.0 | 4.5 | 34.1 | 27.5 | 7.6 | 2.5 | 2.5 | 2.5 |
| | Heat shrinkage factor at 150°C | | | % | 2.0 | 4.0 | 33.6 | 27.0 | 7.0 | 2.0 | 2.0 | 2.0 |
| | Membrane thickness | | | μm | 15.6 | 15.6 | 15.6 | 15.6 | 21.05 | 15.5 | 15.5 | 15.5 |
| | Air permeability | | | sec./ 100 cc | 410 | 420 | 130 | 90 | 75 | 95 | 110 | 85 |
| | Formula (2) common logarithm | | | log (gf·m⁴/g²) | 0.98 | 0.97 | 1.21 | 1.10 | 1.11 | 1.10 | 1.10 | 1.10 |
| | Dust fall-off properties | | | % | 0.7 | 0.5 | 0.7 | 0.7 | 0.8 | 0.5 | 0.5 | 6 |
| | FUSE temperature | | | °C | 143 | 143 | 143 | 143 | 143 | 143 | 143 | 143 |
| | SHORT temperature | °C | ≥200 | ≥200 | ≥200 | 180 | ≥200 | ≥200 | ≥200 | ≥200 | | |
| | Electrode residual rate | % | <5 | <5 | <5 | <5 | 60 | <5 | <5 | 60 | | |

(continued)

| | | | | | Example 61 | Example 62 | Example 63 | Example 64 | Example 65 | Example 66 | Example 67 | Example 68 |
|---|---|---|---|---|---|---|---|---|---|---|---|---|
| Battery evaluation | Cycle test capacity retention | % | 86 | 82 | 84 | 83 | 85 | 90 | 67 | 77 | | |
| | Evaluation of collapse test | % | 14 | 15 | 16 | 17 | 14 | 56 | 50 | 46 | | |

[Table 15]

| | | | Comparative Example 1 | Comparative Example 2 | Comparative Example 3 | Comparative Example 4 | Comparative Example 5 | Comparative Example 6 |
|---|---|---|---|---|---|---|---|---|
| Layer A | Resin a: Silane-modified PE | % | 30 | 0 | 30 | 0 | 20 | 20 |
| | Resin b: 2,000,000 or more | % | 30 | 70 | 30 | 40 | 32 | 32 |
| | Resin c: less than 2,000,000 | % | 40 | 30 | 40 | 60 | 48 | 48 |
| | Weight per unit area of substrate layer | $g/m^2$ | 5.22 | 5.22 | 5.21 | 5.23 | 5.23 | 5.22 |
| | Membrane thickness of substrate layer | μm | 10 | 10.1 | 10.1 | 10.1 | 10 | 9.9 |
| | Porosity | % | 49 | 49 | 47 | 45 | 45 | 45 |
| | Puncture strength | gf | 430 | 608 | 465 | 392 | 387 | 380 |
| | Puncture strength divided by weight per unit area | $gf \cdot m^2/g$ | 43 | 67.6 | 46.5 | 75 | 74 | 72.8 |
| Layer B | Coating surface of inorganic layer | - | - | Both sides | Both sides | Both sides | Both sides | Both sides |
| | Type of inorganic particles | - | - | Boehmite | Boehmite | Boehmite | Boehmite | Boehmite |
| | Content of inorganic particles | % | - | 95 | 95 | 95 | 95 | 95 |
| | Glass transition temperature of binder | °C | - | -23 | -23 | -23 | -23 | -23 |
| | Weight per unit area of inorganic coating layer | $g/m^2$ | - | 6.69 | 6.70 | 6.7 | 6.7 | 6.7 |
| | Membrane thickness of inorganic coating layer | μm | - | 5 | 5 | 5 | 5 | 5 |
| Layer C | Type of thermoplastic polymer | - | Acrylic resin | Acrylic resin | - | Acrylic resin | Acrylic resin | Acrylic resin |
| | Surface coverage ratio | % | 30 | 30 | - | 30 | 30 | 30 |
| | Membrane thickness of thermoplastic polymer layer | μm | 0.5 | 0.5 | - | 0.5 | 0.5 | 0.5 |

(continued)

| | | | | | Comparative Example 1 | Comparative Example 2 | Comparative Example 3 | Comparative Example 4 | Comparative Example 5 | Comparative Example 6 |
|---|---|---|---|---|---|---|---|---|---|---|
| Evaluation of physical properties | TOF-SIMS island structure | Number | | Number | 7 | 7 | 6 | 7 | 7 | 6 |
| | | Size | Min. | μm$^2$ | 16 | 19 | 10 | 18 | 19 | 20 |
| | | | Max. | μm$^2$ | 94 | 95 | 86 | 90 | 93 | 90 |
| | | Weighted centers of gravity positions | Min. | μm | 24 | 24 | 12 | 12 | 13 | 15 |
| | | | Max. | μm | 110 | 118 | 99 | 100 | 98 | 90 |
| | Thermal response index | Rate | | - | 3.2 | 3.1 | 7 | 10 | 15 | 13 |
| | | $T_0$ | | - | 130 | 130 | 130 | 130 | 130 | 130 |
| | | Max | | - | 48.0 | 19.3 | 5.2 | 8.1 | 9.2 | 9.2 |
| | Heat shrinkage factor at 150°C in electrolyte solution | | | % | 49.0 | 19.7 | 6.0 | 8.0 | 9.0 | 9.0 |
| | Heat shrinkage factor at 150°C | | | % | 48.0 | 19.2 | 5.0 | 7.0 | 7.0 | 8.0 |
| | Membrane thickness | | | μm | 10 | 14 | 15 | 15.6 | 15.5 | 15.5 |
| | Air permeability | | | sec./100 cc | 81 | 92 | 92 | 95 | 96 | 99 |
| | Formula (2) common logarithm | | | log(gf-m$^4$/g$^2$) | - | 1.13 | 0.97 | 1.16 | 1.15 | 1.04 |
| | Dust fall-off properties | | | % | - | 0.7 | 3.7 | 0.7 | 0.8 | 0.9 |
| | FUSE temperature | | | °C | 143 | 150 | 143 | 150 | 143 | 143 |
| | SHORT temperature | °C | ≥200 | 160 | ≥200 | ≥200 | ≥200 | 160 | | |
| | Electrode residual rate | % | <5 | <5 | <5 | <5 | <5 | <5 | | |

(continued)

| | | | | | Comparative Example 1 | Comparative Example 2 | Comparative Example 3 | Comparative Example 4 | Comparative Example 5 | Comparative Example 6 |
|---|---|---|---|---|---|---|---|---|---|---|
| Battery evaluation | Cycle test capacity retention | % | 94 | 75 | 82 | 32 | 34 | 20 | | |
| | Evaluation of collapse test | % | 4 | 3 | 5 | 5 | 6 | 1 | | |

II. Examples and Comparative Examples in Second Embodiment

<<Method for Producing Silane Graft-Modified Polyolefin>>

The polyolefin starting material to be used as the silane graft-modified polyolefin may have a viscosity-average molecular weight (Mv) of 100,000 or more and 1,000,000 or less, a weight-average molecular weight (Mw) of 30,000 or more and 920,000 or less and a number-average molecular weight of 10,000 or more and 150,000 or less, and may be a copolymerized α-olefin of propylene or butene. After adding an organic peroxide (di-t-butyl peroxide) while melt kneading the polyethylene starting material with an extruder to generate radicals in the polymer chain of the α-olefin, trimethoxyalkoxide-substituted vinylsilane is injected and an addition reaction is carried out to introduce alkoxysilyl groups into the α-olefin polymer to form a silane-graft structure. A suitable amount of an antioxidant (pentaerythritoltetrakis[3-(3,5-di-t-butyl-4-hydroxyphenyl)propionate]) is simultaneously added to adjust the radical concentration in the system, thus suppressing a chain-style chain reaction (gelation) in the α-olefin. The obtained silane-grafted polyolefin molten resin is cooled in water and pelletized, and after heat drying at 80°C for 2 days, the moisture and unreacted trimethoxyalkoxide-substituted vinylsilane are removed. The residual concentration of the unreacted trimethoxyalkoxide-substituted vinylsilane in the pellets is about 1,000 to 1,500 ppm.
The silane graft-modified polyethylene obtained by the above method is indicated as the "silane-modified polyethylene" in Tables 16 to 23.

<<Method for Producing Modified PE having Various Functional Groups other than Silane-Modified PE, and Copolymer>>

Modified PE having various functional groups other than silane-modified PE, and a copolymer were produced by the following method.
The molecular weight of all of the starting materials was adjusted to an MI within a range of 0.5 to 10. Modified PE having a hydroxyl group was produced by saponification and neutralization of an EVA copolymer. For an amine-modified or oxazoline-modified resin, a tungsten-based catalyst was reacted with the terminal vinyl groups of PE polymerized using a chromium catalyst, in the presence of hydrogen peroxide, for conversion of the vinyl groups into epoxy groups. Known functional group-converting organic reactions were then used to convert the respective reactive sites into the target functional groups, thus obtaining various modified PE molecules. For amine-modified PE, for example, modified PE having epoxy groups is melt kneaded in an extruder at 200°C while injecting a primary or secondary amine into a liquid, and a reaction is carried out. The unreacted amine is then removed through a pressure reducing valve and the obtained amine-modified resin is extruded into a strand and cut into pellets.
The modified PE obtained by the above method is indicated as the "modified PE or copolymer (B)" in Tables 16 to 23.

<<Example 2.1>>

<Fabrication of Polyolefin Microporous Membrane as Substrate>

To 79.2% by weight of a polyethylene homopolymer with a weight-average molecular weight of 720,000 (UHMWPE (A)), 19.8% by weight of silane-grafted polyethylene (PE (B)) having MFR of 0.44 g/min, obtained using a polyolefin with a viscosity-average molecular weight of 120,000 as a starting material and a modification reaction with trimethoxyalkoxide-substituted vinylsilane (the respective contents of resin compositions (A) and (B) thus being 0.8 and 0.2) and 1% by weight of pentaerythrityl-tetrakis-[3-(3,5-di-t-butyl-4-hydroxyphenyl)propionate] as an antioxidant was added, followed by dry blending using a tumbler blender to obtain a mixture. The obtained mixture was supplied to a twin-screw extruder through a feeder in a nitrogen atmosphere. Also, liquid paraffin (kinematic viscosity at 37.78°C: 7.59 $\times 10^{-5}$ $m^2/s$) was injected into the extruder cylinder by a plunger pump.
The mixture was melt kneaded with liquid paraffin in an extruder, and adjusted with a feeder and pump so that the quantity ratio of liquid paraffin in the extruded polyolefin composition was 70% by weight (i.e., polymer concentration of 30% by weight). The melt kneading conditions were as follows: a preset temperature of 220°C, a screw rotational speed of 240 rpm and a discharge throughput of 18 kg/h.
The melt kneaded mixture was then extrusion cast through a T-die on a cooling roll controlled to a surface temperature of 25°C to obtain a gel sheet (sheet-shaped molded body) having a raw membrane thickness of 1,200 μm.
The sheet-shaped molded body was then simultaneously fed into a biaxial tenter stretching machine for biaxial stretching to obtain a stretched sheet. The stretching conditions were as follows: an MD factor of 7.0, a TD factor of 7.0 (i.e., a factor of 7.0 × 7.0) and a biaxial stretching temperature of 125°C.
The stretched gel sheet was then fed into a dichloromethane tank and thoroughly immersed in the dichloromethane for extraction removal of the liquid paraffin, and then dichloromethane was dried off to obtain a porous body.

The porous body to be subjected to heat setting (HS) was fed to a TD tenter and HS was carried out at a heat setting temperature of 123°C and a stretch ratio of 2.0, and then relaxation was carried out to a factor of 1.8 in the TD direction.

<Disposition of Thermoplastic Polymer-Containing Layer>

A coating solution was prepared by uniformly dispersing 7.5 parts by weight of a coating resin having type and a glass transition temperature shown in Table 16 into 92.5 parts by weight of water. Using a gravure coater, the coating solution was coated on one side of the polyolefin microporous membrane, and a thermoplastic polymer-containing layer was formed in the thickness and the coverage area ratio shown in Table 16 to obtain a composite separator.

The obtained composite separator was then cut at the edges and wound up as a mother roll with a width of 1,100 mm and a length of 5,000 m.

During the evaluation, the composite separator wound out from the mother roll was slit as necessary for use as the evaluation separator.

Various evaluations were carried out in accordance with the evaluation method for the evaluation separator and the battery. The evaluation results are shown in Table 16.

<<Examples 2.2 to 2.26, Comparative Examples 2.1 to 2.5>>

The same operation as in Example 2.1 was carried out, except for changing the conditions of the microporous membrane as the substrate, the composite configuration conditions, the presence or absence of crosslinking during the production of the microporous membrane, the presence or absence of crosslinking after assembly of the battery, etc., as shown in Tables 16 to 23, to obtain the separators and batteries shown in Tables 16 to 23. Various evaluations were carried out in accordance with the evaluation method for the evaluation of the obtained separators and batteries. The evaluation results are shown in Tables 16 to 23.

In Examples 2.17, a positive electrode (LAC positive electrode) containing $Li(Al,Co)O_2$ layer as the positive electrode material was used in place of the positive electrode fabricated in aforementioned "a. Fabrication of Positive Electrode".

In Example 2.18, a nonaqueous electrolyte solution used was a nonaqueous electrolyte solution prepared by using the same constituent components as in the nonaqueous electrolyte solution prepared in aforementioned "c. Preparation of Nonaqueous Electrolyte Solution" so as to adjust the concentration of $LiPF_6$ to 5.0 mol/L.

In Comparative Examples 2.1 and 2.2, the obtained microporous membranes were used for electron beam crosslinking by irradiation at a prescribed dose before battery assembly. Various evaluations of the obtained electron beam-crosslinked microporous membranes and batteries were carried out by the evaluation methods mentioned above.

In Comparative Examples 2.4 and 2.5, in the fabrication of the microporous polyolefin membrane, a catalyst for forming a tin-based siloxane bond was added to the material to be extruded during the extrusion step, and moisture crosslinking after separator molding and crosslinking in the liquid paraffin extraction step were carried out.

[Table 16]

| | | | | Example 2.1 | Example 2.2 | Example 2.3 | Example 2.4 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | 20 | 20 | 20 | 20 |
| | | | -COOH-modified PE | - | - | - | - |
| | | | -Oxazoline-modified PE | - | - | - | - |
| | | | -Oxazoline, -OH-modified PE | - | - | - | - |
| | | | -OH-modified PE | - | - | - | - |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 11 | 11 | 11 | 11 |
| | | Porosity | % | 50 | 50 | 51 | 48 |
| | | Air permeability | sec/100 $cm^3$ | 180 | 183 | 189 | 201 |
| | Resin aggregates in separator | | Aggregates/1,000 $m^2$ | 2 | 2 | 2 | 2 |
| | F/MD characteristics | Fuse temperature | °C | 140 | 143 | 150 | 142 |
| | | Meltdown temperature | °C | >200 | >200 | >200 | >200 |
| Composite configuration | Thickness | | μm | 0.5 | 0.5 | 0.5 | 0.5 |
| | Thermoplastic polymer | Type of coating resin | - | Acrylic resin | Acrylic resin | Acrylic resin | Acrylic resin |
| | | Coverage area ratio | % | 20 | 20 | 20 | 10 |
| | | Glass transition temperature | °C | -20 | -38 | 100 | -20 |
| Battery | Crosslinking | Method** | | I | I | I | I |
| | | Reaction/Bonding | | Siloxane condensation | Siloxane condensation | Siloxane condensation | Siloxane condensation |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | Silanol group | Silanol group | Silanol group | Silanol group |
| | | | B | - | - | - | - |
| | | Type of reaction | | - | - | - | - |
| | | Type of catalyst | | HF | HF | HF | HF |
| | | Type of molten metal | | - | - | - | - |
| | | Additive**** | | - | - | - | - |
| | Capacity retention at 1,000 cycles of battery | | % | 98 | 95 | 97 | 93 |
| | Passing rate of nail penetration test after 1,000 cycles of battery | | % | 95 | 96 | 92 | 92 |

[Table 17]

| | | | | Example 2.5 | Example 2.6 | Example 2.7 | Example 2.8 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | 20 | 20 | 20 | - |
| | | | -COOH-modified PE | - | - | - | 20 |
| | | | -Oxazoline-modified PE | - | - | - | - |
| | | | -Oxazoline, -OH-modified PE | - | - | - | - |
| | | | -OH-modified PE | - | - | - | - |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 11 | 11 | 11 | 11 |
| | | Porosity | % | 52 | 55 | 48 | 40 |
| | | Air permeability | sec/100 $cm^3$ | 167 | 143 | 198 | 150 |
| | Resin aggregates in separator | | Aggregates/1,000 $m^2$ | 2 | 2 | 2 | 3 |
| | F/MD characteristics | Fuse temperature | °C | 140 | 140 | 141 | 142 |
| | | Meltdown temperature | °C | >200 | >200 | >200 | >200 |
| Composite configuration | Thickness | | μm | 0.5 | 0.5 + 0.5 | 2 | 0.5 |
| | Thermoplastic Polymer | Type of coating resin | - | Acrylic resin | Acrylic resin | Acrylic resin | Acrylic resin |
| | | Coverage area ratio | % | 85 | 20 | 20 | 20 |
| | | Glass transition temperature | °C | -20 | -20 | -20 | -20 |
| Battery | Crosslinking | Method** | | I | I | I | II |
| | | Reaction/Bonding | | Siloxane condensation | Siloxane condensation | Siloxane condensation | Esterification |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | Silanol group | Silanol group | Silanol group | -OH |
| | | | B | - | - | - | -COOH |
| | | Type of reaction | | - | - | - | - |
| | | Type of catalyst | | HF | HF | HF | - |
| | | Type of molten metal | | - | - | - | - |
| | | Additive**** | | - | - | - | - |
| | Capacity retention at 1,000 cycles of battery | | % | 94 | 91 | 83 | 92 |
| | Passing rate of nail penetration test after 1,000 cycles of battery | | % | 97 | 98 | 97 | 90 |

[Table 18]

| | | | | Example 2.9 | Example 2.10 | Example 2.11 | Example 2.12 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | - | - | - | - |
| | | | -COOH-modified PE | 10 | - | - | - |
| | | | -Oxazoline-modified PE | - | - | 10 | - |
| | | | -Oxazoline, -OH-modified PE | - | 20 | - | - |
| | | | -OH-modified PE | 10 | - | 10 | 20 |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 11 | 11 | 11 | 11 |
| | | Porosity | % | 51 | 50 | 49 | 46 |
| | | Air permeability | sec/100 $cm^3$ | 153 | 158 | 169 | 190 |
| | Resin aggregates in separator | | Aggregates/1,000 $m^2$ | 3 | 7 | 7 | 5 |
| | F/MD characteristics | Fuse temperature | °C | 142 | 157 | 147 | 152 |
| | | Meltdown temperature | °C | >200 | >200 | >200 | >200 |
| Composite configuration | Thickness | | μm | 0.5 | 0.5 | 0.5 | 0.5 |
| | Thermoplastic Polymer | Type of coating resin | - | Acrylic resin | Acrylic resin | Acrylic resin | Acrylic resin |
| | | Coverage area ratio | % | 20 | 20 | 20 | 20 |
| | | Glass transition temperature | °C | -20 | -20 | -20 | -20 |
| Battery | Crosslinking | Method** | | II | II | II | III |
| | | Reaction/Bonding | | Esterification | Amide bonding, Ether bonding | Amide bonding, Ether bonding | Chain condensation -O-CO-O- |
| | | Timing | | Contact with electrolyte solution Initial charge-discharge | Contact with electrolyte solution Initial charge-discharge | Contact with electrolyte solution Initial charge-discharge | Contact with electrolyte solution |
| | | Functional group of microporous membrane | A | -OH | Oxazoline | Oxazoline | -OH |
| | | | B | -COOH | -OH | -OH | - |
| | | Type of reaction | | - | - | - | EC*** |
| | | Type of catalyst | | - | - | - | - |
| | | Type of molten metal | | - | - | - | - |
| | | Additive**** | | - | - | - | - |
| | Capacity retention at 1,000 cycles of battery | | % | 93 | 94 | 95 | 94 |
| | Passing rate of nail penetration test after 1,000 cycles of battery | | % | 92 | 91 | 89 | 93 |

[Table 19]

| | | | | Example 2.13 | Example 2.14 | Example 2.15 | Example 2.16 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | - | - | - | - |
| | | | -COOH-modified PE | - | - | - | - |
| | | | -Oxazoline-modified PE | - | - | - | - |
| | | | -Oxazoline, -OH-modified PE | - | - | - | - |
| | | | -OH-modified PE | - | - | 20 | 20 |
| | | | -OH, -NH-modified PE | 20 | - | - | - |
| | | | -OH, amine-modified PE | - | 20 | - | - |
| | Crosslinking | Method | | | | | |
| | | Timing | | | | | |
| | | Apparatus/Conditions | | | | | |
| | Separator basic physical properties | Membrane thickness | μm | 11 | 11 | 11 | 11 |
| | | Porosity | % | 55 | 56 | 49 | 45 |
| | | Air permeability | sec/100 $cm^3$ | 193 | 176 | 188 | 198 |
| | Resin aggregates in separator | | Aggregates/1,000 $m^2$ | 3 | 2 | 5 | 2 |
| | F/MD characteristics | Fuse temperature | °C | 147 | 148 | 142 | 141 |
| | | Meltdown temperature | °C | >200 | >200 | >200 | >200 |
| Composite configuration | Thickness | | μm | 0.5 | 0.5 | 0.5 | 0.5 |
| | Thermoplastic Polymer | Type of coating resin | - | Acrylic resin | Acrylic resin | Acrylic resin | Acrylic resin |
| | | Coverage area ratio | % | 20 | 20 | 20 | 20 |
| | | Glass transition temperature | °C | -20 | -20 | -20 | -20 |
| Battery | Crosslinking | Method** | | III | IV | IV | IV |
| | | Reaction/Bonding | | Chain-condensed tertiary amine | Nucleophilic substitution | Nucleophilic addition | Epoxy ring-opening |
| | | Timing | | Contact with electrolyte solution | Contact with electrolyte solution Initial charge-discharge | Contact with electrolyte solution Initial charge-discharge | Contact with electrolyte solution Initial charge-discharge |
| | | Functional group of microporous membrane | A | -NH- | -NH2 | -OH | -OH |
| | | | B | - | - | - | - |
| | | Type of reaction | | EC*** | - | - | - |
| | | Type of catalyst | | - | - | - | - |
| | | Type of molten metal | | - | - | - | - |
| | | Additive**** | | - | $BS(PEG)_5$ | Diisocyanate | Diepoxy compound |
| | Capacity retention at 1,000 cycles of battery | | % | 91 | 92 | 92 | 93 |
| | Passing rate of nail penetration test after 1,000 cycles of battery | | % | 94 | 94 | 91 | 89 |

[Table 20]

| | | | | Example 2.17 | Example 2.18 | Example 2.19 | Example 2.20 |
|---|---|---|---|---|---|---|---|
| Substrate microporous membrane | Resin composition (% by weight) | UHMWPE (A) | | 80 | 80 | 99 | 10 |
| | | Modified PE or copolymer (B)* | Silane-modified polyethylene | - | - | 1 | 90 |
| | | | -COOH-modified PE | 20 | 20 | - | - |
| | | | -Oxazoline-modified PE | - | - | - | - |
| | | | -Oxazoline, -OH-modified PE | - | - | - | - |
| | | | -OH-modified PE | - | - | - | - |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 11 | 11 | 11 | 11 |
| | | Porosity | % | 52 | 50 | 49 | 50 |
| | | Air permeability | sec/100 $cm^3$ | 205 | 210 | 175 | 155 |
| | Resin aggregates in separator | | Aggregates/1,000 $m^2$ | 3 | 4 | 1 | 30 |
| | F/MD characteristics | Fuse temperature | °C | 151 | 150 | 145 | 147 |
| | | Meltdown temperature | °C | >200 | >200 | >200 | >200 |
| Composite configuration | Thickness | | μm | 0.5 | 0.5 | 0.5 | 0.5 |
| | Thermoplastic Polymer | Type of coating resin | - | Acrylic resin | Acrylic resin | Acrylic resin | Acrylic resin |
| | | Coverage area ratio | % | 20 | 20 | 20 | 20 |
| | | Glass transition temperature | °C | -20 | -20 | -20 | -20 |
| Battery | Crosslinking | Method** | | V | V | I | I |
| | | Reaction/Bonding | | Coordinate bonding | Coordinate bonding | Siloxane condensation | Siloxane condensation |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | -OH | -OH | Silanol group | Silanol group |
| | | | B | -COOH | -COOH | - | - |
| | | Type of reaction | | - | - | - | - |
| | | Type of catalyst | | HF,$H_2O$ | HF,$H_2O$ | HF | HF |
| | | Type of molten metal | | $Ni^+$ | $Li^+$ | - | - |
| | | Additive**** | | - | - | - | - |
| | Capacity retention at 1,000 cycles of battery | | % | 90 | 89 | 84 | 85 |
| | Passing rate of nail penetration test after 1,000 cycles of battery | | % | 89 | 86 | 86 | 87 |

[Table 21]

| | | | | Example 2.21 | Example 2.22 | Example 2.23 | Example 2.24 |
|---|---|---|---|---|---|---|---|
| Substrate microporous membrane | Resin composition (% by weight) | UHMWPE (A) | | 99 | 10 | 99.7 | 0.03 |
| | | Modified PE or Copolymer (B)* | Silane-modified polyethylene | - | - | - | - |
| | | | -COOH-modified PE | - | - | - | - |
| | | | -Oxazoline-modified PE | - | - | - | - |
| | | | -Oxazoline, -OH-modified PE | - | - | - | - |
| | | | -OH-modified PE | 1 | 90 | 0.3 | 99.7 |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 11 | 11 | 11 | 11 |
| | | Porosity | % | 50 | 45 | 44 | 48 |
| | | Air permeability | sec/100 $cm^3$ | 153 | 187 | 184 | 199 |
| | Resin aggregates in separator | | Aggregates/1,000 $m^2$ | 2 | 38 | 11 | 203 |
| | F/MD characteristics | Fuse temperature | °C | 150 | 157 | 146 | 148 |
| | | Meltdown temperature | °C | >200 | >200 | >200 | >200 |
| Composite configuration | Thickness | | μm | 0.5 | 0.5 | 0.5 | 0.5 |
| | Thermoplastic Polymer | Type of coating resin | - | Acrylic resin | Acrylic resin | Acrylic resin | Acrylic resin |
| | | Coverage area ratio | % | 20 | 20 | 20 | 20 |
| | | Glass transition temperature | °C | -20 | -20 | -20 | -20 |
| Battery | Crosslinking | Method** | | IV | IV | IV | IV |
| | | Reaction/Bonding | | Nucleophilic addition | Nucleophilic addition | Nucleophilic addition | Nucleophilic addition |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | -OH | -OH | -OH | -OH |
| | | | B | - | - | - | - |
| | | Type of reaction | | - | - | - | - |
| | | Type of catalyst | | - | - | - | - |
| | | Type of molten metal | | - | - | - | - |
| | | Additive**** | | Diisocyanate | Diisocyanate | Diisocyanate | Diisocyanate |
| | Capacity retention at 1,000 cycles of battery | | % | 82 | 81 | 86 | 78 |
| | Passing rate of nail penetration test after 1,000 cycles of battery | | % | 81 | 90 | 73 | 88 |

[Table 22]

| | | | | Example 2.25 | Example 2.26 | Comparative Example 2.1 | Comparative Example 2.2 |
|---|---|---|---|---|---|---|---|
| Substrate microporous membrane | Resin composition (% by weight) | UHMWPE (A) | | 80 | 80 | 100 | 100 |
| | | Modified PE or copolymer (B)* | Silane-modified polyethylene | 20 | 20 | - | - |
| | | | -COOH-modified PE | - | - | - | - |
| | | | -Oxazoline-modified PE | - | - | - | - |
| | | | -Oxazoline, -OH-modified PE | - | - | - | - |
| | | | -OH-modified PE | - | - | - | - |
| | | | -OH, -NH-modified PE | - | - | - | - |
| | | | -OH, amine-modified PE | - | - | - | - |
| | Crosslinking | Method | | | | Electron beam irradiation | Electron beam irradiation |
| | | Timing | | | | After membrane formation to before battery assembly | After membrane formation to before battery assembly |
| | | Apparatus/Conditions | | | | EB apparatus/20 kGy | EB apparatus/120 kGy |
| | Separator basic physical properties | Membrane thickness | μm | 11 | 11 | 11 | 11 |
| | | Porosity | % | 51 | 52 | 51 | 48 |
| | | Air permeability | sec/100 $cm^3$ | 192 | 183 | 193 | 191 |
| | Resin aggregates in separator | | Aggregates/1,000 $m^2$ | 2 | 2 | 2 | 2 |
| | F/MD characteristics | Fuse temperature | °C | 141 | 142 | 158 | 183 |
| | | Meltdown temperature | °C | >200 | >200 | 158 | >200 |
| Composite configuration | Thickness | | μm | 0.5 | 0.5 | 0.5 | 0.5 |
| | Thermoplastic Polymer | Type of coating resin | - | Acrylic resin | Acrylic resin | Acrylic resin | Acrylic resin |
| | | Coverage area ratio | % | 3 | 95 | 20 | 20 |
| | | Glass transition temperature | °C | -20 | -20 | -20 | -20 |
| Battery | Crosslinking | Method** | | I | I | | |
| | | Reaction/Bonding | | Siloxane condensation | Siloxane condensation | | |
| | | Timing | | Contact with electrolyte solution Initial charge-discharge | Contact with electrolyte solution Initial charge-discharge | | |
| | | Functional group of microporous membrane | A | Silanol group | Silanol group | | |
| | | | B | - | - | | |
| | | Type of reaction | | - | - | | |
| | | Type of catalyst | | HF | HF | | |
| | | Type of molten metal | | - | 85 | | |
| | | Additive**** | | - | - | | |
| | Capacity retention at 1,000 cycles of battery | | % | 69 | 67 | 36 | 3 |
| | Passing rate of nail penetration test after 1,000 cycles of battery | | % | 72 | 82 | 2 | 38 |

[Table 23]

| | | | | Comparative Example 2.3 | Comparative Example 2.4 | Comparative Example 2.5 |
|---|---|---|---|---|---|---|
| Substrate microporous membrane | Resin composition (% by weight) | UHMWPE (A) | | 80 | 80 | 80 |
| | | Modified PE or Copolymer (B)* | Silane-modified polyethylene | 20 | 20 | 20 |
| | | | -COOH-modified PE | - | - | - |
| | | | -Oxazoline-modified PE | - | - | - |
| | | | -Oxazoline, -OH-modified PE | - | - | - |
| | | | -OH-modified PE | - | - | - |
| | | | -OH, -NH-modified PE | - | - | - |
| | | | -OH, amine-modified PE | - | - | - |
| | Crosslinking | Method | | | Tin-based siloxane is formed in extrusion step | Tin-based siloxane bonding in extraction step |
| | | Timing | | | Formation catalyst is added | Formation catalyst is added |
| | | Apparatus/Conditions | | | Moisture crosslinking after formation of separator | Crosslinking in extraction step |
| | Separator basic physical properties | Membrane thickness | µm | 11 | 11 | 11 |
| | | Porosity | % | 50 | 48 | 49 |
| | | Air permeability | sec/100 $cm^3$ | 180 | 148 | 182 |
| | Resin aggregates in separator | | Aggregates/1,000 $m^2$ | 2 | 1750 | 5 |
| | F/MD characteristics | Fuse temperature | °C | 141 | 143 | 142 |
| | | Meltdown temperature | °C | >200 | >200 | 160 |
| Composite configuration | Thickness | | µm | 0 | 0.5 | 0.5 |
| | Thermoplastic Polymer | Type of coating resin | - | None | Acrylic resin | Acrylic resin |
| | | Coverage area ratio | % | - | 20 | 20 |
| | | Glass transition temperature | °C | - | -20 | -20 |
| Battery | Crosslinking | Method** | | I | | |
| | | Reaction/Bonding | | Siloxane condensation | | |
| | | Timing | | Contact with electrolyte solution Initial charge-discharge | | |
| | | Functional group of microporous membrane | Silanol group | Silanol group | | |
| | | | B | - | | |
| | | Type of reaction | | - | | |
| | | Type of catalyst | | HF | | |
| | | Type of molten metal | | - | | |
| | | Additive**** | | - | | |
| | Capacity retention at 1,000 cycles of battery | | % | 17 | 8 | 11 |
| | Passing rate of nail penetration test after 1,000 cycles of battery | | % | 5 | 32 | 0 |

<<Example 3.1>>

<Fabrication of Polyolefin Microporous Membrane as Substrate>

To 79.2% by weight of a polyethylene homopolymer with a weight-average molecular weight of 730,000 (UHMWPE (A)), 19.8% by weight of silane-grafted polyethylene (PE (B)) having MFR of 0.40 g/min, obtained using a polyolefin with a viscosity-average molecular weight of 121,000 as a starting material and a modification reaction with trimethoxyalkoxide-substituted vinylsilane (the respective contents of resin compositions (A) and (B) thus being 0.8 and 0.2) and 1% by weight of pentaerythrityl-tetrakis-[3-(3,5-di-t-butyl-4-hydroxyphenyl)propionate] as an antioxidant was added, followed by dry blending using a tumbler blender to obtain a mixture. The obtained mixture was supplied to a

twin-screw extruder through a feeder in a nitrogen atmosphere. Also, liquid paraffin (kinematic viscosity at 37.78°C: 7.59 $\times 10^{-5}$ $m^2/s$) was injected into the extruder cylinder by a plunger pump.

The mixture was melt kneaded with liquid paraffin in an extruder, and adjusted with a feeder and pump so that the quantity ratio of liquid paraffin in the extruded polyolefin composition was 70% by weight (i.e., polymer concentration of 30% by weight). The melt kneading conditions were as follows: a preset temperature of 220°C, a screw rotational speed of 240 rpm and a discharge throughput of 18 kg/h.

The melt kneaded mixture was then extrusion cast through a T-die on a cooling roll controlled to a surface temperature of 25°C to obtain a gel sheet (sheet-shaped molded body) having a raw membrane thickness of 1,250 μm.

The sheet-shaped molded body was then simultaneously fed into a biaxial tenter stretching machine for biaxial stretching to obtain a stretched sheet. The stretching conditions were as follows: an MD factor of 7.0, a TD factor of 7.0 (i.e., a factor of 7.0 × 7.0) and a biaxial stretching temperature of 127°C.

The stretched gel sheet was then fed into a dichloromethane tank and thoroughly immersed in the dichloromethane for extraction removal of the liquid paraffin, and then dichloromethane was dried off to obtain a porous body.

The porous body to be subjected to heat setting (HS) was then fed to a TD tenter and HS was carried out at a heat setting temperature of 125°C and a stretch ratio of 2.0, and then relaxation was carried out to a factor of 1.9 in the TD direction.

<Disposition of Active Layer>

Alumina ($Al_2O_3$) particles as an inorganic filler and a coating resin (fluorine-based resin) of the type shown in Table 24 were prepared, and both materials were mixed at a ratio of the weight of the fluorine-based resin/weight of the inorganic filler, and then the mixture was mixed with cyanoethyl polyvinyl alcohol and acetone at a weight ratio of the mixture/cyanoethyl polyvinyl alcohol/acetone = 19.8/0.2/80, followed by uniformly dispersing to prepare a coating solution. Using a gravure coater, the coating solution was coated on one side of the polyolefin microporous membrane, and an active layer was formed in the thickness shown in Table 24 to obtain a composite separator.

The obtained composite separator was then cut at the edges and wound up as a mother roll with a width of 1,100 mm and a length of 5,000 m.

During the evaluation, the composite separator wound out from the mother roll was slit as necessary for use as the evaluation separator.

Various evaluations were carried out in accordance with the evaluation method for the evaluation separator and the battery. The evaluation results are shown in Table 24.

<<Examples 3.2 to 3.27, Comparative Examples 3.1 to 3.5>>

The same operation as in Example 3.1 was carried out, except for changing the conditions of the microporous membrane as the substrate, the composite configuration conditions, the presence or absence of crosslinking during the production of the microporous membrane, the presence or absence of crosslinking after assembly of the battery, etc., as shown in Tables 24 to 31, to obtain the separators and batteries shown in Tables 24 to 31. Various evaluations were carried out in accordance with the evaluation method for the evaluation of the obtained separators and batteries. The evaluation results are shown in Tables 24 to 31.

In Example 3.8B, an active layer having a thickness of 1.0 μm was disposed on both surfaces of the microporous membrane as a substrate to obtain a composite separator, exceptionally.

In Example 3.19, a positive electrode (LAC positive electrode) containing $Li(Al,Co)O_2$ layer as the positive electrode material was used in place of the positive electrode fabricated in aforementioned "a. Fabrication of Positive Electrode".

In Example 3.20, a nonaqueous electrolyte solution used was a nonaqueous electrolyte solution prepared by using the same constituent components as in the nonaqueous electrolyte solution prepared in aforementioned "c. Preparation of Nonaqueous Electrolyte Solution" so as to adjust the concentration of $LiPF_6$ to 5.0 mol/L.

In Comparative Examples 3.1 and 3.2, the obtained microporous membranes were used for electron beam crosslinking by irradiation at a prescribed dose before battery assembly. Various evaluations of the obtained electron beam-crosslinked microporous membranes and batteries were carried out by the evaluation methods mentioned above.

In Comparative Examples 3.4 and 3.5, in the fabrication of the microporous polyolefin membrane, a catalyst for forming a tin-based siloxane bond was added to the material to be extruded during the extrusion step, and moisture crosslinking after separator molding and crosslinking in the liquid paraffin extraction step were carried out.

[Table 24]

| | | | | Example 3.1 | Example 3.2 | Example 3.3 | Example 3.4 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | 20 | 20 | 20 | 20 |
| | | | -COOH-modified PE | - | - | - | - |
| | | | -Oxazoline-modified PE | - | - | - | - |
| | | | -Oxazoline, -OH-modified PE | - | - | - | - |
| | | | -OH-modified PE | - | - | - | - |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | µm | 10 | 10 | 10 | 10 |
| | | Porosity | % | 55 | 58 | 48 | 45 |
| | | Air permeability | sec/100 $cm^3$ | 155 | 201 | 80 | 75 |
| | Resin aggregates in separator | | Aggregates/1,000 $m^2$ | 2 | 3 | 3 | 2 |
| | F/MD characteristics | Fuse temperature | °C | 141 | 147 | 151 | 153 |
| | | Meltdown temperature | °C | >200 | >200 | >200 | >200 |
| Composite configuration | Thickness | | µm | 1 | 1 | 1 | 1 |
| | Composition of active layer | Type of coating resin | - | PVDF-HFP | PVDF-CTFE | PVDF-ETFE | PVDF |
| | | Ratio of weight of fluorine-based resin/weight of inorganic filler | - | 0.25 | 0.25 | 0.25 | 0.25 |
| Battery | Crosslinking | Method** | | I | I | I | I |
| | | Reaction/Bonding | | Siloxane condensation | Siloxane condensation | Siloxane condensation | Siloxane condensation |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | Silanol group | Silanol group | Silanol group | Silanol group |
| | | | B | - | - | - | - |
| | | Type of reaction | | - | - | - | - |
| | | Type of catalyst | | HF | HF | HF | HF |
| | | Type of molten metal | | - | - | - | - |
| | | Additive**** | | - | - | - | - |
| | Capacity retention at 1,000 cycles of battery | | % | 99 | 99 | 98 | 97 |
| | Passing rate in hot box test | | % | 98 | 97 | 97 | 95 |

[Table 25]

| | | | | Example 3.5 | Example 3.6 | Example 3.7 | Example 3.8A | Example 3.8B |
|---|---|---|---|---|---|---|---|---|
| Substrate microporous membrane | Resin composition (% by weight) | UHMWPE (A) | | 80 | 80 | 80 | 80 | 80 |
| | | Modified PE or copolymer (B)* | Silane-modified polyethylene | 20 | 20 | 20 | 20 | 20 |
| | | | -COOH-modified PE | - | - | - | - | - |
| | | | -Oxazoline-modified PE | - | - | - | - | - |
| | | | -Oxazoline, -OH-modified PE | - | - | - | - | - |
| | | | -OH-modified PE | - | - | - | - | - |
| | | | -OH, -NH-modified PE | - | - | - | - | - |
| | | | -OH, amine-modified PE | - | - | - | - | - |
| | Crosslinking | Method | | | | | | |
| | | Timing | | | | | | |
| | | Apparatus/Conditions | | | | | | |
| | Separator basic physical properties | Membrane thickness | μm | 10 | 10 | 10 | 10 | 10 |
| | | Porosity | % | 50 | 48 | 48 | 53 | 50 |
| | | Air permeability | sec/100 $cm^3$ | 130 | 105 | 120 | 121 | 152 |
| | Resin aggregates in separator | | Aggregates/1,000 $m^2$ | 4 | 2 | 2 | 3 | 3 |
| | F/MD characteristics | Fuse temperature | °C | 140 | 142 | 141 | 141 | 141 |
| | | Meltdown temperature | °C | >200 | >200 | >200 | >200 | >200 |
| Composite configuration | Thickness | | μm | 1 | 1 | 1 | 0.5 | 1.0 + 1.0 |
| | Composition of active layer | Type of coating resin | - | PVDF | PVDF-HFP | PVDF-HFP | PVDF-HFP | PVDF-HFP |
| | | Ratio of weight of fluorine-based resin/weight of inorganic filler | - | 0.25 | 0.06 | 3.9 | 0.25 | 0.25 |
| Battery | Crosslinking | Method** | | I | I | I | I | I |
| | | Reaction/Bonding | | Siloxane condensation | Siloxane condensation | Siloxane condensation | Siloxane condensation | Siloxane condensation |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | Silanol group | Silanol group | Silanol group | Silanol group | Silanol group |
| | | | B | - | - | - | - | - |
| | | Type of reaction | | - | - | - | - | - |
| | | Type of catalyst | | HF | HF | HF | HF | HF |
| | | Type of molten metal | | - | - | - | - | - |
| | | Additive**** | | - | - | - | - | - |
| | Capacity retention at 1,000 cycles of battery | | % | 98 | 95 | 94 | 96 | 96 |
| | Passing rate in hot box test | | % | 94 | 91 | 94 | 92 | 97 |

[Table 26]

| | | | | Example 3.9 | Example 3.10 | Example 3.11 | Example 3.12 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | 20 | - | - | - |
| | | | -COOH-modified PE | - | 20 | 10 | - |
| | | | -Oxazoline-modified PE | - | - | - | - |
| | | | -Oxazoline, -OH-modified PE | - | - | - | 20 |
| | | | -OH-modified PE | - | - | 10 | - |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 10 | 10 | 10 | 10 |
| | | Porosity | % | 52 | 55 | 58 | 54 |
| | | Air permeability | sec/100 $cm^3$ | 143 | 133 | 121 | 89 |
| | Resin aggregates in separator | | Aggregates/1,000 $m^2$ | 2 | 3 | 4 | 7 |
| | F/MD characteristics | Fuse temperature | °C | 142 | 143 | 144 | 143 |
| | | Meltdown temperature | °C | >200 | >200 | >200 | >200 |
| Composite configuration | Thickness | | μm | 5 | 1 | 1 | 1 |
| | Composition of active layer | Type of coating resin | - | PVDF-HFP | PVDF-HFP | PVDF-HFP | PVDF-HFP |
| | | Ratio of weight of fluorine-based resin/weight of inorganic filler | - | 0.25 | 0.25 | 0.25 | 0.25 |
| Battery | Crosslinking | Method** | | I | II | II | II |
| | | Reaction/Bonding | | Siloxane condensation | Esterification | Esterification | Amide bonding, Ether bonding |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | Silanol group | -OH | -OH | Oxazoline |
| | | | B | - | -COOH | -COOH | -OH |
| | | Type of reaction | | - | - | - | - |
| | | Type of catalyst | | HF | - | - | - |
| | | Type of molten metal | | - | - | - | - |
| | | Additive**** | | - | - | - | - |
| | Capacity retention at 1,000 cycles of battery | | % | 91 | 92 | 91 | 93 |
| | Passing rate in hot box test | | % | 95 | 91 | 92 | 89 |

[Table 27]

| | | | | Example 3.13 | Example 3.14 | Example 3.15 | Example 3.16 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | - | - | - | - |
| | | | -COOH-modified PE | - | - | - | - |
| | | | -Oxazoline-modified PE | 10 | - | - | - |
| | | | -Oxazoline, -OH-modified PE | - | - | - | - |
| | | | -OH-modified PE | 10 | 20 | - | - |
| | | | -OH, -NH-modified PE | - | - | 20 | - |
| | | | -OH, amine-modified PE | - | - | - | 20 |
| | Crosslinking | Method | | | | | |
| | | Timing | | | | | |
| | | Apparatus/Conditions | | | | | |
| | Separator basic physical properties | Membrane thickness | μm | 10 | 10 | 10 | 10 |
| | | Porosity | % | 51 | 56 | 48 | 56 |
| | | Air permeability | sec/100 $cm^3$ | 92 | 93 | 94 | 136 |
| | Resin aggregates in separator | | Aggregates/1,000 $m^2$ | 5 | 6 | 4 | 2 |
| | F/MD characteristics | Fuse temperature | °C | 151 | 148 | 149 | 149 |
| | | Meltdown temperature | °C | >200 | >200 | >200 | >200 |
| Composite configuration | Thickness | | μm | 1 | 1 | 1 | 1 |
| | Composition of active layer | Type of coating resin | - | PVDF-HFP | PVDF-HFP | PVDF-HFP | PVDF-HFP |
| | | Ratio of weight of fluorine-based resin/weight of inorganic filler | - | 0.25 | 0.25 | 0.25 | 0.25 |
| Battery | Crosslinking | Method** | | II | III | III | IV |
| | | Reaction/Bonding | | Amide bonding, Ether bonding | Chain-condensation -O-CO-O- | Chain condensation Tertiary amine | Nucleophilic substitution |
| | | Timing | | Contact with electrolyte solution Initial charge-discharge | Contact with electrolyte solution | Contact with electrolyte solution | Contact with electrolyte solution Initial charge-discharge |
| | | Functional group of microporous membrane | A | Oxazoline | -OH | -NH- | -NH2 |
| | | | B | -OH | - | - | - |
| | | Type of reaction | | - | EC*** | EC*** | - |
| | | Type of catalyst | | - | - | - | - |
| | | Type of molten metal | | - | - | - | - |
| | | Additive**** | | - | - | - | $BS(PEG)_5$ |
| | Capacity retention at 1,000 cycles of battery | | % | 88 | 91 | 87 | 89 |
| | Passing rate in hot box test | | % | 87 | 89 | 88 | 90 |

[Table 28]

| | | | | Example 3.17 | Example 3.18 | Example 3.19 | Example 3.20 |
|---|---|---|---|---|---|---|---|
| substrate microporous membrane | Resin composition (% by weight) | UHMWPE (A) | | 80 | 80 | 80 | 80 |
| | | Modified PE or copolymer (B)* | Silane-modified polyethylene | - | - | - | - |
| | | | -COOH-modified PE | - | - | 20 | 20 |
| | | | -Oxazoline-modified PE | - | - | - | - |
| | | | -Oxazoline, -OH-modified PE | - | - | - | - |
| | | | -OH-modified PE | 20 | 20 | - | - |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 10 | 10 | 10 | 10 |
| | | Porosity | % | 55 | 47 | 47 | 51 |
| | | Air permeability | sec/100 $cm^3$ | 154 | 156 | 155 | 210 |
| | Resin aggregates in separator | | Aggregates/1,000 $m^2$ | 7 | 5 | 3 | 5 |
| | F/MD characteristics | Fuse temperature | °C | 142 | 143 | 142 | 147 |
| | | Meltdown temperature | °C | >200 | >200 | >200 | >200 |
| Composite configuration | Thickness | | μm | 1 | 1 | 1 | 1 |
| | Composition of active layer | Type of coating resin | - | PVDF-HFP | PVDF-HFP | PVDF-HFP | PVDF-HFP |
| | | Ratio of weight of fluorine-based resin/weight of inorganic filler | - | 0.25 | 0.25 | 0.25 | 0.25 |
| Battery | Crosslinking | Method** | | IV | IV | V | V |
| | | Reaction/Bonding | | Nucleophilic addition | Epoxy ring-opening | Coordinate bonding | Coordinate bonding |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | -OH | -OH | -OH | -OH |
| | | | B | - | - | -COOH | -COOH |
| | | Type of reaction | | - | - | - | - |
| | | Type of catalyst | | - | - | HF, $H_2O$ | HF, $H_2O$ |
| | | Type of molten metal | | - | - | $Ni^+$ | $Li^+$ |
| | | Additive**** | | Diisocyanate | Diepoxy compound | - | - |
| | Capacity retention at 1,000 cycles of battery | | % | 90 | 90 | 92 | 87 |
| | Passing rate in hot box test | | % | 87 | 92 | 85 | 90 |

[Table 29]

| | | | | Example 3.21 | Example 3.22 | Example 3.23 | Example 3.24 |
|---|---|---|---|---|---|---|---|
| Substrate microporous membrane | Resin composition (% by weight) | UHMWPE (A) | | 99 | 1 | 99.7 | 0.03 |
| | | Modified PE or copolymer (B)* | Silane-modified polyethylene | 1 | 99 | 0.03 | 99.7 |
| | | | -COOH-modified PE | - | - | - | - |
| | | | -Oxazoline-modified PE | - | - | - | - |
| | | | -Oxazoline, -OH-modified PE | - | - | - | - |
| | | | -OH-modified PE | - | - | - | - |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 10 | 10 | 10 | 10 |
| | | Porosity | % | 52 | 52 | 54 | 52 |
| | | Air permeability | sec/100 $cm^3$ | 122 | 147 | 189 | 157 |
| | Resin aggregates in separator | | Aggregates/1,000 $m^2$ | 1 | 2 | 1 | 1 |
| | F/MD characteristics | Fuse temperature | °C | 145 | 150 | 145 | 158 |
| | | Meltdown temperature | °C | >200 | >200 | >200 | >200 |
| Composite configuration | Thickness | | μm | 1 | 1 | 1 | 1 |
| | Composition of active layer | Type of coating resin | - | PVDF-HFP | PVDF-HFP | PVDF-HFP | PVDF-HFP |
| | | Ratio of weight of fluorine-based resin/weight of inorganic filler | - | 0.25 | 0.25 | 0.25 | 0.25 |
| Battery | Crosslinking | Method** | | I | I | I | I |
| | | Reaction/Bonding | | Siloxane condensation | Siloxane condensation | Siloxane condensation | Siloxane condensation |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | Silanol group | Silanol group | Silanol group | Silanol group |
| | | | B | - | - | - | - |
| | | Type of reaction | | - | - | - | - |
| | | Type of catalyst | | HF | HF | HF | HF |
| | | Type of molten metal | | - | - | - | - |
| | | Additive**** | | - | - | - | - |
| | Capacity retention at 1,000 cycles of battery | | % | 87 | 85 | 72 | 65 |
| | Passing rate in hot box test | | % | 87 | 88 | 83 | 85 |

[Table 30]

| | | | | Example 3.25 | Example 3.26 | Example 3.27 |
|---|---|---|---|---|---|---|
| Substrate microporous membrane | Resin composition (% by weight) | UHMWPE (A) | | 80 | 80 | 80 |
| | | Modified PE or copolymer (B)* | Silane-modified polyethylene | 20 | 20 | 20 |
| | | | -COOH-modified PE | - | - | - |
| | | | -Oxazoline-modified PE | - | - | - |
| | | | -Oxazoline, -OH-modified PE | - | - | - |
| | | | -OH-modified PE | - | - | - |
| | | | -OH, -NH-modified PE | - | - | - |
| | | | -OH, amine-modified PE | - | - | - |
| | Crosslinking | Method | | | | |
| | | Timing | | | | |
| | | Apparatus/Conditions | | | | |
| | Separator basic physical properties | Membrane thickness | μm | 10 | 10 | 10 |
| | | Porosity | % | 58 | 51 | 52 |
| | | Air permeability | sec/100 $cm^3$ | 154 | 106 | 100 |
| | Resin aggregates in separator | | Aggregates/1,000 $m^2$ | 2 | 3 | 2 |
| | F/MD characteristics | Fuse temperature | °C | 140 | 143 | 141 |
| | | Meltdown temperature | °C | >200 | >200 | >200 |
| Composite configuration | Thickness | | μm | 1 | 1 | 8 |
| | Composition of active layer | Type of coating resin | - | PVDF-HFP | PVDF-HFP | PVDF-HFP |
| | | Ratio of weight of fluorine-based resin/weight of inorganic filler | - | 0.04 | 0.42 | 0.25 |
| Battery | Crosslinking | Method** | | I | I | I |
| | | Reaction/Bonding | | Siloxane condensation | Siloxane condensation | Siloxane condensation |
| | | Timing | | Contact with electrolyte solution Initial charge-discharge | Contact with electrolyte solution Initial charge-discharge | Contact with electrolyte solution Initial charge-discharge |
| | | Functional group of microporous membrane | A | Silanol group | Silanol group | Silanol group |
| | | | B | - | - | - |
| | | Type of reaction | | - | - | - |
| | | Type of catalyst | | HF | HF | HF |
| | | Type of molten metal | | - | - | - |
| | | Additive**** | | - | - | - |
| | Capacity retention at 1,000 cycles of battery | | % | 53 | 55 | 51 |
| | Passing rate in hot box test | | % | 72 | 67 | 64 |

[Table 31]

| | | | | Comparative Example 3.1 | Comparative Example 3.2 | Comparative Example 3.3 | Comparative Example 3.4 | Comparative Example 3.5 |
|---|---|---|---|---|---|---|---|---|
| Substrate microporous membrane | Resin composition (% by weight) | UHMWPE (A) | | 100 | 100 | 80 | 80 | 80 |
| | | Modified PE or copolymer (B)* | Silane-modified polyethylene | - | - | 20 | 20 | 20 |
| | | | -COOH-modified PE | - | - | - | - | - |
| | | | -Oxazoline-modified PE | - | - | - | - | - |
| | | | -Oxazoline, -OH-modified PE | - | - | - | - | - |
| | | | -OH-modified PE | - | - | - | - | - |
| | | | -OH, -NH-modified PE | - | - | - | - | - |
| | | | -OH, amine-modified PE | - | - | - | - | - |
| | Crosslinking | Method | | Electron beam irradiation | Electron beam irradiation | | Tin-based siloxane is formed in extrusion step | Tin-based siloxane bonding in extraction step |
| | | Timing | | After membrane formation to before battery assembly | After membrane formation to before battery assembly | | Formation catalyst is added | Formation catalyst is added |
| | | Apparatus/Conditions | | EB apparatus/20 kGy | EB apparatus/120 kGy | | Moisture crosslinking after formation of separator | Crosslinking in extraction step |
| | Separator basic physical properties | Membrane thickness | μm | 10 | 10 | 10 | 10 | 10 |
| | | Porosity | % | 53 | 53 | 54 | 55 | 51 |
| | | Air permeability | sec/100 $cm^3$ | 105 | 103 | 157 | 156 | 87 |
| | Resin aggregates in separator | | Aggregates/1,000 $m^2$ | 2 | 3 | 2 | 1812 | 6 |
| | F/MD characteristics | Fuse temperature | °C | 160 | 183 | 141 | 143 | 140 |
| | | Meltdown temperature | °C | 158 | >200 | >200 | >200 | 160 |
| Composite configuration | Thickness | | μm | 1 | 1 | 0 | 1 | 1 |
| | Composition of active layer | Type of coating resin | - | PVDF-HFP | PVDF-HFP | None | PVDF-HFP | PVDF-HFP |
| | | Ratio of weight of fluorine-based resin/weight of inorganic filler | - | 0.25 | 0.25 | - | 0.25 | 0.25 |
| Battery | Crosslinking | Method** | | | | I | | |
| | | Reaction/Bonding | | | | Siloxane condensation | | |
| | | Timing | | | | Contact with electrolyte solution Initial charge-discharge | | |
| | | Functional group of microporous membrane | A | | | Silanol group | | |
| | | | B | | | - | | |
| | | Type of reaction | | | | - | | |
| | | Type of catalyst | | | | HF | | |
| | | Type of molten metal | | | | - | | |
| | | Additive**** | | | | - | | |
| | Capacity retention at 1,000 cycles of battery | | % | 35 | 2 | 23 | 33 | 10 |
| | Passing rate in hot box test | | % | 0 | 5 | 0 | 0 | 0 |

<<Example 4.1>>

<Fabrication of Polyolefin Microporous Membrane as Substrate>

To 79.2% by weight of a polyethylene homopolymer with a weight-average molecular weight of 1,000,000 (UHMWPE (A)), 19.8% by weight of silane-grafted polyethylene (PE (B)) having MFR of 0.33 g/min, obtained using a polyolefin with a viscosity-average molecular weight of 120,000 as a starting material and a modification reaction with trimethoxyalkoxide-substituted vinylsilane (the respective contents of resin compositions (A) and (B) thus being 0.8 and 0.2) and 1% by weight of pentaerythrityl-tetrakis-[3-(3,5-di-t-butyl-4-hydroxyphenyl)propionate] as an antioxidant was added, followed by dry blending using a tumbler blender to obtain a mixture. The obtained mixture was supplied to a twin-screw extruder through a feeder in a nitrogen atmosphere. Also, liquid paraffin (kinematic viscosity at 37.78°C: 7.59 $\times 10^{-5}$ $m^2$ /s) was injected into the extruder cylinder by a plunger pump.

The mixture was melt kneaded with liquid paraffin in an extruder, and adjusted with a feeder and pump so that the quantity ratio of liquid paraffin in the extruded polyolefin composition was 70% by weight (i.e., polymer concentration of 30% by weight). The melt kneading conditions were as follows: a preset temperature of 220°C, a screw rotational speed of 240 rpm and a discharge throughput of 18 kg/h.

The melt kneaded mixture was then extrusion cast through a T-die on a cooling roll controlled to a surface temperature of 25°C to obtain a gel sheet (sheet-shaped molded body) having a raw membrane thickness of 1,300 μm.

The sheet-shaped molded body was then simultaneously fed into a biaxial tenter stretching machine for biaxial stretching to obtain a stretched sheet. The stretching conditions were as follows: an MD factor of 7.0, a TD factor of 7.0 (i.e., a factor of 7.0 × 7.0) and a biaxial stretching temperature of 128°C.

The stretched gel sheet was then fed into a dichloromethane tank and thoroughly immersed in the dichloromethane for extraction removal of the liquid paraffin, and then dichloromethane was dried off to obtain a porous body.

The porous body to be subjected to heat setting (HS) was fed to a TD tenter and HS was carried out at a heat setting temperature of 131°C and a stretch ratio of 2.0, and then relaxation was carried out to a factor of 1.7 in the TD direction.

<Stacking of Thermoplastic Porous Layer>

In the case of para-aromatic aramid

To 5,000 parts by weight of N-methyl-2-pyrrolidone (NMP)/calcium chloride solution (calcium chloride concentration =7.1% by weight), 150 parts by weight of p-phenylenediamine was added, followed by dissolving with stirring. Then, 273.94 parts by weight of terephthalic acid dichloride, followed by stirring and further a reaction for one hour to obtain a polyparaphenylene terephthalamide polymerization solution. 1,000 parts by weight of a polymerization solution, 3,000 parts by weight of NMP, and 143.4 parts by weight of alumina ($Al_2O_3$) particles were stirred and mixed, and then dispersed by a homogenizer to obtain a coating slurry. Using a drum-fixed bar coater, the coating solution was coated on one side of the polyolefin microporous membrane under the conditions of a clearance of 20 μm to 30 μm, and then dried at a temperature of about 70°C to obtain a composite separator.

The obtained composite separator was then cut at the edges and wound up as a mother roll with a width of 1,100 mm and a length of 5,000 m.

During the evaluation, the composite separator wound out from the mother roll was slit as necessary for use as the evaluation separator.

Various evaluations were carried out in accordance with the evaluation method for the evaluation separator and the battery. The evaluation results are shown in Table 32.

<<Examples 4.2 to 4.23, Comparative Examples 4.1 to 4.5>>

The same operation as in Example 4.1 was carried out, except for changing the conditions of the microporous membrane as the substrate, the composite configuration conditions, the presence or absence of crosslinking during the production of the microporous membrane, the presence or absence of crosslinking after assembly of the battery, etc., as shown in Tables 32 to 39, to obtain the separators and batteries shown in Tables 32 to 39. Various evaluations were carried out in accordance with the evaluation method for the evaluation of the obtained separators and batteries. The evaluation results are shown in Tables 32 to 39.

The stacking of the heat-resistant porous layer containing the meta-aromatic polyimide was carried out by the following method in place of the stacking method of Example 4.1.

<Stacking of Thermoplastic Porous Layer>

In the case of meta-aromatic aramid

A meta-aromatic polyamide was mixed with boehmite having a mean particle size of 0.6 μm with a weight ratio of 1:1, and then the mixture was mixed with a mixed solvent of dimethylacetamide (DMAc) and tripropylene glycol (TPG) (weight ratio = 1:1) so that the meta-aromatic polyamide concentration became 3% by weight to obtain a coating slurry. Using a Mayer bar coater, the coating slurry was coated on one side of the polyolefin microporous membrane under the conditions of a clearance of 20 μm to 30 μm to obtain a coated separator. The coated separator was immersed in a coagulation liquid having a weight ratio of water:DMAc:TPG = 2:1:1 and a temperature of 35°C, followed by water washing and further drying to obtain a composite separator.
In Example 4.5, a heat-resistant porous layer having a thickness of 3.5 μm was disposed on both surfaces of the microporous membrane as a substrate to obtain a composite separator, exceptionally.
In Example 4.16, a positive electrode (LAC positive electrode) containing $Li(Al,Co)O_2$ layer as the positive electrode material was used in place of the positive electrode fabricated in aforementioned "a. Fabrication of Positive Electrode".
In Example 4.17, a nonaqueous electrolyte solution used was a nonaqueous electrolyte solution prepared by using the same constituent components as in the nonaqueous electrolyte solution prepared in aforementioned "c. Preparation of Nonaqueous Electrolyte Solution" so as to adjust the concentration of $LiPF_6$ to 5.0 mol/L.
In Comparative Examples 4.1 and 4.2, the obtained polyolefin microporous membranes were used for electron beam crosslinking by irradiation at a prescribed dose before battery assembly. Various evaluations of the obtained electron beam-crosslinked microporous membranes and batteries were carried out by the evaluation methods mentioned above.
In Comparative Examples 4.4 and 4.5, in the fabrication of the polyolefin microporous polyolefin membrane, a catalyst for forming a tin-based siloxane bond was added to the material to be extruded during the extrusion step, and moisture crosslinking after separator molding and crosslinking in the liquid paraffin extraction step were carried out.

[Table 32]

| | | | | Example 4.1 | Example 4.2 | Example 4.3 | Example 4.4 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | 20 | 20 | 20 | 20 |
| | | | -COOH-modified PE | - | - | - | - |
| | | | -Oxazoline-modified PE | - | - | - | - |
| | | | -Oxazoline, -OH-modified PE | - | - | - | - |
| | | | -OH-modified PE | - | - | - | - |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 10 | 10 | 10 | 10 |
| | | Porosity | % | 50 | 55 | 54 | 57 |
| | | Air permeability | sec/100 $cm^3$ | 150 | 80 | 152 | 157 |
| | Resin aggregates in separator | | Aggregates/1,000 $m^2$ | 2 | 2 | 2 | 2 |
| | F/MD characteristics | Fuse temperature | °C | 141 | 141 | 141 | 141 |
| | | Meltdown temperature | °C | >200 | >200 | >200 | >200 |
| Composite configuration | Thickness | | μm | 4 | 4 | 4 | 4 |
| | Heat-resistant resin | Type of coating resin | - | Para-aromatic polyamide | Meta-aromatic polyamide | Para-aromatic polyamide | Para-aromatic polyamide e |
| | | Weight ratio of inorganic filler | % by weight | 50 | 50 | 32 | 85 |
| Battery | Crosslinking | Method** | | I | I | I | I |
| | | Reaction/Bonding | | Siloxane condensation | Siloxane condensation | Siloxane condensation | Siloxane condensation |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | Silanol group | Silanol group | Silanol group | Silanol group |
| | | | B | - | - | - | - |
| | | Type of reaction | | - | - | - | - |
| | | Type of catalyst | | HF | HF | HF | HF |
| | | Type of molten metal | | - | - | - | - |
| | | Additive**** | | - | - | - | - |
| | Capacity retention at 1,000 cycles of battery | | % | 99 | 98 | 90 | 91 |
| | Passing rate in impact test at 150°C | | % | 95 | 94 | 97 | 95 |

[Table 33]

| | | | | Example 4.5 | Example 4.6 | Example 4.7 | Example 4.8 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | 20 | 20 | - | - |
| | | | -COOH-modified PE | - | - | 20 | 10 |
| | | | -Oxazoline-modified PE | - | - | - | - |
| | | | -Oxazoline, -OH-modified PE | - | - | - | - |
| | | | -OH-modified PE | - | - | - | 10 |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 10 | 10 | 10 | 10 |
| | | Porosity | % | 45 | 55 | 48 | 45 |
| | | Air permeability | sec/100 cm$^3$ | 155 | 186 | 157 | 185 |
| | Resin aggregates in separator | | Aggregates/1,000 m$^2$ | 2 | 2 | 3 | 3 |
| | F/MD characteristics | Fuse temperature | °C | 141 | 141 | 142 | 142 |
| | | Meltdown temperature | °C | >200 | >200 | >200 | >200 |
| Composite configuration | Thickness | | μm | 3.5 + 3.5 | 8 | 4 | 4 |
| | Heat-resistant resin | Type of coating resin | - | Para-aromatic polyamide | Para-aromatic polyamide | Para-aromatic polyamide | Para-aromatic polyamide |
| | | Weight ratio of inorganic filler | % by weight | 50 | 50 | 50 | 50 |
| Battery | Crosslinking | Method** | | I | I | II | II |
| | | Reaction/Bonding | | Siloxane condensation | Siloxane condensation | Esterification | Esterification |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | Silanol group | Silanol group | -OH | -OH |
| | | | B | - | - | -COOH | -COOH |
| | | Type of reaction | | - | - | - | - |
| | | Type of catalyst | | HF | HF | - | - |
| | | Type of molten metal | | - | - | - | - |
| | | Additive**** | | - | - | - | - |
| | Capacity retention at 1,000 cycles of battery | | % | 93 | 91 | 90 | 92 |
| | Passing rate in impact test at 150°C | | % | 97 | 99 | 91 | 90 |

[Table 34]

| | | | | Example 4.9 | Example 4.10 | Example 4.11 | Example 4.12 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | - | - | - | - |
| | | | -COOH-modified PE | - | - | - | - |
| | | | -Oxazoline-modified PE | - | 10 | - | - |
| | | | -Oxazoline, -OH-modified PE | 20 | - | - | - |
| | | | -OH-modified PE | - | 10 | 20 | - |
| | | | -OH, -NH-modified PE | - | - | - | 20 |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 10 | 10 | 10 | 10 |
| | | Porosity | % | 51 | 56 | 52 | 46 |
| | | Air permeability | sec/100 $cm^3$ | 143 | 153 | 145 | 122 |
| | Resin aggregates in separator | | Aggregates/1,000 $m^2$ | 7 | 7 | 5 | 3 |
| | F/MD characteristics | Fuse temperature | °C | 143 | 143 | 143 | 144 |
| | | Meltdown temperature | °C | >200 | >200 | >200 | >200 |
| Composite configuration | Thickness | | μm | 4 | 4 | 4 | 4 |
| | Heat-resistant resin | Type of coating resin | - | Para-aromatic polyamide | Para-aromatic polyamide | Para-aromatic polyamide | Para-aromatic polyamide |
| | | Weight ratio of inorganic filler | % by weight | 50 | 50 | 50 | 50 |
| Battery | Crosslinking | Method** | | II | II | III | III |
| | | Reaction/Bonding | | Amide bonding, Ether bonding | Amide bonding, Ether bonding | Chain condensation -O-CO-O- | Chain condensation Tertiary amine |
| | | Timing | | Contact with electrolyte solution Initial charge-discharge | Contact with electrolyte solution Initial charge-discharge | Contact with electrolyte solution | contact with electrolyte solution |
| | | Functional group of microporous membrane | A | Oxazoline | Oxazoline | -OH | -NH- |
| | | | B | -OH | -OH | - | - |
| | | Type of reaction | | - | - | EC*** | EC*** |
| | | Type of catalyst | | - | - | - | - |
| | | Type of molten metal | | - | - | - | - |
| | | Additive**** | | - | - | - | - |
| | Capacity retention at 1,000 cycles of battery | | % | 93 | 90 | 93 | 88 |
| | Passing rate in impact test at 150°C | | % | 92 | 89 | 88 | 92 |

[Table 35]

| | | | | Example 4.13 | Example 4.14 | Example 4.15 | Example 4.16 |
|---|---|---|---|---|---|---|---|
| Substrate microporous membrane | Resin composition (% by weight) | UHMWPE (A) | | 80 | 80 | 80 | 80 |
| | | Modified PE or copolymer (B)* | Silane-modified polyethylene | - | - | - | - |
| | | | -COOH-modified PE | - | - | - | 20 |
| | | | -Oxazoline-modified PE | - | - | - | - |
| | | | -Oxazoline, -OH-modified PE | - | - | - | - |
| | | | -OH-modified PE | - | 20 | 20 | - |
| | | | -OH, -NH-modified PE | - | - | - | - |
| | | | -OH, amine-modified PE | 20 | - | - | - |
| | Crosslinking | Method | | | | | |
| | | Timing | | | | | |
| | | Apparatus/Conditions | | | | | |
| | Separator basic physical properties | Membrane thickness | μm | 10 | 10 | 10 | 10 |
| | | Porosity | % | 48 | 49 | 52 | 54 |
| | | Air permeability | sec/100 $cm^3$ | 174 | 172 | 145 | 102 |
| | Resin aggregates in separator | | Aggregates/1,000 $m^2$ | 2 | 5 | 2 | 3 |
| | F/MD characteristics | Fuse temperature | °C | 143 | 142 | 141 | 142 |
| | | Meltdown temperature | °C | >200 | >200 | >200 | >200 |
| Composite configuration | Thickness | | μm | 4 | 4 | 4 | 4 |
| | Heat-resistant resin | Type of coating resin | - | Para-aromatic polyamide | Para-aromatic polyamide | Para-aromatic polyamide | Para-aromatic polyamide |
| | | Weight ratio of inorganic filler | % by weight | 50 | 50 | 50 | 50 |
| Battery | Crosslinking | Method** | | IV | IV | IV | V |
| | | Reaction/Bonding | | Nucleophilic substitution | Nucleophilic addition | Epoxy ring-opening | Coordinate bonding |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | -NH2 | -OH | -OH | -OH |
| | | | B | - | - | - | -COOH |
| | | Type of reaction | | - | - | - | - |
| | | Type of catalyst | | - | - | - | HF, $H_2O$ |
| | | Type of molten metal | | - | - | - | $Al^{3+}$ |
| | | Additive**** | | $BS(PEG)_5$ | Diisocyanate | Diepoxy compound | - |
| | Capacity retention at 1,000 cycles of battery | | % | 94 | 93 | 90 | 95 |
| | Passing rate in impact test at 150°C | | % | 91 | 90 | 92 | 89 |

[Table 36]

| | | | | Example 4.17 | Example 4.18 | Example 4.19 | Example 4.20 |
|---|---|---|---|---|---|---|---|
| Substrate microporous membrane | Resin composition (% by weight) | UHMWPE (A) | | 80 | 99 | 99 | 99.7 |
| | | Modified PE or copolymer (B)* | Silane-modified polyethylene | - | 1 | - | 0.03 |
| | | | -COOH-modified PE | 20 | - | - | - |
| | | | -Oxazoline-modified PE | - | - | - | - |
| | | | -Oxazoline, -OH-modified PE | - | - | - | - |
| | | | -OH-modified PE | - | - | 1 | - |
| | | | -OH, -NH-modified PE | - | - | - | - |
| | | | -OH, amine-modified PE | - | - | - | - |
| | Crosslinking | Method | | | | | |
| | | Timing | | | | | |
| | | Apparatus/Conditions | | | | | |
| | Separator basic physical properties | Membrane thickness | μm | 10 | 10 | 10 | 10 |
| | | Porosity | % | 54 | 55 | 53 | 58 |
| | | Air permeability | sec/100 $cm^3$ | 184 | 157 | 112 | 135 |
| | Resin aggregates in separator | | Aggregates/1,000 $m^2$ | 4 | 1 | 2 | 1 |
| | F/MD characteristics | Fuse temperature | °C | 141 | 145 | 146 | 145 |
| | | Meltdown temperature | °C | >200 | >200 | >200 | >200 |
| Composite configuration | Thickness | | μm | 4 | 4 | 4 | 4 |
| | Heat-resistant resin | Type of coating resin | - | Para-aromatic polyamide | Para-aromatic polyamide | Para-aromatic polyamide | Para-aromatic polyamide |
| | | Weight ratio of inorganic filler | % by weight | 50 | 50 | 50 | 50 |
| Battery | Crosslinking | Method** | | V | I | IV | I |
| | | Reaction/Bonding | | Coordinate bonding | Siloxane condensation | Nucleophilic addition | Siloxane condensation |
| | | Timing | | Contact with electrolyte solution Initial charge-discharge | Contact with electrolyte solution Initial charge-discharge | Contact with electrolyte solution Initial charge-discharge | Contact with electrolyte solution Initial charge-discharge |
| | | Functional group of microporous membrane | A | -OH | Silanol group | -OH | Silanol group |
| | | | B | -COOH | - | - | - |
| | | Type of reaction | | - | - | - | - |
| | | Type of catalyst | | HF, $H_2O$ | HF | - | HF |
| | | Type of molten metal | | $Li^+$ | - | - | - |
| | | Additive**** | | - | - | Diisocyanate | - |
| | Capacity retention at 1,000 cycles of battery | | % | 91 | 93 | 91 | 85 |
| | Passing rate in impact test at 150°C | | % | 90 | 81 | 85 | 75 |

[Table 37]

| | | | | Example 4.21 | Example 4.22 | Example 4.23 |
|---|---|---|---|---|---|---|
| Substrate microporous membrane | Resin composition (% by weight) | UHMWPE (A) | | 0.03 | 80 | 80 |
| | | Modified PE or copolymer (B)* | Silane-modified polyethylene | 99.7 | 20 | 20 |
| | | | -COOH-modified PE | - | - | - |
| | | | -Oxazoline-modified PE | - | - | - |
| | | | -Oxazoline, -OH-modified PE | - | - | - |
| | | | -OH-modified PE | - | - | - |
| | | | -OH, -NH-modified PE | - | - | - |
| | | | -OH, amine-modified PE | - | - | - |
| | Crosslinking | Method | | | | |
| | | Timing | | | | |
| | | Apparatus/Conditions | | | | |
| | Separator basic physical properties | Membrane thickness | μm | 10 | 10 | 10 |
| | | Porosity | % | 46 | 48 | 52 |
| | | Air permeability | sec/100 $cm^3$ | 108 | 107 | 128 |
| | Resin aggregates in separator | | Aggregates/1,000 $m^2$ | 1 | 2 | 2 |
| | F/MD characteristics | Fuse temperature | °C | 145 | 141 | 141 |
| | | Meltdown temperature | °C | >200 | >200 | >200 |
| Composite configuration | Thickness | | μm | 4 | 4 | 4 |
| | Heat-resistant resin | Type of coating resin | - | Para-aromatic polyamide | Para-aromatic polyamide | Para-aromatic polyamide |
| | | Weight ratio of inorganic filler | % by weight | 50 | 20 | 95 |
| Battery | Crosslinking | Method** | | I | I | I |
| | | Reaction/Bonding | | Siloxane condensation | Siloxane condensation | Siloxane condensation |
| | | Timing | | Contact with electrolyte solution Initial charge-discharge | Contact with electrolyte solution Initial charge-discharge | Contact with electrolyte solution Initial charge-discharge |
| | | Functional group of microporous membrane | A | Silanol group | Silanol group | Silanol group |
| | | | B | - | - | - |
| | | Type of reaction | | - | - | - |
| | | Type of catalyst | | HF | HF | HF |
| | | Type of molten metal | | - | - | - |
| | | Additive**** | | - | - | - |
| | Capacity retention at 1,000 cycles of battery | | % | 83 | 61 | 65 |
| | Passing rate in impact test at 150°C | | % | 73 | 60 | 51 |

[Table 38]

| | | | | Comparative Example 4.1 | Comparative Example 4.2 | Comparative Example 4.3 |
|---|---|---|---|---|---|---|
| Substrate microporous membrane | Resin composition (% by weight) | UHMWPE (A) | | 100 | 100 | 80 |
| | | Modified PE or copolymer (B)* | Silane-modified polyethylene | - | - | 20 |
| | | | -COOH-modified PE | - | - | - |
| | | | -Oxazoline-modified PE | - | - | - |
| | | | -Oxazoline, -OH-modified PE | - | - | - |
| | | | -OH-modified PE | - | - | - |
| | | | -OH, -NH-modified PE | - | - | - |
| | | | -OH, amine-modified PE | - | - | - |
| | Crosslinking | Method | | Electron beam irradiation | Electron beam irradiation | |
| | | Timing | | After membrane formation to before battery assembly | After membrane formation to before battery assembly | |
| | | Apparatus/Conditions | | EB apparatus/20 kGy | EB apparatus/120 kGy | |
| | Separator basic physical properties | Membrane thickness | μm | 10 | 10 | 10 |
| | | Porosity | % | 52 | 54 | 52 |
| | | Air permeability | sec/100 $cm^3$ | 122 | 189 | 174 |
| | Resin aggregates in separator | | Aggregates/1,000 $m^2$ | 2 | 2 | 2 |
| | F/MD characteristics | Fuse temperature | °C | 155 | 182 | 141 |
| | | Meltdown temperature | °C | 158 | >200 | >200 |
| Composite configuration | Thickness | | μm | 4 | 4 | 0 |
| | Heat-resistant resin | Type of coating resin | - | Para-aromatic polyamide | Para-aromatic polyamide | None |
| | | Weight ratio of inorganic filler | % by weight | 50 | 50 | - |
| Battery | Crosslinking | Method** | | | | I |
| | | Reaction/Bonding | | | | Siloxane condensation |
| | | Timing | | | | Contact with electrolyte solution Initial charge-discharge |
| | | Functional group of microporous membrane | A | | | Silanol group |
| | | | B | | | - |
| | | Type of reaction | | | | - |
| | | Type of catalyst | | | | HF |
| | | Type of molten metal | | | | - |
| | | Additive**** | | | | - |
| | Capacity retention at 1,000 cycles of battery | | % | 8 | 5 | 10 |
| | Passing rate in impact test at 150°C | | % | 1 | 10 | 0 |

[Table 39]

| | | | | Comparative Example 4.4 | Comparative Example 4.5 |
|---|---|---|---|---|---|
| Substrate microporous membrane | Resin composition (% by weight) | UHMWPE (A) | | 80 | 80 |
| | | Modified PE or copolymer (B)* | Silane-modified polyethylene | 20 | 20 |
| | | | -COOH-modified PE | - | - |
| | | | -Oxazoline-modified PE | - | - |
| | | | -Oxazoline, -OH-modified PE | - | - |
| | | | -OH-modified PE | - | - |
| | | | -OH, -NH-modified PE | - | - |
| | | | -OH, amine-modified PE | - | - |
| | Crosslinking | Method | | Tin-based siloxane is formed in extrusion step | Tin-based siloxane bonding in extraction step |
| | | Timing | | Formation catalyst is added | Formation catalyst is added |
| | | Apparatus/Conditions | | Moisture crosslinking after formation of separator | Crosslinking in extraction step |
| | Separator basic physical properties | Membrane thickness | μm | 10 | 10 |
| | | Porosity | % | 53 | 54 |
| | | Air permeability | sec/100 $cm^3$ | 188 | 141 |
| | Resin aggregates in separator | | Aggregates/1,000 $m^2$ | 1750 | 5 |
| | F/MD characteristics | Fuse temperature | °C | 143 | 142 |
| | | Meltdown temperature | °C | >200 | 160 |
| Composite configuration | Thickness | | μm | 4 | 4 |
| | Heat-resistant resin | Type of coating resin | - | Para-aromatic polyamide | Para-aromatic polyamide |
| | | Weight ratio of inorganic filler | % by weight | 50 | 50 |
| Battery | Crosslinking | Method** | | | |
| | | Reaction/Bonding | | | |
| | | Timing | | | |
| | | Functional group of microporous membrane | A | | |
| | | | B | | |
| | | Type of reaction | | | |
| | | Type of catalyst | | | |
| | | Type of molten metal | | | |
| | | Additive**** | | | |
| | Capacity retention at 1,000 cycles of battery | | % | 83 | 3 |
| | Passing rate in impact test at 150°C | | % | 1 | 0 |

<Description of Abbreviations in Tables 15 to 39>

**[0466]** * "Silane-modified polyethylene" is a silane-modified polyethylene having a density of 0.95 g/$cm^3$ and the melt flow rate (MFR) at 190°C of 0.33 to 0.44 g/min, which is obtained by a modification reaction of trimethoxyalkoxide-substituted vinylsilane using a polyolefin having a viscosity-average molecular weight of 120,000 to 121,000 as a starting material.

All of "-COOH-modified PE", "-oxazoline-modified PE", "-oxazoline, -OH-modified PE", "-OH-modified PE", "-OH, -NH-modified PE" and "-OH, amine-modified PE" are modified PE obtained by aforementioned [Method for Producing Modified PE having Various Functional Groups other than Silane-Modified PE, and Copolymer].

* *

(I) condensation reaction of a plurality of the same functional groups,

(II) reaction between a plurality of different functional groups,
(III) chain condensation reaction between a functional group and the electrolyte solution,
(IV) reaction between a functional group and an additive, and
(V) reaction in which a plurality of the same functional groups crosslink via coordinate bonding with eluting metal ions.

* * * EC: Ethylene carbonate
* * * * $BS(PEG)_5$ : Both terminal succinimide, EO unit repetition number of 5

Diisocyanate: Compound in which both terminal isocyanates are linked to hexane unit via urethane bonding
Diepoxy compound: Compound in which both terminal epoxide group and butane unit are linked

INDUSTRIAL APPLICABILITY

The separator for an electricity storage device of the present disclosure can be used as a separator for an electricity storage device, and examples of the electricity storage device include a battery and a capacitor, of which a lithium ion secondary battery is preferable. The lithium ion secondary battery can be mounted on small electronic devices such as mobile phones and laptops, and electrically driven vehicles such as electric cars and electric motorcycles.

REFERENCE SIGNS LIST

1a: Non-crosslinked polyolefin substrate layer
1b: Crosslinked polyolefin substrate layer
2: Inorganic particle layer
3: Thermoplastic polymer layer
4: Stress
5: Buckling fracture of inorganic particle layer
6: Tensile fracture of substrate layer
7: Local short circuit
8: Pressure
9: Island structure
10: Separator
20: Fixing jig
30: Positive electrode
40: Negative electrode
100: Electricity storage device
d: Distance between island structures

ITEMS

[Item 1]

A separator for an electricity storage device, comprising at least each one of layer A containing a polyolefin, layer B containing inorganic particles, and layer C containing a thermoplastic polymer, wherein

the polyolefin contained in layer A has one or more types of functional groups, and
the functional groups comprise functional groups capable of undergoinga condensation reaction with each other in the electricity storage device to form a crosslinked structure by a siloxane bond.

[Item 2]

The separator for an electricity storage device according to item 1, wherein one or more island structures containing an alkali metal and/or an alkaline earth metal are detected when TOF-SIMS measurement is carried out on layer A over an area of 100 μm square, and the size of the island structure has a region of 9 $\mu m^2$ or more and 245 $\mu m^2$ or less.

[Item 3]

The separator for an electricity storage device according to item 2, wherein two or more island structures containing an alkali metal and/or an alkaline earth metal are present in the separator, and both a minimum value and a maximum value of a distance between weighted centers of gravity positions of each of the island structures are 6 μm or more and 135 μm or less.

[Item 4]

The separator for an electricity storage device according to item 2 or 3, wherein the island structure contains an alkaline earth metal, and the alkaline earth metal is calcium.

[Item 5]

The separator for an electricity storage device according to item 2 or 3, wherein the alkali metal and/or the alkaline earth metal is/are at least one selected from the group consisting of lithium, sodium, magnesium, potassium and strontium.

[Item 6]

The separator for an electricity storage device according to any one of items 1 to 4, wherein layer B is an inorganic porous layer containing inorganic particles and a resin binder.

[Item 7]

The separator for an electricity storage device according to item 6, wherein a glass transition temperature (Tg) of the resin binder is -50°C to 90°C.

[Item 8]

The separator for an electricity storage device according to any one of items 1 to 7, wherein the content of inorganic particles in layer B is 5% by weight to 99% by weight based on the total weight of layer B.

[Item 9]

The separator for an electricity storage device according to any one of items 1 to 8, wherein the inorganic particles are at least one selected from the group consisting of alumina, silica, titania, zirconia, magnesia, ceria, yttria, zinc oxide, iron oxide, silicon nitride, titanium nitride, boron nitride, silicon carbide, aluminum hydroxide oxide, talc, kaolinite, dickite, nakhlite, halloysite, pyrophyllite, montmorillonite, sericite, mica, amesite, bentonite, asbestos, zeolite, diatomaceous earth, silica sand and glass fiber.

[Item 10]

The separator for an electricity storage device according to any one of items 1 to 9, wherein the thermoplastic polymer contained in layer C includes (meth)acrylic acid ester or (meth)acrylic acid as a polymerization unit.

[Item 11]

The separator for an electricity storage device according to any one of items 1 to 10, wherein a ratio of an area in which layer C covers layer B is 5% to 98%.

[Item 12]

The separator for an electricity storage device according to any one of items 1 to 11, wherein the thermoplastic polymer contained in layer C contains at least one fluorine atom-containing vinyl compound selected from the group consisting of polyvinylidene fluoride-hexafluoropropylene (PVDF-HFP) and polyvinylidene fluoride-chlorotrifluoroethylene (PVDF-CTFE).

[Item 13]

The separator for an electricity storage device according to any one of items 1 to 12, wherein a thermal response index obtained when the separator for an electricity storage device is heated to 150°C at 2°C/min after immersion in an electrolyte solution is fitted to formula (1) using the least squares approximation method, the range of a rate is $3.5 \le rate \le 150$.
Mathematical Formula 1

$$\text{Formula (1)} \qquad \text{(Thermal Response Index)} = \frac{max}{1 + \exp\frac{T_0 - T}{rate}}$$

[Item 14]

The separator for an electricity storage device according to any one of items 1 to 13, wherein a thermal response index obtained when the separator for an electricity storage device is heated to 150°C at 2°C/min after immersion in an electrolyte solution is fitted to formula (1) using the least squares approximation method, the range of $T_0$ is $110 \le T_0 \le 150$ and the range of max is $0.1 \le max \le 30$.

[Item 15]

A separator for an electricity storage device, comprising a polyolefin microporous membrane as a substrate and a surface layer formed on at least one side of the microporous polyolefin membrane, wherein

a polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

[Item 16]

The separator for an electricity storage device according to item 15, comprising a polyolefin microporous membrane as a substrate and a thermoplastic polymer-containing layer formed on at least one side of the microporous polyolefin membrane, wherein

a polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

[Item 17]

The separator for an electricity storage device according to item 16, wherein a coverage area ratio of the thermoplastic polymer-containing layer to the substrate is 5% to 90%.

[Item 18]

The separator for an electricity storage device according to item 16 or 15, wherein the thermoplastic polymer contained in the thermoplastic polymer-containing layer includes a polymerization unit of (meth)acrylic acid ester or (meth)acrylic acid.

[Item 19]

The separator for an electricity storage device according to any one of items 16 to 18, wherein a glass transition temperature of the thermoplastic polymer contained in the thermoplastic polymer-containing layer is -40°C to 105°C.

[Item 20]

The separator for an electricity storage device according to item 15, comprising a polyolefin microporous membrane as a substrate and an active layer disposed on at least one side of the polyolefin microporous membrane, wherein

a polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

[Item 21]

The separator for an electricity storage device according to item 20, wherein the active layer contains at least one fluorine atom-containing vinyl compound selected from the group consisting of polyvinylidene fluoride-hexafluoropropylene (PVDF-HFP) and polyvinylidene fluoride-chlorotrifluoroethylene (PVDF-CTFE), and inorganic particles.

[Item 22]

The separator for an electricity storage device according to item 20 or 21, wherein a weight ratio of the fluorine atom-containing vinyl compound to the inorganic particles in the active layer (fluorine atom-containing vinyl compound/inorganic particles) is 5/95 to 80/20.

[Item 23]

The separator for an electricity storage device according to any one of items 20 to 22, wherein a weight-average molecular weight of the fluorine atom-containing vinyl compound is $0.6 \times 10^6$ to $2.5 \times 10^6$.

[Item 24]

The separator for an electricity storage device according to item 15, comprising a polyolefin microporous membrane as a substrate, and

a heat-resistant porous layer containing a heat-resistant resin, stacked on at least one side of the polyolefin microporous membrane, wherein
the polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

[Item 25]

The separator for an electricity storage device according to item 24, wherein the heat-resistant porous layer contains 30% by weight to 90% by weight of an inorganic filler having a mean particle size of 0.2 μm to 0.9 μm.

[Item 26]

The separator for an electricity storage device according to item 24 or 25, wherein the heat-resistant resin contains at least one selected from the group consisting of wholly aromatic polyamide, polyimide, polyamideimide, polysulfone, polyketone, polyether, polyether ketone, polyetherimide and cellulose.

[Item 27]

The separator for an electricity storage device according to any one of items 24 to 26, wherein the heat-resistant resin contains a para-aromatic polyamide and/or a meta-aromatic polyamide.

[Item 28]

The separator for an electricity storage device according to any one of items 16 to 27, wherein the chemical

substance is any of an electrolyte, an electrolyte solution, an electrode active material, an additive, or decomposition products thereof, which are contained in the polyolefin microporous membrane.

[Item 29]

The separator for an electricity storage device according to any one of items 16 to 28, wherein the crosslinked structure is an amorphous crosslinked structure in which the amorphous portion of the polyolefin is crosslinked.

[Item 30]

The separator for an electricity storage device according to item 28, wherein the amorphous portion is selectively crosslinked.

[Item 31]

The separator for an electricity storage device according to any one of items 16 to 30, wherein the polyolefin is a functional group-modified polyolefin, or a polyolefin copolymerized with a monomer having a functional group.

[Item 32]

The separator for an electricity storage device according to any one of items 16 to 31, wherein the crosslinked structure is formed by a reaction via any of covalent bonding, hydrogen bonding or coordinate bonding.

[Item 33]

The separator for an electricity storage device according to item 32, wherein the reaction via covalent bonding is at least one selected from the group consisting of the following reactions (I) to (IV):

(I) condensation reaction of a plurality of the same functional groups;
(II) reaction between a plurality of different functional groups;
(III) chain condensation reaction between a functional group and an electrolyte solution; and
(IV) reaction of a functional group with an additive.

[Item 34]

The separator for an electricity storage device according to item 33, wherein the reaction via coordinate bonding comprises the following reaction (V):
(V) reaction in which a plurality of the same functional groups crosslink via coordinate bonding with metal ions.

[Item 35]

The separator for an electricity storage device according to item 33, wherein the reactions (I) and/or (II) are catalytically accelerated by a chemical substance inside the electricity storage device.

[Item 36]

The separator for an electricity storage device according to item 33, wherein the reaction (I) is a condensation reaction of a plurality of silanol groups.

[Item 37]

The separator for an electricity storage device according to item 33, wherein the reaction (IV) is a nucleophilic substitution reaction, a nucleophilic addition reaction or a ring-opening reaction between a compound Rx constituting the separator for an electricity storage device and a compound Ry constituting the additive, the compound Rx has a functional group x, and the compound Ry includes a linking reaction unit $y_1$.

[Item 38]

The separator for an electricity storage device according to item 37, wherein

the reaction (IV) is a nucleophilic substitution reaction,
the functional group x of the compound Rx is at least one selected from the group consisting of -OH, -$NH_2$, -NH-, -COOH and -SH, and
the linking reaction unit $y_1$ of the compound Ry is at least two selected from the group consisting of $CH_3$ $SO_2$ -, $CF_3$ $SO_2$ -, $ArSO_2$ -, $CH_3$ $SO_3$ -, $CF_3$ $SO_3$ -, $ArSO_3$ -, and a monovalent group represented by the following formulas ($y_1$ -1) to ($y_1$ -6):

[Chemical Formula 1]

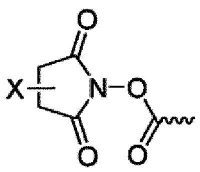

($y_1$ − 1)

wherein X is a hydrogen atom or a monovalent substituent;

[Chemical Formula 2]

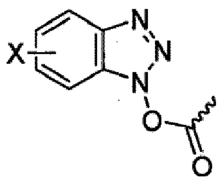

($y_1$ − 2)

wherein X is a hydrogen atom or a monovalent substituent;

[Chemical Formula 3]

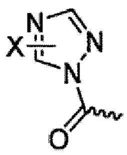

($y_1$ − 3)

wherein X is a hydrogen atom or a monovalent substituent;

[Chemical Formula 4]

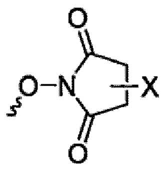

(y1-4)

wherein X is a hydrogen atom or a monovalent substituent;

[Chemical Formula 5]

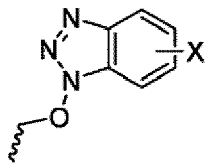

(y1-5)

wherein X is a hydrogen atom or a monovalent substituent; and

[Chemical Formula 6]

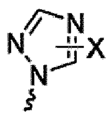

(y1-6)

wherein X is a hydrogen atom or a monovalent substituent.

[Item 39]

The separator for an electricity storage device according to item 37 or 38, wherein the reaction (IV) is a nucleophilic substitution reaction,

the compound Ry includes a straight-chain unit $y_2$ in addition to the linking reaction unit $y_1$, and
the straight-chain unit $y_2$ is at least one selected from the group consisting of divalent groups represented by the following formulas ($y_2$-1) to ($y_2$-6):

[Chemical Formula 7]

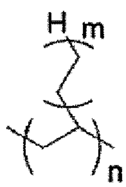

(y2-1)

wherein m is an integer of 0 to 20, and n is an integer of 1 to 20;

[Chemical Formula 8]

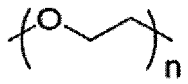

$(y_2-2)$

wherein n is an integer of 1 to 20;

[Chemical Formula 9]

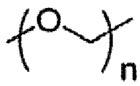

$(y_2-3)$

wherein n is an integer of 1 to 20;

[Chemical Formula 10]

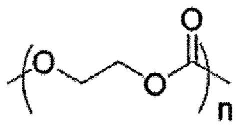

$(y_2-4)$

wherein n is an integer of 1 to 20;

[Chemical Formula 11]

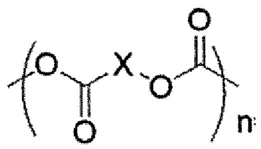

$(y_2-5)$

wherein X is an alkylene group having 1 to 20 carbon atoms or an arylene group, and n is an integer of 1 to 20; and

[Chemical Formula 12]

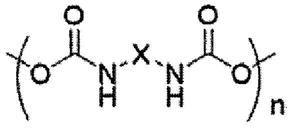

$(y_2-6)$

wherein X is an alkylene group having 1 to 20 carbon atoms or an arylene group, and n is an integer of 1 to 20.

[Item 40]

The separator for an electricity storage device according to item 37, wherein

the reaction (IV) is a nucleophilic addition reaction,
the functional group x of the compound Rx is at least one selected from the group consisting of -OH, $-NH_2$, -NH-,

-COOH and -SH, and

the linking reaction unit $y_1$ of the compound Ry is at least one selected from the group consisting of groups represented by the following formulas ($Ay_1$ -1) to ($Ay_1$ -6):

[Chemical Formula 13]

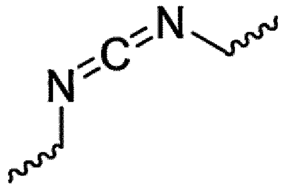

($Ay_1$－1)

[Chemical Formula 14]

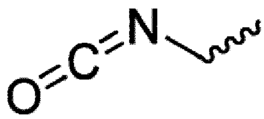

($Ay_1$－2)

[Chemical Formula 15]

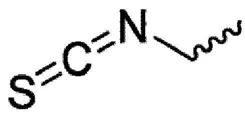

($Ay_1$－3)

[Chemical Formula 16]

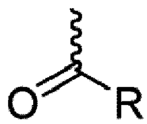

($Ay_1$－4)

wherein R is a hydrogen atom or a monovalent organic group;

[Chemical Formula 17]

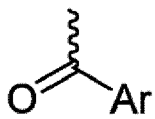

($Ay_1$－5)

[Chemical Formula 18]

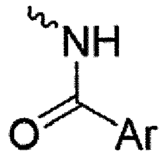

(Ay$_1$-6)

[Item 41]

The separator for an electricity storage device according to item 37, wherein

the reaction (IV) is a ring-opening reaction,
the functional group x of the compound Rx is at least one selected from the group consisting of -OH, $-NH_2$, -NH-, -COOH and -SH, and
the linking reaction unit $y_1$ of the compound Ry is at least two groups represented by the following formula (ROy$_1$-1):

[Chemical Formula 19]

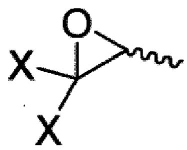

(ROy$_1$-1)

wherein a plurality of X are each independently a hydrogen atom or a monovalent substituent.

[Item 42]

The separator for an electricity storage device according to item 34, wherein, in the reaction (V), the metal ion is at least one selected from the group consisting of $Zn^{2+}$, $Mn^{2+}$, $Co^{3+}$, $Ni^{2+}$ and $Li^+$.

[Item 43]

The separator for an electricity storage device according to any one of items 1 to 42, wherein the polyolefin having the functional groups is not a master batch resin containing a dehydrating condensation catalyst which forms a crosslinked structure of the functional groups.

[Item 44]

An electricity storage device assembly kit, comprising:

(A) an exterior body housing a laminated body or a wound body of electrodes and the separator for an electricity storage device according to any one of items 1 to 43; and
(B) a container housing a nonaqueous electrolyte solution.

[Item 45]

An electricity storage device, comprising a positive electrode, a negative electrode, the separator for an electricity storage device according to any one of items 1 to 43, and a nonaqueous electrolyte solution.

[Item 46]

An electricity storage device, comprising a positive electrode, a negative electrode, the separator for an electricity

storage device according to any one of items 1 to 43, and a nonaqueous electrolyte solution, wherein the positive electrode is at least one selected from the group consisting of a nickel-manganese-cobalt (NMC)-based lithium-containing positive electrode, an olivine-type lithium iron phosphate (LFP)-based positive electrode, a lithium cobaltate (LCO) positive electrode, a nickel-cobalt-aluminum (NCA)-based lithium-containing positive electrode and a lithium manganate (LMO)-based positive electrode.

## Claims

**1.** A separator for an electricity storage device, comprising a polyolefin microporous membrane as a substrate and a surface layer formed on at least one side of the microporous polyolefin membrane, wherein

a polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

**2.** The separator for an electricity storage device according to claim 1, comprising a polyolefin microporous membrane as a substrate and a thermoplastic polymer-containing layer formed on at least one side of the microporous polyolefin membrane, wherein

a polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure.

**3.** The separator for an electricity storage device according to claim 2, wherein a coverage area ratio of the thermoplastic polymer-containing layer to the substrate is 5% to 90%.

**4.** The separator for an electricity storage device according to claim 2, wherein the thermoplastic polymer contained in the thermoplastic polymer-containing layer includes a polymerization unit of (meth)acrylic acid ester or (meth)acrylic acid.

**5.** The separator for an electricity storage device according to any one of claims 2 to 4, wherein a glass transition temperature of the thermoplastic polymer contained in the thermoplastic polymer-containing layer is -40°C to 105°C.

**6.** The separator for an electricity storage device according to claim 1, comprising a polyolefin microporous membrane as a substrate and an active layer disposed on at least one side of the polyolefin microporous membrane, wherein

a polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure;

preferably wherein the active layer contains at least one fluorine atom-containing vinyl compound selected from the group consisting of polyvinylidene fluoride-hexafluoropropylene (PVDF-HFP) and polyvinylidene fluoride-chlorotrifluoroethylene (PVDF-CTFE), and inorganic particles; and/or

wherein a weight ratio of the fluorine atom-containing vinyl compound to the inorganic particles in the active layer (fluorine atom-containing vinyl compound/inorganic particles) is 5/95 to 80/20; and/or
wherein a weight-average molecular weight of the fluorine atom-containing vinyl compound is $0.6 \times 10^6$ to $2.5 \times 10^6$.

**7.** The separator for an electricity storage device according to claim 1, comprising a polyolefin microporous membrane as a substrate, and

a heat-resistant porous layer containing a heat-resistant resin, stacked on at least one side of the polyolefin microporous membrane, wherein

the polyolefin contained in the polyolefin microporous membrane has one or more types of functional groups, and after housing in the electricity storage device, (1) the functional groups undergo a condensation reaction with each other, (2) the functional groups react with a chemical substance inside the electricity storage device, or (3) the functional groups react with other types of functional groups, to form a crosslinked structure;

preferably wherein the heat-resistant porous layer contains 30% by weight to 90% by weight of an inorganic filler having a mean particle size of 0.2 μm to 0.9 μm; and/or

wherein the heat-resistant resin contains at least one selected from the group consisting of wholly aromatic polyamide, polyimide, polyamideimide, polysulfone, polyketone, polyether, polyether ketone, polyetherimide and cellulose; and/or
wherein the heat-resistant resin contains a para-aromatic polyamide and/or a meta-aromatic polyamide.

**8.** The separator for an electricity storage device according to any one of claims 1 to 7, wherein the chemical substance is any of an electrolyte, an electrolyte solution, an electrode active material, an additive, or decomposition products thereof, which are contained in the polyolefin microporous membrane.

**9.** The separator for an electricity storage device according to any one of claims 1 to 8, wherein the crosslinked structure is an amorphous crosslinked structure in which the amorphous portion of the polyolefin is crosslinked; or wherein the amorphous portion is selectively crosslinked.

**10.** The separator for an electricity storage device according to any one of claims 1 to 9, wherein the polyolefin is a functional group-modified polyolefin, or a polyolefin copolymerized with a monomer having a functional group.

**11.** The separator for an electricity storage device according to any one of claims 1 to 10, wherein the crosslinked structure is formed by a reaction via any of covalent bonding, hydrogen bonding or coordinate bonding.

**12.** The separator for an electricity storage device according to claim 11, wherein the reaction via covalent bonding is at least one selected from the group consisting of the following reactions (I) to (IV):

(I) condensation reaction of a plurality of the same functional groups;
(II) reaction between a plurality of different functional groups;
(III) chain condensation reaction between a functional group and an electrolyte solution; and
(IV) reaction of a functional group with an additive;

preferably wherein

(a) the reaction via coordinate bonding comprises the following reaction (V):
(V) reaction in which a plurality of the same functional groups crosslink via coordinate bonding with metal ions, in particular wherein, in the reaction (V), the metal ion is at least one selected from the group consisting of $Zn^{2+}$, $Mn^{2+}$, $Co^{3+}$, $Ni^{2+}$ and $Li^{+}$; or
(b) the reactions (I) and/or (II) are catalytically accelerated by a chemical substance inside the electricity storage device; or
(c) the reaction (I) is a condensation reaction of a plurality of silanol groups; or
(d) the reaction (IV) is a nucleophilic substitution reaction, a nucleophilic addition reaction or a ring-opening reaction between a compound Rx constituting the separator for an electricity storage device and a compound Ry constituting the additive, the compound Rx has a functional group x, and the compound Ry includes a linking reaction unit $y_1$.

**13.** The separator for an electricity storage device according to claim 12, alternative (d), wherein

the reaction (IV) is a nucleophilic substitution reaction,
the functional group x of the compound Rx is at least one selected from the group consisting of -OH, $-NH_2$, -NH-, -COOH and -SH, and
the linking reaction unit $y_1$ of the compound Ry is at least two selected from the group consisting of $CH_3SO_2$-, $CF_3SO_2$-, $ArSO_2$-, $CH_3SO_3$-, $CF_3SO_3$-, ArSOs-, and a monovalent group represented by the following formulas (yi-1) to (yi-6):

[Chemical Formula 1]

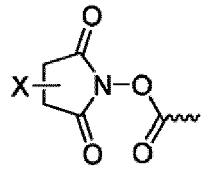

(y1-1)

wherein X is a hydrogen atom or a monovalent substituent;

[Chemical Formula 2]

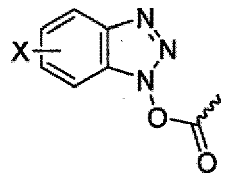

(y1-2)

wherein X is a hydrogen atom or a monovalent substituent;

[Chemical Formula 3]

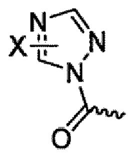

(y1-3)

wherein X is a hydrogen atom or a monovalent substituent;

[Chemical Formula 4]

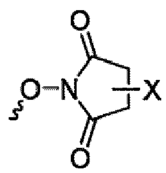

(y1-4)

wherein X is a hydrogen atom or a monovalent substituent;

[Chemical Formula 5]

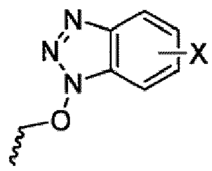

(y1-5)

wherein X is a hydrogen atom or a monovalent substituent; and

[Chemical Formula 6]

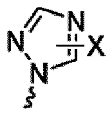

(y1-6)

wherein X is a hydrogen atom or a monovalent substituent.

**14.** The separator for an electricity storage device according to claim 12, alternative (d) or 13, wherein the reaction (IV) is a nucleophilic substitution reaction,

the compound Ry includes a straight-chain unit $y_2$ in addition to the linking reaction unit $y_1$, and the straight-chain unit $y_2$ is at least one selected from the group consisting of divalent groups represented by the following formulas ($y_2$-1) to ($y_2$-6):

[Chemical Formula 7]

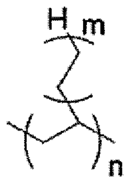

(y2-1)

wherein m is an integer of 0 to 20, and n is an integer of 1 to 20;

[Chemical Formula 8]

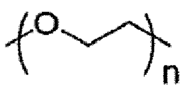

(y2-2)

wherein n is an integer of 1 to 20;

[Chemical Formula 9]

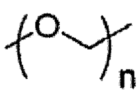

(y2-3)

wherein n is an integer of 1 to 20;

[Chemical Formula 10]

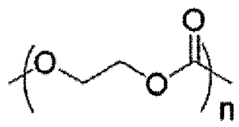

($y_2$−4)

wherein n is an integer of 1 to 20;

[Chemical Formula 11]

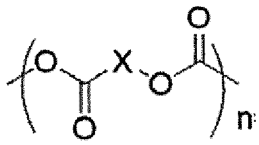

($y_2$−5)

wherein X is an alkylene group having 1 to 20 carbon atoms or an arylene group, and n is an integer of 1 to 20; and

[Chemical Formula 12]

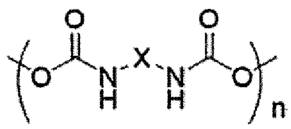

($y_2$−6)

wherein X is an alkylene group having 1 to 20 carbon atoms or an arylene group, and n is an integer of 1 to 20.

**15.** The separator for an electricity storage device according to claim 12, alternative (d), wherein

the reaction (IV) is a nucleophilic addition reaction,
the functional group x of the compound Rx is at least one selected from the group consisting of -OH, $-NH_2$, -NH-, -COOH and -SH, and
the linking reaction unit $y_1$ of the compound Ry is at least one selected from the group consisting of groups represented by the following formulas (Ayi-1) to (Ayi-6):

[Chemical Formula 13]

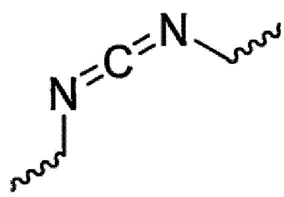

(A$y_1$−1)

[Chemical Formula 14]

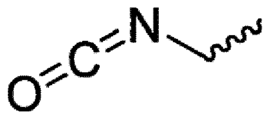

(Ay$_1$-2)

[Chemical Formula 15]

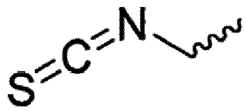

(Ay$_1$-3)

[Chemical Formula 16]

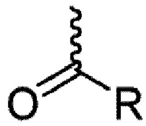

(Ay$_1$-4)

wherein R is a hydrogen atom or a monovalent organic group;

[Chemical Formula 17]

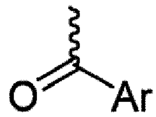

(Ay$_1$-5)

[Chemical Formula 18]

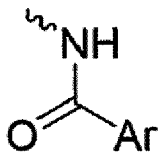

(Ay$_1$-6)

; or wherein

the reaction (IV) is a ring-opening reaction,
the functional group x of the compound Rx is at least one selected from the group consisting of -OH, $-NH_2$, -NH-, -COOH and -SH, and
the linking reaction unit $y_1$ of the compound Ry is at least two groups represented by the following formula (ROyi-1):

[Chemical Formula 19]

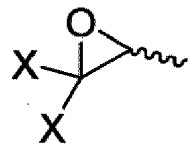

(RO$y_1$−1)

wherein a plurality of X are each independently a hydrogen atom or a monovalent substituent.

**16.** The separator for an electricity storage device according to any one of claims 1 to 15 wherein the polyolefin having the functional groups is not a master batch resin containing a dehydrating condensation catalyst which forms a crosslinked structure of the functional groups.

**17.** An electricity storage device assembly kit, comprising:

(A) an exterior body housing a laminated body or a wound body of electrodes and the separator for an electricity storage device according to any one of claims 1 to 16; and
(B) a container housing a nonaqueous electrolyte solution.

**18.** An electricity storage device, comprising a positive electrode, a negative electrode, the separator for an electricity storage device according to any one of claims 1 to 16, and a nonaqueous electrolyte solution;
preferably wherein the positive electrode is at least one selected from the group consisting of a nickel-manganese-cobalt (NMC)-based lithium-containing positive electrode, an olivine-type lithium iron phosphate (LFP)-based positive electrode, a lithium cobaltate (LCO) positive electrode, a nickel-cobalt-aluminum (NCA)-based lithium-containing positive electrode and a lithium manganate (LMO)-based positive electrode.

FIG. 1

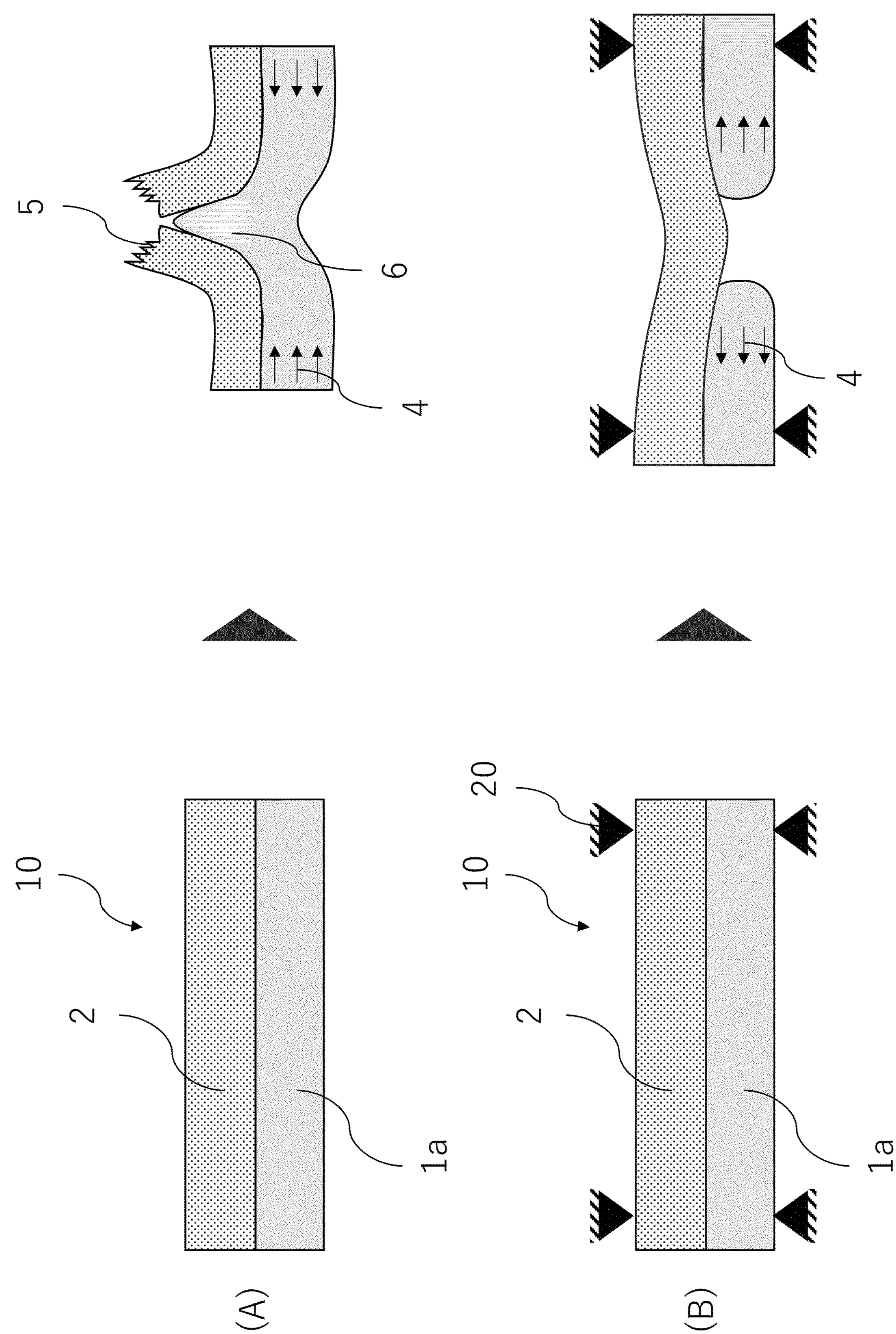

FIG. 2

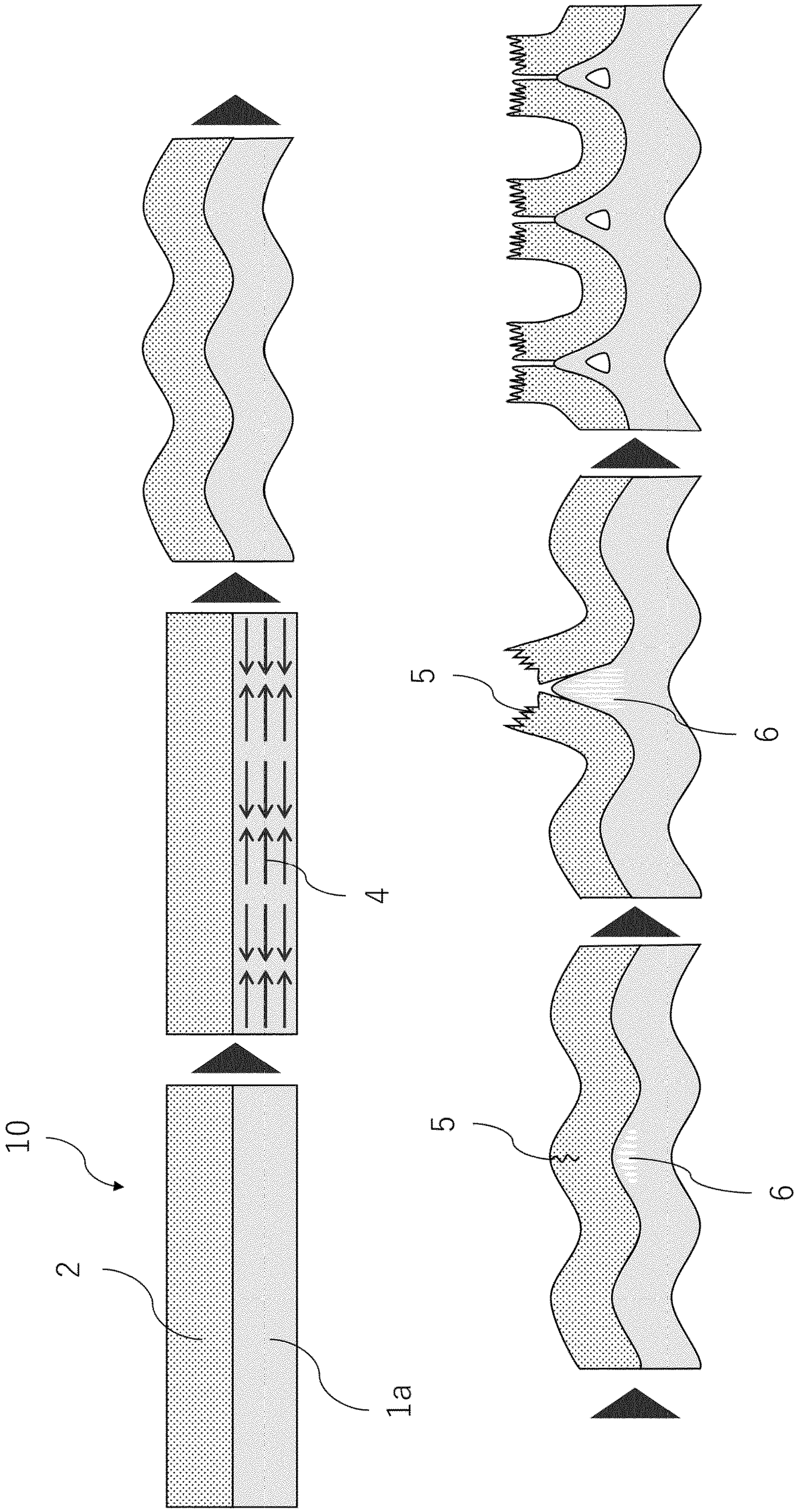

FIG. 3

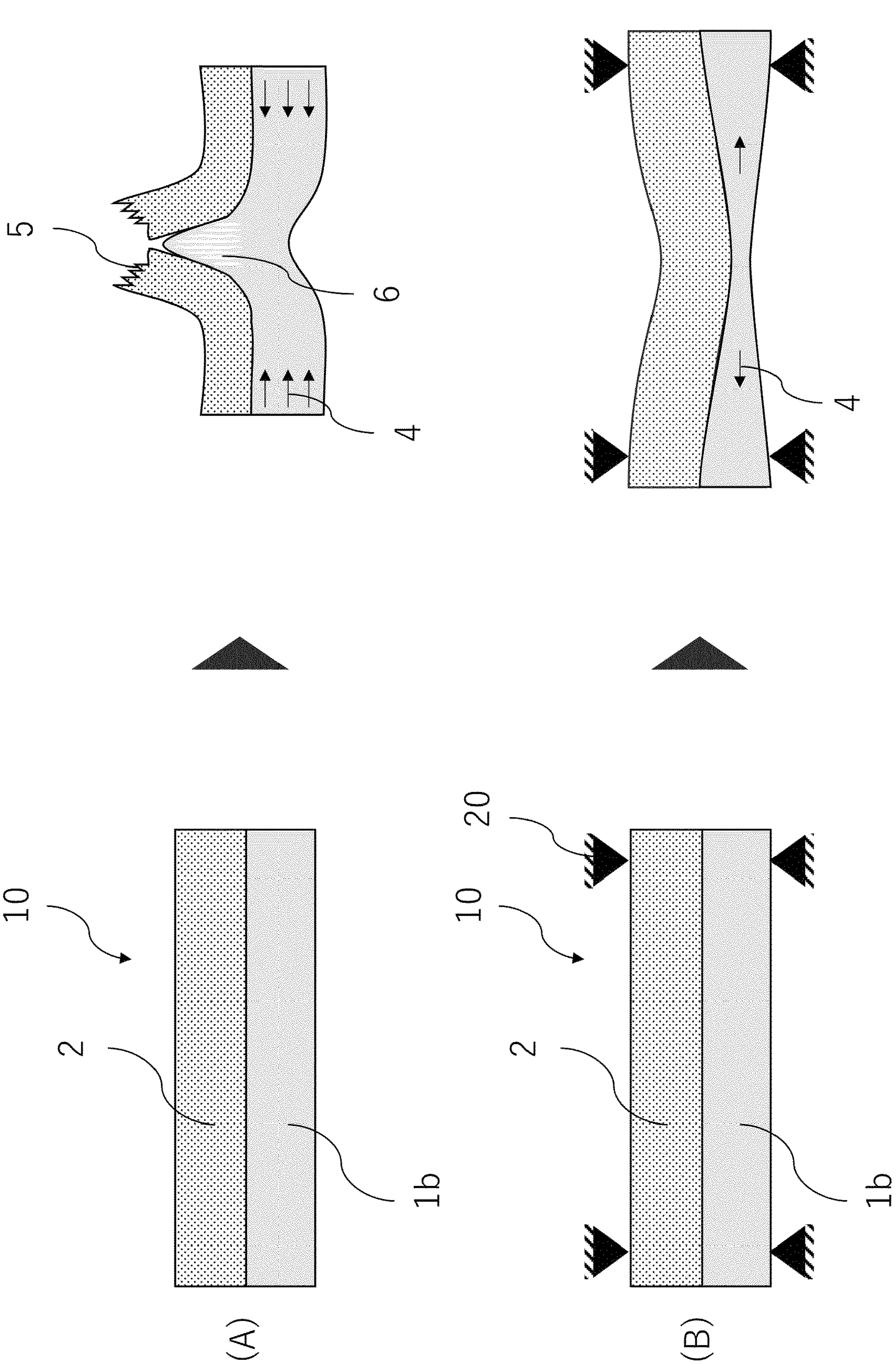

FIG. 4

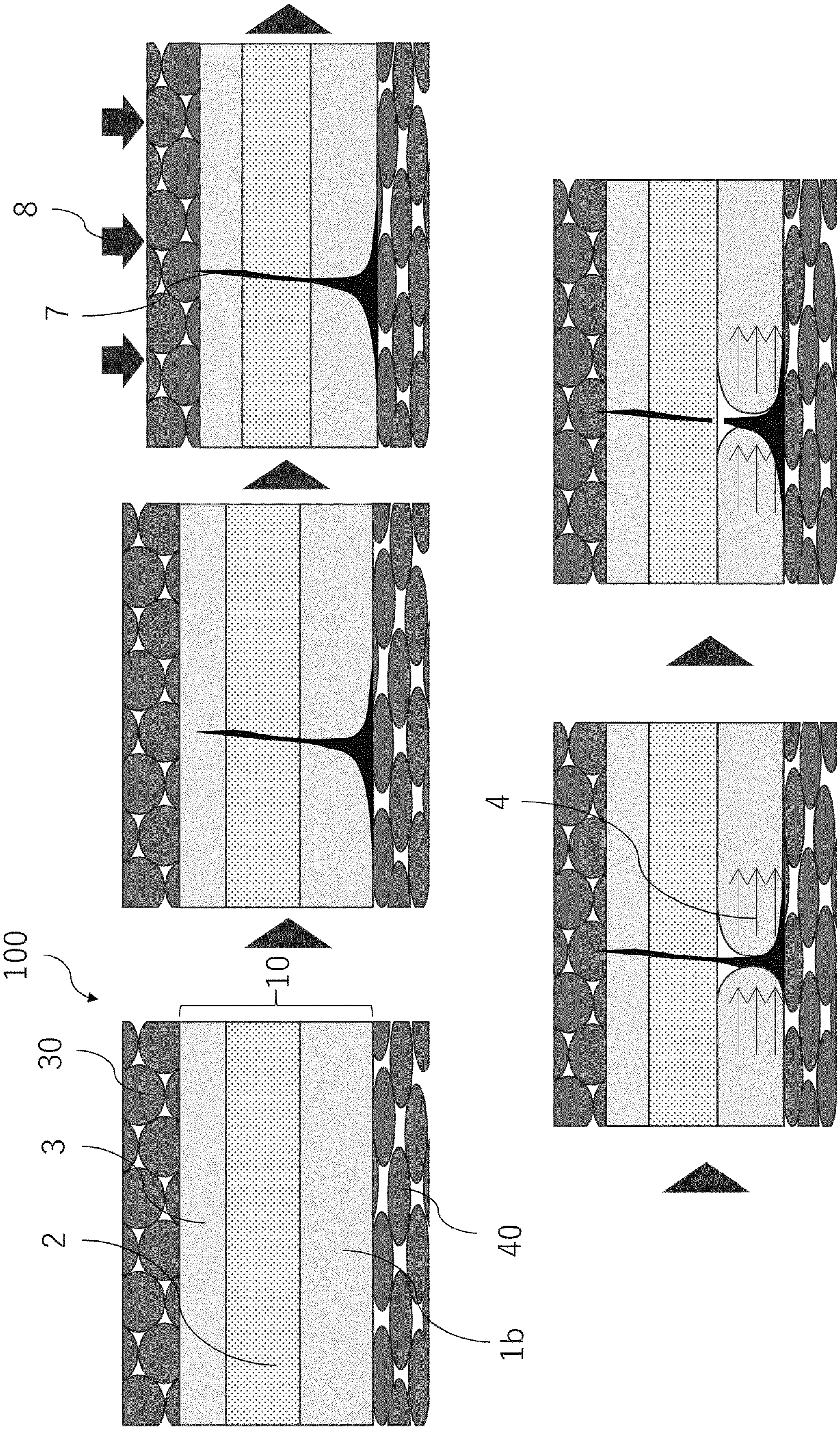

FIG. 5

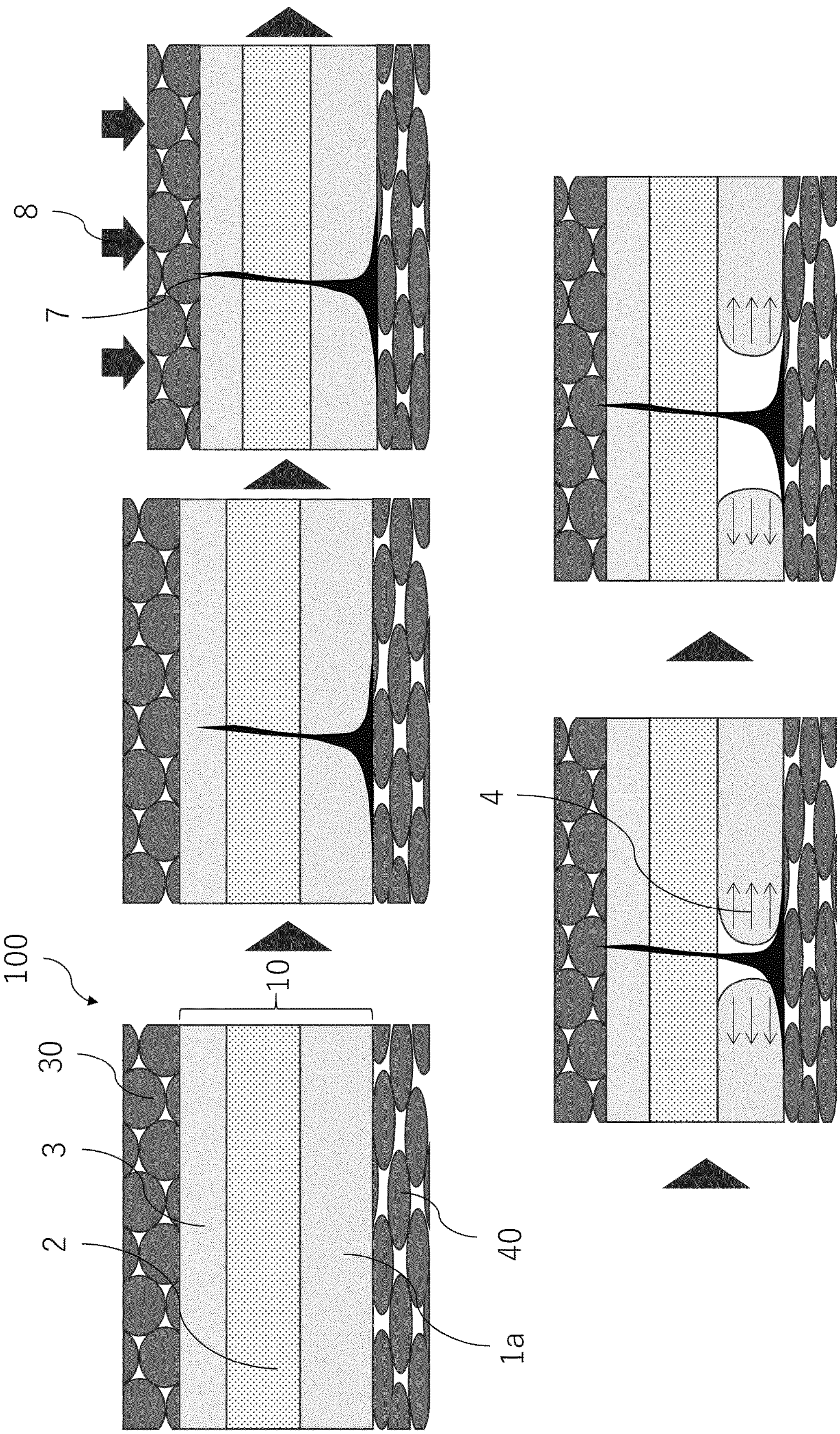

FIG. 6

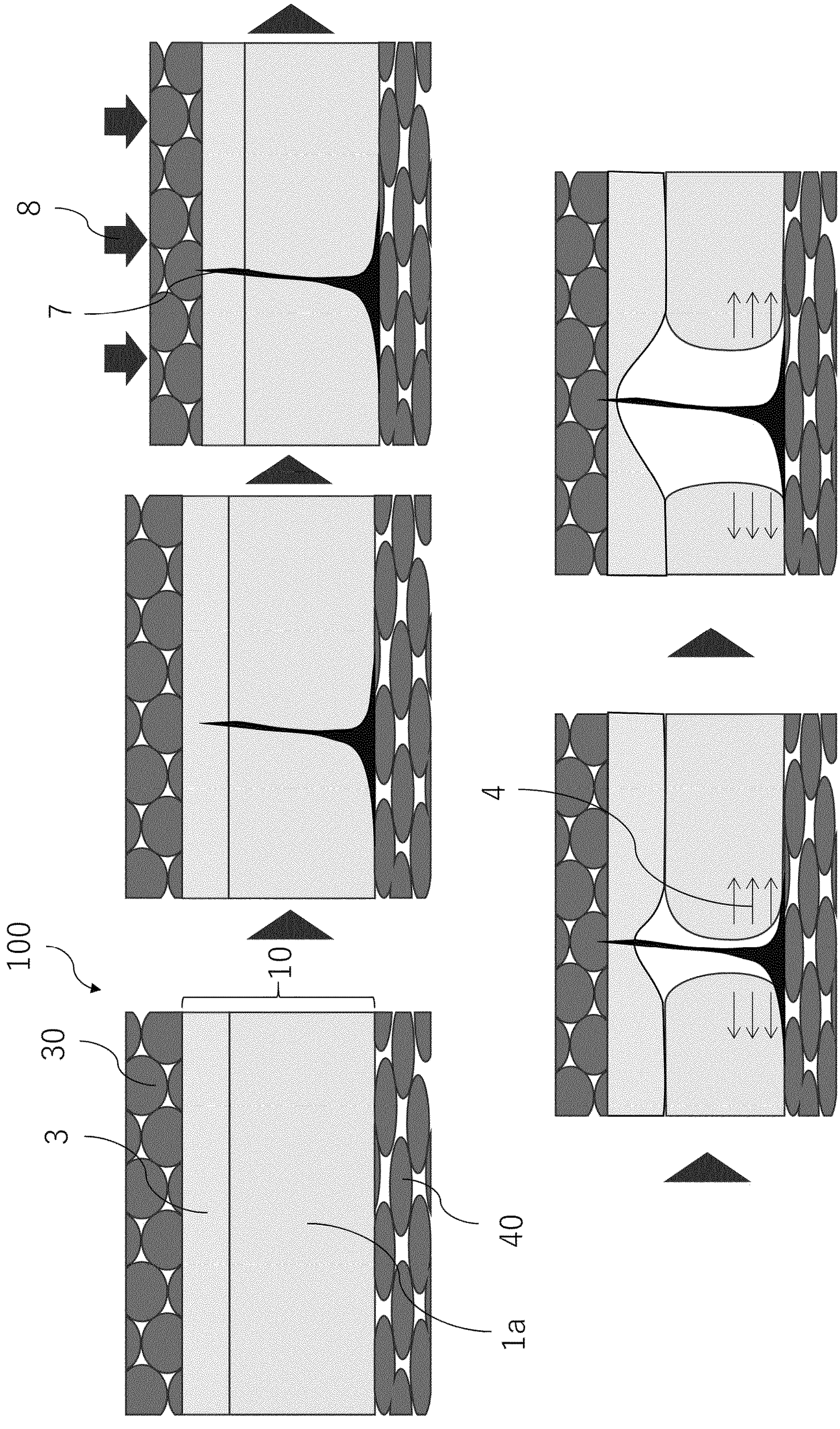

FIG. 7

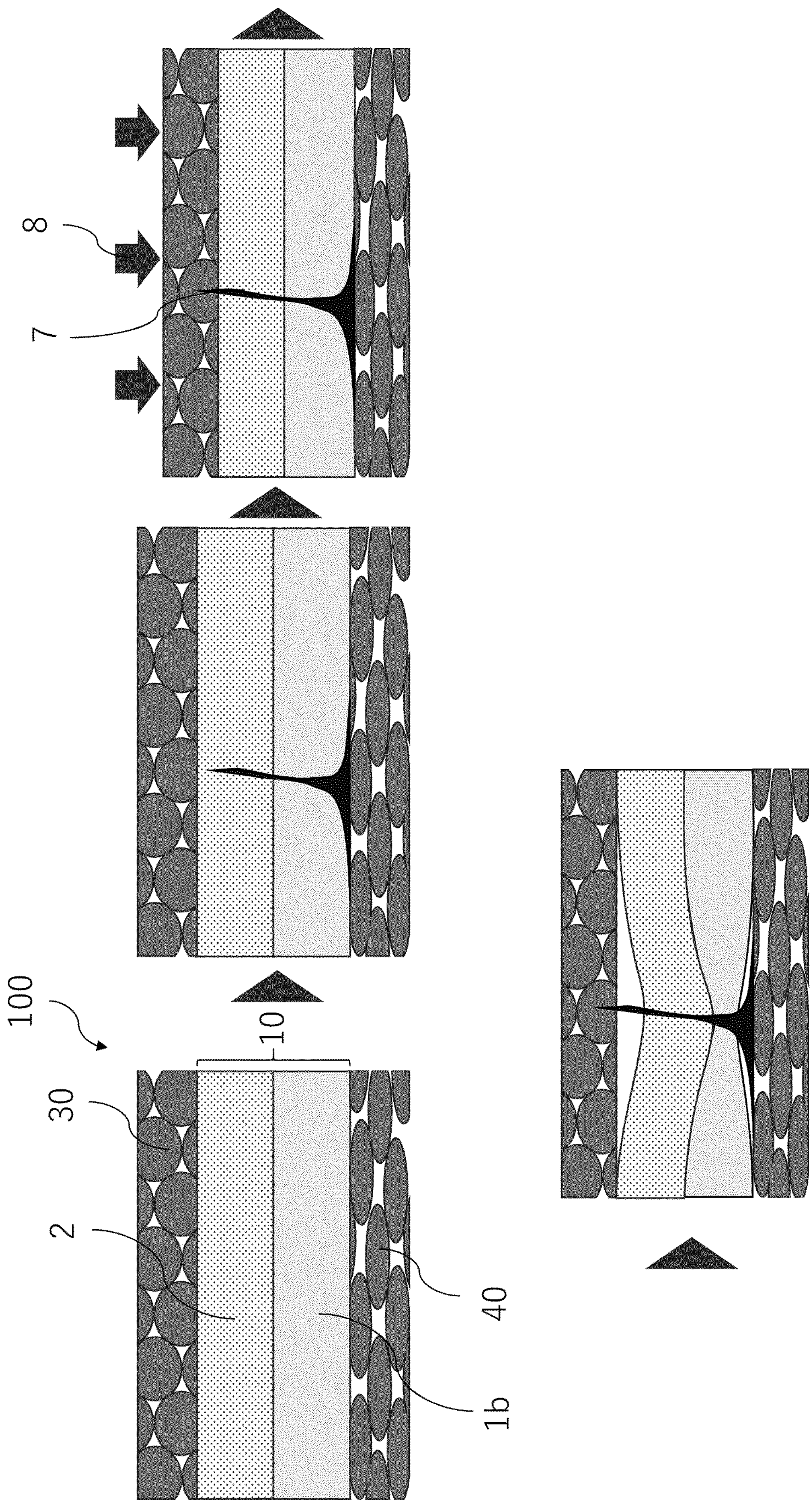

FIG. 8

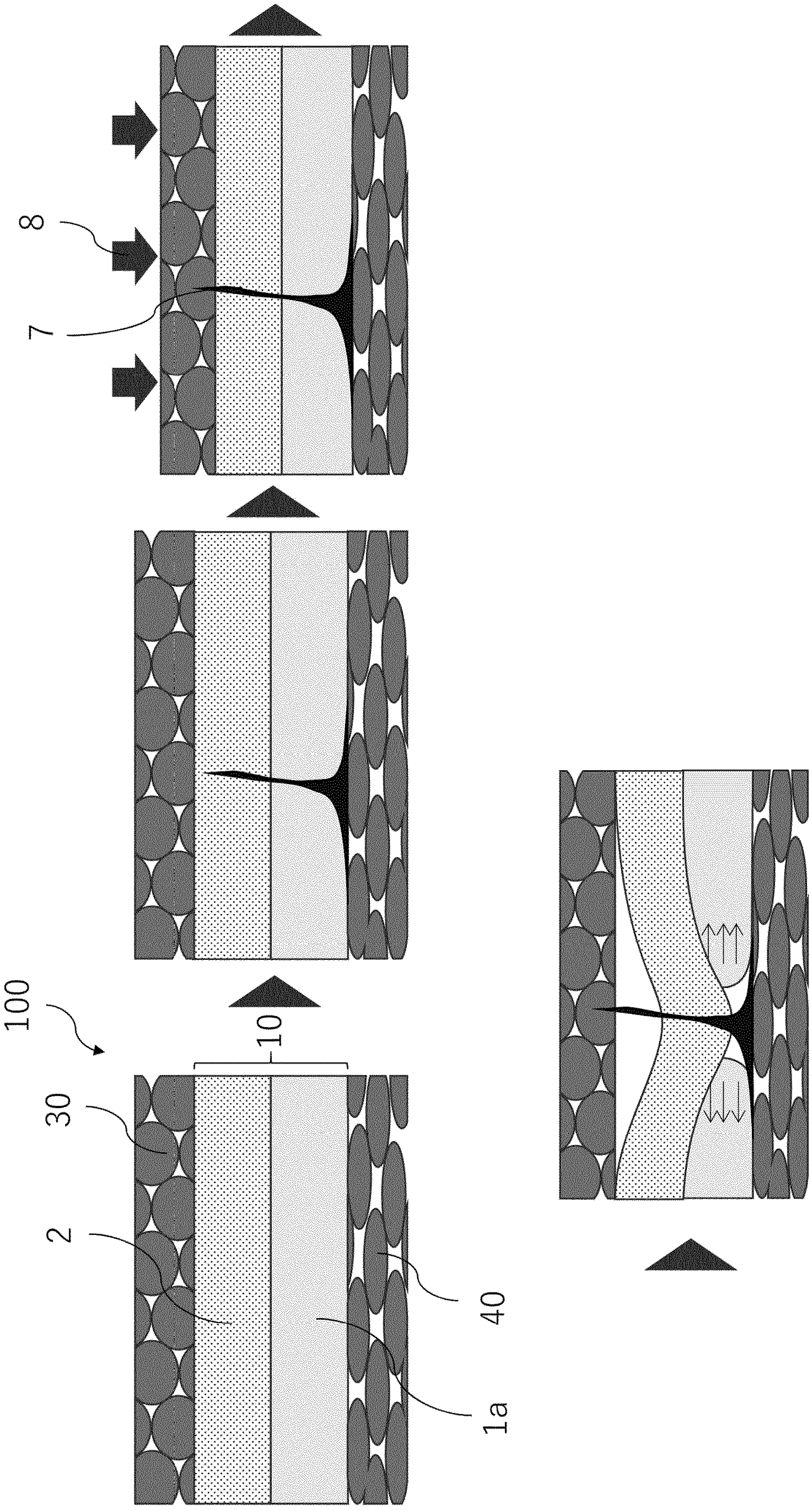

FIG. 9

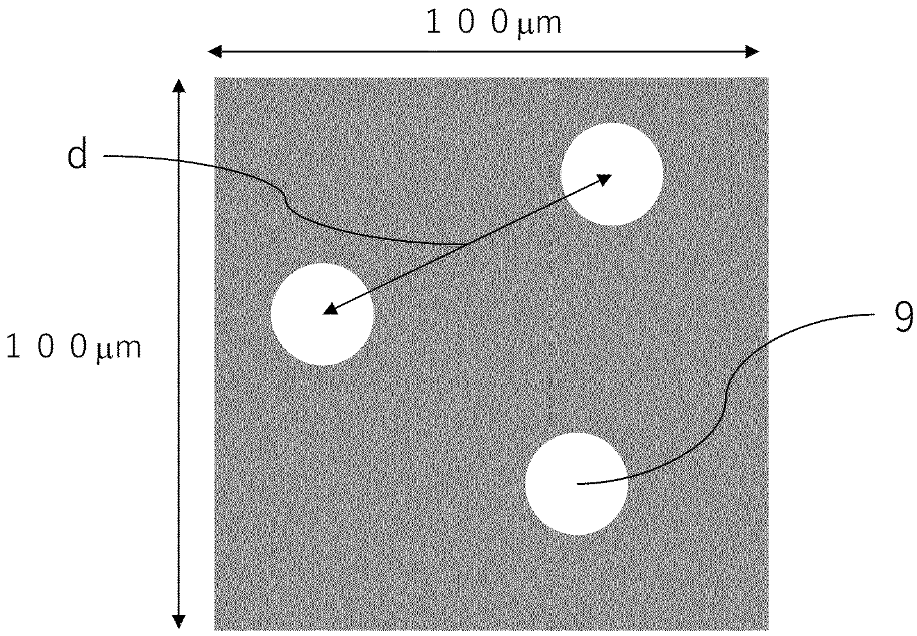
100μm
d
9
100μm

FIG. 10

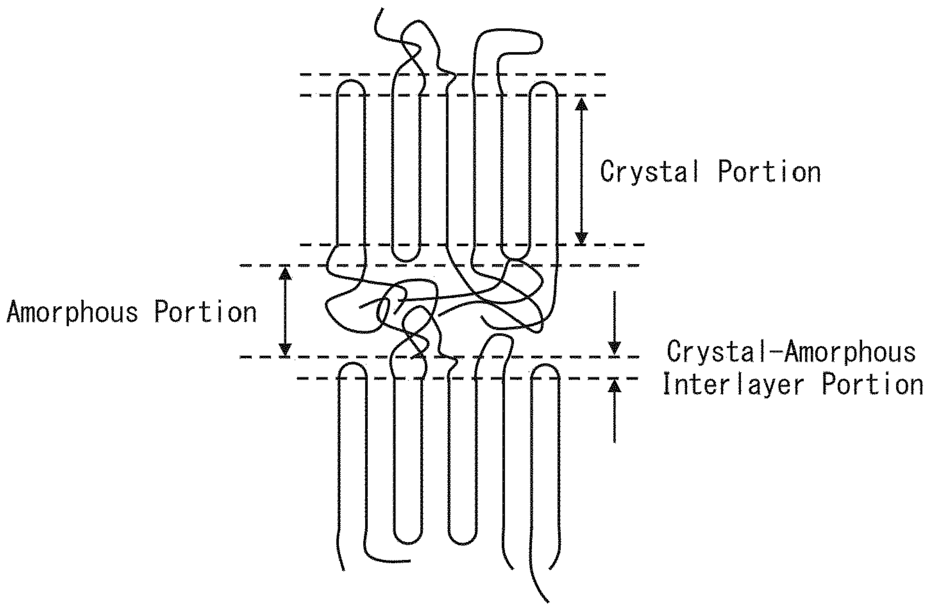
Crystal Portion
Amorphous Portion
Crystal-Amorphous
Interlayer Portion

FIG. 11

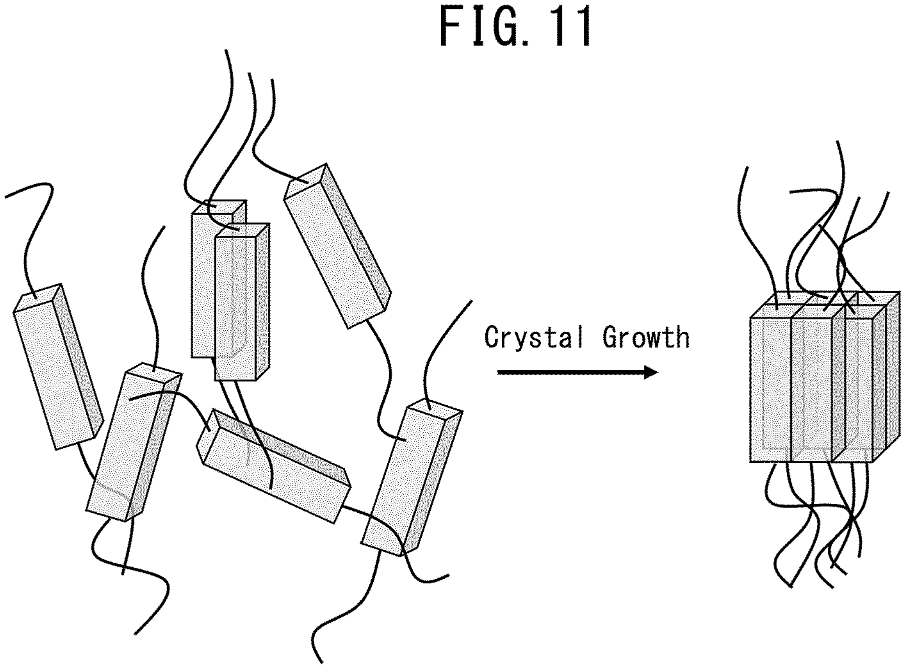


FIG. 12

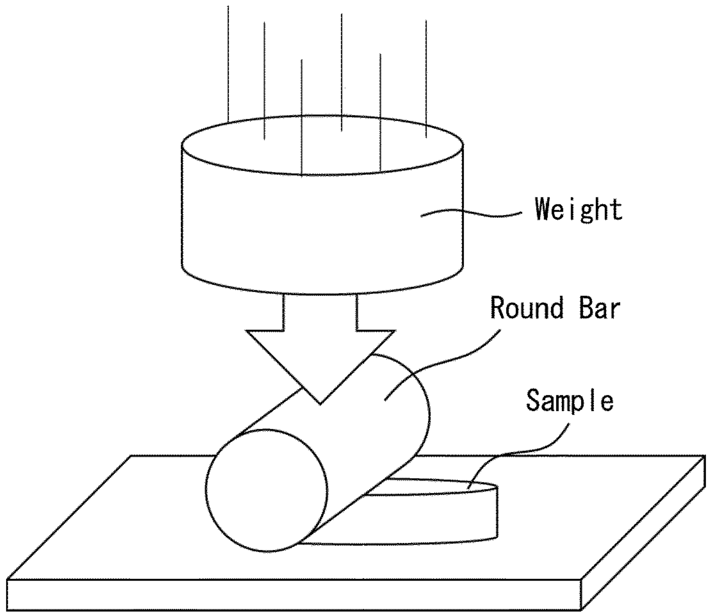

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020064879 A
- KR 101943491
- KR 20190108438
- WO 2020075866 A
- KR 1020180147041
- KR 1020180147042
- JP 9216964 A
- WO 9744839 A
- JP 11144700 A
- JP 11172036 A
- JP 2001176484 A
- JP 2000319441 A
- JP 2011071128 A
- JP 2014056843 A
- JP 10261435 A
- WO 2008156033 A
- JP 6580234 B
- JP 6367453 B
- WO 2012018132 A
- KR 1020200026172
- JP 3529854 B
- JP 3529858 B


### Non-patent literature cited in the description


- **PEKKA PYYKKO ; MICHIKO ATSUMI.** Molecular Single-Bond Covalent Radii for Elements 1-118. *Chem. Eur. J.,* 2009, vol. 15, 186-197
- **ROBIN WALSH.** Bond dissociation energy values in silicon-containing compounds and some of their implications. *Acc. Chem. Res.,* 1981, vol. 14, 246-252
- Lithium Ion Secondary Batteries. Nikkan Kogyo Shimbun, Ltd,
- Kiso Kobunshi Kagaku. Tokyo Kagaku Dojin
- *ACS Appl. Mater. Interfaces,* 2014, vol. 6, 22594-22601
- *Energy Storage Materials,* 2018, vol. 10, 246-267
- The Chemistry of Organic Silicon Compounds. Wiley, 1998, vol. 2